(19) Europäisches Patentamt
European Patent Office
Office européen des brevets

(11) **EP 3 390 305 B1**

(12) **EUROPÄISCHE PATENTSCHRIFT**

(45) Veröffentlichungstag und Bekanntmachung des Hinweises auf die Patenterteilung:
**15.11.2023   Patentblatt 2023/46**

(21) Anmeldenummer: **16819871.1**

(22) Anmeldetag: **16.12.2016**

(51) Internationale Patentklassifikation (IPC):
**C03B 20/00** (2006.01)     **C03C 3/06** (2006.01)
**C03B 19/10** (2006.01)     **C03B 37/012** (2006.01)
**C03B 17/04** (2006.01)

(52) Gemeinsame Patentklassifikation (CPC):
**C03C 1/026; C03B 17/04; C03B 19/108;**
**C03B 19/1085; C03B 20/00; C03B 37/01211;**
**C03C 3/06;** C03B 2201/03; C03B 2201/07;
C03C 2201/02; C03C 2201/11; C03C 2201/23;
C03C 2201/32; G01N 21/412; Y02P 40/57

(86) Internationale Anmeldenummer:
**PCT/EP2016/081512**

(87) Internationale Veröffentlichungsnummer:
**WO 2017/103160 (22.06.2017 Gazette 2017/25)**

(54) **HERSTELLUNG VON QUARZGLASKÖRPERN AUS SILIZIUMDIOXIDGRANULAT**

PRODUCTION OF QUARTZ GLASS BODIES FROM SILICON DIOXIDE GRANULATE

FABRICATION DE CORPS DE VERRE DE QUARTZ A PARTIR DE GRANULES DE DIOXYDE DE SILICIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2015   EP 15201093**

(43) Veröffentlichungstag der Anmeldung:
**24.10.2018   Patentblatt 2018/43**

(73) Patentinhaber: **Heraeus Quarzglas GmbH & Co. KG**
**63450 Hanau (DE)**

(72) Erfinder:
• **OTTER, Matthias**
**59075 Hamm (DE)**
• **LEHMANN, Walter**
**04155 Leipzig (DE)**
• **HÜNERMANN, Michael**
**63755 Alzenau (DE)**
• **NIELSEN, Nils Christian**
**67307 Göllheim (DE)**
• **WITTRIN, Mirko**
**06794 Sandersdorf-Brehna (DE)**
• **WILDE, Markus**
**04849 Bad Düben (DE)**

(74) Vertreter: **Herzog IP Patentanwalts GmbH**
**Steinstraße 16-18**
**40212 Düsseldorf (DE)**

(56) Entgegenhaltungen:
EP-A1- 0 711 736         EP-A1- 0 890 555
EP-A1- 2 070 883         EP-A2- 0 385 753
WO-A1-2013/149882       DE-A1-102008 033 945
DE-A1-102012 008 123    DE-B3-102004 038 602
US-A- 4 650 511          US-A- 6 136 736
US-A1- 2004 118 155      US-A1- 2006 055 300
US-A1- 2006 183 623      US-A1- 2009 208 760

**Beschreibung**

Die Erfindung betrifft ein Verfahren zum Herstellen eines Quarzglaskörpers beinhaltend die Verfahrensschritte i.) Bereitstellen eines Siliziumdioxidgranulats, erhältlich aus einem Siliziumdioxidpulver, wobei das Siliziumdioxidgranulat eine größere Partikelgröße aufweist als das Siliziumdioxidpulver; ii.) Bilden einer Glasschmelze aus dem Siliziumdioxidgranulat und iii.) Bilden eines Quarzglaskörpers aus zumindest einem Teil der Glasschmelze, wobei der Schmelztiegel mindestens einen Einlass und einen Auslass beinhaltet, wobei mindestens ein Teil der Glasschmelze durch den Auslass des Schmelztiegels entnommen wird. Die Erfindung betrifft weiterhin die Herstellung eines Lichtleiters, eines Leuchtmittels und eines Formkörpers.

**Hintergrund der Erfindung**

Quarzglas, Quarzglaserzeugnisse und Erzeugnisse, die Quarzglas enthalten, sind bekannt. Ebenso sind verschiedene Verfahren zum Herstellen von Quarzglas und Quarzglaskörpern bereits bekannt. Nichtsdestotrotz werden weiterhin erhebliche Bemühungen unternommen, Herstellungsverfahren aufzuzeigen, mittels derer Quarzglas von noch höherer Reinheit, das bedeutet Abwesenheit von Verunreinigungen, hergestellt werden können. So werden bei manchen Einsatzgebieten von Quarzglas und seinen Verarbeitungsprodukten besonders hohe Anforderungen, zum Beispiel hinsichtlich Homogenität und Reinheit gestellt. Dies ist unter anderem der Fall bei Quarzglas, das zu Lichtleitern oder in Leuchtmitteln verarbeitet wird. Verunreinigungen können hier Absorptionen bewirken. Das ist nachteilig, da es zu Farbveränderungen und zur Dämpfung des emittierten Lichts führt. Ein weiteres Beispiel für den Einsatz von hochreinem Quarzglas sind Produktionsschritte in der Halbleiterfertigung. Hier führt jede Verunreinigung des Glaskörpers potentiell zu Defekten der Halbleiter, und somit zu Ausschuss in der Fertigung. Die für diese Verfahren eingesetzten hochreinen, oftmals synthetischen Quarzglassorten werden daher sehr aufwendig hergestellt. Sie sind hochpreisig.

Weiterhin besteht im Markt der Wunsch nach dem bereits genannten hochreinen synthetischem Quarzglas und Erzeugnissen daraus zu einem niedrigeren Preis. Daher besteht das Bestreben, hochreines Quarzglas zu einem niedrigeren Preis als bisher anbieten zu können. In diesem Hinblick werden sowohl kostengünstigere Herstellungsverfahren als auch günstigere Rohstoffquellen gesucht.

Bekannte Verfahren zum Herstellen von Quarzglaskörpern beinhalten das Schmelzen von Siliziumdioxid und das Formen zu Quarzglaskörpern aus der Schmelze. Unregelmäßigkeiten in einem Glaskörper, zum Beispiel durch den Einschluss von Gasen in Form von Blasen, können zu einem Versagen des Glaskörpers bei Belastung führen, insbesondere bei hohen Temperaturen, oder die Verwendung für einen bestimmten Zweck ausschließen. So können Verunreinigungen des quarzglasbildenden Rohstoffs zur Bildung von Rissen, Blasen, Streifen und Verfärbungen im Quarzglas führen. Beim Einsatz in Verfahren zur Herstellung und Behandlung von Halbleiterbauteilen können außerdem Verunreinigungen im Glaskörper herausgearbeitet und auf die behandelten Halbleiterbauteile übertragen werden. Dies ist zum Beispiel bei Ätzverfahren der Fall und führt dann zu Ausschuss bei den Halbleiterrohlingen. Ein häufig auftretendes Problem bei den bekannten Herstellungsverfahren ist folglich eine ungenügende Qualität der Quarzglaskörper.

DE 10 2004 038 602 B3 betrifft ein bereits bekanntes Verfahren zur Herstellung von Quarzglas. Das dort eingesetzte Siliziumdioxidgranulat weist eine Teilchengröße im Bereich von 160 bis 1000 $\mu$m auf. Auf eine Teilchengrößeverteilung des Siliziumdioxidgranulats kommt es in diesem Dokument jedoch nicht an.

DE 10 2012 008 123 A1 betrifft ein Verfahren zur Herstellung von Quarzglas, bei dem ein Siliziumdioxidgranulat eingesetzt wird, dessen Poren mit Helium gefüllt sind.

DE 10 2008 033 945 A1 betrifft die Herstellung von stickstoffdotiertem Quarzglas.

Ein weiterer Aspekt betrifft die Rohstoffeffizienz. Es erscheint vorteilhaft, an anderer Stelle als Nebenprodukt anfallendes Quarzglas und Rohstoffe dafür möglichst einer industriellen Verarbeitung zu Quarzglaserzeugnissen zuzuführen, anstatt diese Nebenprodukte wie bisher als Füllmaterial, z.B. im Hochbau, zu verbringen oder kostspielig als Müll zu entsorgen. Diese Nebenprodukte werden oftmals als Feinstaub in Filtern abgeschieden. Der Feinstaub wirft weitere Probleme, insbesondere in Hinblick auf Gesundheit, Arbeitsschutz und Handhabung auf.

**Aufgaben**

Eine Aufgabe der vorliegenden Erfindung ist es, einen oder mehrere der sich aus dem Stand der Technik ergebenden Nachteile zumindest teilweise zu überwinden.

Es ist eine weitere Aufgabe der Erfindung, Lichtleiter, Leuchtmittel und Bauteile mit einer langen Lebensdauer bereitzustellen. Unter Bauteilen werden insbesondere Geräte verstanden, die für oder in Reaktoren für chemische und/oder physikalische Behandlungsschritte einsetzbar sind.

Es ist eine weitere Aufgabe der Erfindung, Lichtleiter, Leuchtmittel und Bauteile aus Glas bereitzustellen, die blasenfrei oder blasenarm sind.

Es ist eine weitere Aufgabe der Erfindung, Lichtleiter, Leuchtmittel und Bauteile aus Glas bereitzustellen, die eine hohe Transparenz aufweisen.

Es ist eine weitere Aufgabe der Erfindung, Lichtleiter, Leuchtmittel und Bauteile bereitzustellen, die eine geringe Opazität aufweisen.

Es ist eine weitere Aufgabe der Erfindung, Lichtleiter mit einen geringen Dämpfung bereitzustellen.

Es ist eine weitere Aufgabe der Erfindung, Lichtleiter, Leuchtmittel und Bauteile bereitzustellen, die eine hohe Formtreue aufweisen. Insbesondere ist es eine Aufgabe der Erfindung, Lichtleiter, Leuchtmittel und Bauteile bereitzustellen, die bei hohen Temperaturen nicht verformen. Insbesondere ist es eine Aufgabe der Erfindung, Lichtleiter, Leuchtmittel und Bauteile bereitzustellen, die auch bei Ausbildung großer Abmessungen formstabil sind.

Es ist eine weitere Aufgabe der Erfindung, Lichtleiter, Leuchtmittel und Bauteile bereitzustellen, die reiß- und bruchfest sind.

Es ist eine weitere Aufgabe der Erfindung, Lichtleiter, Leuchtmittel und Bauteile bereitzustellen, die effizient herstellbar sind.

Es ist eine weitere Aufgabe der Erfindung, Lichtleiter, Leuchtmittel und Bauteile bereitzustellen, die kostengünstig herstellbar sind.

Es ist eine weitere Aufgabe der Erfindung, Lichtleiter, Leuchtmittel und Bauteile bereitzustellen, bei deren Herstellung auf lange Nachbehandlungsschritte, zum Beispiel Tempern verzichtet werden kann.

Es ist eine weitere Aufgabe der Erfindung, Lichtleiter, Leuchtmittel und Bauteile bereitzustellen, die eine hohe Temperaturwechselbeständigkeit aufweisen. Es ist insbesondere eine Aufgabe der Erfindung, Lichtleiter, Leuchtmittel und Bauteile bereitzustellen, die bei starken thermischen Schwankungen eine geringe Wärmeausdehnung aufweisen.

Es ist eine weitere Aufgabe der Erfindung, Lichtleiter, Leuchtmittel und Bauteile bereitzustellen, die eine hohe Härte aufweisen.

Es ist eine weitere Aufgabe der Erfindung, Lichtleiter, Leuchtmittel und Bauteile bereitzustellen, die eine hohe Reinheit und eine geringe Kontamination mit Fremdatomen aufweisen. Unter Fremdatomen werden Bestandteile verstanden, die nicht gezielt eingebracht wurden.

Es ist eine weitere Aufgabe der Erfindung, Lichtleiter, Leuchtmittel und Bauteile bereitzustellen, die eine geringe Menge an Dotierstoffen enthalten.

Es ist eine weitere Aufgabe der Erfindung, Lichtleiter, Leuchtmittel und Bauteile bereitzustellen, die eine hohe Homogenität aufweisen. Eine Homogenität einer Eigenschaft oder eines Stoffes ist ein Maß für die Gleichmäßigkeit der Verteilung dieser Eigenschaft oder des Stoffes in einer Probe.

Es ist insbesondere eine Aufgabe der Erfindung, Lichtleiter, Leuchtmittel und Bauteile bereitzustellen, die eine hohe Stoffhomogenität aufweisen. Die Stoffhomogenität ist ein Maß für die Gleichmäßigkeit der Verteilung von im Lichtleiter, Leuchtmittel oder Halbleiterapparat enthaltenen Elemente und Verbindungen, insbesondere von OH, Chlor, Metallen, insbesondere Aluminium, Erdalkalimetalle, Refraktärmetallen und Dotierstoffen.

Es ist eine weitere Aufgabe der Erfindung, einen Quarzglaskörper bereitzustellen, der für die Verwendung in Lichtleitern, Leuchtmitteln und Bauteilen aus Quarzglas geeignet ist und mindestens eine, bevorzugt mehrere der bereits beschriebenen Aufgaben zumindest teilweise löst.

Es ist eine weitere Aufgabe der Erfindung, einen Quarzglaskörper bereitzustellen, der eine geradlinige Ausformung aufweist. Insbesondere ist es eine Aufgabe, einen Quarzglaskörper bereitzustellen, der einen hohen Biegeradius aufweist. Insbesondere ist es eine weitere Aufgabe, einen Quarzglaskörper bereitzustellen, der einen hohen Curl-Parameter aufweist.

Es ist eine weitere Aufgabe, einen Quarzglaskörper bereitzustellen, in dem die Migration von Kationen möglichst gering ist.

Es ist eine weitere Aufgabe, einen Quarzglaskörper bereitzustellen, der eine hohe Homogenität über die gesamte Länge des Quarzglaskörpers aufweist.

Insbesondere ist es eine Aufgabe der Erfindung, einen Quarzglaskörper bereitzustellen, der über die gesamte Länge des Quarzglaskörpers eine hohe Brechzahlhomogenität aufweist.

Insbesondere ist es eine Aufgabe der Erfindung, einen Quarzglaskörper bereitzustellen, der über die gesamte Länge des Quarzglaskörpers eine hohe Homogenität der Viskosität aufweist.

Insbesondere ist es eine Aufgabe der Erfindung, einen Quarzglaskörper bereitzustellen, der über die gesamte Länge des Quarzglaskörpers eine hohe Stoffhomogenität aufweist.

Insbesondere ist es eine Aufgabe der Erfindung, einen Quarzglaskörper bereitzustellen, der über die gesamte Länge des Quarzglaskörpers eine hohe optische Homogenität aufweist.

Es ist eine weitere Aufgabe, einen Quarzglaskörper bereitzustellen, der eine hohe Härte aufweist.

Es ist eine weitere Aufgabe der Erfindung, ein Siliziumdioxidgranulat bereitzustellen, das gut handhabbar ist.

Es ist eine weitere Aufgabe der Erfindung, ein Siliziumdioxidgranulat bereitzustellen, das einen geringen Feinstaubanteil aufweist.

Es ist eine weitere Aufgabe, ein Siliziumdioxidgranulat bereitzustellen, das gut gelagert, transportiert und gefördert werden kann.

Es ist eine weitere Aufgabe der Erfindung, ein Siliziumdioxidgranulat bereitzustellen, das blasenfreie Quarzglaskörper bilden kann. Es ist eine weitere Aufgabe der Erfindung, ein Siliziumdioxidgranulat bereitzustellen, das als Schüttgut möglichst wenig Gasvolumen einschließt.

Es ist eine weitere Aufgabe der Erfindung, ein offenporiges Siliziumdioxidgranulat bereitzustellen.

Es ist eine weitere Aufgabe der Erfindung, ein Siliziumdioxidgranulat bereitzustellen, das einfach verarbeitet werden kann.

Es ist insbesondere eine Aufgabe der Erfindung, ein Siliziumdioxidgranulat bereitzustellen, bei dem die Granulatkörner nicht verbacken oder verkleben.

Es ist insbesondere eine Aufgabe der Erfindung, ein Siliziumdioxidgranulat bereitzustellen, das eine gute Fließfähigkeit aufweist.

Es ist eine weitere Aufgabe der Erfindung, ein Siliziumdioxidgranulat bereitzustellen, das gut förderbar ist.

Es ist insbesondere eine Aufgabe der Erfindung, ein Siliziumdioxidgranulat bereitzustellen, das gleichmäßig und kugelförmig ist.

Es ist eine weitere Aufgabe der Erfindung, ein Siliziumdioxidgranulat bereitzustellen, das eine gute Lagerfähigkeit aufweist.

Es ist eine weitere Aufgabe der Erfindung, ein Siliziumdioxidgranulat bereitzustellen, das leicht zu reinigen ist. Es ist eine weitere Aufgabe der Erfindung, ein Siliziumdioxidgranulat bereitzustellen, das isostatisch press- und formbar ist.

Es ist eine weitere Aufgabe der Erfindung, ein Siliziumdioxidgranulat bereitzustellen, das eine große Partikelgröße aufweist.

Es ist eine weitere Aufgabe der Erfindung, ein Siliziumdioxidgranulat bereitzustellen, das transparent verglast. Es ist eine weitere Aufgabe der Erfindung, ein Verfahren bereitzustellen, mit dem Quarzglaskörper hergestellt werden können, mittels derer mindestens ein Teil der bereits beschriebenen Aufgaben zumindest zum Teil gelöst ist.

Es ist eine weitere Aufgabe der Erfindung, ein Verfahren bereitzustellen, mit dem Quarzglaskörper einfacher hergestellt werden können.

Es ist eine weitere Aufgabe der Erfindung, ein Verfahren bereitzustellen, mit dem Quarzglaskörper kontinuierlich hergestellt werden können.

Es ist eine weitere Aufgabe der Erfindung, ein Verfahren bereitzustellen, mit dem Quarzglaskörper durch ein kontinuierliches Schmelz- und Formgebungsverfahren hergestellt werden können.

Es ist eine weitere Aufgabe der Erfindung, ein Verfahren bereitzustellen, mit dem Quarzglaskörper mit höherer Geschwindigkeit gebildet werden können.

Es ist eine weitere Aufgabe der Erfindung, ein Verfahren bereitzustellen, mit dem Quarzglaskörper mit geringem Ausschuss hergestellt werden können.

Es ist eine weitere Aufgabe der Erfindung, ein Verfahren bereitzustellen, mit dem konfektionierbare Quarzglaskörper hergestellt werden können.

Es ist eine weitere Aufgabe der Erfindung, ein automatisiertes Verfahren bereitzustellen, mit dem Quarzglaskörper hergestellt werden können.

Es ist eine weitere Aufgabe der Erfindung, ein Verfahren zur Herstellung von Quarzglaskörpern bereitzustellen, bei dem ein Siliziumdioxidgranulat in einem Schmelzofen verarbeitet werden kann, ohne dass dieses zuvor einem gezielten Verdichtungsschritt, z.B. durch eine Temperaturbehandlung von mehr als 1000 °C unterworfen werden

Es ist insbesondere eine Aufgabe der Erfindung, ein Verfahren zur Herstellung von Quarzglaskörpern bereitzustellen, bei dem ein Siliziumdioxidgranulat mit einer BET von 20 $m^2$/g oder mehr in einen Schmelzofen eingebracht, geschmolzen und zu einem Quarzglaskörper verarbeitet werden kann.

Eine weitere Aufgabe ist, die Verarbeitbarkeit von Quarzglaskörpern weiter zu verbessern.

Eine weitere Aufgabe ist, die Konfektionierbarkeit von Quarzglaskörpern weiter zu verbessern.

**Bevorzugte Ausführungsformen der Erfindung**

Ein Beitrag zur mindestens teilweisen Erfüllung mindestens einer der zuvor genannten Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen.

Die Erfindung ist gekennzeichnet durch die in Anspruch 1 angegebenen Merkmale.

**Allgemeines**

In der vorliegenden Beschreibung beinhalten Bereichsangaben auch die als Grenzen genannten Werte. Eine Angabe der Art "im Bereich von X bis Y" in Bezug auf eine Größe A bedeutet folglich, dass A die Werte X, Y und Werte zwischen X und Y annehmen kann. Einseitig begrenzte Bereiche der Art "bis zu Y" für eine Größe A bedeuten entsprechend als Werte Y und kleiner als Y.

**Ausführliche Beschreibung der Erfindung:**

Ein erster Gegenstand der vorliegenden Erfindung ist ein Verfahren zum Herstellen eines Quarzglaskörpers beinhaltend die Verfahrensschritte

i.) Bereitstellen eines Siliziumdioxidgranulats beinhaltend folgende Verfahrensschritte:

I. Bereitstellen eines Siliziumdioxidpulvers;
II. Verarbeiten des Siliziumdioxidpulvers zu einem Siliziumdioxidgranulat,

wobei das Siliziumdioxidgranulat eine größere Partikelgröße aufweist als das Siliziumdioxidpulver;
ii.) Bilden einer Glasschmelze aus dem Siliziumdioxidgranulat in einem Ofen, wobei der Ofen einen Schmelztiegel beinhaltet; und
iii.) Bilden eines Quarzglaskörpers aus zumindest einem Teil der Glasschmelze und;

wobei der Schmelztiegel mindestens einem Einlass und mindestens einem Auslass beinhaltet; und
wobei zumindest ein Teil der Glasschmelze durch den Auslass des Schmelztiegels entnommen wird,
wobei das Siliziumdioxidgranulat eine Partikelgrößenverteilung $D_{50}$ in einem Bereich von 150 bis 300 $\mu$m aufweist.

Siliziumdioxidgranulate der vorgenannten Partikelgrößenverteilung können gemäß der vorliegenden Erfindung besonders gut im industriellen Maßstab zu Quarzglas verarbeitet werden. Siliziumdioxidgranulate mit einem großen Anteil von Granulen mit einer besonders kleinen Partikelgröße sind bei der Produktion von qualitativ hochwertigem Quarzglas nachteilig. Solche Granulen neigen zu statischer Aufladung und bleiben an der Wand einer Förderstrecke oder eines Drehrohrofens haften, was den Granulattransport erschwert oder sogar zum Stocken bringen kann. Außerdem tragen solche Granulen mehr Feuchtigkeit. Im Schmelzofen zeigen Siliziumdioxidgranulen mit kleiner Partikelgröße eine höhere Sinteraktivität als größere Partikel. Beim Schmelzen von Siliziumdioxidgranulaten mit einem hohen Anteil an Siliziumdioxidgranulen mit kleiner Partikelgröße in einem Schmelztiegel wird regelmäßig eine Bildung von Krusten auf der Glasschmelze beobachtet.
Siliziumdioxidgranulate mit einem großen Anteil von Granulen mit besonders großer Partikelgröße schmelzen ebenfalls ungleichmäßig in einem Schmelztiegel. Ferner zeigt sich bei Quarzgläsern, die aus solchen Granulaten gebildet werden, dass Verunreinigungen nicht so erfolgreich ausgetragen und tendenziell mehr Einschlüsse und große Blasen gebildet werden. Zudem wird im Falle einer Sprühgranulierung das Herstellungsverfahren unwirtschaftlich, da für besonders große Partikelgrößen ein besonders hoher Sprühturm erforderlich ist.

**Schritt i.)**

Erfindungsgemäß beinhaltet der erste Gegenstand der Erfindung das Bereitstellen des Siliziumdioxidgranulats beinhaltend folgende Verfahrensschritte:

I. Bereitstellen eines Siliziumdioxidpulvers; und
II. Verarbeiten des Siliziumdioxidpulvers zu einem Siliziumdioxidgranulat, wobei das Siliziumdioxidgranulat einen größeren Partikeldurchmesser aufweist als das Siliziumdioxidpulver.

Unter einem Pulver werden Partikel trockener fester Stoffe mit einer Primärpartikelgröße im Bereich von 1 bis weniger als 100 nm verstanden.
Das Siliziumdioxidgranulat kann durch Granulieren von Siliziumdioxidpulver erhalten werden. Ein Siliziumdioxidgranulat weist in der Regel eine BET-Oberfläche von 3 $m^2$/g oder mehr und eine Dichte von weniger als 1,5 $g/cm^3$ auf. Unter Granulieren versteht man das Überführen von Pulverteilchen in Granulen. Beim Granulieren bilden sich Zusammenlagerungen von mehreren Siliziumdioxidpulverteilchen, also größere Agglomerate, die als "Siliziumdioxidgranulen" bezeichnet werden. Diese werden oft auch als "Siliziumdioxidgranulatteilchen" oder "Granulatteilchen" bezeichnet. In ihrer Gesamtheit bilden Granulen ein Granulat, z.B. die Siliziumdioxidgranulen ein Siliziumdioxidgranulat". Das Siliziumdioxidgranulat weist einen größeren Partikeldurchmesser auf als das Siliziumdioxidpulver.
Der Vorgang des Granulierens, um ein Pulver in Granulate zu überführen, wird später näher erläutert.
Unter Siliziumdioxidkörnung werden im vorliegenden Kontext Siliziumdioxidpartikel verstanden, die durch ein Zerkleinern eines Siliziumdioxidkörpers, insbesondere eines Quarzglaskörper erhältlich sind. Eine Siliziumdioxidkörnung

weist in der Regel eine Dichte von mehr als 1,2 g/cm$^3$, zum Beispiel in einem Bereich von 1,2 bis 2,2 g/cm$^3$, und besonders bevorzugt von etwa 2,2 g/cm$^3$ auf. Weiter bevorzugt beträgt die BET-Oberfläche einer Siliziumdioxidkörnung in der Regel weniger als 1 m$^2$/g, bestimmt gemäß DIN ISO 9277:2014-01.

Als Siliziumdioxidpartikel kommen prinzipiell alle dem Fachmann geeigneten Siliziumdioxidpartikel in Betracht. Bevorzugt ausgewählt werden Siliziumdioxidgranulat und Siliziumdioxidkörnung.

Unter einem Partikeldurchmesser oder einer Partikelgröße wird der Durchmesser eines Partikels verstanden, der sich als "area equivalent circular diameter x$_{Ai}$" gemäß der Formel $x_{Ai} = \sqrt{\frac{4A_i}{\pi}}$ ergibt, wobei Ai die Fläche des betrachteten Partikels bei einer Bildanalyse bedeutet. Als Methoden zur Bestimmung eignen sich zum Beispiel ISO 13322-1:2014 oder ISO 13322-2:2009. Vergleichende Angaben wie "größerer Partikeldurchmesser" bedeutet immer, dass die in Bezug gesetzten Werte mit derselben Methode bestimmt wurden.

**Siliziumdioxidpulver**

Im Rahmen der vorliegenden Erfindung ist es prinzipiell möglich, Siliziumdioxidpulver aus natürlich vorkommendem oder aus synthetisch hergestelltem Siliziumdioxid zu gewinnen. Bevorzugt wird synthetisches Siliziumdioxidpulver verwendet. Besonders bevorzugt wird pyrogen erzeugtes Siliziumdioxidpulver verwendet.

Das Siliziumdioxidpulver kann jedes Siliziumdioxidpulver sein, das mindestens zwei Teilchen aufweist. Als Herstellungsverfahren kommt jedes Verfahren in Betracht, das dem Fachmann geläufig und für den vorliegenden Zweck geeignet erscheint.

Gemäß einer bevorzugten Ausführungsform der vorliegenden Erfindung wird das Siliziumdioxidpulver bei der Herstellung von Quarzglas als Nebenprodukt erzeugt, insbesondere bei der Herstellung von sogenannten Sootkörpern. Siliziumdioxid solcher Herkunft wird oftmals auch als "Sootstaub" bezeichnet.

Eine bevorzugte Quelle für das Siliziumdioxidpulver sind Siliziumdioxidpartikel, die bei der synthetischen Herstellung von Sootkörpern unter Einsatz von Flammhydrolysebrennern erhalten werden. Bei der Herstellung eines Sootkörpers wird entlang einer Brennerreihe ein rotierendes Trägerrohr, das eine Zylindermantelfläche aufweist, reversierend hin- und her bewegt. Den Flammhydrolysebrennern können dabei als Brennergase jeweils Sauerstoff und Wasserstoff sowie die Ausgangsmaterialien für die Bildung von Siliziumdioxidprimärpartikeln zugeführt werden. Die Siliziumdioxidprimärpartikel weisen bevorzugt eine Primärpartikelgröße von bis zu 100 nm auf. Die durch Flammenhydrolyse erzeugten Siliziumdioxidprimärpartikel aggregieren oder agglomerieren zu Siliziumdioxidpartikeln mit Partikelgrößen von etwa 9 $\mu$m (DIN ISO 13320:2009-1). In den Siliziumdioxidpartikeln sind die Siliziumdioxidprimärpartikel durch Raster-Elektronen-Mikroskopie in ihrer Form erkennbar und die Primärpartikelgröße kann bestimmt werden. Ein Teil der Siliziumdioxidpartikel werden auf der Zylindermantelfläche des um seine Längsachse rotierenden Trägerrohrs abgeschieden. So wird Schicht für Schicht der Sootkörper aufgebaut. Ein anderer Teil der Siliziumdioxidpartikel wird nicht auf der Zylindermantelfläche des Trägerrohrs abgeschieden, sondern fällt als Staub an, z.B. in einer Filteranlage. Dieser andere Teil Siliziumdioxidpartikel bildet das Siliziumdioxidpulver, oftmals auch als "Sootstaub" bezeichnet. In der Regel ist der auf dem Trägerrohr abgeschiedene Teil Siliziumdioxidpartikel größer als der als Sootstaub anfallende Teil Siliziumdioxidpartikel im Rahmen der Sootkörperherstellung, bezogen auf das Gesamtgewicht der Siliziumdioxidpartikel.

Heutzutage wird der Sootstaub in der Regel aufwendig und kostenintensiv als Abfall entsorgt oder ohne Wertschöpfung als Füllstoff verbracht, z.B. im Straßenbau, als Zuschlagstoffe in der Farbstoffindustrie, als Rohstoff für die Fliesenherstellung und zur Herstellung von Hexafluorkieselsäure, welche zur Sanierung von Bauwerksfundamenten eingesetzt wird. Im Fall der vorliegenden Erfindung eignet es sich als Ausgangsstoff und kann zu einem hochwertigen Produkt verarbeitet werden.

Durch Flammenhydrolyse hergestelltes Siliziumdioxid wird gewöhnlich als pyrogenes Siliziumdioxid bezeichnet. Pyrogenes Siliziumdioxid liegt üblicherweise in Form amorpher Siliziumdioxidprimärpartikel oder Siliziumdioxidpartikel vor.

Gemäß einer bevorzugten Ausführungsform kann das Siliziumdioxidpulver durch Flammenhydrolyse aus einem Gasgemisch hergestellt werden. In diesem Fall werden die Siliziumdioxidpartikel ebenfalls in der Flammenhydrolyse gebildet und als Siliziumdioxidpulver abgeführt, bevor sich Agglomerate oder Aggregate bilden. Hier ist das zuvor als Sootstaub bezeichnete Siliziumdioxidpulver Hauptprodukt.

Als Ausgangsmaterialien für die Bildung des Siliziumdioxidpulvers eignen sich bevorzugt Siloxane, Siliziumalkoxide und anorganische Siliziumverbindungen. Unter Siloxanen werden lineare und cyclische Polyalkylsiloxane verstanden. Bevorzugt haben Polyalkylsiloxane die allgemeine Formel

$Si_pO_pR_{2p}$,

wobei p eine ganze Zahl von mindestens 2, bevorzugt von 2 bis 10, besonders bevorzugt von 3 bis 5, und R eine Alkylgruppe mit 1 bis 8 C-Atomen, bevorzugt mit 1 bis 4 C-Atomen, besonders bevorzugt eine Methylgruppe ist.

Besonders bevorzugt sind Siloxane ausgewählt aus der Gruppe bestehend aus Hexamethyldisiloxan, Hexamethylcyclotrisiloxan (D3), Octamethylcyclotetrasiloxan (D4) und Dekamethylcyclopentasiloxan (D5) oder einer Kombination von zwei oder mehr davon. Umfasst das Siloxan D3, D4 und D5, ist D4 bevorzugt die Hauptkomponente. Die Hauptkomponente liegt bevorzugt mit einem Anteil von mindestens 70 Gew.-%, bevorzugt von mindestens 80 Gew.-%, zum Beispiel von mindestens 90 Gew.-% oder von mindestens 94 Gew.-%, besonders bevorzugt von mindestens 98 Gew.-%, jeweils bezogen auf die Gesamtmenge Siliziumdioxidpulver, vor. Bevorzugte Siliziumalkoxide sind Tetramethoxysilan und Methyltrimethoxysilan. Bevorzugte anorganische Siliziumverbindungen als Ausgangsmaterial für Siliziumdioxidpulver sind Siliziumhalogenide, Silikate, Siliziumcarbid und Siliziumnitrid. Besonders bevorzugt als anorganische Siliziumverbindung als Ausgangsmaterial für Siliziumdioxidpulver sind Siliziumtetrachlorid und Trichlorsilan.

Gemäß einer bevorzugten Ausführungsform ist das Siliziumdioxidpulver aus einer Verbindung ausgewählt aus der Gruppe bestehend aus Siloxanen, Siliziumalkoxiden und Siliziumhalogeniden herstellbar.

Bevorzugt ist das Siliziumdioxidpulver herstellbar aus einer Verbindung ausgewählt aus der Gruppe bestehend aus Hexamethyldisiloxan, Hexamethylcyclotrisiloxan, Octamethylcyclotetrasiloxan und Dekamethylcyclopentasiloxan, Tetramethoxysilan und Methyltrimethoxysilan, Siliziumtetrachlorid und Trichlorsilan oder einer Kombination aus zwei oder mehr davon, zum Beispiel aus Siliziumtetrachlorid und Octamethylcyclotetrasiloxan, besonders bevorzugt aus Octamethylcyclotetrasiloxan.

Für die Bildung von Siliziumdioxid aus Siliziumtetrachlorid durch Flammhydrolyse sind verschiedene Parameter von Bedeutung. Eine bevorzugte Zusammensetzung eines geeigneten Gasgemisches beinhaltet einen Anteil an Sauerstoff bei der Flammenhydrolyse in einem Bereich von 25 bis 40 Vol.-%. Der Anteil an Wasserstoff kann in einem Bereich von 45 bis 60 Vol.-% betragen. Der Anteil an Siliziumtetrachlorid liegt bevorzugt bei 5 bis 30 Vol.-%, alle der vorgenannten Vol.-% bezogen auf das Gesamtvolumen des Gasstroms. Weiter bevorzugt ist eine Kombination der vorgenannten Volumenanteile für Sauerstoff, Wasserstoff und $SiCl_4$. Die Flamme in der Flammenhydrolyse weist bevorzugt eine Temperatur in einem Bereich von 1500 bis 2500 °C, beispielsweise in einem Bereich von 1600 bis 2400 °C, besonders bevorzugt in einem Bereich von 1700 bis 2300 °C auf. Bevorzugt werden die in der Flammenhydrolyse gebildeten Siliziumdioxidprimärpartikel als Siliziumdioxidpulver abgeführt, bevor sich Agglomerate oder Aggregate bilden.

Gemäß einer bevorzugten Ausführungsform des ersten Gegenstands der Erfindung weist das Siliziumdioxidpulver folgende Merkmale auf:

a. eine BET-Oberfläche in einem Bereich von 20 bis 60 $m^2$/g, zum Beispiel von 25 bis 55 $m^2$/g, oder von 30 bis 50 $m^2$/g, besonders bevorzugt von 20 bis 40 $m^2$/g, und

b. eine Schüttdichte 0,01 bis 0,3 g/$cm^3$, zum Beispiel im Bereich von 0,02 bis 0,2 g/$cm^3$, bevorzugt im Bereich von 0,03 bis 0,15 g/$cm^3$, weiter bevorzugt im Bereich von 0,1 bis 0,2 g/$cm^3$ oder im Bereich von 0,05 bis 0,1 g/$cm^3$.

Das Siliziumdioxidpulver weist bevorzugt mindestens eines, zum Beispiel mindestens zwei oder mindestens drei oder mindestens vier, besonders bevorzugt mindestens fünf der folgenden Merkmale auf:

c. einen Kohlenstoffgehalt von weniger als 50 ppm, zum Beispiel von weniger als 40 ppm oder von weniger 30 ppm, besonders bevorzugt in einem Bereich von 1 ppb bis 20 ppm;

d. einen Chlorgehalt von weniger als 200 ppm, zum Beispiel von weniger als 150 ppm oder von weniger 100 ppm, besonders bevorzugt in einem Bereich von 1 ppb bis 80 ppm;

e. einen Aluminiumgehalt von weniger als 200 ppb, zum Beispiel im Bereich von 1 bis 100 ppb, besonders bevorzugt im Bereich von 1 bis 80 ppb;

f. einen Gesamtgehalt an Metallen, die von Aluminium verschieden sind, von weniger als 5 ppm, zum Beispiel von weniger als 2 ppm, besonders bevorzugt in einem Bereich von 1 ppb bis 1 ppm;

g. mindestens 70 Gew.-% der Pulverteilchen weisen eine Primärpartikelgröße in einem Bereich von 10 bis weniger als 100 nm, zum Beispiel im Bereich von 15 bis weniger als 100 nm, besonders bevorzugt im Bereich von 20 bis weniger als 100 nm auf;

h. eine Stampfdichte in einem Bereich von 0,001 bis 0,3 g/$cm^3$, zum Beispiel im Bereich von 0,002 bis 0,2 g/$cm^3$ oder von 0,005 bis 0,1 g/$cm^3$, bevorzugt im Bereich von 0,01 bis 0,06 g/$cm^3$, auch bevorzugt im Bereich von 0,1 bis 0,2 g/$cm^3$, oder im Bereich von 0,15 bis 0,2 g/$cm^3$;

i. eine Restfeuchte von weniger als 5 Gew.-%, zum Beispiel im Bereich von 0,25 bis 3 Gew.-%, besonders bevorzugt im Bereich von 0,5 bis 2 Gew.-%;

j. eine Partikelgrößenverteilung $D_{10}$ im Bereich von 1 bis 7 $\mu$m, zum Beispiel im Bereich von 2 bis 6 $\mu$m oder im

Bereich von 3 bis 5 $\mu$m, besonders bevorzugt im Bereich von 3,5 bis 4,5 $\mu$m;

k. eine Partikelgrößenverteilung $D_{50}$ im Bereich von 6 bis 15 $\mu$m, zum Beispiel im Bereich von 7 bis 13 $\mu$m oder im Bereich von 8 bis 11 $\mu$m, besonders bevorzugt im Bereich von 8,5 bis 10,5 $\mu$m;

l. eine Partikelgrößenverteilung $D_{90}$ im Bereich von 10 bis 40 $\mu$m, zum Beispiel im Bereich von 15 bis 35 $\mu$m, besonders bevorzugt im Bereich von 20 bis 30 $\mu$m;

wobei die Gew.-%, ppm und ppb jeweils auf das Gesamtgewicht des Siliziumdioxidpulvers bezogen sind.

Das Siliziumdioxidpulver enthält Siliziumdioxid. Bevorzugt enthält das Siliziumdioxidpulver Siliziumdioxid in einer Menge von mehr als 95 Gew.-%, zum Beispiel in einer Menge von mehr als 98 Gew.-%.oder von mehr als 99 Gew.-%.oder von mehr als 99,9 Gew.-%, jeweils bezogen auf das Gesamtgewicht des Siliziumdioxidpulvers. Besonders bevorzugt enthält das Siliziumdioxidpulver Siliziumdioxid in einer Menge von mehr als 99,99 Gew.-%, bezogen auf das Gesamtgewicht des Siliziumdioxidpulvers.

Bevorzugt weist das Siliziumdioxidpulver einen Metallgehalt an von Aluminium verschiedenen Metallen von weniger als 5 ppm, zum Beispiel von weniger als 2 ppm, besonders bevorzugt von weniger als 1 ppm, jeweils bezogen auf das Gesamtgewicht des Siliziumdioxidpulvers, auf. Oftmals weist das Siliziumdioxidpulver jedoch einen Gehalt an von Aluminium verschiedenen Metallen in einer Menge von mindestens 1 ppb auf. Solche Metalle sind beispielsweise Natrium, Lithium, Kalium, Magnesium, Calcium, Strontium, Germanium, Kupfer, Molybdän, Wolfram, Titan, Eisen und Chrom. Diese können zum Beispiel als Element, als Ion, oder als Teil eines Moleküls oder eines Ions oder eines Komplexes vorliegen.

Bevorzugt hat das Siliziumdioxidpulver einen Gesamtanteil an weiteren Bestandteilen von weniger als 30 ppm, zum Beispiel von weniger als 20 ppm, besonders bevorzugt von weniger als 15 ppm, die ppm jeweils bezogen auf das Gesamtgewicht des Siliziumdioxidpulvers. Oftmals weist das Siliziumdioxidpulver jedoch einen Gehalt an weiteren Bestandteilen in einer Menge von mindestens 1 ppb auf. Unter weiteren Bestandteilen werden alle Bestandteile des Siliziumdioxidpulvers verstanden, die nicht zu der folgenden Gruppe gehören: Siliziumdioxid, Chlor, Aluminium, OH-Gruppen.

Im vorliegenden Kontext bedeutet die Angabe eines Bestandteils, wenn der Bestandteil ein chemisches Element ist, dass er als Element oder als Ion in einer Verbindung oder einem Salz vorliegen kann. Zum Beispiel beinhaltet die Angabe "Aluminium" neben metallischem Aluminium auch Aluminiumsalze, Aluminiumoxide und Aluminiummetallkomplexe. Zum Beispiel beinhaltet die Angabe "Chlor" neben elementarem Chlor, Chloride wie Natriumchlorid und Chlorwasserstoff. Oftmals liegen die weiteren Bestandteile in dem gleichen Aggregatzustand vor wie der Stoff, in dem sie enthalten sind.

Im vorliegenden Kontext bedeutet die Angabe eines Bestandteils, wenn der Bestandteil eine chemische Verbindung oder eine funktionelle Gruppe ist, dass der Bestandteil in der genannten Form, als geladene chemische Verbindung oder als Derivat der chemischen Verbindung vorliegen kann. Zum Beispiel beinhaltet die Angabe des chemischen Stoffes Ethanol, neben Ethanol auch Ethanolat, zum Beispiel Natriumethanolat. Die Angabe "OH-Gruppe" beinhaltet auch Silanol, Wasser und Metallhydroxide. Zum Beispiel beinhaltet die Angabe Derivat bei Essigsäure auch Essigsäureester und Acetanhydrid.

Bevorzugt weisen mindestens 70 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis 100 nm oder von 15 bis 100 nm, und besonders bevorzugt im Bereich von 20 bis 100 nm auf. Die Primärpartikelgröße wird durch dynamische Lichtstreuung nach ISO 13320:2009-10 bestimmt.

Bevorzugt weisen mindestens 75 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis 100 nm oder von 15 bis 100 nm, und besonders bevorzugt im Bereich von 20 bis 100 nm auf.

Bevorzugt weisen mindestens 80 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis 100 nm oder von 15 bis 100 nm, und besonders bevorzugt im Bereich von 20 bis 100 nm auf.

Bevorzugt weisen mindestens 85 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis 100 nm oder von 15 bis 100 nm, und besonders bevorzugt im Bereich von 20 bis 100 nm auf.

Bevorzugt weisen mindestens 90 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis 100 nm oder von 15 bis 100 nm, und besonders bevorzugt im Bereich von 20 bis 100 nm auf.

Bevorzugt weisen mindestens 95 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis 100 nm oder von 15 bis 100 nm, und besonders bevorzugt im Bereich von 20 bis 100 nm auf.

Bevorzugt weist das Siliziumdioxidpulver eine Partikelgröße $D_{10}$ im Bereich von 1 bis 7 $\mu$m auf, zum Beispiel im Bereich von 2 bis 6 $\mu$m oder im Bereich von 3 bis 5 $\mu$m, besonders bevorzugt im Bereich von 3,5 bis 4,5 $\mu$m. Bevorzugt

weist das Siliziumdioxidpulver eine Partikelgröße $D_{50}$ im Bereich von 6 bis 15 μm auf, zum Beispiel im Bereich von 7 bis 13 μm oder im Bereich von 8 bis 11 μm, besonders bevorzugt im Bereich von 8,5 bis 10,5 μm. Bevorzugt weist das Siliziumdioxidpulver eine Partikelgröße $D_{90}$ im Bereich von 10 bis 40 μm auf, zum Beispiel im Bereich von 15 bis 35 μm, besonders bevorzugt im Bereich von 20 bis 30 μm.

Bevorzugt weist das Siliziumdioxidpulver eine spezifische Oberfläche (BET-Oberfläche) in einem Bereich von 20 bis 60 m$^2$/g auf, zum Beispiel von 25 bis 55 m$^2$/g, oder von 30 bis 50 m$^2$/g, besonders bevorzugt von 20 bis 40 m$^2$/g. Die BET-Oberfläche wird nach der Methode von Brunauer, Emmet und Teller (BET) anhand der DIN 66132 ermittelt und basiert auf Gasabsorption an der zu messenden Oberfläche.

Bevorzugt hat das Siliziumdioxidpulver einen pH-Wert von weniger als 7, zum Beispiel im Bereich von 3 bis 6,5 oder von 3,5 bis 6 oder von 4 bis 5,5, besonders bevorzugt im Bereich von 4,5 bis 5. Der pH-Wert kann mittels Einstabmesselektrode ermittelt werden (4 % Siliziumdioxidpulver in Wasser).

Das Siliziumdioxidpulver weist bevorzugt die Merkmalskombination a./b./c. oder a./b./f. oder a./b./g. auf, weiter bevorzugt die Merkmalskombination a./b./c./f. oder a./b./c./g. oder a./b./f./g., besonders bevorzugt die Merkmalskombination a./b./c./f./g.

Das Siliziumdioxidpulver weist bevorzugt die Merkmalskombination a./b./c. auf, wobei die BET-Oberfläche in einem Bereich von 20 bis 40 m$^2$/g liegt, die Schüttdichte in einem Bereich von 0,05 bis 0,3 g/mL liegt und der Kohlenstoffgehalt weniger als 40 ppm beträgt.

Das Siliziumdioxidpulver weist bevorzugt die Merkmalskombination a./b./f. auf, wobei die BET-Oberfläche in einem Bereich von 20 bis 40 m$^2$/g, die Schüttdichte in einem Bereich von 0,05 bis 0,3 g/mL und der Gesamtgehalt an Metallen, die von Aluminium verschieden sind, in einem Bereich von 1 ppb bis 1 ppm liegt.

Das Siliziumdioxidpulver weist bevorzugt die Merkmalskombination a./b./g. auf, wobei die BET-Oberfläche in einem Bereich von 20 bis 40 m$^2$/g liegt, die Schüttdichte in einem Bereich von 0,05 bis 0,3 g/ mL liegt und mindestens 70 Gew.-% der Pulverteilchen eine Primärpartikelgröße in einem Bereich von 20 bis weniger als 100 nm aufweisen.

Das Siliziumdioxidpulver weist weiter bevorzugt die Merkmalskombination a./b./c./f. auf, wobei die BET-Oberfläche in einem Bereich von 20 bis 40 m$^2$/g liegt, die Schüttdichte in einem Bereich von 0,05 bis 0,3 g/mL liegt, der Kohlenstoffgehalt weniger als 40 ppm beträgt und der Gesamtgehalt an Metallen, die von Aluminium verschieden sind, in einem Bereich von 1 ppb bis 1 ppm liegt.

Das Siliziumdioxidpulver weist weiter bevorzugt die Merkmalskombination a./b./c./g. auf, wobei die BET-Oberfläche in einem Bereich von 20 bis 40 m$^2$/g liegt, die Schüttdichte in einem Bereich von 0,05 bis 0,3 g/mL liegt, der Kohlenstoffgehalt weniger als 40 ppm beträgt und mindestens 70 Gew.-% der Pulverteilchen eine Primärpartikelgröße in einem Bereich von 20 bis weniger als 100 nm aufweisen.

Das Siliziumdioxidpulver weist weiter bevorzugt die Merkmalskombination a./b./f./g. auf, wobei die BET-Oberfläche in einem Bereich von 20 bis 40 m$^2$/g liegt, die Schüttdichte in einem Bereich von 0,05 bis 0,3 g/mL liegt, der Gesamtgehalt an Metallen, die von Aluminium verschieden sind, in einem Bereich von 1 ppb bis 1 ppm liegt und mindestens 70 Gew.-% der Pulverteilchen eine Primärpartikelgröße in einem Bereich von 20 bis weniger als 100 nm aufweisen.

Das Siliziumdioxidpulver weist besonders bevorzugt die Merkmalskombination a./b./c./f./g. auf, wobei die BET-Oberfläche in einem Bereich von 20 bis 40 m$^2$/g liegt, die Schüttdichte in einem Bereich von 0,05 bis 0,3 g/mL liegt, der Kohlenstoffgehalt weniger als 40 ppm beträgt, der Gesamtgehalt an Metallen, die von Aluminium verschieden sind, in einem Bereich von 1 ppb bis 1 ppm liegt und mindestens 70 Gew.-% der Pulverteilchen eine Primärpartikelgröße in einem Bereich von 20 bis weniger als 100 nm aufweisen.

**Schritt II.**

Erfindungsgemäß wird das Siliziumdioxidpulver in Schritt II zu einem Siliziumdioxidgranulat verarbeitet, wobei das Siliziumdioxidgranulat einen größeren Partikeldurchmesser aufweist als das Siliziumdioxidpulver. Dazu geeignet sind prinzipiell alle dem Fachmann bekannten Verfahren, die zu einer Erhöhung der Partikeldurchmesser führen.

Das Siliziumdioxidgranulat weist einen Partikeldurchmesser auf, der größer ist, als der Partikeldurchmesser des Siliziumdioxidpulvers. Bevorzugt ist der Partikeldurchmesser des Siliziumdioxidgranulats in einem Bereich von 500 bis 50.000 mal größer als der Partikeldurchmesser des Siliziumdioxidpulvers, zum Beispiel 1.000 bis 10.000 mal größer, besonders bevorzugt 2.000 bis 8000 mal größer.

Bevorzugt sind mindestens 90 % des in Schritt i.) bereitgestellten Siliziumdioxidgranulats aus pyrogen erzeugtem Siliziumdioxidpulver gebildet, zum Beispiel mindestens 95 Gew.-% oder mindestens 98 Gew.-%, besonders bevorzugt mindestens 99 Gew.-% oder mehr, jeweils bezogen auf das Gesamtgewicht des Siliziumdioxidgranulats.

Gemäß einer bevorzugten Ausführungsform des ersten Gegenstands der Erfindung weist das eingesetzte Siliziumdioxidgranulat folgende Merkmale auf:

A) eine BET-Oberfläche im Bereich von 20 m$^2$/g bis 50 m$^2$/g; und

B) eine mittlere Partikelgröße in einem Bereich von 50 bis 500 μm.

Erfindungsgemäß weist das Siliziumdioxidgranulat eine Partikelgrößenverteilung $D_{50}$ in einem Bereich von 150 μm bis 300 μm auf.

Das Siliziumdioxidgranulat weist bevorzugt mindestens eines, bevorzugt mindestens zwei oder mindestens drei oder mindestens vier, besonders bevorzugt alle der folgenden Merkmale auf:

C) eine Schüttdichte in einem Bereich von 0,5 bis 1,2 g/cm³, zum Beispiel in einem Bereich von 0,6 bis 1,1 g/cm³, besonders bevorzugt in einem Bereich von 0,7 bis 1,0 g/cm³;
D) einen Kohlenstoffgehalt von weniger als 50 ppm;
E) einen Aluminiumgehalt von weniger als 200 ppb;
F) eine Stampfdichte in einem Bereich von 0,7 bis 1,2 g/cm³;
G) ein Porenvolumen in einem Bereich von 0,1 bis 2,5 mL/g, zum Beispiel in einem Bereich von 0,15 bis 1,5 mL/g; besonders bevorzugt in einem Bereich von 0,2 bis 0,8 mL/g;
H) einen Schüttwinkel in einem Bereich von 23 bis 26°;
I) eine Partikelgrößenverteilung $D_{10}$ in einem Bereich von 50 bis 150 μm;
K) eine Partikelgrößenverteilung $D_{90}$ in einem Bereich von 300 bis 620 μm,

wobei die ppm und ppb jeweils auf das Gesamtgewicht des Siliziumdioxidgranulats bezogen sind.

Bevorzugt weisen die Granulen des Siliziumdioxidgranulats eine sphärische Morphologie auf. Unter einer sphärischen Morphologie wird eine runde bis ovale Form der Partikel verstanden. Die Granulen des Siliziumdioxidgranulats weisen bevorzugt eine mittlere Sphärizität in einem Bereich von 0,7 bis 1,3 SPHT3, zum Beispiel eine mittlere Sphärizität in einem Bereich von 0,8 bis 1,2 SPHT3, besonders bevorzugt eine mittlere Sphärizität in einem Bereich von 0,85 bis 1,1 SPHT3 auf. Das Merkmal SPHT3 ist in den Testmethoden beschrieben.

Weiterhin bevorzugt weisen die Granulen des Siliziumdioxidgranulats eine mittlere Symmetrie in einem Bereich von 0,7 bis 1,3 Symm3, zum Beispiel eine mittlere Symmetrie in einem Bereich von 0,8 bis 1,2 Symm3, besonders bevorzugt eine mittlere Symmetrie in einem Bereich von 0,85 bis 1,1 Symm3 auf. Das Merkmal der mittleren Symmetrie Symm3 ist in den Testmethoden beschrieben.

Bevorzugt weist das Siliziumdioxidgranulat einen Metallgehalt an von Aluminium verschiedenen Metallen von weniger als 1000 ppb, zum Beispiel von weniger als 500 ppb, besonders bevorzugt von weniger als 100 ppb, jeweils bezogen auf das Gesamtgewicht des Siliziumdioxidgranulats, auf. Oftmals weist das Siliziumdioxidgranulat jedoch einen Gehalt an von Aluminium verschiedenen Metallen in einer Menge von mindestens 1 ppb auf. Oftmals weist das Siliziumdioxidgranulat einen Metallgehalt an von Aluminium verschiedenen Metallen von weniger als 1 ppm, bevorzugt in einem Bereich von 40 bis 900 ppb, zum Beispiel in einem Bereich von 50 bis 700 ppb, besonders bevorzugt in einem Bereich von 60 bis 500 ppb, jeweils bezogen auf das Gesamtgewicht des Siliziumdioxidgranulats. Solche Metalle sind beispielsweise Natrium, Lithium, Kalium, Magnesium, Calcium, Strontium, Germanium, Kupfer, Molybdän, Titan, Eisen und Chrom. Diese können zum Beispiel als Element, als Ion, oder als Teil eines Moleküls oder eines Ions oder eines Komplexes vorliegen.

Das Siliziumdioxidgranulat kann weitere Bestandteile, beispielsweise in Form von Molekülen, Ionen oder Elementen beinhalten. Bevorzugt beinhaltet das Siliziumdioxidgranulat weniger als 500 ppm, zum Beispiel weniger als 300 ppm, besonders bevorzugt weniger als 100 ppm, jeweils bezogen auf das Gesamtgewicht des Siliziumdioxidgranulat, weitere Bestandteile. Oftmals sind weitere Bestandteile in einer Menge von mindestens 1 ppb enthalten. Die weiteren Bestandteile können insbesondere ausgewählt sein aus der Gruppe bestehend aus Kohlenstoff, Fluorid, Jodid, Bromid, Phosphor oder einer Mischung von mindestens zwei hiervon.

Bevorzugt beinhaltet das Siliziumdioxidgranulat weniger als 10 ppm Kohlenstoff, zum Beispiel weniger als 8 ppm oder weniger als 5 ppm, besonders bevorzugt weniger als 4 ppm, jeweils bezogen auf das Gesamtgewicht des Siliziumdioxidgranulats. Oftmals ist Kohlenstoff in einer Menge von mindestens 1 ppb im Siliziumdioxidgranulat enthalten.

Bevorzugt beinhaltet das Siliziumdioxidgranulat weniger als 100 ppm, zum Beispiel weniger als 80 ppm, besonders bevorzugt weniger als 70 ppm, jeweils bezogen auf das Gesamtgewicht des Siliziumdioxidgranulats, an weiteren Bestandteilen. Oftmals sind die weiteren Bestandteile jedoch in einer Menge von mindestens 1 ppb enthalten.

Bevorzugt beinhaltet Schritt II. folgende Schritte:

II.1. Bereitstellen einer Flüssigkeit;
II.2. Mischen des Siliziumdioxidpulvers mit der Flüssigkeit unter Erhalt einer Aufschlämmung;
II.3. Granulieren, bevorzugt Sprühtrocknen oder Rollgranulieren, der Aufschlämmung.

Eine Flüssigkeit wird im Sinne der vorliegenden Erfindung als ein Stoff oder ein Stoffgemisch verstanden, das bei einem Druck von 1013 hPa und einer Temperatur von 20 °C flüssig ist.

Eine "Aufschlämmung" im Sinne der vorliegenden Erfindung bedeutet ein Gemisch aus mindestens zwei Stoffen, wobei das Gemisch bei den bei Betrachtung vorliegenden Bedingungen mindestens eine Flüssigkeit und mindestens einen Feststoff aufweist.

Als Flüssigkeit eignen sich prinzipiell alle dem Fachmann bekannten und zum vorliegenden Einsatzzweck geeignet erscheinende Stoffe und Stoffgemische. Bevorzugt ist die Flüssigkeit ausgewählt aus der Gruppe bestehend aus organischen Flüssigkeiten und Wasser. Bevorzugt ist das Siliziumdioxidpulver in der Flüssigkeit in einer Menge von weniger als 0,5 g/L, bevorzugt in einer Menge von weniger als 0,25 g/L, besonders bevorzugt in einer Menge von weniger als 0,1 g/L löslich, die g/L jeweils angegeben als g Siliziumdioxidpulver pro Liter Flüssigkeit.

Bevorzugt eignen sich als Flüssigkeit polare Lösungsmittel. Dies können organische Flüssigkeiten oder Wasser sein. Bevorzugt ist die Flüssigkeit ausgewählt aus der Gruppe bestehend aus Wasser, Methanol, Ethanol, n-Propanol, iso-Propanol, n-Butanol, tert-Butanol und Mischungen aus mehr als einem davon. Besonders bevorzugt ist die Flüssigkeit Wasser. Besonders bevorzugt beinhaltet die Flüssigkeit destilliertes oder entionisiertes Wasser.

Bevorzugt wird das Siliziumdioxidpulver zu einer Aufschlämmung verarbeitet. Das Siliziumdioxidpulver ist in der Flüssigkeit bei Raumtemperatur nahezu unlöslich, kann jedoch in die Flüssigkeit in hohen Gewichts-Anteilen unter Erhalt der Aufschlämmung eingebracht werden.

Das Siliziumdioxidpulver und die Flüssigkeit können in beliebiger Weise gemischt werden. Zum Beispiel kann das Siliziumdioxidpulver zu der Flüssigkeit, oder die Flüssigkeit zum Siliziumdioxidpulver gegeben werden. Das Gemisch kann während des Zugebens oder nach dem Zugeben bewegt werden. Besonders bevorzugt wird das Gemisch während und nach dem Zugeben bewegt. Beispiele für das Bewegen sind ein Schütteln und ein Rühren, oder eine Kombination von beidem. Bevorzugt kann das Siliziumdioxidpulver unter Rühren zu der Flüssigkeit gegeben werden. Weiter bevorzugt kann ein Teil des Siliziumdioxidpulvers zu der Flüssigkeit gegeben werden, wobei das so erhaltene Gemisch bewegt wird, und das Gemisch anschließend mit dem übrigen Teil des Siliziumdioxidpulvers vermischt wird. Ebenso kann ein Teil der Flüssigkeit zu dem Siliziumdioxidpulver gegeben werden, wobei das so erhaltene Gemisch bewegt wird, und das Gemisch anschließend mit dem übrigen Teil der Flüssigkeit vermischt wird.

Durch das Mischen des Siliziumdioxidpulvers und der Flüssigkeit wird eine Aufschlämmung erhalten. Bevorzugt ist die Aufschlämmung eine Suspension, in der das Siliziumdioxidpulver gleichmäßig in der Flüssigkeit verteilt ist. Unter "gleichmäßig" wird verstanden, dass die Dichte und die Zusammensetzung der Aufschlämmung an jeder Stelle um nicht mehr als 10 % von der durchschnittlichen Dichte und der durchschnittlichen Zusammensetzung abweichen, jeweils bezogen auf die Gesamtmenge an Aufschlämmung. Eine gleichmäßige Verteilung des Siliziumdioxidpulvers in der Flüssigkeit kann durch wie ein zuvor bereits beschriebenes Bewegen hergestellt, oder erhalten werden, oder beides.

Bevorzugt hat die Aufschlämmung ein Litergewicht im Bereich von 1000 bis 2000 g/L, zum Beispiel im Bereich von 1200 bis 1900 g/L oder von 1300 bis 1800 g/L, besonders bevorzugt im Bereich von 1400 bis 1700 g/L. Das Litergewicht wird mittels Auswiegen eines volumenkalibrierten Behälters bestimmt.

Gemäß einer bevorzugten Ausführungsform gilt für die Aufschlämmung mindestens eines, zum Beispiel mindestens zwei oder mindestens drei oder mindestens vier, besonders bevorzugt mindestens fünf der folgenden Merkmale:

a.) die Aufschlämmung wird in Kontakt mit einer Kunststoffoberfläche transportiert;

b.) die Aufschlämmung wird geschert;

c.) die Aufschlämmung weist eine Temperatur von mehr als 0°C auf, bevorzugt in einem Bereich von 5 bis 35°C;

d.) die Aufschlämmung weist ein Zeta-Potential bei einem pH-Wert von 7 in einem Bereich von 0 bis -100 mA auf, zum Beispiel von -20 bis -60 mA, besonders bevorzugt von -30 bis -45 mA;

e.) die Aufschlämmung weist einen pH-Wert in einem Bereich von 7 oder mehr auf, zum Beispiel von mehr als 7 oder einen pH-Wert im Bereich von 7,5 bis 13 oder von 8 bis 11, besonders bevorzugt von 8,5 bis 10;

f.) die Aufschlämmung weist einen isoelektrischen Punkt von weniger als 7, zum Beispiel in einem Bereich von 1 bis 5 oder in einem Bereich von 2 bis 4, besonders bevorzugt in einem Bereich von 3 bis 3,5;

g.) die Aufschlämmung weist einen Feststoffgehalt von mindestens 40 Gew.-%, zum Beispiel in einem Bereich von 50 bis 80 Gew.-%, oder in einem Bereich von 55 bis 75 Gew.-%, besonders bevorzugt in einem Bereich von 60 bis 70 Gew.-% auf, jeweils bezogen auf das Gesamtgewicht der Aufschlämmung;

h.) die Aufschlämmung weist eine Viskosität gemäß DIN 53019-1 (5 rpm, 30 Gew.-%) in einem Bereich von 500 bis 1000 mPas, zum Beispiel im Bereich von 600 bis 900 mPas oder von 650 bis 850 mPas, besonders bevorzugt im Bereich von 700 bis 800 mPas auf;

i.) die Aufschlämmung weist eine Thixotropie gemäß DIN SPEC 91143-2 (30 Gew.-% in Wasser, 23 °C, 5 rpm/50 rpm) im Bereich von 3 bis 6, zum Beispiel im Bereich von 3,5 bis 5, besonders bevorzugt im Bereich von 4,0 bis 4,5 auf,

j.) die Siliziumdioxidpartikel in der Aufschlämmung weisen in einer 4 Gew.-%igen Aufschlämmung eine mittlere Partikelgröße in Suspension gemäß DIN ISO 13320-1 im Bereich von 100 bis 500 nm, zum Beispiel in einem Bereich von 200 bis 300 nm auf.

Bevorzugt weisen die Siliziumdioxidpartikel in einer 4 Gew.-%igen wässrigen Aufschlämmung eine Partikel-

größe $D_{10}$ in einem Bereich von 50 bis 250 nm auf, besonders bevorzugt im Bereich von 100 bis 150 nm. Bevorzugt weisen die Siliziumdioxidpartikel in einer 4 Gew.-%igen wässrigen Aufschlämmung eine Partikelgröße $D_{50}$ in einem Bereich von 100 bis 400 nm auf, besonders bevorzugt im Bereich von 200 bis 250 nm. Bevorzugt weisen die Siliziumdioxidpartikel in einer 4 Gew.-%igen wässrigen Aufschlämmung eine Partikelgröße $D_{90}$ in einem Bereich von 200 bis 600 nm auf, besonders bevorzugt in einem Bereich von 350 bis 400 nm. Die Partikelgröße wird mittels DIN ISO 13320-1 bestimmt.

Unter dem "isolektrischen Punkt" wird der pH-Wert verstanden, bei dem das Zeta-Potential den Wert 0 annimmt. Das Zeta-Potential wird gemäß ISO 13099-2:2012 bestimmt.

Bevorzugt wird der pH-Wert der Aufschlämmung auf einen Wert in dem oben genannten Bereich eingestellt. Bevorzugt können zum Einstellen des pH-Werts Stoffe wie NaOH oder $NH_3$, zum Beispiel als wässrige Lösung der Aufschlämmung zugegeben werden. Dabei wird die Aufschlämmung oftmals bewegt.

**Granulation**

Das Siliziumdioxidgranulat wird durch Granulieren von Siliziumdioxidpulver erhalten. Unter Granulieren versteht man das Überführen von Pulverteilchen in Granulen. Beim Granulieren bilden sich durch Zusammenlagerungen von mehreren Siliziumdioxidpulverteilchen größere Agglomerate, die als "Siliziumdioxidgranulen" bezeichnet werden. Diese werden oft auch als "Siliziumdioxidpartikel", "Siliziumdioxidgranulatteilchen" oder "Granulatteilchen" bezeichnet. In ihrer Gesamtheit bilden Granulen ein Granulat, z.B. die Siliziumdioxidgranulen ein "Siliziumdioxidgranulat".

Im vorliegenden Fall kann prinzipiell jedes Granulierverfahren ausgewählt werden, das dem Fachmann bekannt und zum Granulieren von Siliziumdioxidpulver geeignet erscheint. Bei den Granulierverfahren kann zwischen Aufbaugranulation und Pressgranulation, und weiter zwischen Nass- und Trocken-Granulierverfahren unterschieden werden. Bekannte Methoden sind Rollgranulation in einem Granulierteller, Sprühgranulation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung.

Bevorzugt wird beim Verarbeiten ein Siliziumdioxidgranulat mit Granulen gebildet, die eine sphärische Morphologie aufweisen; wobei das Verarbeiten weiter bevorzugt durch Sprühgranulieren oder Rollgranulieren erfolgt. Weiter bevorzugt beinhaltet ein Siliziumdioxidgranulat mit Granulen, die eine sphärische Morphologie aufweisen, höchstens 50 % Granulen, bevorzugt höchstens 40 % Granulen, weiter bevorzugt höchstens 20 % Granulen, mehr bevorzugt zwischen 0 und 50%, zwischen 0 und 40% oder zwischen 0 und 20%, oder zwischen 10 und 50%, zwischen 10 und 40% oder zwischen 10 und 20% Granulen, die nicht eine sphärische Morphologie aufweisen, die Prozentangabe jeweils bezogen auf die Gesamtzahl an Granulen im Granulat. Die Granulen mit einer sphärischen Morphologie weisen die in dieser Beschreibung bereits genannten SPHT3-Werte auf.

**Sprühtrocknen**

Gemäß einer bevorzugten Ausführungsform des ersten Gegenstands der Erfindung wird ein Siliziumdioxidgranulat durch Sprühgranulieren der Aufschlämmung erhalten. Das Sprühgranulieren wird auch als Sprühtrocknen bezeichnet.

Das Sprühtrocknen erfolgt bevorzugt in einem Sprühturm. Zum Sprühtrocknen wird die Aufschlämmung bei erhöhter Temperatur unter Druck gesetzt. Die unter Druck stehende Aufschlämmung wird anschließend über eine Düse entspannt und so in den Sprühturm gesprüht. In Folge dessen bilden sich Tropfen, die augenblicklich trocknen und zunächst trockene Kleinstpartikel ("Keime") bilden. Die Kleinstpartikel bilden zusammen mit einem auf die Partikel wirkenden Gasstrom eine Wirbelschicht. Sie werden so im Schwebezustand gehalten und können damit eine Oberfläche zum Trocknen weiterer Tröpfchen bilden.

Die Düse, durch die die Aufschlämmung in den Sprühturm gesprüht wird, bildet bevorzugt einen Einlass in den Innenraum des Sprühturms.

Die Düse weist beim Sprühen bevorzugt eine Kontaktfläche mit der Aufschlämmung auf. Unter der "Kontaktfläche" wird der Bereich der Düse verstanden, der beim Sprühen in Kontakt mit der Aufschlämmung kommt. Oftmals ist zumindest ein Teil der Düse als Rohr geformt, durch das die Aufschlämmung beim Sprühen geleitet wird, so dass die Innenseite des Hohlrohrs mit der Aufschlämmung in Berührung kommt.

Die Kontaktfläche beinhaltet bevorzugt ein Glas, einen Kunststoff oder eine Kombination davon. Bevorzugt beinhaltet die Kontaktfläche ein Glas, besonders bevorzugt Quarzglas. Bevorzugt beinhaltet die Kontaktfläche einen Kunststoff. Prinzipiell sind alle dem Fachmann bekannten Kunststoffe geeignet, die bei den Verfahrenstemperaturen stabil sind und keine Fremdatome an die Aufschlämmung abgeben. Bevorzugte Kunststoffe sind Polyolefine, zum Beispiel Homo- oder Copolymere beinhaltend mindestens ein Olefin, besonders bevorzugt Homo- oder Copolymere beinhaltend Polypropylen, Polyethylen, Polybutadien oder Kombinationen aus zwei oder mehr davon. Bevorzugt besteht die Kontaktfläche aus einem Glas, einem Kunststoff oder einer Kombination davon, zum Beispiel ausgewählt aus der Gruppe bestehend aus Quarzglas und Polyolefinen, besonders bevorzugt ausgewählt aus der Gruppe bestehend aus Quarzglas und Homo- oder Copolymere beinhaltend Polypropylen, Polyethylen, Polybutadien oder Kombinationen aus zwei oder mehr davon. Bevorzugt beinhaltet die Kontaktfläche keine Metalle, insbesondere kein Wolfram, Titan, Tantal, Chrom, Cobalt, Nickel, Eisen, Vanadium, Zirkonium und Mangan.

Es ist prinzipiell möglich, dass die Kontaktfläche und die weiteren Teile der Düse aus dem gleichen oder aus verschiedenen Materialien bestehen. Bevorzugt enthalten die weiteren Teile der Düse das gleiche Material wie die Kontaktfläche. Es ist ebenso möglich, dass die weiteren Teile der Düse ein von der Kontaktfläche verschiedenes Material enthalten. Zum Beispiel kann die Kontaktfläche mit einem geeigneten Material, zum Beispiel einem Glas oder einem Kunststoff beschichtet sein.

Bevorzugt ist die Düse zu mehr als 70 Gew.-%, bezogen auf das Gesamtgewicht der Düse, aus einem Element ausgewählt aus der Gruppe bestehend aus Glas, Kunststoff oder einer Kombination von Glas und Kunststoff gebildet, zum Beispiel zu mehr als 75 Gew.-% oder zu mehr als 80 Gew.-% oder zu mehr als 85 Gew.-% oder zu mehr als 90 Gew.-% oder zu mehr als 95 Gew.-%, besonders bevorzugt zu mehr als 99 Gew.-%.

Bevorzugt umfasst die Düse ein Düsenplättchen. Das Düsenplättchen ist bevorzugt aus Glas, Kunststoff oder einer Kombination aus Glas und Kunststoff gebildet. Bevorzugt ist das Düsenplättchen aus Glas gebildet, besonders bevorzugt Quarzglas. Bevorzugt ist das Düsenplättchen aus Kunststoff gebildet. Bevorzugte Kunststoffe sind Polyolefine, zum Beispiel Homo- oder Copolymere beinhaltend mindestens ein Olefin, besonders bevorzugt Homo- oder Copolymere beinhaltend Polypropylen, Polyethylen, Polybutadien oder Kombinationen aus zwei oder mehr davon. Bevorzugt beinhaltet das Düsenplättchen keine Metalle, insbesondere kein Wolfram, Titan, Tantal, Chrom, Cobalt, Nickel, Eisen, Vanadium, Zirkonium und Mangan.

Bevorzugt umfasst die Düse eine Drallschnecke. Die Drallschnecke ist bevorzugt aus Glas, Kunststoff oder einer Kombination aus Glas und Kunststoff gebildet. Bevorzugt ist die Drallschnecke aus Glas gebildet, besonders bevorzugt Quarzglas. Bevorzugt ist die Drallschnecke aus Kunststoff gebildet. Bevorzugte Kunststoffe sind Polyolefine, zum Beispiel Homo- oder Copolymere beinhaltend mindestens ein Olefin, besonders bevorzugt Homo- oder Copolymere beinhaltend Polypropylen, Polyethylen, Polybutadien oder Kombinationen aus zwei oder mehr davon. Bevorzugt beinhaltet die Drallschnecke keine Metalle, insbesondere kein Wolfram, Titan, Tantal, Chrom, Cobalt, Nickel, Eisen, Vanadium, Zirkonium und Mangan.

Die Düse kann darüber hinaus weitere Bestandteile umfassen. Bevorzugte weitere Bauteile sind ein Düsenkörper, besonders bevorzugt ist ein die Drallschnecke und das Düsenplättchen umgebender Düsenkörper, ein Kreuzstück und eine Prallplatte. Bevorzugt umfasst eine Düse eines oder mehr, besonders bevorzugt alle, der weiteren Bauteile. Die weiteren Bauteile können unabhängig voneinander prinzipiell aus einem beliebigen, dem Fachmann bekannten und zu diesem Zweck geeigneten Material bestehen, zum Beispiel aus einem Metall-haltigen Material, aus Glas oder aus einem Kunststoff. Bevorzugt ist der Düsenkörper aus Glas gebildet, besonders bevorzugt Quarzglas. Bevorzugt sind die weiteren Bauteile aus Kunststoff gebildet. Bevorzugte Kunststoffe sind Polyolefine, zum Beispiel Homo- oder Copolymere beinhaltend mindestens ein Olefin, besonders bevorzugt Homo- oder Copolymere beinhaltend Polypropylen, Polyethylen, Polybutadien oder Kombinationen aus zwei oder mehr davon. Bevorzugt beinhalten die weiteren Bauteile keine Metalle, insbesondere kein Wolfram, Titan, Tantal, Chrom, Cobalt, Nickel, Eisen, Vanadium, Zirkonium und Mangan.

Bevorzugt weist der Sprühturm einen Gaseinlass und einen Gasauslass auf. Durch den Gaseinlass kann Gas in den Innenraum des Sprühturms eingebracht, und durch den Gasauslass kann es ausgeleitet werden. Es ist auch möglich, Gas über die Düse in den Sprühturm einzuleiten. Ebenso kann Gas über den Auslass des Sprühturms ausgeleitet werden. Weiterhin bevorzugt kann Gas über die Düse und einen Gaseinlass des Sprühturms zugeführt, und über den Auslass des Sprühturms und einen Gasauslass des Sprühturms ausgeleitet werden.

Bevorzugt liegt im Innenraum des Sprühturms eine Atmosphäre ausgewählt aus Luft, einem Inertgas, mindestens zwei Inertgasen oder eine Kombination von Luft mit mindestens einem Inertgas, bevorzugt mindestens zwei Inertgasen vor. Als Inertgase sind bevorzugt ausgewählt aus der Liste bestehend aus Stickstoff, Helium, Neon, Argon, Krypton und Xenon. Zum Beispiel liegt im Innenraum des Sprühturms Luft, Stickstoff oder Argon vor, besonders bevorzugt Luft.

Weiter bevorzugt ist die im Sprühturm vorliegende Atmosphäre Teil eines Gasstroms. Der Gasstrom wird in den Sprühturm bevorzugt über einen Gaseinlass eingeleitet und über einen Gasauslass ausgeleitet. Es ist auch möglich Teile des Gasstroms über die Düse einzuleiten und Teile des Gasstroms über einen Feststoffauslass auszuleiten. Der Gasstrom kann im Sprühturm weitere Bestandteile aufnehmen. Diese können beim Sprühtrocknen aus der Aufschlämmung stammen und in den Gasstrom übergehen.

Bevorzugt wird dem Sprühturm ein trockener Gasstrom zugeführt. Unter einem trockenen Gasstrom wird ein Gas oder ein Gasgemisch verstanden, dessen relative Feuchte bei der im Sprühturm eingestellten Temperatur unterhalb des Kondensationspunktes liegt. Eine relative Luftfeuchte von 100 % entspricht einer Wassermenge von 17.5 g/m$^3$ bei 20°C. Das Gas wird bevorzugt auf eine Temperatur in einem Bereich von 150 bis 450°C, zum Beispiel von 200 bis 420°C oder von 300 bis 400°C, besonders bevorzugt von 350 bis 400°C vorgewärmt.

Der Innenraum des Sprühturms ist bevorzugt temperierbar. Bevorzugt beträgt die Temperatur im Innenraum des Sprühturms bis zu 550°C, zum Beispiel 300 bis 500°C, besonders bevorzugt 350 bis 450°C.

Der Gasstrom hat am Gaseinlass bevorzugt eine Temperatur in einem Bereich von 150 bis 450°C, zum Beispiel von 200 bis 420°C oder von 300 bis 400°C, besonders bevorzugt von 350 bis 400°C.

Am Feststoffauslass, dem Gasauslass oder an beiden Orten hat der ausgeleitete Gasstrom bevorzugt eine Temperatur von weniger als 170°C, zum Beispiel von 50 bis 150°C, besonders bevorzugt von 100 bis 130°C.

Weiter bevorzugt liegt der Unterschied zwischen der Temperatur des Gasstroms beim Einleiten und dem Gasstrom beim Ausleiten in einem Bereich von 100 bis 330°C, zum Beispiel von 150 bis 300 °C.

Die so erhaltenen Siliziumdioxidgranulen liegen als Agglomerat einzelner Teilchen von Siliziumdioxidpulver vor. Die einzelnen Teilchen des Siliziumdioxidpulvers sind im Agglomerat weiterhin erkennbar. Die mittlere Teilchengröße der Teilchen des Siliziumdioxidpulvers liegt bevorzugt im Bereich von 10 bis 1000 nm, zum Beispiel im Bereich von 20 bis 500 nm oder von 30 bis 250 nm oder von 35 bis 200 nm oder von 40 bis 150 nm, oder besonders bevorzugt im Bereich von 50 bis 100 nm. Die mittlere Teilchengröße dieser Teilchen wird gemäß DIN ISO 13320-1 ermittelt.

Das Sprühtrocknen kann in Anwesenheit von Hilfsstoffen durchgeführt werden. Prinzipiell können alle Stoffe als Hilfsstoffe eingesetzt werden, die dem Fachmann bekannt sind und zum vorliegenden Einsatzzweck geeignet erscheinen. Als Hilfsstoffe kommen zum Beispiel sogenannte Bindemittel in Betracht. Beispiele für geeignete Bindemittel sind Metalloxide wie Calciumoxid, Metallcarbonate wie Calciumcarbonat und Polysaccharide wie Cellulose, Celluloseether, Stärke und Stärkederivate.

Besonders bevorzugt wird das Sprühtrocknen im Rahmen der vorliegenden Erfindung ohne Hilfsstoffe durchgeführt.

Bevorzugt wird vor, nach oder vor und nach dem Entnehmen des Siliziumdioxidgranulats aus dem Sprühturm ein Teil davon abgetrennt. Zum Abtrennen kommen alle dem Fachmann bekannten und geeignet erscheinenden Verfahren in Betracht. Bevorzugt erfolgt das Abtrennen durch ein Sichten oder ein Sieben.

Bevorzugt werden vor dem Entnehmen des durch Sprühtrocknung gebildeten Siliziumdioxidgranulats aus dem Sprühturm Partikel mit einer Partikelgröße von weniger als 50 $\mu$m, zum Beispiel mit einer Partikelgröße von weniger als 70 $\mu$m besonders bevorzugt mit einer Partikelgröße von weniger als 90 $\mu$m durch Sichten abgetrennt. Das Sichten erfolgt bevorzugt durch einen Zyklon, der bevorzugt im unteren Bereich des Sprühturms, besonders bevorzugt oberhalb des Auslasses des Sprühturms, angeordnet ist.

Bevorzugt werden nach dem Entnehmen des Siliziumdioxidgranulats aus dem Sprühturm Teilchen mit einer Partikelgröße von mehr als 1000 $\mu$m, zum Beispiel mit einer Partikelgröße von mehr als 700 $\mu$m besonders bevorzugt mit einer Partikelgröße von mehr als 500 $\mu$m durch Sieben abgetrennt. Das Sieben der Partikel kann prinzipiell nach allen dem Fachmann bekannten und zu diesem Zweck geeigneten Verfahren erfolgen. Bevorzugt erfolgt das Sieben mittels einer Rüttelrinne.

Gemäß einer bevorzugten Ausführungsform ist das Sprühtrocknen der Aufschlämmung durch eine Düse in einen Sprühturm durch mindestens eines, zum Beispiel zwei oder drei, besonders bevorzugt alle der folgenden Merkmale gekennzeichnet:

a] Sprühgranulieren in einem Sprühturm;

b] Vorliegen eines Drucks der Aufschlämmung an der Düse von nicht mehr als 40 bar, zum Beispiel in einem Bereich von 1,3 bis 20 bar von 1,5 bis 18 bar oder von 2 bis 15 bar oder von 4 bis 13 bar, oder besonders bevorzugt im Bereich von 5 bis 12 bar, wobei der Druck absolut (in Bezug auf p = 0 hPa) angegeben ist;

c] eine Temperatur der Tröpfchen beim Eintritt in den Sprühturm in einem Bereich von 10 bis 50°C, bevorzugt in einem Bereich von 15 bis 30°C, besonders bevorzugt in einem Bereich von 18 bis 25°C.

d] eine Temperatur an der dem Sprühturm zugewandten Seite der Düse in einem Bereich von 100 bis 450°C, zum Beispiel in einem Bereich von 250 bis 440°C, besonders bevorzugt von 350 bis 430°C;

e] einen Durchsatz an Aufschlämmung durch die Düse in einem Bereich von 0,05 bis 1 m³/h, zum Beispiel in einem Bereich von 0,1 bis 0,7 m³/h oder von 0,2 bis 0,5 m³/h, besonders bevorzugt in einem Bereich von 0,25 bis 0,4 m³/h;

f] einen Feststoffgehalt der Aufschlämmung von mindestens 40 Gew.-%, zum Beispiel in einem Bereich von 50 bis 80 Gew.-%, oder in einem Bereich von 55 bis 75 Gew.-%, besonders bevorzugt in einem Bereich von 60 bis 70 Gew.-% auf, jeweils bezogen auf das Gesamtgewicht der Aufschlämmung;

g] einen Gaszustrom in den Sprühturm in einem Bereich von 10 bis 100 kg/min, zum Beispiel in einem Bereich von 20 bis 80 kg/min oder von 30 bis 70 kg/min, besonders bevorzugt in einem Bereich von 40 bis 60 kg/min;

h] eine Temperatur des Gasstroms beim Eintritt in den Sprühturm in einem Bereich von 100 bis 450°C, zum Beispiel in einem Bereich von 250 bis 440°C, besonders bevorzugt von 350 bis 430°C;

i] eine Temperatur des Gasstroms beim Austritt aus dem Sprühturm von weniger als 170°C;

j] das Gas ist ausgewählt aus der Gruppe bestehend aus Luft, Stickstoff und Helium, oder einer Kombination von zwei oder mehr davon; bevorzugt Luft;

k] eine Restfeuchte des Granulats bei Entnahme aus dem Sprühturm von weniger als 5 Gew.-%, zum Beispiel von weniger als 3 Gew.-% oder von weniger als 1 Gew.-% oder in einem Bereich von 0,01 bis 0,5 Gew.-%, besonders bevorzugt in einem Bereich von 0,1 bis 0,3 Gew.-%, jeweils bezogen auf das Gesamtgewicht des bei der Sprühtrocknung entstehenden Siliziumdioxidgranulats;

l] mindestens 50 Gew.-% des Sprühgranulats, bezogen auf das Gesamtgewicht des bei der Sprühtrocknung entstehenden Siliziumdioxidgranulats, vollzieht eine Flugzeit in einem Bereich von 1 bis 100 s, zum Beispiel über einen Zeitraum von 10 bis 80 s, besonders bevorzugt über einen Zeitraum vom 25 bis 70 s;

m] mindestens 50 Gew.-% des Sprühgranulats, bezogen auf das Gesamtgewicht des bei der Sprühtrocknung entstehenden Siliziumdioxidgranulats, legt eine Flugstrecke von mehr als 20 m zurück, zum Beispiel von mehr als 30 oder von mehr als 50 oder von mehr als 70 oder von mehr als 100 oder von mehr als 150 oder von mehr als 200 oder in einem Bereich von 20 bis 200 m oder von 10 bis 150 oder von 20 bis 100, besonders bevorzugt einem Bereich von 30 bis 80 m.

n] der Sprühturm weist eine zylindrische Geometrie auf;

o] eine Höhe des Sprühturms von mehr als 10 m, zum Beispiel von mehr als 15 m oder von mehr als 20 m oder von mehr als 25 m oder von mehr als 30 m oder in einem Bereich von 10 bis 25 m, besonders bevorzugt in einem Bereich von 15 bis 20 m;

p] Absichten von Partikeln mit einer Größe von weniger als 90 $\mu$m vor der Entnahme des Granulats aus dem Sprühturm;

q] Absieben von Partikeln mit einer Größe von mehr als 500 $\mu$m nach der Entnahme des Granulats aus dem Sprühturm, bevorzugt auf einer Rüttelrinne;

r] der Austritt der Tröpfchen der Aufschlämmung aus der Düse erfolgt in einem Winkel von 30 bis 60 Grad entgegen der Lotrichtung, besonders bevorzugt bei einem Winkel von 45 Grad entgegen der Lotrichtung.

Unter der Lotrichtung wird die Richtung des Schwerkraftvektors verstanden.

Die Flugstrecke bedeutet den Weg, den ein Tröpfchen der Aufschlämmung ab Austritt aus der Düse im Gasraum des Sprühturms unter Bildung einer Granule bis zum Abschluss des Flug- und Fallvorgangs zurücklegt. Der Flug- und Fallvorgang endet regelmäßig durch Auftreffen der Granule am Boden des Sprühturms, oder durch Auftreffen der Granule auf bereits auf dem Boden des Sprühturms liegenden anderen Granulen, je nachdem, was zuerst eintritt.

Die Flugzeit ist die Dauer, die eine Granule für das Zurücklegen der Flugstrecke im Sprühturm benötigt. Bevorzugt weisen die Granulen im Sprühturm eine helixförmige Flugbahn auf.

Bevorzugt legen mindestens 60 Gew.-% des Sprühgranulats, bezogen auf das Gesamtgewicht des bei der Sprühtrocknung entstehenden Siliziumdioxidgranulats, eine mittlere Flugstrecke von mehr als 20 m zurück, zum Beispiel von mehr als 30 oder von mehr als 50 oder von mehr als 70 oder von mehr als 100 oder von mehr als 150 oder von mehr als 200 oder in einem Bereich von 20 bis 200 m oder von 10 bis 150 oder von 20 bis 100, besonders bevorzugt einem Bereich von 30 bis 80 m.

Bevorzugt legen mindestens 70 Gew.-% des Sprühgranulats, bezogen auf das Gesamtgewicht des bei der Sprühtrocknung entstehenden Siliziumdioxidgranulats, eine mittlere Flugstrecke von mehr als 20 m zurück, zum Beispiel von mehr als 30 oder von mehr als 50 oder von mehr als 70 oder von mehr als 100 oder von mehr als 150 oder von mehr als 200 oder in einem Bereich von 20 bis 200 m oder von 10 bis 150 oder von 20 bis 100, besonders bevorzugt einem Bereich von 30 bis 80 m.

Bevorzugt legen mindestens 80 Gew.-% des Sprühgranulats, bezogen auf das Gesamtgewicht des bei der Sprühtrocknung entstehenden Siliziumdioxidgranulats, eine mittlere Flugstrecke von mehr als 20 m zurück, zum Beispiel von mehr als 30 oder von mehr als 50 oder von mehr als 70 oder von mehr als 100 oder von mehr als 150 oder von mehr als 200 oder in einem Bereich von 20 bis 200 m oder von 10 bis 150 oder von 20 bis 100, besonders bevorzugt einem Bereich von 30 bis 80 m.

Bevorzugt legen mindestens 90 Gew.-% des Sprühgranulats, bezogen auf das Gesamtgewicht des bei der Sprühtrocknung entstehenden Siliziumdioxidgranulats, eine mittlere Flugstrecke von mehr als 20 m zurück, zum Beispiel von mehr als 30 oder von mehr als 50 oder von mehr als 70 oder von mehr als 100 oder von mehr als 150 oder von mehr als 200 oder in einem Bereich von 20 bis 200 m oder von 10 bis 150 oder von 20 bis 100, besonders bevorzugt einem Bereich von 30 bis 80 m.

## Rollgranulation

Gemäß einer bevorzugten Ausführungsform des ersten Gegenstands der Erfindung wird ein Siliziumdioxidgranulat durch Rollgranulieren der Aufschlämmung erhalten.

Das Rollgranulieren erfolgt durch Rühren der Aufschlämmung in Gegenwart eines Gases bei erhöhter Temperatur. Bevorzugt erfolgt das Rollgranulieren in einem mit einem Rührwerkzeug ausgerüsteten Rührbehälter. Bevorzugt rotiert der Rührbehälter gegensinnig zum Rührwerkzeug. Bevorzugt weist der Rührbehälter außerdem einen Einlass, durch den Siliziumdioxidpulver in den Rührbehälter eingetragen werden kann, einen Auslass, durch den Siliziumdioxidgranulat entnommen werden kann, einen Gaseinlass und einen Gasauslass, auf.

Für das Rühren der Aufschlämmung wird bevorzugt ein Stiftwirbler verwendet. Unter einem Stiftwirbler wird ein Rührwerkzeug verstanden, das mit mehreren länglichen Stiften versehen ist, deren Längsachse jeweils koaxial zur Rotationsachse des Rührwerkzeugs verläuft. Der Bewegungsablauf der Stifte beschreibt bevorzugt koaxiale Kreise um die Rotationsachse.

Bevorzugt wird die Aufschlämmung auf einen pH-Wert von weniger als 7 eingestellt, zum Beispiel auf einen pH-Wert im Bereich von 2 bis 6,5, besonders bevorzugt auf einen pH-Wert in einem Bereich von 4 bis 6. Zum Einstellen des pH-Werts wird bevorzugt eine anorganische Säure verwendet, zum Beispiel eine Säure ausgewählt aus der Gruppe bestehend aus Salzsäure, Schwefelsäure, Salpetersäure und Phosphorsäure, besonders bevorzugt Salzsäure.

Bevorzugt liegt im Rührbehälter eine Atmosphäre ausgewählt aus Luft, einem Inertgas, mindestens zwei Inertgasen oder eine Kombination von Luft mit mindestens einem Inertgas, bevorzugt mindestens zwei Inertgasen vor. Als Inertgase sind bevorzugt ausgewählt aus der Liste bestehend aus Stickstoff, Helium, Neon, Argon, Krypton und Xenon. Zum Beispiel liegt im Rührbehälter Luft, Stickstoff oder Argon vor, besonders bevorzugt Luft.

Weiter bevorzugt ist die im Rührbehälter vorliegende Atmosphäre Teil eines Gasstroms. Der Gasstrom wird in den Rührbehälter bevorzugt über den Gaseinlass eingeleitet und über den Gasauslass ausgeleitet. Der Gasstrom kann im Rührbehälter weitere Bestandteile aufnehmen. Diese können beim Rollgranulieren aus der Aufschlämmung stammen und in den Gasstrom übergehen.

Bevorzugt wird dem Rührbehälter ein trockener Gasstrom zugeführt. Unter einem "trockenen Gasstrom" wird ein Gas oder ein Gasgemisch verstanden, dessen relative Feuchte bei der im Rührbehälter eingestellten Temperatur unterhalb des Kondensationspunktes liegt. Das Gas wird bevorzugt auf eine Temperatur in einem Bereich von 50 bis 300°C, zum Beispiel von 80 bis 250°C, besonders bevorzugt von 100 bis 200°C vorgewärmt.

Bevorzugt werden pro 1 kg der eingesetzten Aufschlämmung 10 bis 150 m$^3$ Gas pro Stunde in den Rührbehälter eingeleitet, zum Beispiel 20 bis 100 m$^3$ Gas pro Stunde, besonders bevorzugt 30 bis 70 m$^3$ Gas pro Stunde.

Durch den Gasstrom wird die Aufschlämmung während des Rührens unter Bildung von Siliziumdioxidgranulen getrocknet. Das gebildete Granulat wird der Rührkammer entnommen.

Bevorzugt wird das entnommene Granulat weiter getrocknet. Bevorzugt erfolgt die Trocknung kontinuierlich, zum Beispiel in einem Drehrohrofen. Bevorzugte Temperaturen zur Trocknung liegen in einem Bereich von 80 bis 250°C, zum Beispiel in einem Bereich von 100 bis 200°C, besonders bevorzugt in einem Bereich von 120 bis 180°C.

Kontinuierlich bedeutet im Kontext der vorliegenden Erfindung in Bezug auf ein Verfahren, dass dieses fortlaufend betrieben werden kann. Das bedeutet, dass Zufuhr und Entnahme von am Verfahren beteiligten Stoffen und Materialien beim Durchführen des Verfahrens laufend erfolgen kann. Es ist nicht notwendig, dafür das Verfahren zu unterbrechen.

Kontinuierlich als Attribut eines Gegenstands, z.B. in Bezug auf einen "kontinuierlichen Ofen", bedeutet, dass dieser Gegenstand so ausgelegt ist, dass ein in ihm erfolgendes Verfahren oder in ihm erfolgender Verfahrensschritt kontinuierlich geführt werden kann.

Das durch Rollgranulieren erhaltene Granulat kann gesiebt werden. Das Sieben kann vor oder nach dem Trocknen erfolgen. Bevorzugt wird vor dem Trocknen gesiebt. Bevorzugt werden Granulen mit einer Partikelgröße von weniger als 50 μm zum Beispiel mit einer Partikelgröße von weniger als 80 μm besonders bevorzugt mit einer Partikelgröße von weniger als 100 μm ausgesiebt. Weiter bevorzugt werden Granulen mit einer Partikelgröße von mehr als 900 μm, zum Beispiel mit einer Partikelgröße von mehr als 700 μm, besonders bevorzugt mit einer Partikelgröße von mehr als 500 μm ausgesiebt. Das Aussieben größerer Partikel kann prinzipiell nach allen dem Fachmann bekannten und zu diesem Zweck geeigneten Verfahren erfolgen. Bevorzugt erfolgt das Absieben größerer Partikel mittels einer Rüttelrinne.

Gemäß einer bevorzugten Ausführungsform ist das Rollgranulieren durch mindestens eines, zum Beispiel zwei oder drei, besonders bevorzugt aller der folgenden Merkmale gekennzeichnet:

[a] das Granulieren erfolgt in einem rotierenden Rührbehälter;
[b] das Granulieren erfolgt unter einem Gasstrom von 10 bis 150 kg Gas pro Stunde und pro 1 kg Aufschlämmung;
[c] die Gastemperatur beträgt beim Einleiten 40 bis 200°C;
[d] Granulen mit einer Partikelgröße von weniger als 100 μm und von mehr als 500 μm werden abgesiebt;
[e] die gebildeten Granulen weisen eine Restfeuchte von 15 bis 30 Gew.-% auf;
[f] die gebildeten Granulen werden bei 80 bis 250°C getrocknet, bevorzugt in einem kontinuierlichen Trockenrohr, besonders bevorzugt bis zu einer Restfeuchte von weniger als 1 Gew.-%.

Bevorzugt wird das durch Granulieren, bevorzugt durch Sprüh- oder Rollgranulieren, erhaltene Siliziumdioxidgranulat, auch als Siliziumdioxidgranulat I bezeichnet, behandelt, bevor es zu Quarzglaskörpern verarbeitet wird. Diese Vorbehandlung kann verschiedenen Zwecken dienen, die entweder die Verarbeitung zu Quarzglaskörpern erleichtern oder die Eigenschaften der resultierenden Quarzglaskörper beeinflussen. Zum Beispiel kann das Siliziumdioxidgranulat I verdichtet, gereinigt, oberflächenmodifiziert oder getrocknet werden.

Bevorzugt kann das Siliziumdioxidgranulat I einer thermischen, mechanischen oder chemischen Behandlung oder einer Kombination aus zwei oder mehr Behandlungen unterworfen werden, wobei ein Siliziumdioxidgranulat II erhalten wird.

**chemisch**

Gemäß einer bevorzugten Ausführungsform des ersten Gegenstands der Erfindung weist das Siliziumdioxidgranulat I einen Kohlenstoffgehalt $w_{C(1)}$ auf. Der Kohlenstoffgehalt $w_{C(1)}$ beträgt bevorzugt weniger als 50 ppm, zum Beispiel im Bereich von 5 bis 45 ppm oder von 15 bis 40 ppm, besonders bevorzugt im Bereich von 25 bis 35 ppm, jeweils auf das Gesamtgewicht des Siliziumdioxidgranulats I bezogen.

Gemäß einer bevorzugten Ausführungsform des ersten Gegenstands der Erfindung beinhaltet das Siliziumdioxidgranulat I mindestens zwei Teilchen. Bevorzugt können die mindestens zwei Teilchen eine Relativbewegung zueinander ausführen. Als Maßnahmen zum Erzeugen der Relativbewegung kommen prinzipiell alle dem Fachmann bekannten und geeignet erscheinenden Maßnahmen in Betracht. Insbesondere bevorzugt ist ein Mischen. Ein Mischen kann prinzipiell in beliebiger Weise durchgeführt werden. Bevorzugt wird hierfür ein Durchlaufofen ausgewählt. Dementsprechend können die mindestens zwei Teilchen bevorzugt eine Relativbewegung zueinander ausführen, indem sie in einem Durchlaufofen, zum Beispiel einem Drehrohrofen, bewegt werden.

Unter Durchlauföfen werden Öfen verstanden, bei denen das Be- und Entladen des Ofens, die sogenannte Chargierung, kontinuierlich erfolgt. Beispiele für Durchlauföfen sind Drehrohröfen, Rollenöfen, Förderbandöfen, Durchfahröfen, Durchstoßöfen. Bevorzugt werden zur Behandlung des Siliziumdioxidgranulats I Drehrohröfen verwendet.

Gemäß einer bevorzugten Ausführungsform des ersten Gegenstands der Erfindung wird das Siliziumdioxidgranulat I mit einem Reaktanden unter Erhalt eines Siliziumdioxidgranulats II behandelt. Das Behandeln wird durchgeführt, um die Konzentration bestimmter Stoffe im Siliziumdioxidgranulat zu verändern. Das Siliziumdioxidgranulat I kann Verunreinigungen oder bestimmte Funktionalitäten aufweisen, deren Anteil verringert werden soll, wie zum Beispiel: OH-Gruppen, kohlenstoffhaltige Verbindungen, Übergangsmetalle, Alkalimetalle und Erdalkalimetalle. Die Verunreinigungen und Funktionalitäten können aus dem Ausgangsmaterial stammen oder im Laufe des Verfahrens eingetragen werden. Die Behandlung des Siliziumdioxidgranulats I kann verschiedenen Zwecken dienen. Zum Beispiel kann der Einsatz von behandeltem Siliziumdioxidgranulat I, also Siliziumdioxidgranulat II, die Verarbeitung des Siliziumdioxidgranulats zu Quarzglaskörpern vereinfachen. Ferner können durch diese Auswahl die Eigenschaften der resultierenden Quarzglaskörper angepasst sein. Zum Beispiel kann das Siliziumdioxidgranulat I gereinigt oder oberflächenmodifiziert werden. Die Behandlung des Siliziumdioxidgranulats I kann also eingesetzt werden, um die Eigenschaften der resultierenden Quarzglaskörper zu verbessern.

Bevorzugt eignen sich als Reaktand ein Gas oder eine Kombination mehrerer Gase. Diese wird auch als Gasgemisch bezeichnet. Prinzipiell können alle dem Fachmann bekannten Gase eingesetzt werden, die für die genannte Behandlung bekannt sind und geeignet erscheinen. Bevorzugt wird ein Gas ausgewählt aus der Gruppe bestehend aus HCl, $Cl_2$, $F_2$, $O_2$, $O_3$, $H_2$, $C_2F_4$, $C_2F_6$, $HClO_4$, Luft, Inertgas, z.B. $N_2$, He, Ne, Ar, Kr, oder Kombinationen aus zwei oder mehr davon eingesetzt. Bevorzugt erfolgt die Behandlung in Anwesenheit eines Gases oder einer Kombination aus zwei oder mehr als Gasen. Bevorzugt erfolgt die Behandlung in einem Gasgegenstrom, oder in einem Gasgleichstrom.

Bevorzugt ist der Reaktand ausgewählt aus der Gruppe bestehend aus HCl, $Cl_2$, $F_2$, $O_2$, $O_3$ oder Kombinationen von zwei oder mehr davon. Bevorzugt werden Gemische von zwei oder mehr der zuvor genannten Gase zum Behandeln von Siliziumdioxidgranulat I verwendet. Durch die Anwesenheit von F, Cl oder beiden können Metalle, die als Verunreinigungen im Siliziumdioxidgranulat I enthalten sind, wie zum Beispiel Übergangsmetalle, Alkalimetalle und Erdalkalimetalle, entfernt werden. Dabei können die vorgenannten Metalle mit Bestandteilen des Gasgemischs unter den Verfahrensbedingungen gasförmige Verbindungen eingehen, die anschließend ausgetragen werden und so nicht mehr im Granulat vorliegen. Weiter bevorzugt kann der OH-Gehalt in dem Siliziumdioxidgranulat I durch die Behandlung des Siliziumdioxidgranulats I mit diesen Gasen verringert werden.

Bevorzugt wird als Reaktand ein Gasgemisch von HCl und $Cl_2$ eingesetzt. Bevorzugt weist das Gasgemisch einen Gehalt an HCl in einem Bereich von 1 bis 30 Vol.-%, beispielsweise in einem Bereich von 2 bis 15 Vol.-%, besonders bevorzugt in einem Bereich von 3 bis 10 Vol.-% auf. Ebenfalls bevorzugt weist das Gasgemisch einen Gehalt an $Cl_2$ in einem Bereich von 20 bis 70 Vol.-%, beispielsweise in einem Bereich von 25 bis 65 Vol.-%, besonders bevorzugt in einem Bereich von 30 bis 60 Vol.-% auf. Der Rest zu 100 Vol.-% kann durch ein oder mehrere Inertgase, z.B. $N_2$, He, Ne, Ar, Kr, oder durch Luft ergänzt werden. Bevorzugt liegt der Anteil an Inertgas in Reaktanden in einem Bereich von 0 bis weniger als 50 Vol.-%, zum Beispiel in einem Bereich von 1 bis 40 Vol.-% oder von 5 bis 30 Vol.-%, besonders bevorzugt in einem Bereich von 10 bis 20 Vol.-%, jeweils bezogen auf das Gesamtvolumen des Reaktanden.

$O_2$, $C_2F_2$, oder Mischungen davon mit $Cl_2$ werden bevorzugt zur Reinigung von Siliziumdioxidgranulat I verwendet, das aus einem Siloxan oder eines Gemischs mehrerer Siloxane hergestellt wurde.

Der Reaktand in Form eines Gases oder Gasgemisches wird bevorzugt als Gasstrom oder als Teil eines Gasstroms mit einem Durchsatz in einem Bereich von 50 bis 2000 L/h, beispielsweise in einem Bereich von 100 bis 1000 L/h, besonders bevorzugt in einem Bereich von 200 bis 500 L/h mit dem Siliziumdioxidgranulat kontaktiert. Eine bevorzugte Ausgestaltung des Kontaktierens ist ein Kontakt von Gasstrom und Siliziumdioxidgranulat in einem Durchlaufofen, zum Beispiel einem Drehrohrofen. Eine andere bevorzugte Ausgestaltung des Kontaktierens ist ein Wirbelschichtverfahren (fluidized bed).

Durch das Behandeln des Siliziumdioxidgranulats I mit dem Reaktanden wird ein Siliziumdioxidgranulat II mit einem Kohlenstoffgehalt $w_{C(2)}$ erhalten. Der Kohlenstoffgehalt $w_{C(2)}$ des Siliziumdioxidgranulats II ist kleiner als der Kohlenstoffgehalt $w_{C(1)}$ des Siliziumdioxidgranulats I, bezogen auf das Gesamtgewicht des jeweiligen Siliziumdioxidgranulats. Bevorzugt ist $w_{C(2)}$ um 0,5 bis 99 %, beispielsweise um 0,5 bis 50 % oder 1 bis 45 %, besonders bevorzugt um 1,5 bis 40 % kleiner als $w_{C(1)}$.

**thermisch**

Bevorzugt wird das Siliziumdioxidgranulat I zusätzlich einer thermischen oder mechanischen Behandlung oder einer Kombination dieser Behandlungen unterworfen. Eine oder mehrere dieser zusätzlichen Behandlungen können vor oder während der Behandlung mit dem Reaktanden erfolgen. Alternativ oder ergänzend kann die zusätzlich Behandlung auch am Siliziumdioxidgranulat II durchgeführt werden. Die im Folgenden verwendete allgemeine Bezeichnung "Siliziumdioxidgranulat" beinhaltet die Alternativen "Siliziumdioxidgranulat I" und "Siliziumdioxidgranulat II". Ebenso ist es möglich, die nachfolgend beschriebenen Behandlungen sowohl am "Siliziumdioxidgranulat I", als auch am behandelten Siliziumdioxidgranulat I, dem "Siliziumdioxidgranulat II", durchzuführen.

Die Behandlung des Siliziumdioxidgranulats kann verschiedenen Zwecken dienen. Zum Beispiel erleichtert diese Behandlung die Verarbeitung des Siliziumdioxidgranulats zu Quarzglaskörpern. Die Behandlung kann auch die Eigenschaften der resultierenden Quarzglaskörper beeinflussen. Zum Beispiel kann das Siliziumdioxidgranulat verdichtet, gereinigt, oberflächenmodifiziert oder getrocknet werden. Dabei kann sich die spezifische Oberfläche (BET) verringern. Ebenso können die Schüttdichte und die mittlere Partikelgröße aufgrund von Agglomerationen von Siliziumdioxidpartikeln zunehmen. Die thermische Behandlung kann dynamisch oder statisch durchgeführt werden.

Für die dynamisch thermische Behandlung eignen sich prinzipiell alle Öfen, in denen das Siliziumdioxidgranulat thermisch behandelt und dabei bewegt werden kann. Für die dynamisch thermische Behandlung werden bevorzugt Durchlauföfen verwendet.

Eine bevorzugte mittlere Verweilzeit des Siliziumdioxidgranulats bei der dynamisch thermischen Behandlung ist mengenabhängig. Bevorzugt liegt die mittlere Verweilzeit des Siliziumdioxidgranulats bei der dynamisch thermischen Behandlung im Bereich von 10 bis 180 min, zum Beispiel im Bereich von 20 bis 120 min oder von 30 bis 90 min. Besonders bevorzugt liegt die mittlere Verweilzeit des Siliziumdioxidgranulats bei der dynamisch thermischen Behandlung im Bereich von 30 bis 90 min.

Im Fall eines kontinuierlichen Verfahrens gilt zur Bestimmung der Verweilzeit als eine Charge eine definierte Portion eines Stroms an Siliziumdioxidgranulat, z.B. ein Gramm, ein Kilogramm oder eine Tonne. Beginn und Ende des Verweilens sind hier durch Ein- und Ausführen aus dem kontinuierlichen Ofenbetrieb bestimmt.

Bevorzugt liegt der Durchsatz des Siliziumdioxidgranulats bei einem kontinuierlichen Verfahren zur dynamisch thermischen Behandlung im Bereich von 1 bis 50 kg/h, zum Beispiel im Bereich von 5 bis 40 kg/h oder von 8 bis 30 kg/h. Besonders bevorzugt liegt der Durchsatz hier im Bereich von 10 bis 20 kg/h.

Im Falle eines diskontinuierlichen Verfahrens zur dynamisch thermischen Behandlung ergibt sich die Behandlungszeit aus dem Zeitraum zwischen einem Beladen und anschließendem Entladen des Ofens.

Im Falle eines diskontinuierlichen Verfahrens zur dynamisch thermischen Behandlung beträgt der Durchsatz in einem Bereich von 1 bis 50 kg/h, zum Beispiel im Bereich von 5 bis 40 kg/h oder von 8 bis 30 kg/h. Besonders bevorzugt beträgt der Durchsatz im Bereich von 10 bis 20 kg/h. Der Durchsatz kann durch eine Charge einer bestimmten Menge, die eine Stunde lang behandelt wird, erreicht werden. Gemäß einer anderen Ausführungsform kann der Durchsatz erreicht werden durch eine Anzahl von Chargen pro Stunde, wobei zum Beispiel die Menge einer Charge dem Durchsatz pro Stunde durch die Anzahl der Chargen entspricht. Die Behandlungszeit entspricht dann dem Bruchteil einer Stunde, der sich aus 60 Minuten durch die Anzahl der Chargen pro Stunde ergibt.

Bevorzugt erfolgt die dynamisch thermische Behandlung des Siliziumdioxidgranulats bei einer Ofentemperatur von mindestens 500°C, zum Beispiel im Bereich von 510 bis 1700°C oder von 550 bis 1500°C oder von 580 bis 1300°C, besonders bevorzugt im Bereich von 600 bis 1200°C.

In der Regel hat der Ofen in der Ofenkammer die angegebene Temperatur. Bevorzugt weicht diese Temperatur um weniger als 10 % von der angegebenen Temperatur nach oben oder unten ab, bezogen auf die gesamte Behandlungszeit und die gesamte Länge des Ofens sowohl zu jedem Zeitpunkt der Behandlung als auch an jeder Stelle des Ofens.

Alternativ kann insbesondere das kontinuierliche Verfahren einer dynamisch thermischen Behandlung des Siliziumdioxidgranulats bei unterschiedlichen Ofentemperaturen erfolgen. Beispielsweise kann der Ofen über die Behandlungszeit eine konstante Temperatur aufweisen, wobei die Temperatur über die Länge des Ofens in Abschnitten variiert. Solche Abschnitte können gleich lang oder unterschiedlich lang sein. Bevorzugt ist in diesem Fall eine vom Eingang des Ofens zum Ausgang des Ofens hin zunehmende Temperatur. Bevorzugt ist die Temperatur am Eingang um wenigstens 100°C niedriger als am Ausgang, zum Beispiel 150°C niedriger oder 200°C niedriger oder 300°C niedriger oder 400°C niedriger. Weiter bevorzugt beträgt die Temperatur am Ausgang bevorzugt mindestens 500°C, zum Beispiel im Bereich von 510 bis 1700°C oder von 550 bis 1500°C oder von 580 bis 1300°C, besonders bevorzugt im Bereich von 600 bis 1200°C. Weiter bevorzugt beträgt die Temperatur am Eingang bevorzugt mindestens 300°C, zum Beispiel von 400 bis 1000°C oder von 450 bis 900°C oder von 500 bis 800°C oder von 550 bis 750°C, besonders bevorzugt von 600 bis 700°C. Weiter kann jeder der genannten Temperaturbereiche am Ofeneingang mit jedem der genannten Temperaturbereiche am Ofenausgang kombiniert werden. Bevorzugte Kombinationen von Ofeneingangs- und Ofenausgangtemperaturbereichen sind:

| Bereich Ofeneingangstemperatur [°C] | Bereich Ofenausgangstemperatur [°C] |
|---|---|
| 400 - 1000 | 510 - 1300 |
| 450 - 900 | 550 - 1260 |
| 480 - 850 | 580 - 1200 |
| 500 - 800 | 600 - 1100 |
| 530 - 750 | 630 - 1050 |

Für die statisch thermische Behandlung des Siliziumdioxidgranulats werden bevorzugt in einem Ofen angeordnete Tiegel verwendet. Als Tiegel eignen sich Sintertiegel oder Blechtiegel. Bevorzugt sind Walzblechtiegel aus mehreren, miteinander vernieteten Platten. Als Tiegelmaterial sind beispielsweise Refraktärmetalle, insbesondere Wolfram, Molybdän und Tantal. Die Tiegel können ferner aus Graphit gebildet sein oder im Falle der Tiegel aus Refraktärmetallen mit Graphitfolie ausgeschlagen sein. Weiter bevorzugt können die Tiegel aus Siliziumdioxid gebildet sein. Besonders bevorzugt werden Siliziumdioxidtiegel eingesetzt.

Die mittlere Verweilzeit des Siliziumdioxidgranulats bei der statisch thermischen Behandlung ist mengenabhängig. Bevorzugt liegt die mittlere Verweilzeit des Siliziumdioxidgranulats bei der statisch thermischen Behandlung bei einer Menge von 20 kg Siliziumdioxidgranulat I im Bereich von 10 bis 180 min, zum Beispiel im Bereich von 20 bis 120 min, besonders bevorzugt im Bereich von 30 bis 90 min.

Bevorzugt erfolgt die statisch thermische Behandlung des Siliziumdioxidgranulats bei einer Ofentemperatur von mindestens 800°C, zum Beispiel im Bereich von 900 bis 1700°C oder von 950 bis 1600°C oder von 1000 bis 1500°C oder von 1050 bis 1400°C, besonders bevorzugt im Bereich von 1100 bis 1300°C.

Bevorzugt erfolgt die statisch thermische Behandlung des Siliziumdioxidgranulats I bei konstanter Ofentemperatur. Die statisch thermische Behandlung kann auch bei einer variierenden Ofentemperatur erfolgen. Bevorzugt nimmt in diesem Fall die Temperatur im Laufe der Behandlung zu, wobei die Temperatur zu Beginn der Behandlung um wenigstens 50°C niedriger ist als am Ende, zum Beispiel 70°C niedriger oder 80°C niedriger oder 100°C niedriger oder 110°C niedriger, und wobei die Temperatur am Ende bevorzugt mindestens 800°C, zum Beispiel im Bereich von 900 bis 1700°C oder von 950 bis 1600°C oder von 1000 bis 1500°C oder von 1050 bis 1400°C, besonders bevorzugt im Bereich von 1100 bis 1300°C beträgt.

**mechanisch**

Gemäß einer weiteren bevorzugten Ausführungsform kann das Siliziumdioxidgranulat I mechanisch behandelt werden. Die mechanische Behandlung kann zum Erhöhen der Schüttdichte durchgeführt werden. Die mechanische Behandlung kann mit der zuvor beschriebenen thermischen Behandlung kombiniert werden. Mittels einer mechanischen Behandlung kann vermieden werden, dass die Agglomerate im Siliziumdioxidgranulat und damit die mittlere Partikelgröße der einzelnen, behandelten Siliziumdioxidgranulen im Siliziumdioxidgranulat zu groß werden. Eine Vergrößerung der Agglomerate kann die Weiterverarbeitung erschweren oder nachteilige Auswirkungen auf die Eigenschaften der mit dem erfindungsgemäßen Verfahren hergestellten Quarzglaskörper haben, oder eine Kombination beider Effekte bedeuten. Eine mechanische Behandlung des Siliziumdioxidgranulats fördert zudem einen gleichmäßigen Kontakt der Oberflächen der einzelnen Siliziumdioxidgranulen mit dem Gas oder den Gasen. Dies wird insbesondere bei einer Kombination aus gleichzeitiger mechanischer und chemischer Behandlung mit einem oder mehreren Gasen erreicht. Dadurch kann die Wirkung der chemischen Behandlung verbessert werden.

Die mechanische Behandlung des Siliziumdioxidgranulats kann durch Bewegen von zwei oder mehr Siliziumdioxidgranulen in einer Relativbewegung zueinander erfolgen, beispielsweise durch das Drehen des Rohrs eines Drehrohrofens.

Bevorzugt wird das Siliziumdioxidgranulat I chemisch, thermisch und mechanisch behandelt. Besonders erfolgt eine simultane chemische, thermische und mechanische Behandlung des Siliziumdioxidgranulats I.

Bei der chemischen Behandlung wird der Gehalt an Verunreinigungen im Siliziumdioxidgranulat I verringert. Dazu kann das Siliziumdioxidgranulat I in einem Drehrohrofen bei erhöhter Temperatur unter chlor- und sauerstoffhaltiger Atmosphäre behandelt werden. Im Siliziumdioxidgranulat I vorliegendes Wasser verdampft, organische Materialien reagieren zu CO und $CO_2$. Metallverunreinigungen können zu flüchtigen, chlorhaltigen Verbindungen konvertiert werden.

Bevorzugt wird das Siliziumdioxidgranulat I in einer chlor- und sauerstoffhaltigen Atmosphäre in einem Drehrohrofen bei einer Temperatur von mindestens 500°C, bevorzugt in einem Temperaturbereich von 550 bis 1300°C oder von 600 bis 1260°C oder von 650 bis 1200°C oder von 700 bis 1000°C, besonders bevorzugt in einem Temperaturbereich von 700 bis 900°C behandelt. Die chlorhaltige Atmosphäre enthält beispielsweise HCl oder $Cl_2$ oder eine Kombination aus beiden. Diese Behandlung bewirkt eine Reduzierung des Kohlenstoffgehalts.

Ferner werden bevorzugt Alkali- und Eisenverunreinigungen reduziert. Bevorzugt wird zudem eine Verringerung der Anzahl an OH-Gruppen erreicht. Bei Temperaturen unterhalb von 700°C können sich lange Behandlungsdauern ergeben, bei Temperaturen oberhalb von 1100°C besteht die Gefahr, dass sich Poren des Granulats unter Einschluss von Chlor oder gasförmigen Chlorverbindungen schließen.

Bevorzugt ist es auch möglich, mehrere chemische Behandlungsschritte bei jeweils gleichzeitiger thermischer und mechanischer Behandlung nacheinander durchzuführen. Beispielsweise kann das Siliziumdioxidgranulat I erst in einer chlorhaltigen Atmosphäre und anschließend in einer sauerstoffhaltigen Atmosphäre behandelt werden. Daraus resultierende niedrige Konzentrationen an Kohlenstoff, Hydroxylgruppen und Chlor erleichtern das Einschmelzen des Siliziumdioxidgranulats II.

Gemäß einer weiteren bevorzugten Ausführungsform ist Schritt II.2) durch mindestens eines, zum Beispiel durch mindestens zwei oder mindestens drei, besonders bevorzugt durch eine Kombination von allen der folgenden Merkmale gekennzeichnet:

N1) der Reaktand beinhaltet HCl, $Cl_2$ oder eine Kombination davon;
N2) die Behandlung wird in einem Drehrohrofen durchgeführt;
N3) Die Behandlung wird bei einer Temperatur in einem Bereich von 600 bis 900°C durchgeführt;
N4) der Reaktand bildet einen Gegenstrom;
N5) der Reaktand weist einen Gasstrom in einem Bereich von 50 bis 2000 L/h, bevorzugt 100 bis 1000 L/h, besonders bevorzugt 200 bis 500 L/h auf;
N6) der Reaktand weist einen Volumenanteil an Inertgas in einem Bereich von 0 bis weniger als 50 Vol.-%.

Bevorzugt weist das Siliziumdioxidgranulat I einen Partikeldurchmesser auf, der größer ist, als der Partikeldurchmesser des Siliziumdioxidpulvers. Bevorzugt ist der Partikeldurchmesser des Siliziumdioxidgranulats I bis zu 300 mal größer als der Partikeldurchmesser des Siliziumdioxidpulvers, zum Beispiel bis zu 250 mal größer oder bis zu 200 mal größer oder bis zu 150 mal größer oder bis zu 100 mal größer oder bis zu 50 mal größer oder bis zu 20 mal größer oder bis zu 10 mal größer, besonders bevorzugt 2 bis 5 mal größer.

Das so erhaltene Siliziumdioxidgranulat wird auch als Siliziumdioxidgranulat II bezeichnet. Besonders bevorzugt wird das Siliziumdioxidgranulat II aus dem Siliziumdioxidgranulat I in einem Drehrohrofen mittels einer Kombination aus thermischer, mechanischer und chemischer Behandlung erhalten.

Das in Schritt i.) bereitgestellte Siliziumdioxidgranulat ist bevorzugt ausgewählt aus der Gruppe bestehend aus Siliziumdioxidgranulat I, Siliziumdioxidgranulat II und einer Kombination davon.

Unter "Siliziumdioxidgranulat I" wird ein Granulat aus Siliziumdioxid verstanden, dass durch Granulation von Siliziumdioxidpulver entsteht, welches bei der Pyrolyse von Siliziumverbindungen in einer Brenngasflamme erhalten wurde. Bevorzugt als Brenngas sind Knallgas, Erdgas oder Methangas, besonders bevorzugt ist Knallgas.

Unter "Siliziumdioxidgranulat II" wird ein Granulat aus Siliziumdioxid verstanden, dass durch Nachbehandlung des Siliziumdioxidgranulats I entsteht. Als Nachbehandlung kommen chemische, thermische und/oder mechanische Behandlungen in Betracht. Hierzu wird ausführlich im Rahmen der Beschreibung des Bereitstellens des Siliziumdioxidgranulats (Verfahrensschritts II. des ersten Gegenstands der Erfindung) ausgeführt.

Besonders bevorzugt ist das in Schritt i.) bereitgestellte Siliziumdioxidgranulat das Siliziumdioxidgranulat I. Das Siliziumdioxidgranulat I weist folgende Merkmale auf:

[A] einen Chlorgehalt von weniger als 200 ppm, bevorzugt von weniger als 150 ppm, zum Beispiel weniger als 100 ppm, oder von weniger als 50 ppm, oder von weniger als 1 ppm, oder von weniger als 500 ppb, oder von weniger als 200 ppb, oder in einem Bereich von 1 ppb bis weniger als 200 ppm, oder von 1 ppb bis 100 ppm, oder von 1 ppb bis 1 ppm, oder von 10 ppb bis 500 ppb, oder von 10 ppb bis 200 ppb, besonders bevorzugt von 1 ppb bis 80 ppb;
[B] einen Aluminiumgehalt von weniger als 200 ppb, bevorzugt von weniger als 100 ppb, zum Beispiel von weniger als 50 ppb oder von 1 bis 200 ppb oder von 15 bis 100 ppb, besonders bevorzugt in einem Bereich von 1 bis 50 ppb auf.

Bevorzugt ist das Siliziumdioxidgranulat I gekennzeichnet durch mindestens eines, zum Beispiel durch mindestens zwei oder mindestens drei oder mindestens vier, besonders bevorzugt durch mindestens fünf der folgenden Merkmale:

[C] eine BET-Oberfläche im Bereich von 20 bis 50 m$^2$/g, zum Beispiel in einem Bereich von 20 bis 40 m$^2$/g; besonders bevorzugt in einem Bereich von 25 bis 35 m$^2$/g; dabei beläuft sich bevorzugt der Mikroporenanteil auf eine BET-Oberfläche in einem Bereich von 4 bis 5 m$^2$/g; zum Beispiel in einem Bereich von 4,1 bis 4,9 m$^2$/g; besonders bevorzugt in einem Bereich von 4,2 bis 4,8 m$^2$/g; und

[D] eine mittlere Partikelgröße in einem Bereich von 180 bis 300 $\mu$m;

[E] eine Schüttdichte in einem Bereich von 0,5 bis 1,2 g/cm$^3$, zum Beispiel in einem Bereich von 0,6 bis 1,1 g/cm$^3$, besonders bevorzugt in einem Bereich von 0,7 bis 1,0 g/cm$^3$;

[F] einen Kohlenstoffgehalt von weniger als 50 ppm, zum Beispiel weniger als 40 ppm oder weniger als 30 ppm oder weniger als 20 ppm oder weniger als 10 ppm, besonders bevorzugt in einem Bereich von 1 ppb bis 5 ppm;

[G] eine Stampfdichte in einem Bereich von 0,5 bis 1,2 g/cm$^3$, zum Beispiel in einem Bereich von 0,6 bis 1,1 g/cm$^3$, besonders bevorzugt in einem Bereich von 0,75 bis 1,0 g/cm$^3$;

[H] ein Porenvolumen in einem Bereich von 0,1 bis 1,5 mL/g, zum Beispiel in einem Bereich von 0,15 bis 1,1 mL/g; besonders bevorzugt in einem Bereich von 0,2 bis 0,8 mL/g,

[I] Metallgehalt von Metallen, die von Aluminium verschieden sind, von weniger als 1000 ppb, bevorzugt in einem Bereich von 1 bis 900 ppb, zum Beispiel in einem Bereich von 1 bis 700 ppb, besonders bevorzugt in einem Bereich von 1 bis 500 ppb;

[J] eine Restfeuchte von weniger als 10 Gew.-%, bevorzugt in einem Bereich von 0,01 Gew.-% bis 5 Gew.-%, zum Beispiel von 0,02 bis 1 Gew.-%, besonders bevorzugt von 0,03 bis 0,5 Gew.-%;

wobei die Gew.-%, ppm und ppb jeweils auf das Gesamtgewicht des Siliziumdioxidgranulats I bezogen sind.

Unter dem OH-Gehalt, auch Hydroxygruppengehalt, wird der Gehalt an OH-Gruppen in einem Material, zum Beispiel in Siliziumdioxidpulver, in Siliziumdioxidgranulat oder in einem Quarzglaskörper, verstanden. Der Gehalt an OH-Gruppen wird spektroskopisch nach im Infrarot durch Vergleich der ersten und der dritten OH-Bande bestimmt.

Unter dem Chlorgehalt wird der Gehalt an elementarem Chlor oder Chlorid-Ionen in dem Siliziumdioxidgranulat, dem Siliziumdioxidpulver oder dem Quarzglaskörper verstanden.

Unter dem Aluminiumgehalt wird der Gehalt an elementarem Aluminium oder Aluminium-Ionen in dem Siliziumdioxidgranulat, dem Siliziumdioxidpulver oder dem Quarzglaskörper verstanden.

Bevorzugt weist das Siliziumdioxidgranulat I einen Mikroporenanteil in einem Bereich von 4 bis 5 m$^2$/g auf; zum Beispiel in einem Bereich von 4,1 bis 4,9 m$^2$/g; besonders bevorzugt in einem Bereich von 4,2 bis 4,8 m$^2$/g.

Das Siliziumdioxidgranulat I weist bevorzugt eine Dichte in einem Bereich von 2,1 bis 2,3 g/cm$^3$, besonders bevorzugt in einem Bereich von 2,18 bis 2,22 g/cm$^3$ auf.

Das Siliziumdioxidgranulat I weist bevorzugt eine mittlere Partikelgröße in einem Bereich von 180 bis 300 $\mu$m, zum Beispiel in einem Bereich von 220 bis 280 $\mu$m, besonders bevorzugt in einem Bereich von 230 bis 270 $\mu$m auf.

Das Siliziumdioxidgranulat I weist bevorzugt eine Partikelgröße $D_{50}$ in einem Bereich von 150 bis 300 $\mu$m, zum Beispiel in einem Bereich von 200 bis 280 $\mu$m, besonders bevorzugt in einem Bereich von 230 bis 270 $\mu$m. Weiterhin bevorzugt weist das Siliziumdioxidgranulat I eine Partikelgröße $D_{10}$ in einem Bereich von 50 bis 150 $\mu$m, zum Beispiel in einem Bereich von 100 bis 150 $\mu$m, besonders bevorzugt in einem Bereich von 120 bis 150 $\mu$m auf. Weiterhin bevorzugt weist das Siliziumdioxidgranulat I eine Partikelgröße $D_{90}$ in einem Bereich von 250 bis 620 $\mu$m, zum Beispiel in einem Bereich von 300 bis 550 $\mu$m, besonders bevorzugt in einem Bereich von 300 bis 450 $\mu$m auf.

Das Siliziumdioxidgranulat I weist bevorzugt die Merkmalskombination [A]/[B]/[C] oder [A]/[B]/[D] oder [A]/[B]/[E] auf, weiter bevorzugt die Merkmalskombination [A]/[B]/[C]/[D] oder [A]/[B]/[C]/[E] oder [A]/[B]/[D]/[E], besonders bevorzugt die Merkmalskombination [A]/[B]/[C]/[D]/[E].

Das Siliziumdioxidgranulat I weist bevorzugt die Merkmalskombination [A]/[B]/[C] auf, wobei der Chlorgehalt weniger als 100 ppm beträgt, der Aluminiumgehalt weniger als 50 ppb beträgt und die BET-Oberfläche in einem Bereich von 20 bis 40 m$^2$/g liegt.

Das Siliziumdioxidgranulat I weist bevorzugt die Merkmalskombination [A]/[B]/[D] auf, wobei der Chlorgehalt weniger als 100 ppm beträgt, der Aluminiumgehalt weniger als 50 ppb beträgt und die mittlere Partikelgröße in einem Bereich von 180 bis 300 $\mu$m liegt.

Das Siliziumdioxidgranulat I weist bevorzugt die Merkmalskombination [A]/[B]/[E] auf, wobei der Chlorgehalt weniger als 100 ppm beträgt, der Aluminiumgehalt weniger als 50 ppb beträgt und die Schüttdichte in einem Bereich von 0,6 bis 1,1 g/mL liegt.

Das Siliziumdioxidgranulat I weist bevorzugt die Merkmalskombination [A]/[B]/[C]/[D] auf, wobei der Chlorgehalt weniger als 100 ppm beträgt, der Aluminiumgehalt weniger als 50 ppb beträgt, die BET-Oberfläche in einem Bereich von 20 bis 40 m$^2$/g liegt und die mittlere Partikelgröße in einem Bereich von 180 bis 300 $\mu$m liegt.

Das Siliziumdioxidgranulat I weist bevorzugt die Merkmalskombination [A]/[B]/[C]/[E] auf, wobei der Chlorgehalt weniger als 100 ppm beträgt, der Aluminiumgehalt weniger als 50 ppb beträgt, die BET-Oberfläche in einem Bereich von 20 bis 40 m$^2$/g liegt und die Schüttdichte in einem Bereich von 0,6 bis 1,1 g/mL liegt.

Das Siliziumdioxidgranulat I weist bevorzugt die Merkmalskombination [A]/[B]/[D]/[E] auf, wobei der Chlorgehalt weniger als 100 ppm beträgt, der Aluminiumgehalt weniger als 50 ppb beträgt, die mittlere Partikelgröße in einem Bereich von 180 bis 300 $\mu$m liegt und die Schüttdichte in einem Bereich von 0,6 bis 1,1 g/mL liegt.

Das Siliziumdioxidgranulat I weist bevorzugt die Merkmalskombination [A]/[B]/[C]/[D]/[E] auf, wobei der Chlorgehalt weniger als 100 ppm beträgt, der Aluminiumgehalt weniger als 50 ppb beträgt, die BET-Oberfläche in einem Bereich von 20 bis 40 m$^2$/g liegt, die mittlere Partikelgröße in einem Bereich von 180 bis 300 $\mu$m liegt und die Schüttdichte in einem Bereich von 0,6 bis 1,1 g/mL liegt.

Unter Partikelgröße wird die Größe der aus den Primärpartikeln zusammengelagerten Teilchen verstanden, die in einem Siliziumdioxidpulver, in einer Aufschlämmung oder in einem Siliziumdioxidgranulat vorliegen. Unter der mittleren Partikelgröße wird der arithmetische Mittelwert aller Partikelgrößen des genannten Stoffes verstanden. Der $D_{50}$-Wert gibt an, dass 50 % der Partikel, bezogen auf die gesamte Teilchenzahl, kleiner als der angegebene Wert sind. Der $D_{10}$-Wert gibt an, dass 10 % der Partikel, bezogen auf die gesamte Teilchenzahl, kleiner als der angegebene Wert sind. Der $D_{90}$-Wert gibt an, dass 90 % der Partikel, bezogen auf die gesamte Teilchenzahl, kleiner als der angegebene Wert sind. Die Partikelgröße wird mittels dynamischem Bildanalyseverfahren nach ISO 13322-2:2006-11 bestimmt.

Weiter besonders bevorzugt ist das in Schritt i.) bereitgestellte Siliziumdioxidgranulat das Siliziumdioxidgranulat II. Das Siliziumdioxidgranulat II weist folgende Merkmale auf:

(A) einen Chlorgehalt von weniger als 500 ppm, bevorzugt von weniger als 400 ppm, zum Beispiel weniger als 350 ppm oder bevorzugt von weniger als 330 ppm oder in einem Bereich von 1 ppb bis 500 ppm oder von 10 ppb bis 450 ppm besonders bevorzugt von 50 ppb bis 300 ppm; und

(B) einen Aluminiumgehalt von weniger als 200 ppb, zum Beispiel von weniger als 150 ppb oder von weniger als 100 ppb oder von 1 bis 150 ppb oder von 1 bis 100 ppb, besonders bevorzugt in einem Bereich von 1 bis 80 ppb.

Bevorzugt weist das Siliziumdioxidgranulat II mindestens eines, zum Beispiel mindestens zwei oder mindestens drei oder mindestens vier, besonders bevorzugt mindestens fünf der folgenden Merkmale auf:

(C) eine BET-Oberfläche im Bereich von 10 bis 35 m$^2$/g, zum Beispiel in einem Bereich von 10 bis 30 m$^2$/g, besonders bevorzugt in einem Bereich von 20 bis 30 m$^2$/g;

(D) eine mittlere Partikelgröße in einem Bereich von 100 bis 300 $\mu$m auf, zum Beispiel in einem Bereich von 150 bis 280 $\mu$m oder von 200 bis 270 $\mu$m, besonders bevorzugt in einem Bereich von 230 bis 260 $\mu$m;

(E) eine Schüttdichte in einem Bereich von 0,7 bis 1,2 g/cm$^3$, zum Beispiel in einem Bereich von 0,75 bis 1,1 g/cm$^3$, besonders bevorzugt in einem Bereich von 0,8 bis 1,0 g/cm$^3$;

(F) einen Kohlenstoffgehalt von weniger als 5 ppm, zum Beispiel weniger als 4,5 ppm oder in einem Bereich von 1 ppb bis 4 ppm, besonders bevorzugt von weniger als 4 ppm;

(G) Stampfdichte in einem Bereich von 0,7 bis 1,2 g/cm$^3$, zum Beispiel in einem Bereich von 0,75 bis 1,1 g/cm$^3$, besonders bevorzugt in einem Bereich von 0,8 bis 1,0 g/cm$^3$;

(H) ein Porenvolumen in einem Bereich von 0,1 bis 2,5 mL/g, zum Beispiel in einem Bereich von 0,2 bis 1,5 mL/g; besonders bevorzugt in einem Bereich von 0,4 bis 1 mL/g;

(I) einen Metallgehalt von Metallen, die von Aluminium verschieden sind, von weniger als 1000 ppb, zum Beispiel in einem Bereich von 1 bis 400 ppb, besonders bevorzugt in einem Bereich von 1 bis 200 ppb;

(J) eine Restfeuchte von weniger als 3 Gew.-%, zum Beispiel in einem Bereich von 0,001 Gew.-% bis 2 Gew.-%, besonders bevorzugt von 0,01 bis 1 Gew.-%,

wobei die Gew.-%, ppm und ppb jeweils auf das Gesamtgewicht des Siliziumdioxidgranulats II bezogen sind.

Bevorzugt weist das Siliziumdioxidgranulat II einen Mikroporenanteil in einem Bereich von 1 bis 2 m$^2$/g zum Beispiel in einem Bereich von 1,2 bis 1,9 m$^2$/g, besonders bevorzugt in einem Bereich von 1,3 bis 1,8 m$^2$/g auf.

Das Siliziumdioxidgranulat II weist bevorzugt eine Dichte in einem Bereich von 0,5 bis 2,0 g/cm$^3$, zum Beispiel von 0,6 bis 1,5 g/cm$^3$, besonders bevorzugt von 0,8 bis 1,2 g/cm$^3$ auf. Die Dichte wird entsprechend der in den Testmethoden beschriebenen Methode bestimmt.

Das Siliziumdioxidgranulat II weist bevorzugt eine Partikelgröße $D_{50}$ in einem Bereich von 150 bis 300 $\mu$m, zum Beispiel in einem Bereich von 200 bis 280 $\mu$m, besonders bevorzugt in einem Bereich von 230 bis 270 $\mu$m. Weiterhin bevorzugt weist das Siliziumdioxidgranulat II eine Partikelgröße $D_{10}$ in einem Bereich von 50 bis 150 $\mu$m auf, zum Beispiel in einem Bereich von 100 bis 150 $\mu$m, besonders bevorzugt in einem Bereich von 120 bis 150 $\mu$m auf. Weiterhin

bevorzugt weist das Siliziumdioxidgranulat II eine Partikelgröße $D_{90}$ in einem Bereich von 250 bis 620 $\mu$m, zum Beispiel in einem Bereich von 300 bis 550 $\mu$m, besonders bevorzugt in einem Bereich von 300 bis 450 $\mu$m auf.

Das Siliziumdioxidgranulat II weist bevorzugt die Merkmalskombination (A)/(B)/(C) oder (A)/(B)/(D) oder (A)/(B)/(E) auf, weiter bevorzugt die Merkmalskombination (A)/(B)/(C)/(D) oder (A)/(B)/(C)/(E) oder (A)/(B)/(D)/(E), besonders bevorzugt die Merkmalskombination (A)/(B)/(C)/(D)/(E).

Das Siliziumdioxidgranulat II weist bevorzugt die Merkmalskombination (A)/(B)/(C) auf, wobei der Chlorgehalt weniger als 330 ppm beträgt, der Aluminiumgehalt weniger als 100 ppb beträgt und die BET-Oberfläche in einem Bereich von 10 bis 30 m$^2$/g liegt.

Das Siliziumdioxidgranulat II weist bevorzugt die Merkmalskombination (A)/(B)/(D) auf, wobei der Chlorgehalt weniger als 330 ppm beträgt, der Aluminiumgehalt weniger als 100 ppb beträgt und die mittlere Partikelgröße in einem Bereich von 150 bis 280 $\mu$m liegt.

Das Siliziumdioxidgranulat II weist bevorzugt die Merkmalskombination (A)/(B)/(E) auf, wobei der Chlorgehalt weniger als 330 ppm beträgt, der Aluminiumgehalt weniger als 100 ppb beträgt und die Schüttdichte in einem Bereich von 0,75 bis 1,1 g/cm$^3$ liegt.

Das Siliziumdioxidgranulat II weist bevorzugt die Merkmalskombination (A)/(B)/(C)/(D) auf, wobei der Chlorgehalt weniger als 330 ppm beträgt, der Aluminiumgehalt weniger als 100 ppb beträgt, die BET-Oberfläche in einem Bereich von 10 bis 30 m$^2$/g liegt und die mittlere Partikelgröße in einem Bereich von 150 bis 280 $\mu$m liegt.

Das Siliziumdioxidgranulat II weist bevorzugt die Merkmalskombination (A)/(B)/(C)/(E) auf, wobei der Chlorgehalt weniger als 330 ppm beträgt, der Aluminiumgehalt weniger als 100 ppb beträgt, die BET-Oberfläche in einem Bereich von 10 bis 30 m$^2$/g liegt und die Schüttdichte in einem Bereich von 0,75 bis 1,1 g/mL liegt.

Das Siliziumdioxidgranulat II weist bevorzugt die Merkmalskombination (A)/(B)/(D)/(E) auf, wobei der Chlorgehalt weniger als 330 ppm beträgt, der Aluminiumgehalt weniger als 100 ppb beträgt, die mittlere Partikelgröße in einem Bereich von 150 bis 280 $\mu$m liegt und die Schüttdichte in einem Bereich von 0,75 bis 1,1 g/mL liegt.

Das Siliziumdioxidgranulat II weist bevorzugt die Merkmalskombination (A)/(B)/(C)/(D)/(E) auf, wobei der Chlorgehalt weniger als 330 ppm beträgt, der Aluminiumgehalt weniger als 100 ppb beträgt, die BET-Oberfläche in einem Bereich von 10 bis 30 m$^2$/g liegt, die mittlere Partikelgröße in einem Bereich von 150 bis 280 $\mu$m liegt und die Schüttdichte in einem Bereich von 0,75 bis 1,1 g/mL liegt.

**Schritt ii.)**

Gemäß Schritt ii.) wird aus dem Siliziumdioxidgranulat eine Glasschmelze gebildet. Üblicherweise wird dabei das Siliziumdioxidgranulat erwärmt, bis eine Glasschmelze erhalten wird. Das Erwärmen des Siliziumdioxidgranulats zu einer Glasschmelze kann prinzipiell auf allen dem Fachmann zu diesem Zwecke bekannten Wegen erfolgen.

Das Bilden einer Glasschmelze aus dem Siliziumdioxidgranulat, zum Beispiel durch Erwärmen, kann durch ein kontinuierliches Verfahren erfolgen. Im erfindungsgemäßen Verfahren zum Herstellen eines Quarzglaskörpers kann das Siliziumdioxidgranulat bevorzugt kontinuierlich in einen Ofen eingebracht oder die Glasschmelze kontinuierlich dem Ofen entnommen werden, oder beides. Besonders bevorzugt wird das Siliziumdioxidgranulat kontinuierlich in den Ofen eingebracht und die Glasschmelze kontinuierlich dem Ofen entnommen.

Dazu geeignet ist prinzipiell ein Ofen, der mindestens einen Einlass und mindestens einen Auslass aufweist. Unter einem Einlass wird eine Öffnung verstanden, durch die Siliziumdioxid und gegebenenfalls weitere Stoffe in den Ofen eingetragen werden können. Unter einem Auslass wird eine Öffnung verstanden, durch die zumindest ein Teil des Siliziumdioxids aus dem Ofen entnommen werden kann. Der Ofen kann beispielsweise vertikal und horizontal ausgerichtet sein. Bevorzugt ist der Ofen vertikal ausgerichtet. Bevorzugt liegt mindestens ein Einlass über mindestens einem Auslass. "Über" bedeutet im Zusammenhang mit Einbauten und Merkmalen eines Ofens, insbesondere einem Ein- und Auslass, dass die Einbaute oder das Merkmal, das "über" einem anderen angeordnet ist, eine höhere Lage über NormalNull (NN) aufweist. Unter "vertikal" wird verstanden, dass die direkte Verbindung zwischen dem Einlass und dem Auslass des Ofens eine Abweichung von nicht mehr als 30° zur Lotrichtung aufweist.

Gemäß einer bevorzugten Ausführungsform des ersten Gegenstands der Erfindung beinhaltet der Ofen einen hängenden Blechtiegel. In den hängenden Blechtiegel wird das Siliziumdioxidgranulat eingetragen und unter Erhalt einer Glasschmelze erwärmt. Unter einem Blechtiegel wird ein Tiegel verstanden der mindestens ein Walzblech beinhaltet. Bevorzugt weist ein Blechtiegel mehrere Walzbleche auf. Unter einem hängenden Blechtiegel wird ein Blechtiegel der zuvor beschriebenen Art verstanden, der in einem Ofen hängend angeordnet ist.

Der hängende Blechtiegel kann prinzipiell aus allen dem Fachmann bekannten und zum Schmelzen von Siliziumdioxid geeigneten Materialien bestehen. Bevorzugt beinhaltet das Blech des hängenden Blechtiegels ein gesintertes Material, zum Beispiel ein Sintermetall. Unter Sintermetallen werden Metalle oder Legierungen verstanden, die durch Sintern von Metallpulvern erhalten werden.

Bevorzugt beinhaltet das Blech des Blechtiegels mindestens ein Element ausgewählt aus der Gruppe bestehend aus Refraktärmetallen. Unter Refraktärmetallen werden die Metalle der 4. Nebengruppe (Ti, Zr, Hf), der 5. Nebengruppe (V, Nb, Ta) und der 6. Nebengruppe (Cr, Mo, W) verstanden.

Bevorzugt beinhaltet das Blech des Blechtiegels ein Sintermetall ausgewählt aus der Gruppe bestehend aus Molybdän, Wolfram oder einer Kombination davon. Weiter bevorzugt enthält das Blech des Blechtiegels mindestens ein weiteres Refraktärmetall, besonders bevorzugt Rhenium, Osmium, Iridium, Ruthenium oder einer Kombination aus zwei oder mehr davon.

Bevorzugt beinhaltet das Blech des Blechtiegels eine Legierung aus Molybdän mit einem Refraktärmetall, oder Wolfram mit einem Refraktärmetall. Besonders bevorzugte Legierungsmetalle sind Rhenium, Osmium, Iridium, Ruthenium oder einer Kombination aus zwei oder mehr davon. Gemäß einem weiteren Beispiel ist das Blech des Blechtiegels eine Legierung aus Molybdän mit Wolfram, Rhenium, Osmium, Iridium, Ruthenium oder einer Kombination aus zwei oder mehr davon. Zum Beispiel ist das Blech des Blechtiegels eine Legierung aus Wolfram mit Molybdän, Rhenium, Osmium, Iridium, Ruthenium oder einer Kombination aus zwei oder mehr davon.

Bevorzugt kann das zuvor beschriebene Blech des Blechtiegels mit einem Refraktärmetall beschichtet sein. Gemäß einem bevorzugten Beispiel ist das Blech des Blechtiegels mit Rhenium, Osmium, Iridium, Ruthenium, Molybdän oder Wolfram, oder einer Kombination aus zwei oder mehr davon beschichtet.

Bevorzugt weisen das Blech und die Beschichtung verschiedene Zusammensetzungen auf. Zum Beispiel ist ein Molybdänblech mit einer oder mehreren Schichten aus Rhenium, Osmium, Iridium, Ruthenium, Wolfram oder jeweils einer Kombination von zwei oder mehr davon beschichtet. Gemäß einem anderen Beispiel ist ein Wolframblech mit einer oder mehreren Schichten aus Rhenium, Osmium, Iridium, Ruthenium, Molybdän oder jeweils einer Kombination von zwei oder mehr davon beschichtet. Gemäß einem weiteren Beispiel kann das Blech des Blechtiegels aus mit Rhenium legierten Molybdän oder aus mit Rhenium legierten Wolfram bestehen, und zur Tiegelinnenseite mit einer oder mehreren Schichten beinhaltend Rhenium, Osmium, Iridium, Ruthenium oder jeweils einer Kombination von zwei oder mehr davon beschichtet sein.

Bevorzugt weist das Blech des hängenden Blechtiegels eine Dichte 95 % oder mehr der theoretischen Dichte auf, zum Beispiel eine Dichte von 95 % bis 98 % oder von 96 % bis 98 %. Weiter bevorzugt sind höhere theoretische Dichten, insbesondere im Bereich von 98 bis 99,95 %. Die theoretische Dichte eines Werkstoffs entspricht der Dichte eines porenfreien und 100 % dichten Materials. Eine Dichte des Blechs des Blechtiegels von mehr als 95 % der theoretischen Dichte kann beispielsweise durch Sintern eines Sintermetalls und anschließendes Verdichten des gesinterten Materials erhalten werden. Besonders bevorzugt ist ein Blechtiegel durch Sintern eines Sintermetalls, Walzen unter Erhalt eines Blechs und Verarbeiten des Blechs zu einem Tiegel erhältlich.

Bevorzugt weist der Blechtiegel mindestens einen Deckel, eine Wand und eine Bodenplatte auf. Bevorzugt weist der hängende Blechtiegel mindestens eines, zum Beispiel mindestens zwei oder mindestens drei oder mindestens vier, besonders bevorzugt mindestens fünf oder alle der folgenden Merkmale auf:

(a) mindestens eine, z.B. mehr als eine oder mindestens zwei oder mindestens drei oder mindestens fünf, besonders bevorzugt drei oder vier Lagen des Blechs;

(b) mindestens ein Blech, z.B. mindestens drei oder mindestens vier oder mindestens sechs oder mindestens acht oder mindestens zwölf oder mindestens 15 oder mindestens 16 oder mindestens 20 Bleche, besonders bevorzugt zwölf oder 16 Bleche;

(c) mindestens eine Verbindung von zwei Blechstücken, z.B. mindestens zwei oder mindestens fünf oder mindestens zehn oder mindestens 18 oder mindestens 24 oder mindestens 36 oder mindestens 48 oder mindestens 60 oder mindestens 72 oder mindestens 48 oder mindestens 96 oder mindestens 120 oder mindestens 160, besonders bevorzugt 36 oder 48 Verbindungen von zwei gleichen oder mehreren verschiedenen Blechstücken des hängenden Blechtiegels;

(d) die Blechstücke des hängenden Blechtiegels sind vernietet, z.B. an mindestens einer Verbindung, durch Tiefziehen, z.B. durch eine Kombination von Tiefziehen mit Blech-Ansetzen, oder durch Senken verbunden, verschraubt oder verschweißt, z.B. durch Elektronenstrahlschweißen und Versintern der Schweißstellen, besonders bevorzugt vernietet;

(e) das Blech des hängenden Blechtiegels ist durch einen Umformschritt, der mit einer Erhöhung der physikalischen Dichte verbunden ist, erhältlich, bevorzugt durch Umformen eines gesinterten Metalls oder einer gesinterten Legierung; weiter bevorzugt ist das Umformen ein Walzen;

(f) eine Aufhängung aus Kupfer, Aluminium, Stahl, Eisen, Nickel oder einem Refraktärmetall, z.B. aus dem Tiegelmaterial, bevorzugt eine wassergekühlte Aufhängung aus Kupfer oder Stahl;

(g) eine Düse, bevorzugt eine fest mit dem Tiegel verbundene Düse;

(h) einen Dorn, zum Beispiel einen mit Stegen an der Düse befestigten Dorn oder einen mit einer Haltestange am Deckel befestigten Dorn oder einen von unterhalb des Tiegels mit einer Haltestange verbundenen Dorn;

(i) mindestens einen Gaseinlass, z.B. in Form eines Füllrohrs oder als separater Einlass;

(j) mindestens einen Gasauslass, z.B. als separater Auslass am Deckel oder in der Wand des Tiegels;

(k) einen gekühlten Mantel, bevorzugt einen wassergekühlten Mantel;

(l) eine Isolation von außen, bevorzugt eine Isolation von Außen aus Zirkoniumoxid.

Der hängende Blechtiegel kann prinzipiell auf jede dem Fachmann geläufige und hierfür geeignet erscheinende Art beheizt werden. Der hängende Blechtiegel kann beispielsweise mittels elektrischer Heizelemente (resistiv) oder durch Induktion erhitzt werden. Bei resistiver Heizung wird die feste Oberfläche des Blechtiegels von außen erwärmt und gibt die Energie von dort an deren Innenseite ab.

Gemäß einer bevorzugten Ausführungsform der vorliegenden Erfindung erfolgt der Energieeintrag in den Blechtiegel nicht durch ein Erwärmen des Blechtiegels, oder eines darin vorliegenden Schmelzguts, oder beidem, mittels einer Flamme, wie zum Beispiel einer in den Blechtiegel oder auf den Blechtiegel gerichteten Brennerflamme.

Durch die hängende Anordnung kann der hängende Blechtiegel im Ofen bewegt werden. Bevorzugt kann der Tiegel in den Ofen zumindest teilweise hinein- und herausgefahren werden. Liegen im Ofen verschiedene Heizzonen vor, werden deren Temperaturprofile auf den sich im Ofen befindlichen Tiegel übertragen. Durch das Verändern der Position des Tiegels im Ofen können so mehrere Heizzonen, variierende Heizzonen oder mehrere variierende Heizzonen im Tiegel realisiert werden.

Der Blechtiegel weist eine Düse auf. Die Düse ist aus einem Düsenmaterial gebildet. Bevorzugt beinhaltet das Düsenmaterial ein vorverdichtetes Material, zum Beispiel mit einer Dichte in einem Bereich von mehr als 95 %, zum Beispiel von 98 bis 100%, besonders bevorzugt von 99 bis 99,999 %, jeweils bezogen auf die theoretische Dichte des Düsenmaterials. Bevorzugt beinhaltet das Düsenmaterial ein Refraktärmetall, zum Beispiel Molybdän, Wolfram oder eine Kombination davon mit einem weiteren Refraktärmetall. Als Düsenmaterial besonders bevorzugt ist Molybdän. Bevorzugt kann eine Düse beinhaltend Molybdän eine Dichte von 100 % der theoretischen Dichte aufweisen.

Bevorzugt ist die in einem Blechtiegel enthaltene Bodenplatte dicker als die Seiten des Blechtiegels. Bevorzugt besteht die Bodenplatte aus dem gleichen Material wie die Seiten des Blechtiegels. Bevorzugt ist die Bodenplatte des Blechtiegels kein Walzblech. Die Bodenplatte ist zum Beispiel 1,1 bis 5000 mal dicker oder 2 bis 1000 mal dicker oder 4 bis 500 mal dicker, besonders bevorzugt 5 bis 50 mal dicker, jeweils mit Bezug auf eine Wand des Blechtiegels.

Gemäß einer weiteren bevorzugten Ausführungsform des ersten Gegenstands der Erfindung beinhaltet der Ofen einen hängenden oder einen stehenden Sintertiegel. In den Sintertiegel wird das Siliziumdioxidgranulat eingetragen und unter Erhalt einer Glasschmelze erwärmt.

Unter einem Sintertiegel wird ein Tiegel verstanden, der aus einem Sintermaterial gefertigt ist, das mindestens ein Sintermetall beinhaltet und eine Dichte von nicht mehr als 96 % der theoretischen Dichte des Metalls aufweist. Unter Sintermetallen werden Metalle oder Legierungen verstanden, die durch Sintern von Metallpulvern erhalten werden.

Bevorzugt weist das Sintermaterial des Sintertiegels eine Dichte von 85 % oder mehr der theoretischen Dichte des Sintermaterials auf, zum Beispiel eine Dichte von 85 % bis 95 % oder von 90 % bis 94 %, besonders bevorzugt von 91 % bis 93 %.

Das Sintermaterial kann prinzipiell aus allen dem Fachmann bekannten und zum Schmelzen von Siliziumdioxid geeigneten Materialien bestehen. Bevorzugt ist das Sintermaterial gefertigt aus mindestens einem der Elemente ausgewählt aus der Gruppe bestehend aus Refraktärmetallen, Graphit oder mit Graphitfolie ausgeschlagenen Materialien.

Bevorzugt beinhaltet das Sintermaterial ein erstes Sintermetall ausgewählt aus der Gruppe bestehend aus Molybdän, Wolfram und einer Kombination davon. Weiter bevorzugt beinhaltet das Sintermaterial außerdem mindestens ein weiteres Refraktärmetall, das von dem ersten Sintermetall verschieden ist, besonders bevorzugt ausgewählt aus der Gruppe bestehend aus Molybdän, Wolfram, Rhenium, Osmium, Iridium, Ruthenium oder einer Kombination aus zwei oder mehr davon.

Bevorzugt beinhaltet das Sintermaterial eine Legierung aus Molybdän mit einem Refraktärmetall, oder Wolfram mit einem Refraktärmetall. Besonders bevorzugt als Legierungsmetall sind Rhenium, Osmium, Iridium, Ruthenium oder einer Kombination aus zwei oder mehr davon. Gemäß einem weiteren Beispiel beinhaltet das Sintermaterial eine Legierung aus Molybdän mit Wolfram, Rhenium, Osmium, Iridium, Ruthenium oder einer Kombination aus zwei oder mehr davon. Zum Beispiel beinhaltet das Sintermaterial eine Legierung aus Wolfram mit Molybdän, Rhenium, Osmium, Iridium, Ruthenium oder einer Kombination aus zwei oder mehr davon.

Gemäß einer weiteren bevorzugten Ausführungsform kann das zuvor beschriebene Sintermaterial eine Beschichtung beinhalten, die ein Refraktärmetall, insbesondere Rhenium, Osmium, Iridium, Ruthenium oder eine Kombination aus zwei oder mehr davon enthält. Gemäß einem bevorzugten Beispiel enthält die Beschichtung Rhenium, Osmium, Iridium, Ruthenium, Molybdän oder Wolfram, oder eine Kombination aus zwei oder mehr davon.

Bevorzugt weisen das Sintermaterial und seine Beschichtung verschiedene Zusammensetzungen auf. Zum Beispiel ist ein Sintermaterial beinhaltend Molybdän mit einer oder mehreren Schichten aus Rhenium, Osmium, Iridium, Ruthenium, Wolfram oder jeweils einer Kombination von zwei oder mehr davon beschichtet. Gemäß einem anderen Beispiel ist ein Sintermaterial beinhaltend Wolfram mit einer oder mehreren Schichten aus Rhenium, Osmium, Iridium, Ruthenium, Molybdän oder jeweils einer Kombination von zwei oder mehr davon beschichtet. Gemäß einem weiteren Beispiel kann das Sintermaterial aus mit Rhenium legierten Molybdän oder aus mit Rhenium legierten Wolfram bestehen, und zur Tiegelinnenseite mit einer oder mehreren Schichten beinhaltend Rhenium, Osmium, Iridium, Ruthenium oder jeweils einer Kombination von zwei oder mehr davon beschichtet sein.

Bevorzugt wird ein Sintertiegel durch Sintern des Sintermaterials in einer Form gefertigt. Der Sintertiegel kann als Ganzes in einer Form gefertigt werden. Es ist ebenso möglich, dass einzelne Teile des Sintertiegels in einer Form gefertigt und anschließend zu dem Sintertiegel verarbeitet werden. Bevorzugt wird der Tiegel aus mehr als einem Teil gefertigt, zum Beispiel aus einer Bodenplatte und einem oder mehreren Seitenteilen. Die Seitenteile sind bevorzugt in einem Stück bezogen auf den Umfang des Tiegels gefertigt. Bevorzugt kann der Sintertiegel aus mehreren übereinander angeordneten Seitenteilen gefertigt werden. Bevorzugt werden die Seitenteile des Sintertiegels durch Verschrauben oder durch eine Nut-Feder Verbindung abgedichtet. Ein Verschrauben erfolgt bevorzugt durch Fertigen von Seitenteilen, die an den Rändern ein Gewinde aufweisen. Bei einer Nut-Feder-Verbindung haben zwei zu verbindende Seitenteile an den Rändern je eine Nut, in die als verbindendes drittes Teil eine Feder eingesteckt wird, so dass eine formschlüssige Verbindung senkrecht zur Tiegelwandebene gebildet wird. Besonders bevorzugt wird ein Sintertiegel aus mehr als einem Seitenteil gefertigt, zum Beispiel aus zwei oder mehr Seitenteilen, besonders bevorzugt aus drei oder mehr Seitenteilen. Im Falle des hängenden Sintertiegels sind die Teile besonders bevorzugt verschraubt. Im Falle des stehenden Sintertiegels sind die Teile des besonders bevorzugt mittels einer Nut-Feder-Verbindung verbunden.

Die Bodenplatte kann prinzipiell durch alle dem Fachmann bekannten und zu diesem Zweck geeigneten Maßnahmen mit der Tiegelwand verbunden werden. Gemäß einer bevorzugten Ausführungsform ist die Bodenplatte mit einem Außengewinde versehen und wird durch Einschrauben der Bodenplatte in die Tiegelwand mit dieser verbunden. Gemäß einer weiteren bevorzugten Ausführungsform wird die Bodenplatte mit Hilfe von Schrauben mit der Tiegelwand verbunden. Gemäß einer weiteren bevorzugten Ausführungsform wird die Bodenplatte in den Sintertiegel eingehängt, beispielsweise durch einlegen der Bodenplatte auf einen Innenkragen der Tiegelwand. Gemäß einer weiteren bevorzugten Ausführungsform werden zumindest ein Teil der Tiegelwand und eine verdickte Bodenplatte in einem Stück gesintert. Im Falle des hängenden Sintertiegels sind die Bodenplatte und die Tiegelwand des hängenden Sintertiegels miteinander verschraubt. Im Falle des stehenden Sintertiegels sind die Bodenplatte und die Tiegelwand des stehenden Sintertiegels mittels einer Nut-Feder-Verbindung miteinander verbunden.

Bevorzugt ist die in einem Sintertiegel enthaltene Bodenplatte dicker als die Seiten, zum Beispiel 1,1 bis 20 mal dicker oder 1,2 bis 10 mal dicker oder 1,5 bis 7 mal dicker, besonders bevorzugt 2 bis 5 mal dicker. Bevorzugt weisen die Seiten über den Umfang und über die Höhe des Sintertiegels eine konstante Wandstärke auf.

Der Sintertiegel weist eine Düse auf. Die Düse ist aus einem Düsenmaterial gebildet. Bevorzugt beinhaltet das Düsenmaterial ein vorverdichtetes Material, zum Beispiel mit einer Dichte in einem Bereich von mehr als 95 %, zum Beispiel von 98 bis 100%, besonders bevorzugt von 99 bis 99,999 %, jeweils bezogen auf die theoretische Dichte des Düsenmaterials. Bevorzugt beinhaltet das Düsenmaterial ein Refraktärmetall, zum Beispiel Molybdän, Wolfram oder eine Kombination davon mit einem Refraktärmetall. Als Düsenmaterial besonders bevorzugt ist Molybdän. Bevorzugt kann eine Düse beinhaltend Molybdän eine Dichte von 100 % der theoretischen Dichte aufweisen.

Der hängende Sintertiegel kann prinzipiell auf jede dem Fachmann geläufige und hierfür geeignet erscheinende Weise beheizt werden. Der hängende Sintertiegel kann beispielsweise induktiv oder resistiv erhitzt werden. Bei induktiver Heizung wird die Energie direkt durch Spulen in die Seitenwand des Sintertiegels eingekoppelt und von dort an die Tiegelinnenseite abgegeben. Bei resistiver Heizung wird die Energie durch Strahlung eingekoppelt, wobei die feste Oberfläche von außen erwärmt wird und die Energie von dort an deren Innenseite abgegeben wird. Bevorzugt wird der Sintertiegel induktiv erhitzt.

Gemäß einer bevorzugten Ausführungsform der vorliegenden Erfindung erfolgt der Energieeintrag in den Sintertiegel nicht durch ein Erwärmen des Sintertiegels, oder eines darin vorliegenden Schmelzguts, oder beidem, mittels einer Flamme, wie zum Beispiel einer in den Sintertiegels oder auf den Sintertiegels gerichteten Brennerflamme.

Bevorzugt weist der Sintertiegel eine oder mehr als eine Heizzone auf, zum Beispiel eine oder zwei oder drei oder mehr als drei Heizzonen, bevorzugt eine oder zwei oder drei Heizzonen, besonders bevorzugt eine Heizzone. Die Heizzonen des Sintertiegels können auf die gleiche oder unterschiedliche Temperaturen gebracht werden. Zum Beispiel können alle Heizzonen auf eine Temperatur oder alle Heizzonen auf verschiedene Temperaturen oder zwei oder mehr Heizzonen auf eine und eine oder mehr Heizzonen unabhängig voneinander auf andere Temperaturen gebracht werden. Bevorzugt werden alle Heizzonen auf unterschiedliche Temperaturen gebracht, zum Beispiel nimmt die Temperatur der Heizzonen in Richtung des Materialtransports des Siliziumdioxidgranulats zu.

Unter einem hängenden Sintertiegel wird ein Sintertiegel der zuvor beschriebenen Art verstanden, der in einem Ofen hängend angeordnet ist.

Bevorzugt weist der hängende Sintertiegel mindestens eines, zum Beispiel mindestens zwei oder mindestens drei oder mindestens vier, besonders bevorzugt alle der folgenden Merkmale auf:

{a} eine Aufhängung, bevorzugt eine höhenverstellbare Aufhängung;
{b} mindestens zwei abgedichtete Ringe als Seitenteile, bevorzugt mindestens zwei miteinander verschraubte Ringe als Seitenteile;
{c} eine Düse, bevorzugt eine fest mit dem Tiegel verbundene Düse;

{d} einen Dorn, zum Beispiel einen mit Stegen an der Düse befestigten Dorn oder einen mit einer Haltestange am Deckel befestigten Dorn oder einen von unterhalb des Tiegels mit einer Haltestange verbundenen Dorn;

{e} mindestens einen Gaseinlass, z.B. in Form eines Füllrohrs oder als separater Einlass, besonders bevorzugt in Form eines Füllrohrs;

{f} mindestens einen Gasauslass, z.B. am Deckel oder in der Wand des Tiegels.

{g} einen gekühlten Mantel, besonders bevorzugt einen wassergekühlten Mantel;

{h} eine Isolation auf der Außenseite des Tiegels, zum Beispiel auf der Außenseite des gekühlten Mantels, bevorzugt eine Isolationsschicht aus Zirkoniumoxid.

Als Aufhängung bevorzugt ist eine bei der Fertigung des hängenden Sintertiegels angebrachte Aufhängung, zum Beispiel eine als integraler Bestandteil des Tiegels vorgesehene Aufhängung, besonders bevorzugt eine als integraler Bestandteil des Tiegels vorgesehene Aufhängung aus dem Sintermaterial. Als Aufhängung weiterhin bevorzugt ist eine an den Sintertiegel angebrachte Aufhängung aus einem von dem Sintermaterial verschiedenen Material, zum Beispiel aus Aluminium, Stahl, Eisen, Nickel oder Kupfer, bevorzugt aus Kupfer, besonders bevorzugt eine gekühlte, zum Beispiel eine wassergekühlte, an den Sintertiegel angebrachte Aufhängung aus Kupfer.

Durch die hängende Anordnung kann der hängende Sintertiegel im Ofen bewegt werden. Bevorzugt kann der Tiegel in den Ofen zumindest teilweise hinein- und herausgefahren werden. Liegen im Ofen verschiedene Heizzonen vor, werden deren Temperaturprofile auf den sich im Ofen befindlichen Tiegel übertragen. Durch das Verändern der Position des Tiegels im Ofen können so mehrere Heizzonen, variierende Heizzonen oder mehrere variierende Heizzonen im Tiegel realisiert werden.

Unter einem stehenden Sintertiegel wird ein Sintertiegel der zuvor beschriebenen Art verstanden, der in einem Ofen stehend angeordnet ist.

Bevorzugt weist der stehende Sintertiegel mindestens eines, zum Beispiel mindestens zwei oder mindestens drei oder mindestens vier, besonders bevorzugt alle der folgenden Merkmale auf:

/a/ einen als Stehfläche geformten Bereich, bevorzugt einen als Stehfläche geformten Bereich am Boden des Tiegels, weiter bevorzugt einen in der Bodenplatte des Tiegels als Stehfläche geformten Bereich, besonders bevorzugt einen als Stehfläche geformten Bereich am äußeren Rand des Bodens des Tiegels;

/b/ mindestens zwei abgedichtete Ringe als Seitenteile, bevorzugt mindestens zwei durch eine Nut-Feder-Verbindung abgedichtete Ringe als Seitenteile;

/c/ eine Düse, bevorzugt eine fest mit dem Tiegel verbundene Düse, besonders bevorzugt eine im nicht als Stehfläche geformten Bereich des Bodens des Tiegels;

/d/ einen Dorn, zum Beispiel einen mit Stegen an der Düse befestigten Dorn oder einen mit Stegen am Deckel befestigten Dorn oder einen von unterhalb des Tiegels mit einer Haltestange verbundenen Dorn;

/e/ mindestens einen Gaseinlass, z.B. in Form eines Füllrohrs oder als separater Einlass;

/f/ mindestens einen Gasauslass, z.B. als separater Auslass am Deckel oder in der Wand des Tiegels;

/g/ einen Deckel.

Der stehende Sintertiegel weist bevorzugt eine Trennung der Gasräume im Ofen und im Bereich unterhalb des Ofens auf. Unter dem Bereich unterhalb des Ofens wird der Bereich unterhalb der Düse verstanden, in dem sich die entnommene Glasschmelze befindet. Bevorzugt werden die Gasräume durch die Fläche, auf der der Tiegel steht, getrennt. Gas, das sich im Gasraum des Ofens zwischen Ofeninnenwand und Tiegelaußenwand befindet, kann nicht nach unten in den Bereich unterhalb des Ofens entweichen. Die entnommene Glasschmelze hat keinen Kontakt zu den Gasen aus dem Gasraum des Ofens. Bevorzugt weisen aus einem Ofen mit einem stehend angeordneten Sintertiegel entnommene Glasschmelzen und daraus gebildete Quarzglaskörper eine höhere Oberflächenreinheit auf als aus einem Ofen mit einem hängend angeordneten Sintertiegel entnommene Glasschmelzen und daraus gebildete Quarzglaskörper.

Bevorzugt ist der Tiegel so mit dem Einlass und dem Auslass des Ofens verbunden, dass durch den Einlass des Ofens Siliziumdioxidgranulat über den Einlass des Tiegels in den Tiegel gelangen kann und durch den Auslass des Tiegels und den Auslass des Ofens Glasschmelze entnommen werden kann.

Bevorzugt beinhaltet der Tiegel neben dem mindestens einen Einlass mindestens eine Öffnung, bevorzugt mehrere Öffnungen, durch die Gas ein- und ausgeleitet werden kann. Bevorzugt umfasst der Tiegel mindestens zwei Öffnungen, wobei mindestens eine als Gaseinlass und mindestens eine als Gasauslass verwendet werden kann. Bevorzugt führt die Verwendung mindestens einer Öffnung als Gaseinlass und mindestens einer Öffnung als Gasauslass zu einem Gasstrom im Tiegel.

Durch den Einlass des Tiegels wird das Siliziumdioxidgranulat in den Tiegel eingebracht und anschließend im Tiegel erwärmt. Das Erwärmen kann in Anwesenheit eines Gases oder eines Gemisches aus zwei oder mehr Gasen durchgeführt werden. Beim Erwärmen kann außerdem an das Siliziumdioxidgranulat gebundenes Wasser in die Gasphase übergehen und so ein weiteres Gas bilden. Das Gas oder das Gemisch aus zwei oder mehr Gasen befindet sich im Gasraum des Tiegels. Unter dem Gasraum des Tiegels wird der Bereich im Innern des Tiegels verstanden, der nicht von einer festen oder flüssigen Phase belegt ist. Geeignete Gase sind zum Beispiel Wasserstoff, Inertgase sowie zwei oder mehr davon. Unter Inertgasen werden solche Gase verstanden, die bis zu einer Temperatur von 2400 °C mit den im Tiegel vorgesehenen Stoffen nicht reagieren. Bevorzugte Inertgase sind Stickstoff, Helium, Neon, Argon, Krypton und Xenon, besonders bevorzugt Argon und Helium. Bevorzugt wird das Erwärmen in reduzierender Atmosphäre durchgeführt. Diese kann bevorzugt durch Wasserstoff oder eine Kombination von Wasserstoff und einem Inertgas, zum Beispiel durch eine Kombination von Wasserstoff und Helium, oder von Wasserstoff und Stickstoff, oder von Wasserstoff und Argon, besonders bevorzugt durch eine Kombination aus Wasserstoff und Helium bereitgestellt werden.

Bevorzugt wird ein zumindest teilweiser Gasaustausch von Luft, Sauerstoff und Wasser gegen Wasserstoff, mindestens ein Inertgas, oder gegen eine Kombination von Wasserstoff und mindestens einem Inertgas an dem Siliziumdioxidgranulat durchgeführt. Der zumindest teilweise Gasaustausch wird an dem Siliziumdioxidgranulat beim Einbringen des Siliziumdioxidgranulats, oder vor dem Erwärmen, oder während des Erwärmens, oder während mindestens zwei der vorgenannten Tätigkeiten durchgeführt. Bevorzugt wird das Siliziumdioxidgranulat in einem Gasstrom von Wasserstoff und mindestens einem Inertgas, zum Beispiel Argon oder Helium, zum Schmelzen erwärmt.

Bevorzugt beträgt der Taupunkt des Gases beim Austritt durch den Gasauslass weniger als 0°C.

Unter dem Taupunkt wird die Temperatur verstanden, unterhalb der bei unverändertem Druck ein Bestandteil des untersuchten Gases oder Gasgemisches kondensiert. Im Allgemeinen versteht man darunter die Kondensation von Wasser. Der Taupunkt wird mit einem Taupunktspiegelhygrometer gemäß der im Methodenteil beschriebenen Messmethode bestimmt

Bevorzugt weist der Ofen, bevorzugt auch ein darin befindlicher Schmelztiegel, mindestens einen Gasauslass auf, durch den dem Ofen zugeführtes und beim Betrieb des Ofens gebildetes Gas entnommen wird. Der Ofen kann zudem mindestens einen dedizierten Gaseinlass aufweisen. Alternativ oder zusätzlich kann Gas durch die Feststoffzuführung, auch als Feststoffeinlass bezeichnet, eingebracht werden, zum Beispiel zusammen mit den Siliziumdioxidpartikeln, oder davor, danach, oder durch eine Kombination von zwei oder mehr der vorgenannten Möglichkeiten.

Bevorzugt weist das Gas, das durch den Gasauslass dem Ofen entnommen wird, beim Austritt aus dem Ofen durch den Gasauslass einen Taupunkt von weniger als 0°C, zum Beispiel von weniger als -10°C, oder weniger als -20°C auf. Der Taupunkt wird gemäß der im Methodenteil beschriebenen Messmethode bei einem schwachen Überdruck von 5 bis 20 mbar bestimmt. Als Messgerät geeignet ist zum Beispiel ein Gerät mit der Bezeichnung "Optidew" der Firma Michell Instruments GmbH, D-61381 Friedrichsdorf.

Der Taupunkt des Gases wird bevorzugt an einer Messstelle in einem Abstand von 10 cm oder mehr von dem Gasauslass des Ofens bestimmt. Oftmals beträgt dieser Abstand zwischen 10 cm und 5 m. In diesem Abstandsbereich - hier beschrieben durch "beim Austritt" - ist der Abstand der Messstelle vom Gasauslass des Ofens für das Ergebnis der Taupunktmessung unerheblich. Das Gas wird von dem Auslass bis zur Messstelle fluidleitend geführt, zum Beispiel in einem Schlauch oder einem Rohr. Die Temperatur des Gases beträgt an der Messstelle oftmals zwischen 10 und 60°C, zum Beispiel 20 bis 50°C insbesondere 20 bis 30°C.

Geeignete Gase und Gasgemische wurden bereits beschrieben. Es wurde im Rahmen eigener Versuche festgestellt, dass die vorstehend genannten Angaben für jedes der genannten Gase und Gasgemische gilt.

Gemäß einer weiteren bevorzugten Ausführungsform weist das Gas oder das Gasgemisch vor Eintritt in den Ofen, insbesondere den Schmelztiegel einen Taupunkt von weniger als -50°C, zum Beispiel weniger als -60°C, oder weniger als -70°C, oder weniger als -80 °C auf. Ein Taupunkt von -60°C wird in der Regel nicht überschritten. Ebenfalls sind folgende Bereiche für den Taupunkt bei Eintritt in den Ofen bevorzugt: von -50 bis -100°C; von - 60 bis -100°C und von -70 bis -100°C.

Gemäß einer weiteren bevorzugten Ausführungsform beträgt der Taupunkt des Gases vor Eintritt in den Ofen mindestens 50°C weniger als beim Austritt aus dem Schmelztiegel, zum Beispiel mindestens 60°C, oder auch 80°C. Für das Messen des Taupunkts beim Austritt aus dem Schmelztiegel gelten die obenstehenden Angaben. Für eine Messung des Taupunkts vor Eintritt in den Ofen gilt entsprechendes. Da zwischen dem Ort der Messung und dem Ofen keine Quelle für einen Feuchtigkeitseintrag und keine Möglichkeit des Kondensationsniederschlags vorgesehen ist, kommt es hier auf den Abstand der Messstelle zum Gaseinlass des Ofens nicht an.

Gemäß einer bevorzugten Ausführungsform wird der Ofen insbesondere der Schmelztiegel mit einer Gasaustauschrate in einem Bereich von 200 bis 3000 L/h betrieben.

Gemäß einer bevorzugten Ausführungsform wird der Taupunkt in einer Messzelle bestimmt, wobei die Messzelle durch eine Membran von dem durch den Gasauslass tretenden Gas getrennt ist. Die Membran ist bevorzugt permeabel für Feuchtigkeit. Mit dieser Maßnahme kann die Messzelle vor einer im Gasstrom befindlichen Menge an Staub und anderen Partikeln geschützt werden, die durch den Gasstrom aus dem Schmelzofen, insbesondere einem Schmelztiegel mit ausgetragen werden. Durch diese Maßnahme kann die Einsatzzeit einer Messsonde erheblich verlängert werden. Die Einsatzzeit bedeutet die Zeitspanne unter dem Betrieb des Ofens, während der weder ein Austausch der Messsonde, noch Reinigen der Messsonde erforderlich werden.

Gemäß einer bevorzugten Ausführungsform wird zum Bestimmen des Taupunkts ein Taupunktspiegelmessgerät eingesetzt.

Der Taupunkt am Gasauslass des Ofens kann eingestellt werden. Bevorzugt beinhaltet ein Verfahren zum Einstellen des Taupunkts am Auslass des Ofens die folgenden Schritte:

I) Bereitstellen eines Eingangsmaterials in einem Ofen, wobei das Eingangsmaterial eine Restfeuchte aufweist;
II) Betreiben des Ofens, wobei ein Gasstrom durch den Ofen geführt wird, und
III) Variieren der Restfeuchte des Eingangsmaterials, oder der Gasaustauschrate des Gasstroms.

Bevorzugt kann durch dieses Verfahren der Taupunkts auf einem Bereich von weniger als 0°C, zum Beispiel von weniger als -10°C, besonders bevorzugt von weniger als -20°C eingestellt werden. Weiter bevorzugt kann der Taupunkt auf einem Bereich von weniger als 0°C bis -100°C, zum Beispiel von weniger als -10°C bis -80°C, besonders bevorzugt von weniger als -20°C bis -60°C eingestellt werden.

Unter "Eingangsmaterial" werden zum Herstellen eines Quarzglaskörpers bereitgestellte Siliziumdioxidpartikel verstanden, bevorzugt Siliziumdioxidgranulat, Siliziumdioxidkörnung oder Kombinationen davon. Die Siliziumdioxidpartikel, das Granulat und die Körnung sind bevorzugt durch die im Rahmen des ersten Gegenstands beschriebenen Merkmale gekennzeichnet.

Der Ofen und der Gasstrom sind bevorzugt durch die im Rahmen des ersten Gegenstands beschriebenen Merkmale gekennzeichnet. Bevorzugt wird der Gasstrom durch Einleiten eines Gases durch einen Einlass in den Ofen und durch Ausleiten eines Gases durch einen Auslass aus dem Ofen gebildet. Unter der "Gasaustauschrate" wird das Volumen an Gas verstanden, dass pro Zeit durch den Auslass aus dem Ofen geführt wird. Die Gasaustauschrate wird auch als Durchsatz des Gasstroms oder als Volumendurchsatz bezeichnet.

Das Einstellen des Taupunkts kann insbesondere durch Variieren der Restfeuchte des Eingangsmaterials oder der Gasaustauschrate des Gasstroms erfolgen. Beispielsweise kann durch Erhöhung von Restfeuchte des Eingangsmaterials der Taupunkt erhöht werden. Durch Verringern von Restfeuchte des Eingangsmaterials kann der Taupunkt erniedrigt werden. Eine erhöhte Gasaustauschrate kann zu einer Verringerung des Taupunkts führen. Eine verringerte Gasaustauschrate kann dagegen einen erhöhten Taupunkt zur Folge haben.

Bevorzugt liegt die Gasaustauschrate des Gasstroms in einem Bereich von 200 bis 3000 L/h, zum Beispiel von 200 bis 2000 L/h, besonders bevorzugt von 200 bis 1000 L/h.

Die Restfeuchte des Eingangsmaterials liegt bevorzugt in einem Bereich von 0,001 Gew.-% bis 5 Gew.-%, zum Beispiel von 0,01 bis 1 Gew.-%, besonders bevorzugt von 0,03 bis 0,5 Gew.-%, jeweils bezogen auf das Gesamtgewicht des Eingangsmaterials.

Bevorzugt kann der Taupunkt darüber hinaus durch weitere Maßnahmen beeinflusst werden. Beispiele solcher Maßnahmen sind Taupunkt des Gasstroms beim Eintritt in den Ofen, die Ofentemperatur und die Zusammensetzung des Gasstroms. Eine Verringerung des Taupunkts des Gasstroms beim Eintritt in den Ofen, einer Verringerung der Ofentemperatur oder eine Verringerung der Temperatur des Gasstroms am Auslass des Ofens können zu einer Verringerung des Taupunkts des Gasstroms am Auslass führen. Die Temperatur des Gasstroms am Ausgang des Ofens hat keinen Einfluss auf den Taupunkt, sofern sie oberhalb des Taupunkts liegt.

Besonders bevorzugt wird zum Einstellen des Taupunkts am Auslass des Ofens die Gasaustauschrate des Gasstroms variiert.

Bevorzugt ist das Verfahren durch mindestens eines, zum Beispiel mindestens zwei oder mindestens drei, besonders bevorzugt mindestens vier der folgenden Merkmale gekennzeichnet:

I} eine Restfeuchte des Eingangsmaterials in einem Bereich von 0,001 bis 5 Gew.-%, zum Beispiel von 0,01 bis 1 Gew.-%, besonders bevorzugt von 0,03 bis 0,5 Gew.-%, jeweils bezogen auf das Gesamtgewicht des Eingangsmaterials;
II} eine Gasaustauschrate des Gasstroms in einem Bereich von 200 bis 3000 L/h, zum Beispiel von 200 bis 2000 L/h, besonders bevorzugt von 200 bis 1000 L/h;
III} eine Ofentemperatur in einem Bereich von 1700 bis 2500°C, zum Beispiel in einem Bereich von 1900 bis 2400°C, besonders bevorzugt in einem Bereich von 2100 bis 2300°C;
IV} einen Taupunkt des Gasstroms beim Eintritt in den Ofen in einem Bereich von -50°C bis -100°C, zum Beispiel von -60°C bis -100°C, besonders bevorzugt von -70°C bis -100°C;
V} der Gasstrom Helium, Wasserstoff oder eine Kombination davon beinhaltet, bevorzugt Helium und Wasserstoff in einem Verhältnis von 20:80 bis 95:5;
VI} eine Temperatur des Gases am Auslass in einem Bereich von 10 bis 60°C, zum Beispiel von 20 bis 50°C, besonders bevorzugt von 20 bis 30°C.

Es ist beispielsweise bevorzugt, bei Verwendung eines Siliziumdioxidgranulats mit hoher Restfeuchte einen Gasstrom mit hoher Gasaustauschrate und einem geringen Taupunkt am Einlass des Ofens zu verwenden. Bei Verwendung eines Siliziumdioxidgranulats mit einer geringen Restfeuchte kann dagegen ein Gasstrom mit geringer Gasaustauschrate und einem höheren Taupunkt am Einlass des Ofens verwendet werden.

Besonders bevorzugt liegt bei der Verwendung eines Siliziumdioxidgranulats mit einer Restfeuchte von weniger als 3 Gew.-% die Gasaustauschrate eines Gasstroms beinhaltend Helium und Wasserstoff in einem Bereich von 200 bis 3000 L/h.

Wird ein Siliziumdioxidgranulat mit einer Restfeuchte von 0,1 % in einer Menge von 30 kg/h dem Ofen zugeführt, wird bevorzugt eine Gasaustauschrate des Gasstroms, im Fall von He/$H_2$ = 50:50 in einem Bereich von 2800 bis 3000 l/h, im Fall von He/$H_2$ = 30:70 in einem Bereich von 2700 bis 2900 l/h und ein Taupunkt des Gasstroms vor Eintritt in den Ofen von -90 °C gewählt. Am Gasauslass wird so ein Taupunkt von weniger als 0°C erhalten.

Wird ein Siliziumdioxidgranulat mit einer Restfeuchte von 0,05 % in einer Menge von 30 kg/h dem Ofen zugeführt, wird bevorzugt eine Gasaustauschrate des Gasstroms, im Fall von He/$H_2$ = 50:50 von in einem Bereich von 1900 bis 21001/h, im Fall von He/$H_2$ = 30:70 von in einem Bereich von 1800 bis 2000 l/h und ein Taupunkt des Gasstroms vor Eintritt in den Ofen von -90 °C gewählt. Am Gasauslass wird so ein Taupunkt von weniger als 0°C erhalten.

Wird ein Siliziumdioxidgranulat mit einer Restfeuchte von 0,03 % in einer Menge von 30 kg/h dem Ofen zugeführt, wird bevorzugt eine Gasaustauschrate des Gasstroms, im Fall von He/$H_2$ = 50:50 von in einem Bereich von 1400 bis 1600 l/h, im Fall von He/$H_2$ = 30:70 von in einem Bereich von 1200 bis 1400 l/h und ein Taupunkt des Gasstroms vor Eintritt in den Ofen von -90 °C gewählt. Am Gasauslass wird so ein Taupunkt von weniger als 0°C erhalten.

Die Ofentemperatur zum Schmelzen des Siliziumdioxidgranulats liegt bevorzugt im Bereich von 1700 bis 2500°C, zum Beispiel im Bereich von 1900 bis 2400°C, besonders bevorzugt im Bereich von 2100 bis 2300°C.

Bevorzugt beträgt die Verweilzeit im Ofen in einem Bereich von 1 Stunde bis 50 Stunden, zum Beispiel 1 bis 30 Stunden, besonders bevorzugt 5 bis 20 Stunden. Die Verweilzeit bedeutet im Kontext der vorliegenden Erfindung die Zeit, die benötigt wird, um während des Durchführens des erfindungsgemäßen Verfahrens dem Schmelzofen, in dem die Glasschmelze gebildet wird, eine Füllmenge des Schmelzofens verfahrensgemäß zu entnehmen. Die Füllmenge ist die insgesamt im Schmelzofen vorliegende Masse an Siliziumdioxid. Das Siliziumdioxid kann dabei als Feststoff und als Glasschmelze vorliegen.

Bevorzugt nimmt die Ofentemperatur über die Länge, in Richtung des Materialtransports zu. Bevorzugt nimmt die Ofentemperatur über die Länge, in Richtung des Materialtransports um mindestens 100°C, zum Beispiel um mindestens 300°C oder um mindestens 500°C oder um mindestens 700°C, besonders bevorzugt um mindestens 1000°C zu. Bevorzugt beträgt die höchste Temperatur im Ofen 1700 bis 2500°C, zum Beispiel 1900 bis 2400°C, besonders bevorzugt 2100 bis 2300°C. Die Zunahme der Ofentemperatur kann gleichmäßig oder entsprechend eines Temperaturprofils erfolgen.

Bevorzugt nimmt die Ofentemperatur, bevor die Glasschmelze aus dem Ofen entnommen wird, ab. Bevorzugt nimmt die Ofentemperatur bevor die Glasschmelze aus dem Ofen entnommen wird um 50 bis 500°C ab, zum Beispiel um 100°C oder um 400°C, besonders bevorzugt um 150 bis 300°C. Bevorzugt beträgt die Temperatur der Glasschmelze beim Entnehmen 1750 bis 2100°C, zum Beispiel 1850 bis 2050°C, besonders bevorzugt 1900 bis 2000°C.

Bevorzugt nimmt die Ofentemperatur über die Länge, in Richtung des Materialtransports zu und bevor die Glasschmelze aus dem Ofen entnommen wird ab. Bevorzugt nimmt dabei die Ofentemperatur über die Länge, in Richtung des Materialtransports um mindestens 100°C, zum Beispiel um mindestens 300°C oder um mindestens 500°C oder um mindestens 700°C, besonders bevorzugt um mindestens 1000°C zu. Bevorzugt beträgt die höchste Temperatur im Ofen 1700 bis 2500°C, zum Beispiel 1900 bis 2400°C, besonders bevorzugt 2100 bis 2300°C. Bevorzugt nimmt die Ofentemperatur bevor die Glasschmelze aus dem Ofen entnommen wird um 50 bis 500°C ab, zum Beispiel um 100°C oder um 400°C, besonders bevorzugt um 150 bis 300°C.

Bevorzugt weist der Ofen mindestens eine erste und eine weitere miteinander durch einen Durchlass verbundene Kammern auf, wobei die erste und die weitere Kammer verschiedene Temperaturen aufweisen, wobei die Temperatur der ersten Kammer niedriger ist als die Temperatur der weiteren Kammer. In einer der weiteren Kammern wird aus dem Siliziumdioxidgranulat eine Glasschmelze gebildet. Diese Kammer wird im Folgenden als Schmelzkammer bezeichnet. Eine mit der Schmelzkammer über eine Stoffführung verbundene, aber vorgelagerte Kammer wird auch als Vorheizstrecke bezeichnet. Es ist zum Beispiel diejenige, bei der mindestens ein Auslass unmittelbar mit einem Einlass der Schmelzkammer verbunden ist. Die vorgenannte Anordnung kann auch in eigenständigen Öfen ausgebildet sein. Dann ist die Schmelzkammer ein Schmelzofen. In Bezug auf die weitere Beschreibung kann der Schmelzofen jedoch synonym zur Schmelzkammer verstanden werden. Dementsprechend gelten die Ausführungen zum Schmelzofen auch für die Schmelzkammer, und umgekehrt. Der Begriff der Vorheizstrecke ist beiden Betrachtungsweisen gleich.

Bevorzugt hat das Siliziumdioxidgranulat bei Eintritt in den Ofen eine Temperatur in einem Bereich von 20 bis 1300°C.

Gemäß einer ersten Ausführungsform wird das Siliziumdioxidgranulat vor Eintritt in die Schmelzkammer nicht temperiert. Zum Beispiel hat das Siliziumdioxidgranulat bei Eintritt in den Ofen eine Temperatur in einem Bereich von 20 bis 40°C, besonders bevorzugt von 20 bis 30°C. Wird gemäß Schritt i.) Siliziumdioxidgranulat II bereitgestellt, hat es beim Eintritt in den Ofen bevorzugt eine Temperatur in einem Bereich von 20 bis 40°C, besonders bevorzugt von 20 bis 30°C.

Gemäß einer anderen Ausführungsform wird das Siliziumdioxidgranulat vor Eintritt in den Ofen auf eine Temperatur in einem Bereich von 40 bis 1300°C temperiert. Temperieren bedeutet das Einstellen der Temperatur auf einen gewählten Wert. Das Temperieren kann prinzipiell auf allen dem Fachmann bekannten und zum Temperieren von Siliziumdioxidgranulat bekannten Wegen erfolgen. Zum Beispiel kann das Temperieren in einem separat von der Schmelzkammer angeordneten Ofen oder in einem mit der Schmelzkammer verbundenen Ofen erfolgen.

Bevorzugt erfolgt das Temperieren in einer mit der Schmelzkammer verbundenen Kammer. Bevorzugt umfasst der Ofen also eine Vorheizstrecke, in der das Siliziumdioxid temperiert werden kann. Bevorzugt ist die Vorheizstrecke selbst ein Durchlaufofen, besonders bevorzugt ein Drehrohrofen. Unter einem Durchlaufofen wird eine beheizte Kammer verstanden, die während des Betriebs eine Bewegung des Siliziumdioxids von einem Einlass des Durchlaufofens zu einem Auslass des Durchlaufofens bewirkt. Bevorzugt ist der Auslass mit dem Einlass des Schmelzofens direkt verbunden. So kann das Siliziumdioxidgranulat aus der Vorheizstrecke ohne weitere Zwischenschritte oder Maßnahmen in den Schmelzofen gelangen.

Es ist weiter bevorzugt, dass die Vorheizstrecke mindestens einen Gaseinlass und mindestens einen Gasauslass umfasst. Durch den Gaseinlass kann Gas in den Innenraum, den Gasraum der Vorheizstrecke gelangen, und durch den Gasauslass kann es ausgeleitet werden. Es ist auch möglich, Gas über den Einlass für das Siliziumdioxidgranulat der Vorheizstrecke in die Vorheizstrecke einzuleiten. Ebenso kann Gas über den Auslass der Vorheizstrecke ausgeleitet und anschließend von dem Siliziumdioxidgranulat getrennt werden. Weiterhin bevorzugt kann Gas über den Einlass für das Siliziumdioxidgranulat und einen Gaseinlass der Vorheizstrecke zugeführt, und über den Auslass der Vorheizstrecke und einen Gasauslass der Vorheizstrecke ausgeleitet werden.

Bevorzugt wird in der Vorheizstrecke durch Verwenden des Gaseinlasses und des Gasauslasses ein Gasstrom im Schmelzofen, insbesondere in einem darin vorgesehenen Tiegel, ausgebildet. Geeignete Gase sind zum Beispiel Wasserstoff, Inertgase sowie zwei oder mehr davon. Bevorzugte Inertgase sind Stickstoff, Helium, Neon, Argon, Krypton und Xenon, besonders bevorzugt Stickstoff und Helium. Bevorzugt liegt in der Vorheizstrecke eine reduzierende Atmosphäre vor. Diese kann bevorzugt durch Wasserstoff oder eine Kombination von Wasserstoff und einem Inertgas, zum Beispiel durch eine Kombination von Wasserstoff und Helium oder von Wasserstoff und Stickstoff, besonders bevorzugt durch eine Kombination aus Wasserstoff und Helium, bereitgestellt werden. Weiter bevorzugt liegt in der Vorheizstrecke eine oxidierende Atmosphäre vor. Diese kann bevorzugt durch Sauerstoff oder eine Kombination aus Sauerstoff und einem oder mehreren weiteren Gasen bereitgestellt werden, besonders bevorzugt ist Luft. Es ist weiter bevorzugt möglich, das Siliziumdioxid bei vermindertem Druck in der Vorheizstrecke zu temperieren.

Zum Beispiel hat das Siliziumdioxidgranulat bei Eintritt in den Ofen eine Temperatur in einem Bereich von 100 bis 1100°C oder von 300 bis 1000 oder von 600 bis 900°C. Wird gemäß Schritt i.) Siliziumdioxidgranulat II bereitgestellt, hat es beim Eintritt in den Ofen bevorzugt eine Temperatur in einem Bereich von 100 bis 1100°C oder von 300 bis 1000 oder von 600 bis 900°C.

Gemäß einer bevorzugten Ausführungsform des ersten Gegenstands der Erfindung beinhaltet der Ofen mindestens zwei Kammern. Bevorzugt beinhaltet der Ofen eine erste und mindestens eine weitere Kammer. Die erste und die weitere Kammer sind miteinander durch einen Durchlass verbunden.

Die mindestens zwei Kammern können in dem Ofen prinzipiell beliebig angeordnet sein, bevorzugt vertikal oder horizontal, besonders bevorzugt vertikal. Bevorzugt sind die Kammern im Ofen so angeordnet, dass bei der Durchführung des Verfahrens gemäß dem ersten Gegenstand der Erfindung Siliziumdioxidgranulat die erste Kammer passiert und anschließend in der weiteren Kammer unter Erhalt einer Glasschmelze erhitzt wird. Die weitere Kammer weist bevorzugt die zuvor beschriebenen Merkmale des Schmelzofens und des darin angeordneten Tiegels auf.

Bevorzugt enthält jede der Kammern einen Einlass und einen Auslass. Bevorzugt ist der Einlass des Ofens mit dem Einlass der ersten Kammer durch einen Durchlass verbunden. Bevorzugt ist der Auslass des Ofens mit dem Auslass der weiteren Kammer durch einen Durchlass verbunden. Bevorzugt ist der Auslass der ersten Kammer durch einen Durchlass mit dem Einlass der weiteren Kammer verbunden.

Bevorzugt sind die Kammern so im Ofen angeordnet, dass durch den Einlass des Ofens das Siliziumdioxidgranulat in die erste Kammer gelangen kann. Bevorzugt sind die Kammern so im Ofen angeordnet, dass durch den Auslass des Ofens eine Siliziumdioxidglasschmelze aus der weiteren Kammer entnommen werden kann. Besonders bevorzugt kann durch den Einlass des Ofens das Siliziumdioxidgranulat in die erste Kammer gelangen und durch den Auslass des Ofens eine Siliziumdioxidglasschmelze aus einer weiteren Kammer entnommen werden.

Durch den Durchlass kann das Siliziumdioxid als Granulat oder Pulver in der durch das Verfahren vorgegebenen Richtung des Materialtransports von einer ersten in eine weitere Kammer gelangen. Durch einen Durchlass verbundene Kammern schließen Anordnungen ein, in denen zwischen einer ersten und einer weiteren Kammer weitere Zwischenelemente in Richtung des Materialtransports angeordnet sind. Den Durchlass können prinzipiell Gase, Flüssigkeiten und Feststoffe passieren. Bevorzugt können Siliziumdioxidpulver, Aufschlämmungen von Siliziumdioxidpulver und Siliziumdioxidgranulat den Übergang zwischen einer ersten und einer weiteren Kammer passieren. Während der Durchführung des erfindungsgemäßen Verfahrens können über den Durchlass zwischen der ersten und der weiteren Kammer alle in die erste Kammer eingetragenen Stoffe in die weitere Kammer gelangen. Bevorzugt gelangt über den Durchlass zwischen der ersten und weiteren Kammer nur Siliziumdioxid in Form von Granulat oder Pulver in die weitere Kammer. Bevorzugt ist der Durchlass zwischen der ersten und der weiteren Kammer durch das Siliziumdioxid verschlossen, so dass der Gasraum der ersten und der weiteren Kammer voneinander getrennt sind, bevorzugt so, dass in den Gasräumen verschiedene Gase oder Gasgemische, verschiedene Drücke oder beides vorliegen können. Gemäß einer anderen bevorzugten Ausgestaltung wird der Durchlass von einer Schleuse gebildet, bevorzugt durch eine Zellenradschleuse.

Bevorzugt weist die erste Kammer des Ofens mindestens einen Gaseinlass und mindestens einen Gasauslass auf. Der Gaseinlass kann prinzipiell jede Form aufweisen, die dem Fachmann bekannt und zum Einleiten eines Gases geeignet ist, zum Beispiel eine Düse, ein Ventil oder ein Rohr. Der Gasauslass kann prinzipiell jede Form aufweisen, die dem Fachmann bekannt und zum Ausleiten eines Gases geeignet ist, zum Beispiel eine Düse, ein Ventil oder ein Rohr.

Bevorzugt wird durch den Einlass des Ofens Siliziumdioxidgranulat in die erste Kammer eingebracht und erwärmt. Das Erwärmen kann in Anwesenheit eines Gases oder einer Kombination aus zwei oder mehr Gasen durchgeführt werden. Dazu liegt das Gas oder die Kombination aus zwei oder mehr Gasen im Gasraum der ersten Kammer vor. Unter dem Gasraum der ersten Kammer wird der Bereich der ersten Kammer verstanden, der nicht von einer festen oder flüssigen Phase belegt ist. Geeignete Gase sind zum Beispiel Wasserstoff, Sauerstoff, Inertgase sowie zwei oder mehr davon. Bevorzugte Inertgase sind Stickstoff, Helium, Neon, Argon, Krypton und Xenon, besonders bevorzugt sind Stickstoff, Helium und eine Kombination davon. Bevorzugt wird das Erwärmen in reduzierender Atmosphäre durchgeführt. Diese kann bevorzugt durch Wasserstoff oder eine Kombination von Wasserstoff und Helium bereitgestellt werden. Bevorzugt wird das Siliziumdioxidgranulat in der ersten Kammer in einem Strom des Gases oder der Kombination aus zwei oder mehr Gasen erwärmt.

Es ist weiter bevorzugt, dass das Siliziumdioxidgranulat in der ersten Kammer bei vermindertem Druck, zum Beispiel bei einem Druck von weniger als 500 mbar oder weniger als 300 mbar, zum Beispiel 200 mbar oder weniger erwärmt wird.

Bevorzugt ist die erste Kammer mit mindestens einer Vorrichtung versehen, mit der das Siliziumdioxidgranulat, bewegt wird. Prinzipiell können alle Vorrichtungen ausgewählt werden, die dem Fachmann zu diesem Zwecke bekannt sind und geeignet erscheinen. Bevorzugt geeignet sind Rühr-, Schüttel- oder Schwenkvorrichtungen.

Gemäß einer bevorzugten Ausführungsform des ersten Gegenstands der Erfindung sind die Temperaturen in der ersten und in der weiteren Kammer verschieden. Bevorzugt ist die Temperatur in der ersten Kammer geringer als die Temperatur in der weiteren Kammer. Bevorzugt liegt die Temperaturdifferenz zwischen der ersten und der weiteren Kammer in einem Bereich von 600 bis 2400°C, zum Beispiel in einem Bereich von 1000 bis 2000°C oder von 1200 bis 1800°C, besonders bevorzugt in einem Bereich von 1500 bis 1700°C. Weiter bevorzugt ist die Temperatur in der ersten Kammer 600 bis 2400°C, zum Beispiel 1000 bis 2000°C oder 1200 bis 1800°C, besonders bevorzugt 1500 bis 1700°C niedriger als die Temperatur in der weiteren Kammer.

Gemäß einer bevorzugten Ausführungsform ist die erste Kammer des Ofens eine Vorheizstrecke, besonders bevorzugt eine wie oben beschriebene Vorheizstrecke, die die oben beschriebenen Merkmale aufweist. Bevorzugt ist die Vorheizstrecke durch einen Durchlass mit der weiteren Kammer verbunden. Bevorzugt gelangt Siliziumdioxid aus der Vorheizstrecke über einen Durchlass in die weitere Kammer. Der Durchlass zwischen der Vorheizstrecke und der weiteren Kammer kann verschlossen sein, so dass keine in die Vorheizstrecke eingeleiteten Gase durch den Durchlass in die weitere Kammer gelangen. Bevorzugt ist der Durchlass zwischen der Vorheizstrecke und der weiteren Kammer verschlossen, so dass das Siliziumdioxid nicht mit Wasser in Berührung kommt. Der Durchlass zwischen der Vorheizstrecke und der weiteren Kammer kann verschlossen sein, so dass der Gasraum der Vorheizstrecke und der ersten Kammer so voneinander getrennt sind, dass in den Gasräumen verschiedene Gase oder Gasgemische, verschiedene Drücke oder beides vorliegen können. Als Durchlass eignen sich bevorzugt die zuvor beschriebenen Ausgestaltungen.

Gemäß einer weiteren bevorzugten Ausführungsform ist die erste Kammer des Ofens keine Vorheizstrecke. Zum Beispiel ist die erste Kammer eine Ausgleichskammer. Unter einer Ausgleichskammer wird eine Kammer des Ofens verstanden, in der Durchsatzvariationen in einer vorgeschalteten Vorheizstrecke oder Durchsatzunterschiede zwischen einer Vorheizstrecke und der weiteren Kammer ausgeglichen werden. Zum Beispiel kann der ersten Kammer wie oben beschrieben ein Drehrohrofen vorgeschaltet sein. Dieser weist üblicherweise einen Durchsatz auf, der um bis zu 6 % des durchschnittlichen Durchsatzes variieren kann. Bevorzugt wird Siliziumdioxid in einer Ausgleichskammer auf der Temperatur gehalten, mit der es in die Ausgleichskammer gelangt.

Es ist ebenso möglich, dass der Ofen eine erste Kammer und mehr als eine weitere Kammer aufweist, zum Beispiel zwei weitere Kammern oder drei weitere Kammern oder vier weitere Kammern oder fünf weitere Kammern oder mehr als fünf weitere Kammern, besonders bevorzugt zwei weitere Kammern. Weist der Ofen zwei weitere Kammern auf, ist die erste Kammer bevorzugt eine Vorheizstrecke, die erste der weiteren Kammern eine Ausgleichskammer und die zweite der weiteren Kammern die Schmelzkammer, bezogen auf die Richtung des Materialtransports.

Gemäß einer weiteren bevorzugten Ausführungsform liegt in der ersten Kammer ein Additiv vor. Das Additiv ist bevorzugt ausgewählt aus der Gruppe bestehend aus Halogenen, Inertgasen, Basen, Sauerstoff oder einer Kombination aus zwei oder mehr davon.

Als Additive sind prinzipiell Halogene in elementarer Form und Halogenverbindungen geeignet. Bevorzugte Halogene sind ausgewählt aus der Gruppe bestehend aus Chlor, Fluor, chlorhaltigen Verbindungen und fluorhaltigen Verbindungen. Besonders bevorzugt sind elementares Chlor und Chlorwasserstoff.

Als Additive sind prinzipiell alle Inertgase sowie Mischungen aus zwei oder mehr davon geeignet. Bevorzugte Inertgase sind Stickstoff, Helium oder eine Kombination daraus.

Als Additive sind prinzipiell auch Basen geeignet. Bevorzugte Basen als Additive sind anorganische und organische Basen.

Weiter geeignet als Additiv ist Sauerstoff. Der Sauerstoff liegt bevorzugt als sauerstoffhaltige Atmosphäre vor, zum Beispiel in Kombination mit einem Inertgas oder einem Gemisch aus zwei oder mehr Inertgasen, besonders bevorzugt in Kombination mit Stickstoff, Helium oder Stickstoff und Helium.

Die erste Kammer kann prinzipiell jedes Material beinhalten, dass dem Fachmann bekannt und zum Erhitzen von Siliziumdioxid geeignet ist. Bevorzugt beinhaltet die erste Kammer mindestens ein Element ausgewählt aus der Gruppe bestehend aus Quarzglas, einem Refraktärmetall, Aluminium und einer Kombination aus zwei oder mehr davon, besonders bevorzugt beinhaltet die erste Kammer Quarzglas oder Aluminium.

Bevorzugt übersteigt die Temperatur in der ersten Kammer 600°C nicht, wenn die erste Kammer ein Polymer oder Aluminium beinhaltet. Bevorzugt beträgt die Temperatur in der ersten Kammer 100 bis 1100°C, wenn die erste Kammer Quarzglas beinhaltet. Bevorzugt beinhaltet die erste Kammer im wesentlichen Quarzglas.

Beim Transport des Siliziumdioxids von der ersten Kammer zur weiteren Kammer durch den Durchlass zwischen der ersten und der weiteren Kammer kann das Siliziumdioxid prinzipiell in jedem beliebigen Zustand vorliegen. Bevorzugt liegt das Siliziumdioxid als Feststoff vor, zum Beispiel als Partikel, Pulver oder Granulat. Gemäß einer bevorzugten Ausführungsform des ersten Gegenstands der Erfindung erfolgt der Transport des Siliziumdioxids von der ersten zur weiteren Kammer als Granulat.

Gemäß einer weiteren bevorzugten Ausführungsform ist die weitere Kammer ein Tiegel aus einem Blech oder einem Sintermaterial, welches ein Sintermetall beinhaltet, wobei das Blech oder das Sintermetall ausgewählt ist aus der Gruppe bestehend aus Molybdän, Wolfram und einer Kombination davon.

Die Glasschmelze wird durch den Auslass aus dem Ofen, bevorzugt über eine Düse, entnommen.

**Schritt iii.)**

Ein Quarzglaskörper wird aus mindestens einem Teil der Glasschmelze gebildet. Mindestens ein Teil der in Schritt ii) hergestellten Glasschmelze wird entnommen und daraus der Quarzglaskörper gebildet.

Die Entnahme eines Teils der in Schritt ii) hergestellten Glasschmelze kann prinzipiell kontinuierlich aus dem Schmelzofen oder der Schmelzkammer, oder nach abgeschlossener Herstellung der Glasschmelze erfolgen. Bevorzugt wird ein Teil der Glasschmelze kontinuierlich entnommen. Die Glasschmelze wird durch den Auslass aus dem Ofen oder den Auslass der Schmelzkammer, jeweils, bevorzugt über eine Düse, entnommen.

Die Glasschmelze kann vor, während oder nach der Entnahme auf eine Temperatur abgekühlt werden, die das Formen der Glasschmelze ermöglicht. Mit dem Abkühlen der Glasschmelze ist ein Ansteigen der Viskosität der Glasschmelze verbunden. Die Glasschmelze wird bevorzugt soweit abgekühlt, dass beim Formen die gebildete Form erhalten bleibt und das Formen gleichzeitig möglichst zügig, zuverlässig und mit geringem Kraftaufwand durchgeführt werden kann. Der Fachmann kann die Viskosität der Glasschmelze zum Formen durch Variieren der Temperatur der Glasschmelze am Formwerkzeug einfach ermitteln. Bevorzugt hat die Glasschmelze beim Entnehmen eine Temperatur im Bereich von 1750 bis 2100°C, zum Beispiel 1850 bis 2050°C, besonders bevorzugt 1900 bis 2000°C. Bevorzugt wird die Glasschmelze nach dem Entnehmen auf eine Temperatur von weniger als 500°C, zum Beispiel von weniger als 200°C oder weniger als 100°C oder weniger als 50°C, besonders bevorzugt auf eine Temperatur im Bereich von 20 bis 30°C abgekühlt.

Der gebildete Quarzglaskörper kann ein massiver Körper oder ein Hohlkörper sein. Unter einem massiven Körper wird ein Körper verstanden, der im Wesentlichen aus einem einzigen Material besteht. Gleichwohl kann ein massiver Körper einen oder mehrere Einschlüsse aufweisen, z.B. Gasblasen. Solche Einschlüsse in einem massiven Körper haben oftmals eine Größe von 65 mm$^3$ oder weniger, zum Beispiel von weniger als 40 mm$^3$, oder von weniger als 20 mm$^3$, oder von weniger als 5 mm$^3$, oder von weniger als 2 mm$^3$, besonders bevorzugt von weniger als 0,5 mm$^3$. Bevorzugt beinhaltet ein massiver Körper weniger als 0,02 Vol.-% seines Volumens, zum Beispiel weniger als 0,01 Vol.-% oder weniger als 0,001 Vol.-% an Einschlüssen, jeweils bezogen auf das Gesamtvolumen des massiven Körpers.

Der Quarzglaskörper weist eine äußere Form auf. Unter der äußeren Form wird die Form des Außenrands des Querschnitts des Quarzglaskörpers verstanden. Die äußere Form des Quarzglaskörpers ist im Querschnitt bevorzugt rund, elliptisch oder polygon mit drei oder mehr Ecken, zum Beispiel 4, 5, 6, 7 oder 8 Ecken, besonders bevorzugt ist der Quarzglaskörper rund.

Bevorzugt hat der Quarzglaskörper eine Länge im Bereich von 100 bis 10000 mm, zum Beispiel von 1000 bis 4000 mm, besonders bevorzugt von 1200 bis 3000 mm.

Bevorzugt hat der Quarzglaskörper einen Außendurchmesser im Bereich von 1 bis 500 mm, zum Beispiel in einem Bereich von 2 bis 400 mm, besonders bevorzugt in einem Bereich von 5 bis 300 mm.

Das Formen des Quarzglaskörpers erfolgt mittels einer Düse. Dazu wird die Glasschmelze durch die Düse geführt. Die äußere Form eines durch die Düse geformten Quarzglaskörpers wird durch die Form der Öffnung der Düse bestimmt. Ist die Öffnung der Düse rund, wird beim Formen des Quarzglaskörpers ein Zylinder gebildet. Weist die Öffnung der Düse eine Struktur auf, wird diese Struktur auf die äußere Form des Quarzglaskörpers übertragen. Ein Quarzglaskörper, der mittels einer Düse mit Strukturen an der Öffnung gebildet wird, weist ein Abbild der Strukturen in Längsrichtung auf dem Glasstrang auf.

Die Düse ist in den Schmelzofen integriert. Bevorzugt ist sie als Teil des Tiegels in den Schmelzofen integriert, besonders bevorzugt als Teil des Auslasses des Tiegels.

Bevorzugt wird der mindestens eine Teil der Glasschmelze durch die Düse entnommen. Die äußere Form des Quarzglaskörpers wird durch das Entnehmen mindestens eines Teils der Glasschmelze durch die Düse gebildet.

Bevorzugt wird der Quarzglaskörper nach dem Bilden abgekühlt, um seine Form zu erhalten. Bevorzugt wird der Quarzglaskörper nach dem Formen auf eine Temperatur abgekühlt, die mindestens 1000°C unterhalb der Temperatur der Glasschmelze beim Formen liegt, zum Beispiel mindestens 1500°C oder mindestens 1800°C, besonders bevorzugt 1900 bis 1950°C. Bevorzugt wird der Quarzglaskörper auf eine Temperatur von weniger als 500°C, zum Beispiel von weniger als 200°C oder weniger als 100°C oder weniger als 50°C, besonders bevorzugt auf eine Temperatur im Bereich von 20 bis 30°C abgekühlt.

Gemäß einer bevorzugten Ausführungsform des ersten Gegenstands der Erfindung kann der erhaltene Quarzglaskörper mit mindestens einer Maßnahme ausgewählt aus der Gruppe bestehend aus chemischer, thermischer oder mechanischer Behandlung behandelt werden.

Bevorzugt wird der Quarzglaskörper chemisch nachbehandelt. Nachbehandeln betrifft das Behandeln eines bereits gebildeten Quarzglaskörpers. Unter chemischem Nachbehandeln des Quarzglaskörpers wird prinzipiell jede Maßnahme verstanden, die dem Fachmann bekannt ist und geeignet erscheint, durch den Einsatz von Stoffen die chemische Struktur oder die Zusammensetzung der Oberfläche des Quarzglaskörpers, oder beides, zu verändern. Bevorzugt umfasst das chemische Nachbehandeln mindestens eine Maßnahme ausgewählt aus der Gruppe bestehend aus Behandeln mit Fluorverbindungen und Ultraschallreinigung.

Als Fluorverbindungen kommen insbesondere Fluorwasserstoff und Fluor enthaltende Säuren, zum Beispiel Flusssäure, in Frage. Die Flüssigkeit weist bevorzugt einen Gehalt an Fluorverbindungen in einem Bereich von 35 bis 55 Gew.-%, bevorzugt in einem Bereich von 35 bis 45 Gew.-% auf, die Gew.-% jeweils bezogen auf die Gesamtmenge an Flüssigkeit. Der Rest zu 100 Gew.-% ist üblicherweise Wasser. Bevorzugt wird als Wasser vollentsalztes oder deionisiertes Wasser ausgewählt.

Eine Ultraschallreinigung erfolgt bevorzugt in einem Flüssigkeitsbad, besonders bevorzugt in Anwesenheit von Detergenzien. Im Fall der Ultraschallreinigung kommen in der Regel keine Fluorverbindungen, zum Beispiel weder Flusssäure noch Fluorwasserstoff, zum Einsatz.

Die Ultraschallreinigung des Quarzglaskörpers wird bevorzugt unter mindestens einer, zum Beispiel mindestens zwei oder mindestens drei oder mindestens vier oder mindestens fünf, besonders bevorzugt allen der folgenden Bedingungen durchgeführt:

- Die Ultraschallreinigung erfolgt in einem kontinuierlichen Verfahren.
- Die Anlage zur Ultraschallreinigung weist sechs miteinander durch Rohre verbundene Kammern auf.
- Die Verweilzeit der Quarzglaskörper in jeder Kammer kann eingestellt werden. Bevorzugt ist die Verweilzeit der Quarzglaskörper in jeder Kammer gleich. Bevorzugt liegt die Verweilzeit in jeder Kammer in einem Bereich von 1 bis 120 min, zum Beispiel von weniger als 5 min oder von 1 bis 5 min oder von 2 bis 4 min oder von weniger als 60 min oder von 10 bis 60 min oder von 20 bis 50 min, besonders bevorzugt in einem Bereich von 5 bis 60 min.
- Die erste Kammer umfasst ein basisches Medium, bevorzugt enthaltend Wasser und eine Base, und einen Ultraschallreiniger.
- Die dritte Kammer umfasst ein saures Medium, bevorzugt enthaltend Wasser und eine Säure, und einen Ultraschallreiniger.
- In der zweiten Kammer und in der vierten bis sechsten Kammer wird der Quarzglaskörper mit Wasser, bevorzugt entsalztem Wasser gereinigt.
- Die vierte bis sechste Kammer wird als Kaskade mit Wasser, bevorzugt entsalztem Wasser betrieben.

Bevorzugt wird das Wasser nur in die sechste Kammer eingeleitet und läuft von der sechsten in die fünfte und von der fünften in die vierte Kammer.

Bevorzugt wird der Quarzglaskörper thermisch nachbehandelt. Unter thermischem Nachbehandeln des Quarzglaskörpers wird prinzipiell jede Maßnahme verstanden, die dem Fachmann bekannt ist und geeignet erscheint, den Quarzglaskörper durch Einwirkung von Temperatur in seiner Form oder Struktur oder beidem zu verändern. Bevorzugt umfasst das thermische Nachbehandeln mindestens eine Maßnahme ausgewählt aus der Gruppe bestehend aus Tempern, Stauchen, Aufblasen, Ausziehen, Verschweißen und einer Kombination aus zwei oder mehr davon. Bevorzugt erfolgt die thermische Nachbehandlung ohne das Ziel des Materialabtrags.

Das Tempern erfolgt bevorzugt durch Erhitzen des Quarzglaskörpers in einem Ofen, bevorzugt auf eine Temperatur in einem Bereich von 900 bis 1300 °C, zum Beispiel in einem Bereich von 900 bis 1250°C oder von 1040 bis 1300°C, besonders bevorzugt in einem Bereich von 1000 bis 1050°C oder von 1200 bis 1300°C. Bevorzugt wird bei der thermischen Behandlung eine Temperatur von 1300°C nicht für einen zusammenhängenden Zeitraum von mehr als 1 h überschritten, besonders bevorzugt wird eine Temperatur von 1300°C während der gesamten thermischen Behandlungsdauer nicht überschritten. Das Tempern kann prinzipiell bei vermindertem druck, bei Normaldruck oder bei erhöhtem Druck erfolgen, bevorzugt bei vermindertem Druck, besonders bevorzugt im Vakuum.

Das Stauchen erfolgt bevorzugt durch Erhitzen des Quarzglaskörpers, bevorzugt auf eine Temperatur von etwa 2100°C, und anschließendes Umformen während einer rotierenden Drehbewegung, bevorzugt mit einer Drehgeschwindigkeit von etwa 60 U/min. Beispielsweise kann ein Quarzglaskörper in Form einer Stange durch Stauchen zu einem Zylinder umgeformt werden.

Bevorzugt kann ein Quarzglaskörper durch Einblasen eines Gases in den Quarzglaskörper aufgeblasen werden. Zum Beispiel kann ein Quarzglaskörper durch Aufblasen zu einem Großrohr umgeformt werden. Bevorzugt wird dazu der Quarzglaskörper, bevorzugt auf eine Temperatur von etwa 2100°C, während eine rotierenden Drehbewegung, bevorzugt mit einer Drehgeschwindigkeit von etwa 60 U/min, ausgeführt wird, erhitzt und der Innenraum mit einem Gas gespült, bevorzugt bei einem definierten und geregelten Innendruck bis etwa 100 mbar. Unter einem Großrohr wird ein Rohr mit einem Außendurchmesser von mindestens 500 mm verstanden.

Ein Quarzglaskörper kann bevorzugt ausgezogen werden. Das Ausziehen erfolgt bevorzugt durch Erhitzen des Quarzglaskörpers, bevorzugt auf eine Temperatur von etwa 2100°C, und anschließendes Ziehen mit einer geregelten Ziehgeschwindigkeit auf den gewünschten Außendurchmesser des Quarzglaskörpers. Zum Beispiel können aus Quarzglaskörpern durch Ausziehen Lampenrohre geformt werden.

Bevorzugt wird der Quarzglaskörper mechanisch nachbehandelt. Unter mechanischem Nachbehandeln des Quarzglaskörpers wird prinzipiell jede Maßnahme verstanden, die dem Fachmann bekannt ist und geeignet erscheint, durch eine abrasive Maßnahme die Gestalt des Quarzglaskörpers zu verändern oder den Quarzglaskörper in mehrere Stücke zu teilen. Insbesondere beinhaltet das mechanische Nachbehandeln mindestens eine Maßnahme ausgewählt aus der Gruppe bestehend aus Schleifen, Bohren, Honen, Sägen, Wasserstrahlschneiden, Laserstrahlschneiden, Aufrauen durch Sandstrahlen, Fräsen und einer Kombination aus zwei oder mehr davon.

Bevorzugt wird der Quarzglaskörper mit einer Kombination dieser Maßnahmen, zum Beispiel mit einer Kombination aus einer chemischen und einer thermischen Nachbehandlung oder einer chemischen und einer mechanischen Nachbehandlung oder einer thermischen und einer mechanischen Nachbehandlung, besonders bevorzugt mit einer Kombination aus einer chemischen, einer thermischen und einer mechanischen Nachbehandlung behandelt. Weiterhin bevorzugt kann der Quarzglaskörper jeweils, unabhängig voneinander, mehreren der vorgenannten Maßnahmen unterworfen werden.

Gemäß einer Ausführungsform des ersten Gegenstands der Erfindung beinhaltet das Verfahren folgenden Verfahrensschritt:

iv) Bilden eines Hohlkörpers mit mindestens einer Öffnung aus dem Quarzglaskörper.

Der gebildete Hohlkörper weist eine innere und eine äußere Form auf. Unter innerer Form wird die Form des Innenrands des Hohlkörpers im Querschnitt verstanden. Die innere und äußere Form des Querschnitts des Hohlkörpers können gleich oder verschieden sein. Die innere und äußere Form des Hohlkörpers kann im Querschnitt rund, elliptisch oder polygon mit drei oder mehr Ecken, zum Beispiel 4, 5, 6, 7 oder 8 Ecken, sein.

Bevorzugt entspricht die äußere Form des Querschnitts der inneren Form des Querschnitts des Hohlkörpers. Besonders bevorzugt hat der Hohlkörper im Querschnitt eine runde innere und eine runde äußere Form.

In einer anderen Ausgestaltung kann sich der Hohlkörper in der inneren und äußeren Form unterscheiden. Bevorzugt weist der Hohlkörper im Querschnitt eine runde äußere Form und eine polygone innere Form auf. Besonders bevorzugt weist der Hohlkörper im Querschnitt eine runde äußere Form und eine hexagonale innere Form auf.

Bevorzugt hat der Hohlkörper eine Länge im Bereich von 100 bis 10000 mm, zum Beispiel von 1000 bis 4000 mm, besonders bevorzugt von 1200 bis 2000 mm.

Bevorzugt hat der Hohlkörper eine Wanddicke in einem Bereich von 0,8 bis 50 mm, zum Beispiel in einem Bereich von 1 bis 40 mm oder von 2 bis 30 mm oder von 3 bis 20 mm, besonders bevorzugt in einem Bereich von 4 bis 10 mm.

Bevorzugt hat der Hohlkörper einen Außendurchmesser 2,6 bis 400 mm, zum Beispiel in einem Bereich von 3,5 bis 450 mm, besonders bevorzugt in einem Bereich von 5 bis 300 mm.

Bevorzugt hat der Hohlkörper einen Innendurchmesser 1 bis 300 mm, zum Beispiel in einem Bereich von 5 bis 280 mm oder von 10 bis 200 mm, besonders bevorzugt in einem Bereich von 20 bis 100 mm.

Der Hohlkörper enthält eine oder mehr Öffnungen. Bevorzugt enthält der Hohlkörper eine Öffnung. Bevorzugt enthält der Hohlkörper eine gerade Zahl an Öffnungen, zum Beispiel 2, 4, 6, 8, 10, 12, 14, 16 18 oder 20 Öffnungen. Bevorzugt enthält der Hohlkörper zwei Öffnungen. Bevorzugt ist der Hohlkörper ein Rohr. Diese Form des Hohlkörpers ist besonders bevorzugt, wenn der Lichtleiter nur einen Kern beinhaltet. Der Hohlkörper kann mehr als zwei Öffnungen enthalten. Die Öffnungen liegen bevorzugt jeweils paarweise gegenüberliegend in den Enden des Quarzglaskörpers. Zum Beispiel weist jedes Ende des Quarzglaskörpers 2, 3, 4, 5, 6, 7 oder mehr als 7 Öffnungen auf, besonders bevorzugt 5, 6 oder 7 Öffnungen. Bevorzugte Formen sind zum Beispiel Rohre, Zwillingsrohre, also Rohre mit zwei parallelen Kanälen, Vielkanalstäbe, also Rohre mit mehr als zwei parallelen Kanälen.

Der Hohlkörper kann prinzipiell auf allen dem Fachmann bekannten Wegen geformt werden. Bevorzugt wird der Hohlkörper mittels einer Düse geformt. Bevorzugt enthält die Düse in der Mitte ihrer Öffnung eine Vorrichtung, die die Glasschmelze beim Formen ableitet. So kann aus einer Glasschmelze ein Hohlkörper geformt werden.

Das Bilden eines Hohlkörpers kann durch Verwendung einer Düse und anschließende Nachbehandlung erfolgen. Als Nachbehandlung eignen sich prinzipiell alle dem Fachmann bekannten Verfahren zur Herstellung eines Hohlkörpers aus einem massiven Körper, zum Beispiel das Stauchen von Kanälen, Bohren, Honen oder Schleifen. Bevorzugt geeignet ist als Nachbehandlung das Führen des massiven Körpers über einen oder mehrere Domen, wobei ein Hohlkörper gebildet wird. Ebenso kann der Dorn in den massiven Körper unter Bilden eines Hohlkörpers eingebracht werden. Bevorzugt wird der Hohlkörper nach dem Bilden abgekühlt.

Bevorzugt wird der Hohlkörper nach dem Bilden auf eine Temperatur von weniger als 500°C, zum Beispiel von weniger als 200°C oder weniger als 100°C oder weniger als 50°C, besonders bevorzugt auf eine Temperatur im Bereich von 20 bis 30°C abgekühlt.

**Vorverdichten**

Es ist prinzipiell möglich, das in Schritt i.) bereitgestellte Siliziumdioxidgranulat einem oder mehreren Vorbehandlungsschritten zu unterziehen, bevor es in Schritt ii.) bis zum Erhalt einer Glasschmelze erwärmt wird. Als Vorbehandlungsschritte kommen beispielsweise thermische oder mechanische Behandlungsschritte in Betracht. Zum Beispiel wird das Siliziumdioxidgranulat vor dem Erwärmen in Schritt ii.) verdichtet. Unter "Verdichten" wird eine Verringerung der BET-Oberfläche und eine Verringerung des Porenvolumens verstanden.

Das Siliziumdioxidgranulat wird bevorzugt thermisch durch Erhitzen des Siliziumdioxidgranulats oder mechanisch durch Ausüben eines Drucks auf das Siliziumdioxidgranulat, beispielsweise Walzen oder Pressen des Siliziumdioxidgranulats, verdichtet. Bevorzugt wird das Siliziumdioxidgranulat durch Erhitzen verdichtet. Besonders bevorzugt erfolgt das Verdichten des Siliziumdioxidgranulats durch Erhitzen mittels einer mit dem Schmelzofen verbundenen Vorheizstrecke.

Bevorzugt wird das Siliziumdioxid durch Erhitzen bei einer Temperatur in einem Bereich von 800 bis 1400°C, zum Beispiel bei einer Temperatur in einem Bereich von 850 bis 1300°C, besonders bevorzugt bei einer Temperatur in einem Bereich von 900 bis 1200°C verdichtet.

In einer bevorzugten Ausführungsform des ersten Gegenstands der Erfindung wird die BET-Oberfläche des Siliziumdioxidgranulats vor dem Erwärmen in Schritt ii.) nicht auf weniger als 5 m$^2$/g verringert, bevorzugt nicht auf weniger als 7 m$^2$/g oder nicht auf weniger als 10 m$^2$/g, besonders bevorzugt nicht auf weniger als 15 m$^2$/g. Es ist weiterhin bevorzugt, dass die BET-Oberfläche des Siliziumdioxidgranulats vor dem Erwärmen in Schritt ii.) gegenüber dem in Schritt i.) bereitgestellten Siliziumdioxidgranulat nicht verringert wird.

In einer bevorzugten Ausführungsform des ersten Gegenstands der Erfindung wird die BET-Oberfläche des Siliziumdioxidgranulats auf weniger als 20 m$^2$/g verringert, zum Beispiel auf weniger als 15m$^2$/g, oder auf weniger als 10 m$^2$/g, oder auf einen Bereich von mehr als 5 bis weniger als 20 m$^2$/g oder von 7 bis 15 m$^2$/g, besonders bevorzugt auf einen Bereich von 9 bis 12 m$^2$/g. Bevorzugt wird die BET-Oberfläche des Siliziumdioxidgranulats vor dem Erwärmen in Schritt ii.) gegenüber dem in Schritt i.) bereitgestellten Siliziumdioxidgranulat um weniger als 40 m$^2$/g verringert, zum Beispiel um 1 bis 20 m$^2$/g oder um 2 bis 10 m$^2$/g, besonders bevorzugt um 3 bis 8 m$^2$/g, wobei die BET-Oberfläche nach dem Verdichten mehr als 5 m$^2$/g beträgt.

Das verdichtete Siliziumdioxidgranulat wird im Folgenden als Siliziumdioxidgranulat III bezeichnet. Bevorzugt weist das Siliziumdioxidgranulat III mindestens eines, zum Beispiel mindestens zwei oder mindestens drei oder mindestens vier, besonders bevorzugt mindestens fünf der folgenden Merkmale auf:

A. eine BET-Oberfläche in einem Bereich von mehr als 5 bis weniger als 40 m$^2$/g, zum Beispiel von 10 bis 30 m$^2$/g, besonders bevorzugt auf einen Bereich von 15 bis 25 m$^2$/g;
B. eine Partikelgröße $D_{10}$ in einem Bereich von 100 bis 300 $\mu$m, besonders bevorzugt in einem Bereich von 120 bis 200 $\mu$m;
C. eine Partikelgröße $D_{50}$ in einem Bereich von 150 bis 550 $\mu$m, besonders bevorzugt in einem Bereich von 200 bis 350 $\mu$m;
D. eine Partikelgröße $D_{90}$ in einem Bereich von 300 bis 650 $\mu$m, besonders bevorzugt in einem Bereich von 400

bis 500 μm;

E. eine Schüttdichte in einem Bereich von 0,8 bis 1,6 g/cm$^3$, besonders bevorzugt von 1,0 bis 1,4 g/cm$^3$;

F. eine Stampfdichte in einem Bereich von 1,0 bis 1,4 g/cm$^3$, besonders bevorzugt von 1,15 bis 1,35 g/cm$^3$;

G. eine Menge von Kohlenstoff von weniger als 5 ppm, zum Beispiel von weniger als 4,5 ppm, besonders bevorzugt von weniger als 4 ppm;

H. einen Cl-Gehalt von weniger als 500 ppm, besonders bevorzugt von 1 ppb bis 200 ppm,

wobei die ppm und ppb jeweils auf das Gesamtgewicht des Siliziumdioxidgranulats III bezogen sind.

Das Siliziumdioxidgranulat III weist bevorzugt die Merkmalskombination A./F./G. oder A./F./H. oder A./G./H. auf, besonders bevorzugt die Merkmalskombination A./F./G./H.

Das Siliziumdioxidgranulat III weist bevorzugt die Merkmalskombination A./F./G. auf, wobei die BET-Oberfläche in einem Bereich von 10 bis 30 m$^2$/g liegt, die Stampfdichte in einem Bereich von 1,15 bis 1,35 g/mL liegt und der Kohlenstoffgehalt weniger als 4 ppm beträgt.

Das Siliziumdioxidgranulat III weist bevorzugt die Merkmalskombination A./F./H. auf, wobei die BET-Oberfläche in einem Bereich von 10 bis 30 m$^2$/g, die Stampfdichte in einem Bereich von 1,15 bis 1,35 g/mL und der Chlorgehalt in einem Bereich von 1 ppb bis 200 ppm liegt.

Das Siliziumdioxidgranulat III weist bevorzugt die Merkmalskombination A./G./H. auf, wobei die BET-Oberfläche in einem Bereich von 10 bis 30 m$^2$/g liegt, der Kohlenstoffgehalt weniger als 4 ppm beträgt und der Chlorgehalt in einem Bereich von 1 ppb bis 200 ppm liegt.

Das Siliziumdioxidgranulat III weist bevorzugt die Merkmalskombination A./F./G./H. auf, wobei die BET-Oberfläche in einem Bereich von 10 bis 30 m$^2$/g liegt, die Stampfdichte in einem Bereich von 1,15 bis 1,35 g/mL liegt, der Kohlenstoffgehalt weniger als 4 ppm beträgt und der Chlorgehalt in einem Bereich von 1 ppb bis 200 ppm liegt.

Bevorzugt wird in mindestens einem Verfahrensschritt eine von Siliziumdioxid verschiedene Siliziumkomponente zugegeben. Die Zugabe einer von Siliziumdioxid verschiedenen Siliziumkomponente wird im Folgenden auch als Si-Dotieren bezeichnet. Prinzipiell kann das Si-Dotieren in jedem Verfahrensschritt erfolgen. Bevorzugt erfolgt das Si-Dotieren in Schritt i.) oder in Schritt ii.).

Die von Siliziumdioxid verschiedene Siliziumkomponente kann prinzipiell in beliebiger Form zugegeben werden, zum Beispiel als Feststoff, als Flüssigkeit, als Gas, in Lösung oder als Dispersion. Bevorzugt wird die von Siliziumdioxid verschiedene Siliziumkomponente als Pulver zugegeben. Ebenfalls bevorzugt wird die von Siliziumdioxid verschiedene Siliziumkomponente als Flüssigkeit oder als Gas zugegeben.

Die von Siliziumdioxid verschiedene Siliziumkomponente wird bevorzugt in einer Menge in einem Bereich von 1 bis 100.000 ppm zugegeben, zum Beispiel in einem Bereich von 10 bis 10.000 ppm oder von 30 bis 1000 ppm oder in einem Bereich von 50 bis 500 ppm, besonders bevorzugt in einem Bereich von 80 bis 200 ppm, , weiter besonders bevorzugt in einem Bereich von 200 bis 300 ppm, jeweils bezogen auf das Gesamtgewicht an Siliziumdioxid.

Die von Siliziumdioxid verschiedene Siliziumkomponente kann fest, flüssig oder gasförmig vorliegen. Ist sie fest, weist sie bevorzugt eine mittlere Partikelgröße von bis zu 10 mm auf, zum Beispiel von bis zu 1000 μm von bis zu 400 μm oder in einem Bereich von 1 bis 400 μm, zum Beispiel 2 bis 200 μm oder 3 bis 100 μm, besonders bevorzugt in einem Bereich von 5 bis 50 μm. Die Partikelgrößenangaben sind bezogen auf den Zustand der von Siliziumdioxid verschiedenen Siliziumkomponente bei Raumtemperatur.

Die Siliziumkomponente weist bevorzugt eine Reinheit von mindestens 99.5 Gew.-% auf, zum Beispiel von mindestens 99,8 Gew.-% oder von mindestens 99.9 Gew.-%, oder von mindestens 99,99 Gew.-%, besonders bevorzugt von mindestens 99,999 Gew.-%, jeweils bezogen auf das Gesamtgewicht der Siliziumkomponente. Bevorzugt weist die Siliziumkomponente eine Menge an Kohlenstoff von nicht mehr als 10 ppm auf, zum Beispiel nicht mehr als 50 ppm, besonders bevorzugt nicht mehr als 1 ppm, jeweils bezogen auf das Gesamtgewicht der Siliziumkomponente. Besonders bevorzugt gilt dies für als Siliziumkomponente eingesetztes Silizium. Bevorzugt weist die Siliziumkomponente eine Menge an Verunreinigungen ausgewählt aus der Gruppe bestehend aus Al, Ca, Co, Cr, Cu, Fe, Ge, Hf, K, Li, Mg, Mn, Mo, Na, Nb, Ni, Ti, V, W, Zn, Zr von nicht mehr als 250 ppm auf, zum Beispiel nicht mehr als 150 ppm, besonders bevorzugt nicht mehr als 100 ppm, jeweils bezogen auf das Gesamtgewicht der Siliziumkomponente. Besonders bevorzugt gilt dies für als Siliziumkomponente eingesetztes Silizium.

Bevorzugt wird in Verfahrensschritt i.) eine von Siliziumdioxid verschiedene Siliziumkomponente zugegeben. Bevorzugt wird die von Siliziumdioxid verschiedene Siliziumkomponente während des Verarbeitens des Siliziumdioxidpulvers zu einem Siliziumdioxidgranulat zugegeben (Schritt II.). Zum Beispiel kann die von Siliziumdioxid verschiedene Siliziumkomponente vor, während oder nach dem Granulieren zu dem Siliziumdioxid gegeben werden.

Bevorzugt kann das Siliziumdioxid durch Zugabe der von Siliziumdioxid verschiedenen Siliziumkomponente zu der Aufschlämmung beinhaltend Siliziumdioxidpulver Si-dotiert werden. Zum Beispiel wird dazu die von Siliziumdioxid verschiedene Siliziumkomponente mit Siliziumdioxidpulver vermischt und anschließend in einer Flüssigkeit aufgeschlämmt, oder die von Siliziumdioxid verschiedene Siliziumkomponente wird zu einer Aufschlämmung aus Siliziumdioxidpulver in einer Flüssigkeit gegeben und aufgeschlämmt, oder das Siliziumdioxidpulver wird zu einer Aufschlämmung oder Lösung aus der von Siliziumdioxid verschiedenen Siliziumkomponente in einer Flüssigkeit gegeben und aufgeschlämmt.

Bevorzugt kann das Siliziumdioxid durch Zugabe der von Siliziumdioxid verschiedenen Siliziumkomponente beim Granulieren Si-dotiert werden. Es ist prinzipiell möglich, die von Siliziumdioxid verschiedene Siliziumkomponente zu jedem beliebigen Zeitpunkt während des Granulierens zuzugeben. Im Falle des Sprühgranulierens kann die von Siliziumdioxid verschiedene Siliziumkomponente zum Beispiel durch die Düse gemeinsam mit der Aufschlämmung in den Sprühturm gesprüht werden. Im Falle des Rollgranulierens kann die von Siliziumdioxid verschiedene Siliziumkomponente bevorzugt in fester Form oder als Aufschlämmung zum Beispiel nach dem Eintragen der Aufschlämmung in den Rührbehälter gegeben werden.

Weiter bevorzugt kann das Siliziumdioxid durch Zugabe der von Siliziumdioxid verschiedenen Siliziumkomponente nach dem Granulieren Si-dotiert werden. Zum Beispiel kann das Siliziumdioxid bei der Behandlung des Siliziumdioxidgranulats I zum Siliziumdioxidgranulat II dotiert werden, bevorzugt durch Zugabe der von Siliziumdioxid verschiedenen Siliziumkomponente während der thermischen oder mechanischen Behandlung des Siliziumdioxidgranulats I.

Bevorzugt wird das Siliziumdioxidgranulat II mit der von Siliziumdioxid verschiedenen Siliziumkomponente dotiert.

Weiter bevorzugt kann die von Siliziumdioxid verschiedene Siliziumkomponente auch während mehrerer der vorgenannten Abschnitte zugegeben werden, insbesondere während und nach der thermischen oder mechanischen Behandlung des Siliziumdioxidgranulats I zum Siliziumdioxidgranulat II.

Die von Siliziumdioxid verschiedene Siliziumkomponente kann prinzipiell Silizium oder jede dem Fachmann bekannte und reduzierend wirkende Silizium-haltige Verbindung sein. Bevorzugt ist die von Siliziumdioxid verschiedene Siliziumkomponente Silizium, eine Silizium-Wasserstoff-Verbindung, zum Beispiel ein Silan, eine Silizium-Sauerstoff-Verbindung, zum Beispiel Siliziummonooxid, oder eine Silizium - Wasserstoff-Sauerstoff-Verbindung, zum Beispiel Disiloxan. Beispiele für bevorzugte Silane sind Monosilan, Disilan, Trisilan, Tetrasilan Pentasilan, Hexasilanm Heptasilan, höhere Homologe und Isomere der zuvor genannten, sowie zyklische Silane wie oder Cyclopentasilan.

Bevorzugt wird in Verfahrensschritt ii.) eine von Siliziumdioxid verschiedene Siliziumkomponente zugegeben.

Bevorzugt kann die von Siliziumdioxid verschiedene Siliziumkomponente zusammen mit dem Siliziumdioxidgranulat direkt in den Schmelztiegel gegeben werden. Bevorzugt kann Silizium als die von Siliziumdioxid verschiedene Siliziumkomponente zusammen mit dem Siliziumdioxidgranulat in den Schmelztiegel gegeben werden. Das Silizium wird bevorzugt als Pulver zugegeben, insbesondere in der für die von Siliziumdioxid verschiedene Siliziumkomponente bereits genannten Partikelgröße.

Bevorzugt wird die von Siliziumdioxid verschiedene Siliziumkomponente vor dem Einführen in den Schmelztiegel zu dem Siliziumdioxidgranulat gegeben. Die Zugabe kann prinzipiell jederzeit nach der Bildung des Granulats erfolgen, zum Beispiel in der Vorheizstrecke, vor oder während dem Vorverdichten des Siliziumdioxidgranulats II oder zu dem Siliziumdioxidgranulat III.

Ein durch Zugabe von einer von Siliziumdioxid verschiedenen Siliziumkomponente erhaltenes Siliziumdioxidgranulat wird im Folgenden als "Si-dotiertes Granulat" bezeichnet. Bevorzugt weist das Si-dotierte Granulat mindestens eines, zum Beispiel mindestens zwei oder mindestens drei oder mindestens vier, besonders bevorzugt mindestens fünf der folgenden Merkmale auf:

[1] eine BET-Oberfläche in einem Bereich von mehr als 5 bis weniger als 40 $m^2/g$, zum Beispiel von 10 bis 30 $m^2/g$, besonders bevorzugt in einem Bereich von 15 bis 25 $m^2/g$;

[2] eine Partikelgröße $D_{10}$ in einem Bereich von 100 bis 300 $\mu m$, besonders bevorzugt in einem Bereich von 120 bis 200 $\mu m$;

[3] eine Partikelgröße $D_{50}$ in einem Bereich von 150 bis 550 $\mu m$, besonders bevorzugt in einem Bereich von 200 bis 350 $\mu m$;

[4] eine Partikelgröße $D_{90}$ in einem Bereich von 300 bis 650 $\mu m$, besonders bevorzugt in einem Bereich von 400 bis 500 $\mu m$;

[5] eine Schüttdichte in einem Bereich von 0,8 bis 1,6 $g/cm^3$, besonders bevorzugt von 1,0 bis 1,4 $g/cm^3$;

[6] eine Stampfdichte in einem Bereich von 1,0 bis 1,4 $g/cm^3$, besonders bevorzugt von 1,15 bis 1,35 $g/cm^3$;

[7] eine Menge von Kohlenstoff von weniger als 5 ppm, zum Beispiel von weniger als 4,5 ppm, besonders bevorzugt von weniger als 4 ppm;

[8] einen Cl-Gehalt von weniger als 500 ppm, besonders bevorzugt von 1 ppb bis 200 ppm;

[9] einen Al-Gehalt von weniger als 200 ppb, besonders bevorzugt von 1 ppb bis 100 ppb;

[10] einen Metallgehalt von Metallen, die von Aluminium verschieden sind, von weniger als 1000 ppb, zum Beispiel in einem Bereich von 1 bis 400 ppb, besonders bevorzugt in einem Bereich von 1 bis 200 ppb;

[11] eine Restfeuchte von weniger als 3 Gew.-%, zum Beispiel in einem Bereich von 0,001 Gew.-% bis 2 Gew.-%, besonders bevorzugt von 0,01 bis 1 Gew.-%;

wobei die Gew.-%, ppm und ppb jeweils auf das Gesamtgewicht des Si-dotierten Granulats bezogen sind.

In einer bevorzugten Ausführungsform des ersten Gegenstands der Erfindung wird die Schmelzenergie über eine feste Oberfläche auf das Siliziumdioxidgranulat übertragen.

Als feste Oberfläche wird eine Oberfläche verstanden, die von der Oberfläche des Siliziumdioxidgranulats verschieden ist und die bei Temperaturen, auf die das Siliziumdioxidgranulat zum Schmelzen erhitzt wird, nicht schmilzt oder sich zersetzt. Geeignete Materialien der festen Oberfläche sind zum Beispiel die als Tiegelmaterialien geeigneten Materialien.

Die feste Oberfläche kann prinzipiell jede dem Fachmann bekannte und für diese zwecke geeignete Oberfläche sein. Zum Beispiel kann als feste Oberfläche der Tiegel oder ein separates Bauteil, das nicht der Tiegel ist, verwendet werden.

Die feste Oberfläche kann prinzipiell auf allen dem Fachmann bekannten und für diese Zwecke geeigneten Wegen erhitzt werden, um die Schmelzenergie auf das Siliziumdioxidgranulat zu übertragen. Bevorzugt wird die feste Oberfläche durch resistive Beheizung oder Induktionsheizung erhitzt. Bei induktiver Heizung wird die Energie direkt durch Spulen in die feste Oberfläche eingekoppelt und von dort an deren Innenseite abgegeben. Bei resistiver Heizung wird die feste Oberfläche von außen erwärmt und gibt die Energie von dort an deren Innenseite ab. Dabei ist ein Heizraumgas mit niedrigerer Wärmekapazität, beispielsweise eine Argonatmosphäre oder eine argonhaltige Atmosphäre, vorteilhaft. Zum Beispiel kann die feste Oberfläche elektrisch oder auch durch Befeuern der festen Oberfläche mit einer Flamme von außen erhitzt werden. Bevorzugt wird die feste Oberfläche auf eine Temperatur erhitzt, die eine zum Schmelzen des Siliziumdioxidgranulats ausreichende Energiemenge auf das Siliziumdioxidgranulat und/oder bereits zum Teil geschmolzenes Siliziumdioxidgranulat übertragen kann.

Gemäß einer bevorzugten Ausführungsform der vorliegenden Erfindung erfolgt der Energieeintrag in den Tiegel nicht durch ein Erwärmen des Tiegels, oder eines darin vorliegenden Schmelzguts, oder beidem, mittels einer Flamme, wie zum Beispiel einer in den Tiegel oder auf den Tiegel gerichteten Brennerflamme.

Wird als feste Oberfläche ein separates Bauteil verwendet, kann dieses in beliebiger Weise mit dem Siliziumdioxidgranulat in Kontakt gebracht werden, zum Beispiel durch Auflegen des Bauteils auf das Siliziumdioxidgranulat oder durch Einführen des Bauteils zwischen die Granulen des Siliziumdioxidgranulats oder durch Unterschieben des Bauteils zwischen Tiegel und Siliziumdioxidgranulat oder durch eine Kombination von zwei oder mehr davon. Das Bauteil kann vor oder während oder vor und während des Übertragens der Schmelzenergie erhitzt werden.

Bevorzugt wird die Schmelzenergie über die Tiegelinnenseite auf das Siliziumdioxidgranulat übertragen. Dabei wird der Tiegel soweit erhitzt, dass das Siliziumdioxidgranulat schmilzt. Der Tiegel wird bevorzugt resistiv oder induktiv erhitzt. Die Wärme wird von der Außenseite auf die Innenseite des Tiegels übertragen. Die feste Oberfläche der Tiegelinnenseite überträgt die Schmelzenergie auf das Siliziumdioxidgranulat.

Gemäß einer weiteren bevorzugten Ausführungsform der vorliegenden Erfindung wird die Schmelzenergie auf das Siliziumdioxidgranulat nicht über einen Gasraum auf das Siliziumdioxidgranulat übertragen. Weiter bevorzugt wird die Schmelzenergie auf das Siliziumdioxidgranulat nicht durch Befeuern des Siliziumdioxidgranulats mit einer Flamme übertragen. Beispiele für diese ausgeschlossenen Energieübertragungswege sind Richten von einer oder mehreren Brennerflammen von oben in den Schmelztiegel, oder auf das Siliziumdioxid, oder beides.

Das vorstehend beschriebene Verfahren gemäß dem ersten Gegenstand der Erfindung betrifft die Herstellung eines Quarzglaskörpers.

Bevorzugt weist der Quarzglaskörper mindestens eines der folgenden Merkmale, zum Beispiel mindestens zwei oder mindestens drei oder mindestens vier, besonders bevorzugt mindestens fünf der folgenden Merkmale auf:

A] einen OH-Gehalt von weniger als 500 ppm, zum Beispiel von weniger als 400 ppm, besonders bevorzugt von weniger als 300 ppm;

B] einen Chlorgehalt von weniger als 200 ppm, bevorzugt von weniger als 100 ppm, zum Beispiel von weniger als 80 ppm, besonders bevorzugt von weniger als 60 ppm;

C] einen Aluminiumgehalt von weniger als 200 ppb, zum Beispiel von weniger als 100 ppb, besonders bevorzugt von weniger als 80 ppb;

D] einen ODC-Anteil von weniger als $5 \cdot 10^{15}$/cm$^3$, zum Beispiel in einem Bereich von $0,1 \cdot 10^{15}$ bis $3 \cdot 10^{15}$ /cm$^3$, besonders bevorzugt in einem Bereich von $0,5 \cdot 10^{15}$ bis $2,0 \cdot 10^{15}$ /cm$^3$;

E] einen Metallgehalt von Metallen, die von Aluminium verschieden sind, von weniger als 1 ppm, zum Beispiel von weniger als 0,5 ppm, besonders bevorzugt von weniger als 0,1 ppm;

F] eine Viskosität (p=1013 hPa) in einem Bereich von $\log_{10} (\eta$ (1250°C) / dPas) = 11,4 bis $\log_{10} (\eta$ (1250°C) / dPas) = 12,9 und/oder $\log_{10} (\eta$ (1300°C) / dPas) = 11,1 bis $\log_{10} (\eta$ (1300°C) / dPas) = 12,2 und/oder $\log_{10} (\eta$ (1350°C) / dPas) = 10,5 bis $\log_{10} (\eta$ (1350°C) / dPas) = 11,5;

G] eine Standardabweichung des OH-Gehalts von nicht mehr als 10 %, bevorzugt nicht mehr als 5 %, bezogen auf den OH-Gehalt A] des Quarzglaskörpers;

H] eine Standardabweichung des Cl-Gehalts von nicht mehr als 10 %, bevorzugt nicht mehr als 5 %, bezogen auf den Cl-Gehalt B] des Quarzglaskörpers;

I] eine Standardabweichung des Al-Gehalts von nicht mehr als 10 %, bevorzugt nicht mehr als 5 %, bezogen auf den Al-Gehalt C] des Quarzglaskörpers;

J] eine Brechzahlhomogenität von weniger als $10^{-4}$;

K] eine zylindrische Form,

L] einen Wolframgehalt von weniger als 1000 ppb, zum Beispiel von weniger als 500 ppb oder von weniger als 300 ppb oder von weniger als 100 ppb oder in einem Bereich von 1 bis 500 ppb oder von 1 bis 300 ppb, besonders bevorzugt in einem Bereich von 1 bis 100 ppb;

M] einen Molybdängehalt von weniger als 1000 ppb, zum Beispiel von weniger als 500 ppb oder von weniger als 300 ppb oder von weniger als 100 ppb oder in einem Bereich von 1 bis 500 ppb oder von 1 bis 300 ppb, besonders bevorzugt in einem Bereich von 1 bis 100 ppb,

wobei die ppb und ppm jeweils auf das Gesamtgewicht des Quarzglaskörpers bezogen sind.

Bevorzugt weist der Quarzglaskörper einen Metallgehalt an von Aluminium verschiedenen Metallen von weniger als 1000 ppb, zum Beispiel von weniger als 500 ppb, besonders bevorzugt von weniger als 100 ppb, jeweils bezogen auf das Gesamtgewicht des Quarzglaskörpers, auf. Oftmals weist der Quarzglaskörper jedoch einen Gehalt an von Aluminium verschiedenen Metallen in einer Menge von mindestens 1 ppb auf. Solche Metalle sind beispielsweise Natrium, Lithium, Kalium, Magnesium, Calcium, Strontium, Germanium, Kupfer, Molybdän, Titan, Eisen und Chrom. Diese können zum Beispiel als Element, als Ion, oder als Teil eines Moleküls oder eines Ions oder eines Komplexes vorliegen.

Der Quarzglaskörper kann weitere Bestandteile beinhalten. Bevorzugt beinhaltet der Quarzglaskörper weniger als 500 ppm, zum Beispiel weniger als 450 ppm, besonders bevorzugt weniger als 400 ppm an weiteren Bestandteilen, wobei die ppm jeweils bezogen sind auf das Gesamtgewicht des Quarzglaskörpers. Als weitere Bestandteile kommen zum Beispiel Kohlenstoff, Fluor, Jod, Brom und Phosphor in Betracht. Diese können zum Beispiel als Element, als Ion, oder als Teil eines Moleküls oder eines Ions oder eines Komplexes vorliegen. Oftmals weist der Quarzglaskörper jedoch einen Gehalt an weiteren Bestandteilen in einer Menge von mindestens 1 ppb auf.

Bevorzugt beinhaltet der Quarzglaskörper Kohlenstoff in einer Menge von weniger als 5 ppm, zum Beispiel weniger als 4,5 ppm, besonders bevorzugt weniger als 4 ppm, jeweils bezogen auf das Gesamtgewicht des Quarzglaskörpers. Oftmals weist der Quarzglaskörper jedoch einen Gehalt an Kohlenstoff in einer Menge von mindestens 1 ppb auf.

Bevorzugt weist der Quarzglaskörper eine homogen verteilte OH-Menge, Cl-Menge oder Al-Menge auf. Ein Indikator für die Homogenität des Quarzglaskörpers kann in der Standardabweichung der OH-Menge, Cl-Menge oder Al-Menge ausgedrückt werden. Die Standardabweichung ist das Maß für die Streubreite der Werte einer Variablen, hier der OH-Menge, Chlormenge oder Aluminiummenge, um deren arithmetisches Mittel. Zur Bestimmung der Standardabweichung wird der Gehalt der zu bestimmenden Komponente in der Probe, z.B. OH, Chlor oder Aluminium, an mindestens sieben Messpunkten bestimmt.

Der Quarzglaskörper weist bevorzugt die Merkmalskombination A]/B]/C] oder A]/B]/D] oder A]/B]/F] auf, weiter bevorzugt die Merkmalskombination A]/B]/C]/D] oder A]/B]/C]/F] oder A]/B]/D]/F], besonders bevorzugt die Merkmalskombination A]/B]/C]/D]/F].

Der Quarzglaskörper weist bevorzugt die Merkmalskombination A]/B]/C] auf, wobei der OH-Gehalt weniger als 400 ppm, der Chlorgehalt weniger als 100 ppm und der Aluminiumgehalt weniger als 80 ppb beträgt.

Der Quarzglaskörper weist bevorzugt die Merkmalskombination A]/B]/D] auf, der OH-Gehalt weniger als 400 ppm beträgt, der Chlorgehalt weniger als 100 ppm beträgt und der ODC-Anteil in einem Bereich von $0,1 \cdot 10^{15}$ bis $3 \cdot 10^{15}$ /cm$^3$ liegt.

Der Quarzglaskörper weist bevorzugt die Merkmalskombination A]/B]/F] auf, wobei der OH-Gehalt weniger als 400 ppm, der Chlorgehalt weniger als 100 ppm und die Viskosität (p=1013 hPa) in einem Bereich von $\log_{10}$ ($\eta$ (1250°C) / dPas) = 11,4 bis $\log_{10}$ ($\eta$ (1250°C) / dPas) = 12,9 liegt.

Der Quarzglaskörper weist bevorzugt die Merkmalskombination A]/B]/C]/D] auf, wobei der OH-Gehalt weniger als 400 ppm, der Chlorgehalt weniger als 100 ppm, der Aluminiumgehalt weniger als 80 ppb beträgt und der ODC-Anteil in einem Bereich von $0,1 \cdot 10^{15}$ bis $3 \cdot 10^{15}$ /cm$^3$ liegt.

Der Quarzglaskörper weist bevorzugt die Merkmalskombination A]/B]/C]/F] auf, wobei der OH-Gehalt weniger als 400 ppm, der Chlorgehalt weniger als 100 ppm, der Aluminiumgehalt weniger als 80 ppb beträgt und die Viskosität (p=1013 hPa) in einem Bereich von $\log_{10}$ ($\eta$ (1250°C) / dPas) = 11,4 bis $\log_{10}$ ($\eta$ (1250°C) / dPas) = 12,9 liegt.

Der Quarzglaskörper weist bevorzugt die Merkmalskombination A]/B]/D]/F] auf, wobei der OH-Gehalt weniger als 400 ppm beträgt, der Chlorgehalt weniger als 100 ppm beträgt, der ODC-Anteil in einem Bereich von $0,1 \cdot 10^{15}$ bis $3 \cdot 10^{15}$ /cm$^3$ liegt und die Viskosität (p=1013 hPa) in einem Bereich von $\log_{10}$ ($\eta$ (1250°C) / dPas) = 11,4 bis $\log_{10}$ ($\eta$ (1250°C) / dPas) = 12,9 liegt.

Der Quarzglaskörper weist bevorzugt die Merkmalskombination A]/B]/C]/D]/F] auf, wobei der OH-Gehalt weniger als 400 ppm, der Chlorgehalt weniger als 100 ppm, der Aluminiumgehalt weniger als 80 ppb beträgt und der ODC-Anteil in einem Bereich von $0,1 \cdot 10^{15}$ bis $3 \cdot 10^{15}$ /cm$^3$ liegt und die Viskosität (p=1013 hPa) in einem Bereich von $\log_{10}$

($\eta$ (1250°C) / dPas) = 11,4 bis log$_{10}$ ($\eta$ (1250°C) / dPas) = 12,9 liegt.

Ein siebter Gegenstand der vorliegenden Erfindung ist ein Verfahren zum Herstellen eines Lichtleiters beinhaltend folgende Schritte

A/ Durchführen der Verfahrensschritte i.) bis iii.) gemäß Anspruch 1 unter Erhalt eines Quarzglaskörpers, wobei der Quarzglaskörper zunächst zu einem Hohlkörper mit mindestens einer Öffnung verarbeitet wird;
B/ Einbringen eines oder mehrerer Kernstäbe in den Quarzglaskörper durch die mindestens eine Öffnung unter Erhalt eines Vorläufers;
C/ Ziehen des Vorläufers aus Schritt B/ in der Wärme unter Erhalt eines Lichtleiters mit einem oder mehreren Kernen und einer Hülle M1.

### Schritt A/

Der in Schritt A/ bereitgestellte Quarzglaskörper ist ein Hohlkörper mit mindestens einer Öffnung. Der in Schritt A/ bereitgestellte Quarzglaskörper ist bevorzugt gekennzeichnet durch die Merkmale gemäß dem sechsten Gegenstand der Erfindung. Der in Schritt A/ bereitgestellte Quarzglaskörper ist bevorzugt erhältlich durch ein Verfahren gemäß dem ersten Gegenstand der Erfindung beinhaltend als Schritt iv.) das Bilden eines Hohlkörpers mit mindestens einer Öffnung aus dem Quarzglaskörper. Besonders bevorzugt weist der so erhältliche Quarzglaskörper die Merkmale gemäß dem sechsten Gegenstand der Erfindung auf.

### Schritt B/

Durch die mindestens eine Öffnung des Quarzglaskörpers werden ein oder mehrere Kernstäbe eingebracht (Schritt B/). Als Kernstab wird im Zusammenhang mit der vorliegenden Erfindung ein Gegenstand bezeichnet, der vorgesehen ist, in eine Hülle, zum Beispiel eine Hülle M1, eingebracht und zu einem Lichtleiter verarbeitet zu werden. Der Kernstab hat einen Kern aus Quarzglas. Bevorzugt beinhaltet der Kernstab einen Kern aus Quarzglas und eine den Kern umgebende erste Mantelschicht M0.

Jeder Kernstab besitzt eine Form, die so gewählt ist, dass sie in den Quarzglaskörper passt. Bevorzugt entspricht die äußere Form eines Kernstabs der Form einer Öffnung des Quarzglaskörpers. Besonders bevorzugt ist der Quarzglaskörper ein Rohr und der Kernstab ein Stab mit einem runden Querschnitt.

Der Durchmesser des Kernstabs ist geringer als der Innendurchmesser des Hohlkörpers. Bevorzugt ist der Durchmesser des Kernstabs 0,1 bis 3 mm kleiner als der Innendurchmesser des Hohlkörpers, zum Beispiel 0,3 bis 2,5 mm kleiner oder 0,5 bis 2 mm kleiner oder 0,7 bis 1,5 mm kleiner, besonders bevorzugt 0,8 bis 1,2 mm kleiner.

Bevorzugt liegt das Verhältnis des Innendurchmessers des Quarzglaskörpers zum Durchmesser des Kernstabs im Bereich von 2:1 bis 1,0001:1, zum Beispiel im Bereich von 1,8:1 bis 1,01:1 oder im Bereich von 1,6:1 bis 1,005:1 oder im Bereich von 1,4:1 bis 1,01:1, besonders bevorzugt im Bereich von 1,2:1 bis 1,05:1.

Bevorzugt kann ein Bereich innerhalb des Quarzglaskörpers, der nicht durch den Kernstab ausgefüllt ist, mit mindestens einer weiteren Komponente gefüllt werden, zum Beispiel einem Siliziumdioxidpulver oder einem Siliziumdioxidgranulat.

Es ist ebenso möglich, dass in einen Quarzglaskörper ein sich bereits in mindestens einem weiteren Quarzglaskörper befindlicher Kernstab eingeführt wird. Der weitere Quarzglaskörper hat dabei einen Außendurchmesser, der geringer als der Innendurchmesser des Quarzglaskörpers ist. Der in den Quarzglaskörper eingeführte Kernstab kann sich auch bereits in zwei oder mehr weiteren Quarzglaskörpern, zum Beispiel in 3 oder 4 oder 5 oder 6 oder mehr weiteren Quarzglaskörpern befinden.

Ein so erhältlicher mit einem oder mehreren Kernstäben versehener Quarzglaskörper wird im Folgenden als "Vorläufer" bezeichnet.

### Schritt C/

Der Vorläufer wird in der Wärme gezogen (Schritt C/). Das so erhaltene Produkt ist ein Lichtleiter mit einem oder mehreren Kernen und mindestens einer Hülle M1.

Bevorzugt erfolgt das Ziehen des Vorläufers mit einer Geschwindigkeit im Bereich von 1 bis 100 m/h, zum Beispiel mit einer Geschwindigkeit im Bereich von 2 bis 50 m/h oder von 3 bis 30 m/h. Besonders bevorzugt erfolgt das Ziehen des Quarzglaskörpers mit einer Geschwindigkeit im Bereich von 5 bis 25 m/h.

Bevorzugt wird das Ziehen in der Wärme bei einer Temperatur von bis zu 2500°C durchgeführt, zum Beispiel bei einer Temperatur im Bereich von 1700 bis 2400°C besonders bevorzugt bei einer Temperatur im Bereich von 2100 bis 2300°C.

Bevorzugt wird der Vorläufer durch einen Ofen geführt, der den Vorläufer von außen erhitzt.

Bevorzugt wird der Vorläufer verlängert, bis die gewünschte Dicke des Lichtleiters erreicht wird. Bevorzugt wird der Vorläufer auf die 1.000 bis 6.000.000 fache Länge elongiert, zum Beispiel auf die 10.000 bis 500.000 fache Länge oder auf die 30.000 bis 200.000 fache Länge, jeweils bezogen auf die Länge des in Schritt A/ bereitgestellten Quarzglaskörpers. Besonders bevorzugt wird der Vorläufer auf die 100.000 bis 10.000.000 fache Länge elongiert, zum Beispiel auf die 150.000 bis 5.800.000 fache Länge oder auf die 160.000 bis 640.000 fache Länge oder auf die 1.440.000 bis 5.760.000 fache Länge oder auf die 1.440.000 bis 2.560.000 fache Länge, jeweils bezogen auf die Länge des in Schritt A/ bereitgestellten Quarzglaskörpers.

Bevorzugt wird der Durchmesser des Vorläufers durch das Elongieren um einen Faktor in einem Bereich von 100 bis 3.500 verringert, zum Beispiel in einem Bereich von 300 bis 3.000 oder von 400 bis 800 oder von 1.200 bis 2.400 oder von 1.200 bis 1.600 jeweils bezogen auf den Durchmesser des in Schritt A/ bereitgestellten Quarzglaskörpers.

Der Lichtleiter, auch als Lichtwellenleiter bezeichnet, kann jedes Material beinhalten, das dazu geeignet ist elektromagnetische Strahlung, insbesondere Licht, zu leiten oder zu führen.

Unter Leiten oder Führen von Strahlung wird die Ausdehnung der Strahlung über die Längsausdehnung des Lichtleiters ohne wesentliche Behinderung oder Dämpfung der Intensität der Strahlung bezeichnet. Dabei wird die Strahlung über ein Ende des Lichtleiters in den Leiter eingekoppelt. Bevorzugt leitet der Lichtleiter elektromagnetische Strahlung in einem Wellenlängenbereich von 170 bis 5000 nm. Bevorzugt liegt die Dämpfung der Strahlung durch den Lichtleiter in dem jeweiligen Wellenlängenbereich in einem Bereich von 0,1 bis 10 dB/km. Bevorzugt weist der Lichtleiter eine Übertragungsrate von bis zu 50 Tbit/s auf.

Der Lichtleiter weist bevorzugt einen Curl-Parameter von mehr als 6 m auf Unter dem Curl-Parameter wird gemäß der Erfindung der Biegeradius einer Faser, z.B. eines Lichtleiters oder einer Hülle M1, verstanden, der sich bei einer frei beweglichen Faser ohne äußere Krafteinwirkung einstellt.

Der Lichtleiter ist bevorzugt biegbar ausgestaltet. Biegbar im Sinne der Erfindung bedeutet, dass der Lichtleiter durch einen Biegeradius von 20 mm oder weniger gekennzeichnet, zum Beispiel von 10 mm oder weniger, besonders bevorzugt weniger als 5 mm oder weniger. Unter einem Biegeradius wird der engste Radius bezeichnet, der geformt werden kann, ohne einen Bruch des Lichtleiters zu bewirken und ohne Beeinträchtigung der Fähigkeit des Lichtleiters Strahlung zu leiten. Eine Beeinträchtigung liegt bei einer Dämpfung des durch eine Biegung des Lichtleiters durchgeleiteten Lichts um mehr als 0,1 dB vor. Die Dämpfung wird bevorzugt bei einer Referenzwellenlänge von 1550 nm angegeben.

Bevorzugt besteht der Quarz aus Siliziumdioxid mit weniger als 1 Gew.-% anderer Substanzen, zum Beispiel mit weniger als 0,5 Gew.-% anderer Substanzen, besonders bevorzugt mit weniger als 0,3 Gew.-% anderer Substanzen, jeweils bezogen auf das Gesamtgewicht des Quarz. Weiter bevorzugt beinhaltet der Quarz mindestens 99 Gew.-% Siliziumdioxid, bezogen auf das Gesamtgewicht des Quarz.

Der Lichtleiter weist bevorzugt eine längliche Form auf. Der Lichtleiter wird in seiner Form durch seine Längsausdehnung L und seinem Querschnitt Q definiert. Der Lichtleiter weist bevorzugt eine runde Außenwand entlang seiner Längsausdehnung L auf. Ein Querschnitt Q des Lichtleiters wird immer in einer Ebene bestimmt, die senkrecht zu der Außenwand des Lichtleiters steht. Ist der Lichtleiter in der Längsausdehnung L gekrümmt, so wird der Querschnitt Q senkrecht zur Tangente an einem Punkt auf der Lichtleiter Außenwand ermittelt. Der Lichtleiter weist bevorzugt einen Durchmesser $d_L$ in einem Bereich von 0,04 bis 1,5 mm auf. Der Lichtleiter weist bevorzugt eine Länge in einem Bereich von 1 m bis 100 km auf.

Erfindungsgemäß beinhaltet der Lichtleiter einen oder mehrere Kerne, zum Beispiel einen Kern oder zwei Kerne oder drei Kerne oder vier Kerne oder fünf Kerne oder sechs Kerne oder sieben Kerne oder mehr als sieben Kerne, besonders bevorzugt einen Kern. Bevorzugt werden mehr als 90 %, zum Beispiel mehr als 95 %, besonders bevorzugt mehr als 98 % der elektromagnetischen Strahlung, die durch den Lichtleiter geleitet werden, in den Kernen geführt. Für den Transport von Licht in den Kernen gelten die als bevorzugt genannten Wellenlängenbereiche, die bereits für den Lichtleiter angegeben wurden. Bevorzugt ist das Material der Kerne ausgewählt aus der Gruppe bestehend aus Glas oder Quarzglas, oder einer Kombination der beiden, besonders bevorzugt Quarzglas. Die Kerne können unabhängig voneinander aus dem gleichen Material oder aus unterschiedlichen Materialien bestehen. Bevorzugt bestehen alle Kerne aus dem gleichen Material, besonders bevorzugt aus Quarzglas.

Jeder Kern weist einen, bevorzugt runden, Querschnitt $Q_K$ auf und hat eine längliche Form mit der Länge $L_K$. Der Querschnitt $Q_K$ eines Kerns ist unabhängig von dem Querschnitt $Q_K$ jedes weiteren Kerns. Die Querschnitte $Q_K$ der Kerne können gleich oder verschieden sein. Bevorzugt sind die Querschnitte $Q_K$ aller Kerne gleich. Ein Querschnitt $Q_K$ eines Kerns wird immer in einer Ebene bestimmt, die senkrecht zu der Außenwand des Kerns bzw. der Lichtleiter Außenwand steht. Ist ein Kern in der Längsausdehnung gekrümmt, so wird der Querschnitt $Q_K$ senkrecht zur Tangente an einem Punkt auf der Außenwand dieses Kerns ermittelt. Die Länge $L_K$ eines Kerns ist unabhängig von der Länge $L_K$ jedes weiteren Kerns. Die Längen $L_K$ der Kerne können gleich oder verschieden sein. Bevorzugt sind die Längen $L_K$ aller Kerne gleich. Jeder Kern weist bevorzugt eine Länge $L_K$ in einem Bereich von 1 m bis 100 km auf. Jeder Kern weist einen Durchmesser $d_K$ auf. Der Durchmesser $d_K$ eines Kerns ist unabhängig von dem Durchmesser $d_K$ jedes weiteren Kerns. Die Durchmesser $d_K$ der Kerne können gleich oder verschieden sein. Bevorzugt sind die Durchmesser

$d_K$ aller Kerne gleich. Bevorzugt liegt der Durchmesser $d_K$ jedes Kerns in einem Bereich von 0,1 bis 1000 $\mu$m, zum Beispiel von 0,2 bis 100 $\mu$m oder von 0,5 bis 50 $\mu$m, besonders bevorzugt von 1 bis 30 $\mu$m auf.

Jeder Kern weist mindestens einen Brechungsindexverlauf senkrecht zur maximalen Kernausdehnung auf. "Brechungsindexverlauf" bedeutet, dass der Brechungsindex senkrecht zur maximalen Kernausdehnung konstant ist oder sich verändert. Der bevorzugte Brechungsindexverlauf entspricht einem konzentrischen Brechungsindexprofil, zum Beispiel einem konzentrischen Brechungsindexprofil, bei dem sich ein erster Bereich mit dem maximalen Brechungsindex im Zentrum des Kerns befindet, dem sich ein weiterer Bereich mit einem niedrigeren Brechungsindex anschließt. Bevorzugt weist jeder Kern nur einen Brechungsindexverlauf über seine Länge $L_K$ auf. Der Brechungsindexverlauf eines Kerns ist unabhängig von dem Brechungsindexverlauf jedes weiteren Kerns. Die Brechungsindexverläufe der Kerne können gleich oder verschieden sein. Bevorzugt sind die Brechungsindexverläufe aller Kerne gleich. Es ist prinzipiell auch möglich, dass ein Kern eine Vielzahl verschiedener Brechungsindexverläufe aufweist.

Jeder Brechungsindexverlauf senkrecht zur maximalen Kernausdehnung weist einen maximalen Brechungsindex $n_K$ auf. Jeder Brechungsindexverlauf senkrecht zur maximalen Kernausdehnung kann zudem weitere niedrigere Brechungsindices aufweisen. Der niedrigste Brechungsindex des Brechungsindexverlaufs ist bevorzugt nicht um mehr als 0,5 geringer als der maximale Brechungsindex $n_K$ des Brechungsindexverlaufs. Der niedrigste Brechungsindex des Brechungsindexverlaufs ist bevorzugt um 0,0001 bis 0,15, zum Beispiel um 0,0002 bis 0,1, besonders bevorzugt um 0,0003 bis 0,05 geringer als der maximale Brechungsindex $n_K$ des Brechungsindexverlaufs.

Bevorzugt weist der Kern einen Brechungsindex $n_K$ in einem Bereich von 1,40 bis 1,60, zum Beispiel in einem Bereich von 1,41 bis 1,59, besonders bevorzugt in einem Bereich von 1,42 bis 1,58 auf, jeweils ermittelt bei einer Referenzwellenlänge von $\lambda_r$ = 589 nm (Natrium D-Linie), bei einer Temperatur von 20°C und bei Normaldruck (p = 1013 hPa). Weitere Angaben hierzu siehe Abschnitt Testmethoden. Der Brechungsindex $n_K$ eines Kerns ist unabhängig von dem Brechungsindex $n_K$ jedes weiteren Kerns. Die Brechungsindices $n_K$ der Kerne können gleich oder verschieden sein. Bevorzugt sind die Brechungsindices $n_K$ aller Kerne gleich.

Bevorzugt weist jeder Kern des Lichtleiters eine Dichte in einem Bereich von 1,9 bis 2,5 g/cm$^3$, zum Beispiel in einem Bereich von 2,0 bis 2,4 g/cm$^3$, besonders bevorzugt in einem Bereich von 2,1 bis 2,3 g/cm$^3$ auf. Bevorzugt weisen die Kerne eine Restfeuchte von weniger als 100 ppb auf, zum Beispiel von weniger als 20 ppb oder von weniger als 5 ppb, besonders bevorzugt von weniger als 1 ppb, jeweils bezogen auf das Gesamtgewicht des Kerns. Die Dichte eines Kerns ist unabhängig von der Dichte jedes weiteren Kerns. Die Dichten der Kerne können gleich oder verschieden sein. Bevorzugt sind die Dichten aller Kerne gleich.

Beinhaltet ein Lichtleiter mehr als einen Kern, ist jeder Kern unabhängig von den weiteren Kernen durch die oben stehenden Merkmale gekennzeichnet. Es ist bevorzugt, dass alle Kerne die gleichen Merkmale aufweisen.

Die Kerne sind erfindungsgemäß von mindestens einer Hülle M1 umgeben. Die Hülle M1 umgibt die Kerne bevorzugt über die gesamte Länge der Kerne. Bevorzugt umgibt die Hülle M1 die Kerne zu mindestens 95 %, zum Beispiel zu mindestens 98 % oder zu mindestens 99 %, besonders bevorzugt zu 100 % der Außenoberfläche, also der gesamten Außenwand, der Kerne. Oftmals sind die Kerne bis auf die Enden (jeweils die letzten 1-5 cm) vollständig von der Hülle M1 umgeben. Dies dient dem Schutz der Kerne vor mechanischer Beeinträchtigung.

Die Hülle M1 kann jedes Material, beinhaltend Siliziumdioxid, beinhalten, das einen niedrigeren Brechungsindex aufweist als mindestens ein Punkt P im Verlauf des Querschnitts $Q_K$ des Kerns. Bevorzugt ist dieser mindestens eine Punkt im Verlauf des Querschnitts $Q_K$ des Kerns, der Punkt, der im Zentrum des Kerns liegt. Weiterhin bevorzugt ist der Punkt P im Verlauf des Querschnitts $Q_K$ des Kerns der Punkt, der ein Maximum des Brechungsindexes $n_{Kmax}$ im Kern aufweist. Bevorzugt weist die Hülle M1 einen Brechungsindex $n_{M1}$ auf, der mindestens 0,0001 geringer ist als der Brechungsindex des Kerns $n_K$ an dem mindestens einen Punkt im Verlauf des Querschnitts Q des Kerns. Bevorzugt weist die Hülle M1 einen Brechungsindex $n_{M1}$ auf, der in einem Bereich von 0,0001 bis 0,5, zum Beispiel in einem Bereich von 0,0002 bis 0,4, besonders bevorzugt in einem Bereich von 0,0003 bis 0,3 geringer ist als der Brechungsindex des Kerns $n_K$.

Die Hülle M1 weist bevorzugt einen Brechungsindex $n_{M1}$ in einem Bereich von 0,9 bis 1,599, zum Beispiel in einem Bereich von 1,30 bis 1,59, besonders bevorzugt in einem Bereich von 1,40 bis 1,57 auf. Bevorzugt bildet die Hülle M1 einen Bereich des Lichtleiters mit einem konstanten Brechungsindex $n_{M1}$. Unter einem Bereich mit konstantem Brechungsindex wird ein Bereich verstanden in dem der Brechungsindex nicht mehr als 0,0001 von dem Mittelwert des Brechungsindex $n_{M1}$ in diesem Bereich abweicht.

Prinzipiell kann der Lichtleiter weitere Hüllen beinhalten. Besonders bevorzugt weist zumindest eine der weiteren Hüllen, bevorzugt mehrere oder alle, einen Brechungsindex auf, der niedriger ist als der Brechungsindex $n_K$ jedes Kerns. Bevorzugt weist der Lichtleiter eine oder zwei oder drei oder vier oder mehr als vier weitere Hüllen auf, die die Hülle M1 umgeben. Bevorzugt weisen die die Hülle M1 umgebenden weiteren Hüllen einen Brechungsindex auf, der niedriger ist als der Brechungsindex $n_{M1}$ der Hülle M1.

Bevorzugt weist der Lichtleiter eine oder zwei oder drei oder vier oder mehr als vier weitere Hüllen auf, die die Kerne umgeben und von der Hülle M1 umgeben sind, also zwischen den Kernen und der Hülle M1 liegen. Weiterhin bevorzugt weisen die zwischen den Kernen und der Hülle M1 liegenden weiteren Hüllen einen Brechungsindex auf, der höher ist als der Brechungsindex $n_{M1}$ der Hülle M1.

Bevorzugt nimmt der Brechungsindex vom Kern des Lichtleiters zur äußersten Hülle hin ab. Die Abnahme des Brechungsindexes vom Kern zur äußersten Hülle kann in Stufen oder stetig verlaufen. Die Abnahme des Brechungsindex kann verschiedene Abschnitte aufweisen. Weiter bevorzugt kann der Brechungsindex in mindestens einem Abschnitt stufenweise und in mindestens einem anderen Abschnitt stetig abnehmen. Die Stufen können gleich oder verschieden hoch sein. Es ist durchaus möglich, zwischen Abschnitten mit abnehmendem Brechungsindex Abschnitte mit steigendem Brechungsindex vorzusehen.

Die unterschiedlichen Brechungsindices der verschiedenen Hüllen können beispielsweise durch Dotierung der Hülle M1, der weiteren Hüllen und/oder der Kerne eingestellt werden.

Je nach Art der Herstellung eines Kerns kann ein Kern bereits nach seiner Herstellung eine erste Mantelschicht M0 aufweisen. Diese dem Kern unmittelbar benachbarte Mantelschicht M0 wird manchmal auch als integrale Mantelschicht bezeichnet. Die Mantelschicht M0 liegt dem Kernmittelpunkt näher als die Hülle M1 und, wenn enthalten, die weiteren Hüllen. Die Mantelschicht M0 dient in der Regel nicht der Lichtleitung bzw. Strahlungsleitung. Vielmehr trägt die Mantelschicht M0 dazu bei, dass die Strahlung innerhalb des Kerns verbleibt und dort transportiert wird. Die im Kern geleitete Strahlung wird also bevorzugt am Übergang vom Kern in die Mantelschicht M0 reflektiert. Dieser Übergang von dem Kern zur Mantelschicht M0 ist bevorzugt durch eine Brechungsindexänderung gekennzeichnet. Der Brechungsindex der Mantelschicht M0 ist bevorzugt kleiner als der Brechungsindex $n_K$ des Kerns. Bevorzugt beinhaltet die Mantelschicht M0 das gleiche Material wie der Kern, weist jedoch aufgrund einer Dotierung oder von Additiven einen geringeren Brechungsindex als der Kern auf.

Bevorzugt besteht zumindest die Hülle M1 aus Siliziumdioxid und weist mindestens eines, bevorzugt mehrere oder alle der folgenden Merkmale auf:

a) einen OH-Gehalt von weniger als 10 ppm, zum Beispiel von weniger als 5 ppm, besonders bevorzugt von weniger als 1 ppm;

b) einen Chlorgehalt von weniger als 200 ppm, bevorzugt von weniger als 100 ppm, zum Beispiel von weniger als 80 ppm, besonders bevorzugt von weniger als 60 ppm;

c) einen Aluminiumgehalt von weniger als 200 ppb, bevorzugt von weniger als 100 ppb, zum Beispiel von weniger als 80 ppb, besonders bevorzugt von weniger als 60 ppb;

d) einen ODC-Anteil von weniger als $5 \cdot 10^{15}$ /cm$^3$, zum Beispiel in einem Bereich von $0,1 \cdot 10^{15}$ bis $3 \cdot 10^{15}$ /cm$^3$, besonders bevorzugt in einem Bereich von $0,5 \cdot 10^{15}$ bis $2,0 \cdot 10^{15}$ /cm$^3$;

e) einen Metallgehalt von Metallen, die von Aluminium verschieden sind, von weniger als 1 ppm, zum Beispiel von weniger als 0,5 ppm, besonders bevorzugt von weniger als 0,1 ppm;

f) eine Viskosität (p=1013 hPa) in einem Bereich von $\log_{10}$ ($\eta$ (1250°C) / dPas) = 11,4 bis $\log_{10}$ ($\eta$ (1250°C) / dPas) = 12,9 und/oder $\log_{10}$ ($\eta$ (1300°C) / dPas) = 11,1 bis $\log_{10}$ ($\eta$ (1300°C) / dPas) = 12,2 und/oder $\log_{10}$ ($\eta$ (1350°C) / dPas) = 10,5 bis $\log_{10}$ ($\eta$ (1350°C) / dPas) = 11,5;

g) einen Curl-Parameter von mehr als 6 m;

h) eine Standardabweichung des OH-Gehalts von nicht mehr als 10 %, bevorzugt nicht mehr als 5 %, bezogen auf den OH-Gehalt a) der Hülle M1;

i) eine Standardabweichung des Cl-Gehalts von nicht mehr als 10 %, bevorzugt nicht mehr als 5 %, bezogen auf den Cl-Gehalt b) der Hülle M1;

j) eine Standardabweichung des Al-Gehalts von nicht mehr als 10 %, bevorzugt nicht mehr als 5 %, bezogen auf den Al-Gehalt c) der Hülle M1;

k) eine Brechzahlhomogenität von weniger als $1 \cdot 10^{-4}$;

l) einen Transformationspunkt Tg in einem Bereich von 1150 bis 1250°C, besonders bevorzugt in einem Bereich von 1180 bis 1220°C,

wobei die ppb und ppm jeweils bezogen sind auf das Gesamtgewicht der Hülle M1.

Bevorzugt weist die Hülle eine Brechzahlhomogenität von weniger als $1 \cdot 10^{-4}$ auf. Die Brechzahlhomogenität bezeichnet die maximale Abweichung des Brechungsindex an jeder Stelle einer Probe, beispielsweise einer Hülle M1 oder eines Quarzglaskörpers, bezogen auf den Mittelwert aller an der Probe ermittelten Brechungsindices. Zur Bestimmung des Mittelwerts wird der Brechungsindex an mindestens sieben Messpunkten ermittelt.

Bevorzugt weist die Hülle M1 einen Metallgehalt an von Aluminium verschiedenen Metallen von weniger als 1000 ppb, zum Beispiel von weniger als 500 ppb, besonders bevorzugt von weniger als 100 ppb, jeweils bezogen auf das Gesamtgewicht der Hülle M1, auf. Oftmals weist die Hülle M1 jedoch einen Gehalt an von Aluminium verschiedenen Metallen in einer Menge von mindestens 1 ppb auf. Solche Metalle sind beispielsweise Natrium, Lithium, Kalium, Magnesium, Calcium, Strontium, Germanium, Kupfer, Molybdän, Titan, Eisen und Chrom. Diese können zum Beispiel als Element, als Ion, oder als Teil eines Moleküls oder eines Ions oder eines Komplexes vorliegen.

Die Hülle M1 kann weitere Bestandteile beinhalten. Bevorzugt beinhaltet die Hülle M1 weniger als 500 ppm, zum Beispiel weniger als 450 ppm, besonders bevorzugt weniger als 400 ppm an weiteren Bestandteilen, wobei die ppm jeweils bezogen sind auf das Gesamtgewicht der Hülle M1. Als weitere Bestandteile kommen zum Beispiel Kohlenstoff, Fluor, Jod, Brom und Phosphor in Betracht. Diese können zum Beispiel als Element, als Ion, oder als Teil eines Moleküls oder eines Ions oder eines Komplexes vorliegen. Oftmals weist die Hülle M1 jedoch einen Gehalt an weiteren Bestandteilen in einer Menge von mindestens 1 ppb auf.

Bevorzugt beinhaltet die Hülle M1 Kohlenstoff zu weniger als 5 ppm, zum Beispiel zu weniger als 4 ppm oder zu weniger als 3 ppm, besonders bevorzugt zu weniger als 2 ppm, jeweils bezogen auf das Gesamtgewicht der Hülle M1. Oftmals weist die Hülle M1 jedoch einen Gehalt an Kohlenstoff in einer Menge von mindestens 1 ppb auf.

Bevorzugt weist die Hülle M1 eine homogen verteilte OH-Menge, Cl-Menge oder Al-Menge auf.

In einer bevorzugten Ausführungsform des Lichtleiters weist die Hülle M1 einen Gewichtsanteil von mindestens 80 Gew.-%. zum Beispiel mindestens 85 Gew.-%, besonders bevorzugt mindestens 90 Gew.-%, jeweils bezogen auf das Gesamtgewicht der Hülle M1 und der Kerne, auf. Bevorzugt weist die Hülle M1 einen Gewichtsanteil von mindestens 80 Gew.-%. zum Beispiel mindestens 85 Gew.-%, besonders bevorzugt mindestens 90 Gew.-%, jeweils bezogen auf das Gesamtgewicht der Hülle M1, der Kerne und der zwischen der Hülle M1 und der Kerne liegenden weiteren Hüllen, auf. Bevorzugt weist die Hülle M1 einen Gewichtsanteil von mindestens 80 Gew.-%. zum Beispiel mindestens 85 Gew.-%, besonders bevorzugt mindestens 90 Gew.-%, jeweils bezogen auf das Gesamtgewicht des Lichtleiters auf.

Bevorzugt weist die Hülle M1 eine Dichte in einem Bereich von 2,1 bis 2,3 $g/cm^3$, besonders bevorzugt in einem Bereich von 2,18 bis 2,22 $g/cm^3$ auf.

Ein neunter Gegenstand der vorliegenden Erfindung betrifft ein Verfahren zum Herstellen eines Leuchtmittels beinhaltend folgende Schritte:

(i) Durchführen der Verfahrensschritte i.) bis iii.) gemäß Anspruch 1 unter Erhalt eines Quarzglaskörpers, wobei der Quarzglaskörper zunächst zu einem Hohlkörper verarbeitet wird;
(ii) gegebenenfalls Bestücken des Hohlkörpers mit Elektroden;
(iii) Füllen des Hohlkörpers mit einem Gas.

**Schritt** (i)

In Schritt (i) wird ein Hohlkörper bereitgestellt. Der in Schritt (i) bereitgestellte Hohlkörper beinhaltet mindestens eine Öffnung, zum Beispiel eine Öffnung oder zwei Öffnungen oder drei Öffnungen oder vier Öffnungen, besonders bevorzugt eine Öffnung oder zwei Öffnungen.

Bevorzugt wird in Schritt (i) ein Hohlkörper mit mindestens einer Öffnung, erhältlich nach einem Verfahren gemäß dem ersten Gegenstand der Erfindung beinhaltend Schritt iv.), bereitgestellt (Schritt (i-1)). Bevorzugt weist der Hohlkörper die im Rahmen des ersten oder sechsten Gegenstands der Erfindung beschriebenen Merkmale auf.

Bevorzugt wird in Schritt (i) ein Hohlkörper bereitgestellt, der aus einem Quarzglaskörper gemäß dem sechsten Gegenstand der Erfindung, erhältlich ist (Schritt (i-2)). Zur Verarbeitung eines Quarzglaskörpers gemäß dem sechsten Gegenstand der Erfindung zu einem Hohlkörper kommen mehrere Möglichkeiten in Betracht. Bevorzugt kann ein Hohlkörper mit zwei Öffnungen analog zu Schritt iv.) des ersten Gegenstands der Erfindung aus einem Quarzglaskörper geformt werden.

Die Verarbeitung des Quarzglaskörpers zu einem Hohlkörper mit einer Öffnung kann prinzipiell mittels allen dem Fachmann bekannten und für die Herstellung von Glashohlkörpern mit einer Öffnung geeigneten Verfahren erfolgen. Geeignet sind zum Beispiel Verfahren beinhaltend ein Pressen, Blasen, Saugen oder Kombinationen davon. Es ist ebenfalls möglich, aus einem Hohlkörper mit zwei Öffnungen durch Schließen einer Öffnung, beispielsweise durch Zusammenschmelzen, einen Hohlkörper mit einer Öffnung zu bilden.

Der erhaltene Hohlkörper weist bevorzugt die im Rahmen des ersten und sechsten Gegenstands der Erfindung beschriebenen Merkmale auf.

Der Hohlkörper besteht aus einem Material, das Siliziumdioxid beinhaltet, bevorzugt in einer Menge in einem Bereich von 98 bis 100 Gew.-%, beispielsweise in einem Bereich von 99,9 bis 100 Gew.-%, besonders bevorzugt zu 100 Gew.-%, jeweils bezogen auf das Gesamtgewicht des Hohlkörpers.

Das Material aus dem der Hohlkörper hergestellt ist, weist bevorzugt mindestens eines, bevorzugt mehrere, beispielsweise zwei, oder bevorzugt alle der folgenden Merkmale auf:

HK1. einen Siliziumdioxidgehalt von bevorzugt mehr als 95 Gew.-%, beispielsweise von mehr als 97 Gew.-%, besonders bevorzugt von mehr als 99 Gew.-%, bezogen auf das Gesamtgewicht des Materials;
HK2. eine Dichte in einem Bereich von 2,1 bis 2,3 $g/cm^3$, besonders bevorzugt in einem Bereich von 2,18 bis 2,22 $g/cm^3$ auf;
HK3. eine Lichtdurchlässigkeit bei mindestens einer Wellenlänge im sichtbaren Bereich von 350 bis 750 nm in einem Bereich von 10 bis 100 %, beispielsweise in einem Bereich von 30 bis 99,99 %, besonders bevorzugt in einem Bereich von 50 bis 99,9 %, bezogen auf die Lichtmenge die innerhalb des Hohlkörpers erzeugt wird;

HK4. einen OH-Gehalt von weniger als 500 ppm, zum Beispiel von weniger als 400 ppm, besonders bevorzugt von weniger als 300 ppm;

HK5. einen Chlorgehalt von weniger als 200 ppm, bevorzugt von weniger als 100 ppm, zum Beispiel von weniger als 80 ppm, besonders bevorzugt von weniger als 60 ppm;

HK6. einen Aluminiumgehalt von weniger als 200 ppb, zum Beispiel von weniger als 100 ppb, besonders bevorzugt von weniger als 80 ppb;

HK7. einen Kohlenstoffgehalt von weniger als 5 ppm, zum Beispiel von weniger als 4,5 ppm, besonders bevorzugt von weniger als 4 ppm;

HK8. einen ODC-Anteil von weniger als $5 \cdot 10^{15}/cm^3$;

HK9. einen Metallgehalt von Metallen, die von Aluminium verschieden sind, von weniger als 1 ppm, zum Beispiel von weniger als 0,5 ppm, besonders bevorzugt von weniger als 0,1 ppm;

HK10. eine Viskosität (p=1013 hPa) in einem Bereich von $\log_{10} \eta$ (1250°C) = 11,4 bis $\log_{10} \eta$ (1250°C)=12,4 und/oder $\log_{10} \eta$ (1300°C) = 11,1 bis $\log_{10} \eta$ (1350°C)=11,7 und/oder $\log_{10} \eta$ (1350°C) = 10,5 bis $\log_{10} \eta$ (1350°C)=11,1;

HK11. einen Transformationspunkt Tg in einem Bereich von 1150 bis 1250°C, besonders bevorzugt in einem Bereich von 1180 bis 1220°C;

wobei die ppm und ppb jeweils auf das Gesamtgewicht des Hohlkörpers bezogen sind.

**Schritt (ii)**

Bevorzugt wird der Hohlkörper aus Schritt (i) vor dem Befüllen mit einem Gas mit Elektroden, bevorzugt mit zwei Elektroden bestückt. Bevorzugt sind die Elektroden mit einer elektrischen Stromzuführung verbunden. Bevorzugt sind die Elektroden mit einem Lampensockel verbunden.

Das Material der Elektroden ist bevorzugt ausgewählt aus der Gruppe der Metalle. Prinzipiell kann jedes Metall als Elektrodenmaterial ausgewählt werden, dass während den Betriebsbedingungen des Leuchtmittels nicht oxidiert, korrodiert, geschmolzen oder sonstwie als Elektrode in seiner Form oder Leitfähigkeit beeinträchtigt wird. Das Elektrodenmaterial ist bevorzugt ausgewählt aus der Gruppe bestehend aus Eisen, Molybdän, Kupfer, Wolfram, Rhenium, Gold und Platin oder mindestens zwei davon ausgewählt, wobei Wolfram, Molybdän oder Rhenium bevorzugt sind.

**Schritt (iii)**

Der in Schritt (i) bereitgestellte und gegebenenfalls in Schritt (ii) mit Elektroden bestückte Hohlkörper wird mit einem Gas gefüllt.

Das Befüllen kann auf allen dem Fachmann bekannten und für das Befüllen geeigneten Verfahren erfolgen. Bevorzugt wird ein Gas durch die mindestens eine Öffnung in den Hohlkörper geleitet.

Bevorzugt wird der Hohlkörper vor dem Befüllen mit einem Gas evakuiert, bevorzugt auf einen Druck von weniger als 2 mbar. Durch anschließendes Einleiten eines Gases wird der Hohlkörper mit dem Gas gefüllt. Diese Schritte können wiederholt werden, um Verunreinigungen mit Luft, insbesondere mit Sauerstoff zu minimieren. Bevorzugt werden diese Schritte mindestens zweimal, zum Beispiel mindestens dreimal oder mindestens viermal, besonders bevorzugt mindestens fünfmal wiederholt bis die Menge an Verunreinigungen mit anderen Gasen wie Luft, insbesondere Sauerstoff, ausreichend gering ist. Dieses Vorgehen ist besonders zum Füllen von Hohlkörpern mit einer Öffnung bevorzugt.

Beinhaltet ein Hohlkörper zwei oder mehr Öffnungen, wird der Hohlkörper bevorzugt durch eine der Öffnungen gefüllt. Die sich vor dem Befüllen mit dem Gas im Hohlkörper befindliche Luft kann durch die mindestens eine weiter Öffnung austreten. Das Gas wird solange durch den Hohlkörper geleitet bis die Menge an Verunreinigungen mit anderen Gasen wie Luft, insbesondere Sauerstoff ausreichend gering ist.

Bevorzugt wird der Hohlkörper mit einem Inertgas oder einer Kombination aus zwei oder mehr Inertgasen gefüllt, zum Beispiel mit Stickstoff, Helium, Neon, Argon, Krypton, Xenon oder einer Kombination aus zwei oder mehr davon, besonders bevorzugt mit Krypton, Xenon oder einer Kombination aus Stickstoff und Argon. Weitere bevorzugte Füllmittel für Hohlkörper von Leuchtmitteln sind Deuterium und Quecksilber.

Bevorzugt wird der Hohlkörper nach dem Befüllen mit einem Gas verschlossen, so dass das Gas bei der weiteren Verarbeitung nicht austritt, so dass bei der weiteren Verarbeitung keine Luft von außen eintritt, oder beides. Das Verschließen kann durch Abschmelzen oder das aufsetzen eines Verschlusses erfolgen. Geeignete Verschlüsse sind zum Beispiel Quarzglasverschlüsse, die zum Beispiel auf den Hohlkörper ausgeschmolzen werden, oder Lampensockel. Bevorzugt wird der Hohlkörper durch Abschmelzen geschlossen.

Das Leuchtmittel gemäß dem neunter Gegenstand der Erfindung beinhaltet einen Hohlkörper und gegebenenfalls Elektroden. Das Leuchtmittel weist bevorzugt mindestens eines, zum Beispiel mindestens zwei oder mindestens drei oder mindestens vier, besonders bevorzugt mindestens fünf der folgenden Merkmale auf:

i. ein Volumen in einem Bereich von 0,1 cm$^3$ bis 10 m$^3$, beispielsweise in einem Bereich von 0,3 cm$^3$ bis 8 m$^3$, besonders bevorzugt in einem Bereich von 0,5 cm$^3$ bis 5 m$^3$;

ii. eine Länge in einem Bereich von 1 mm bis 100 m, beispielsweise in einem Bereich von 3 mm bis 80 m, besonders bevorzugt in einem Bereich von 5 mm bis 50 m;

iii. einen Abstrahlwinkel in einem Bereich von 2 bis 360°, beispielsweise in einem Bereich von 10 bis 360°, besonders bevorzugt in einem Bereich von 30 bis 360°;

iv. eine Abstrahlung von Licht in einem Wellenlängenbereich von 145 bis 4000 nm, beispielsweise in einem Bereich von 150 bis 450 nm, oder von 800 bis 4000 nm, besonders bevorzugt in einem Bereich von 160 bis 280 nm;

v. eine Leistung in einem Bereich von 1 mW bis 100 kW, besonders bevorzugt in einem Bereich von 1 kW bis 100 kW, oder in einem Bereich von 1 bis 100 Watt.

Ein elfter Gegenstand der vorliegenden Erfindung betrifft ein Verfahren zum Herstellen eines Formkörpers beinhaltend die folgenden Schritte:

(1) Bereitstellen eines Quarzglaskörpers gemäß dem ersten Gegenstand der Erfindung;
(2) Formen des Quarzglaskörpers unter Erhalt des Formkörpers.

**Schritt (2)**

Zum Formen des in Schritt (1) bereitgestellten Quarzglaskörpers kommen prinzipiell alle dem Fachmann bekannten und für das Formen von Quarzglas geeigneten Verfahren in Betracht. Bevorzugte wird der Quarzglaskörper wie im Rahmen des ersten, siebter und neunter Gegenstands der Erfindung beschrieben zu einem Formkörper geformt. Weiter bevorzugt kann der Formkörper mittels Glasbläsern bekannten Techniken gebildet werden.

Der Formkörper kann prinzipiell jede aus Quarzglas formbare Gestalt annehmen. Bevorzugte Formkörper sind zum Beispiel:

- Hohlkörper mit mindestens einer Öffnung wie Rundkolben und Standkolben,
- Aufsätze und Verschlüsse für solche Hohlkörper,
- Offene Artikel wie Schalen und Boote (Trägergestelle für Wafer),
- Tiegel, sowohl offen als auch verschließbar ausgestaltet,
- Platten und Fenster,
- Küvetten,
- Rohre und Hohlzylinder, zum Beispiel Reaktionsrohre, Profilrohre, rechteckige Kammern,
- Stangen, Stäbe und Blöcke, zum Beispiel in runder oder eckiger, symmetrischer oder asymmetrischer Ausführung,
- einseitig oder beidseitig verschlossene Rohre und Hohlzylinder,
- Dome und Glocken,
- Flansche,
- Linsen und Prismen,
- zusammengeschweißte Teile,
- gebogene Teile, zum Beispiel konvexe oder konkave Oberflächen und Platten, gebogene Stangen und Rohre.

Gemäß einer bevorzugten Ausführungsform kann der Formkörper nach dem Formen behandelt werden. Hierbei kommen prinzipiell alle im Rahmen des ersten Gegenstands der Erfindung beschriebenen Verfahren in Betracht, die zum Nachbearbeiten des Quarzglaskörpers geeignet sind. Bevorzugt kann der Formkörper mechanisch bearbeitet werden, zum Beispiel durch Bohren, Honen, Außenschleifen, Zerkleinern oder Ausziehen.

**Figuren**

Fig. 1    Flussdiagramm (Verfahren zum Herstellen eines Quarzglaskörpers)
Fig. 2    Flussdiagramm (Verfahren zum Herstellen eines Siliziumdioxidgranulats I)
Fig. 3    Flussdiagramm (Verfahren zum Herstellen eines Siliziumdioxidgranulats II)
Fig. 4    Flussdiagramm (Verfahren zum Herstellen eines Lichtleiters)
Fig. 5    Flussdiagramm (Verfahren zum Herstellen eines Leuchtmittels)
Fig. 6    schematische Darstellung eines hängenden Tiegels in einem Ofen
Fig. 7    schematische Darstellung eines stehenden Tiegels in einem Ofen
Fig. 8    schematische Darstellung eines Tiegels mit einem Spülring

**Fig. 9**      schematische Darstellung eines Sprühturms

**Fig. 10**      schematische Darstellung eines Querschnitts eines Lichtleiters

**Fig. 11**      schematische Darstellung einer Aufsicht auf einen Lichtleiter

**Fig. 12**      schematische Darstellung eines Tiegels mit einer Taupunktmessvorrichtung

**Fig. 13**      schematische Darstellung eines Gasdruck-Sinter-Ofens (GDS-Ofen)

**Fig. 14**      Flussdiagramm (Verfahren zum Herstellen eines Formkörpers)

**Beschreibung der Figuren**

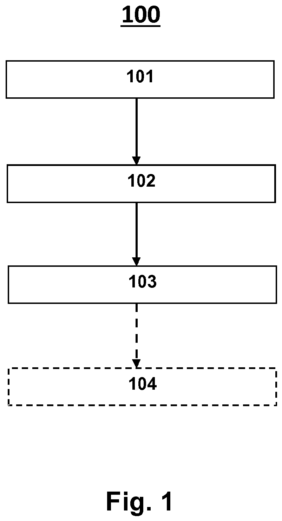

**Figur 1** zeigt ein Flussdiagramm enthaltend die Schritte 101 bis 104 eines Verfahrens 100 zur Herstellung eines Quarzglaskörpers gemäß der vorliegenden Erfindung. In einem ersten Schritt 101 wird ein Siliziumdioxidgranulat bereitgestellt. In einem zweiten Schritt 102 wird aus dem Siliziumdioxidgranulat eine Glasschmelze gebildet.

Bevorzugt werden zum Schmelzen Formen eingesetzt, die in einen Ofen eingebracht und wieder aus ihm entnommen werden können. Solche Formen werden oftmals aus Graphit hergestellt. Sie ergeben eine Negativform des Gießlings. Das Siliziumdioxidgranulat wird in die Form eingefüllt, in dem dritten Schritt 103 zunächst in der Form zum Schmelzen gebracht. Anschließend bildet sich in derselben Form durch Abkühlen der Schmelze der Quarzglaskörper. Dieser wird dann aus der Form herausgelöst und weiter bearbeitet, zum Beispiel in einem optionalen Schritt 104. Diese Vorgehensweise ist diskontinuierlich. Das Bilden der Schmelze erfolgt bevorzugt bei reduziertem Druck, insbesondere bei Vakuum. Es ist ferner möglich, während Schritt 103 zeitweise den Ofen mit einer reduzierenden, wasserstoffhaltigen Atmosphäre zu beaufschlagen.

Bei einer anderen Vorgehensweise werden bevorzugt als Schmelztiegel hängende oder stehende Tiegel eingesetzt. Das Schmelzen erfolgt bevorzugt in einer reduzierenden, wasserstoffhaltigen Atmosphäre. In einem dritten Schritt 103 wird ein Quarzglaskörper gebildet. Die Bildung des Quarzglaskörpers erfolgt hier bevorzugt durch Entnehmen zumindest eines Teils der Glasschmelze aus dem Tiegel und Abkühlen. Die Entnahme erfolgt bevorzugt durch eine Düse am unteren Ende des Tiegels. In diesem Fall kann die Form des Quarzglaskörpers durch die Ausgestaltung der Düse bestimmt werden. So können beispielsweise massive Körper erhalten werden. Hohle Körper werden beispielsweise erhalten, wenn in der Düse zusätzlich ein Dorn vorgesehen ist. Dieses exemplarisch dargestellte Verfahren zur Herstellung von Quarzglaskörpern, und insbesondere Schritt 103, erfolgt bevorzugt kontinuierlich. Aus einem massiven Quarzglaskörper kann in einem optionalen Schritt 104 ein Hohlkörper geformt werden.

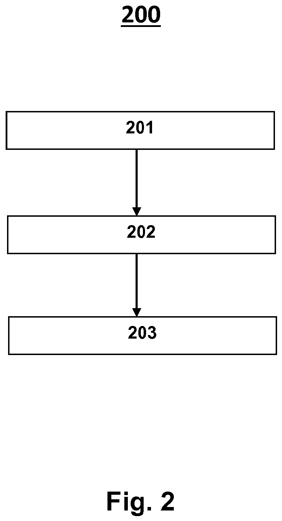

**Figur 2** zeigt ein Flussdiagramm enthaltend die Schritte 201, 202 und 203 eines Verfahrens 200 zur Herstellung eines Siliziumdioxidgranulats I. In einem ersten Schritt 201 wird ein Siliziumdioxidpulver bereitgestellt. Ein Siliziumdioxidpulver wird bevorzugt aus einem synthetischen Prozess erhalten, bei dem ein siliziumhaltiges Material, beispielsweise ein Siloxan, ein Siliziumalkoxid oder ein Siliziumhalogenid in einem pyrogenen Verfahren zu Siliziumdioxid umgesetzt wird. In einem zweiten Schritt 202 wird das Siliziumdioxidpulver mit einer Flüssigkeit, bevorzugt mit Wasser, gemischt unter Erhalt einer Aufschlämmung. In einem dritten Schritt 203 wird das in der Aufschlämmung enthaltene Siliziumdioxid in ein Siliziumdioxidgranulat überführt. Das Granulieren erfolgt mittels Sprühgranulieren. Dazu wird die Aufschlämmung durch eine Düse in einen Sprühturm eingesprüht und unter Bildung von Granulen getrocknet, wobei die Kontaktfläche zwischen der Düse und der Aufschlämmung ein Glas oder einen Kunststoff beinhaltet.

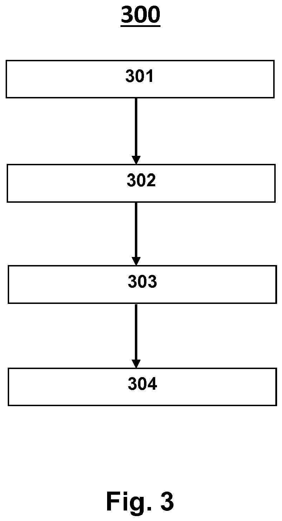

**Figur 3** zeigt ein Flussdiagramm enthaltend die Schritte 301, 302, 303 und 304 eines Verfahrens 300 zur Herstellung eines Siliziumdioxidgranulats II. die Schritte 301, 302 und 303 verlaufen dabei entsprechend den Schritten 201, 202 und 203 gemäß Figur 2. In Schritt 304 wird das in Schritt 303 erhaltene Siliziumdioxidgranulat I zu einem Siliziumdioxidgranulat II verarbeitet. Dies erfolgt bevorzugt durch Erwärmen des Siliziumdioxidgranulats 1 in einer chlorhaltigen Atmosphäre.

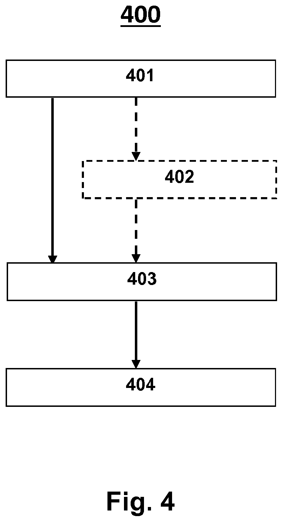

**Figur 4** zeigt ein Flussdiagramm enthaltend die Schritte 401, 403 und 404 sowie den optionalen Schritt 402 eines Verfahrens zur Herstellung eines Lichtleiters. Im ersten Schritt 401 wird ein Quarzglaskörper bereitgestellt, bevorzugt ein gemäß Verfahren 100 hergestellter Quarzglaskörper. Ein solcher Quarzglaskörper kann ein massiver oder ein hohler Quarzglaskörper sein. Aus einem in Schritt 401 bereitgestellten massiven Quarzglaskörper wird in einem zweiten Schritt 402 ein hohler Quarzglaskörper entsprechend Schritt 104 geformt. In einem dritten Schritt 403 wird in den hohlen Quarzglaskörper ein oder mehr als ein Kernstab eingebracht. In einem vierten Schritt 404 wird der mit einem oder mehr als einem Kernstab versehene Quarzglaskörper zu einem Lichtleiter verarbeitet. Dazu wird der mit einem oder mehr als einem Kernstab versehene Quarzglaskörper bevorzugt zum Erweichen erwärmt und solange elongiert, bis die gewünschte Lichtleiterdicke erreicht wird.

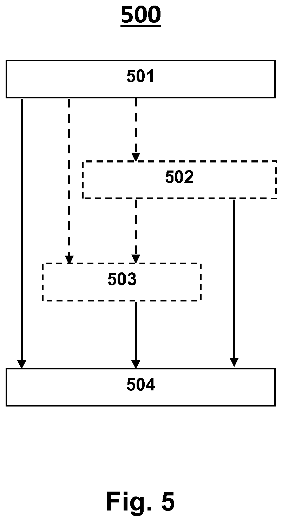

**Figur 5** zeigt ein Flussdiagramm enthaltend die Schritte 501, 503 und 504 sowie den optionalen Schritt 502 eines Verfahrens zur Herstellung eines Leuchtmittels. Im ersten Schritt 501 wird ein Quarzglaskörper bereitgestellt, bevorzugt ein gemäß Verfahren 100 hergestellter Quarzglaskörper. Ein solcher Quarzglaskörper kann ein massiver oder ein hohler Quarzglaskörper sein. Ist der in Schritt 501 bereitgestellte Quarzglaskörper massiv, wird er in einem zweiten Schritt 502 gegebenenfalls zu einem hohlen Quarzglaskörper entsprechend Schritt 104 geformt. In einem optionalen dritten Schritt wird der hohle Quarzglaskörper mit Elektroden bestückt. In einem vierten Schritt 504 wird der hohle Quarzglaskörper mit einem Gas, bevorzugt mit Argon, Krypton, Xenon oder einer Kombination davon, befüllt. Bevorzugt wird zunächst ein massiver Quarzglaskörper bereitgestellt (501), zu einem Hohlkörper geformt (502), mit Elektroden bestückt (503) und mit einem Gas befüllt (504).

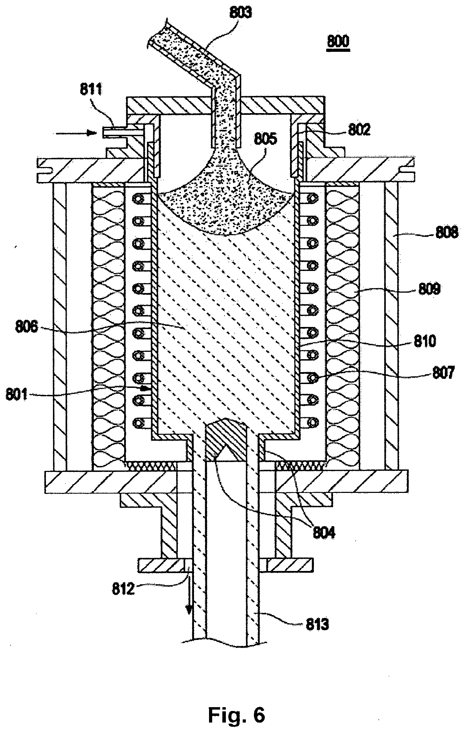

In **Figur 6** ist eine bevorzugte Ausführungsform eines Ofens 800 mit einem hängenden Tiegel gezeigt. Der Tiegel 801 ist in dem Ofen 800 hängend angeordnet. Der Tiegel 801 weist in seinem oberen Bereich eine Aufhängung 802, sowie einen Feststoffeinlass 803 und eine Düse 804 als Auslass auf. Der Tiegel 801 wird über den Feststoffeinlass 803 mit Siliziumdioxidgranulat 805 befüllt. Im Betrieb liegt im oberen Bereich des Tiegels 801 Siliziumdioxidgranulat 805 vor, während im unteren Bereich des Tiegels 801 eine Glasschmelze 806 vorliegt. Der Tiegel 801 ist durch Heizelemente 807 beheizbar, die auf der Außenseite der Tiegelwand 810 angeordnet sind. Der Ofen weist zudem zwischen den Heizelementen 807 und der Ofenaußenwand 808 eine Isolationsschicht 809 auf. Der Raum zwischen der Isolationsschicht 809 und der Tiegelwand 810 kann mit einem Gas befüllt werden und weist dazu einen Gaseinlass 811 und einen Gasauslass 812 auf. Durch die Düse 804 kann ein Quarzglaskörper 813 aus dem Ofen entnommen werden.

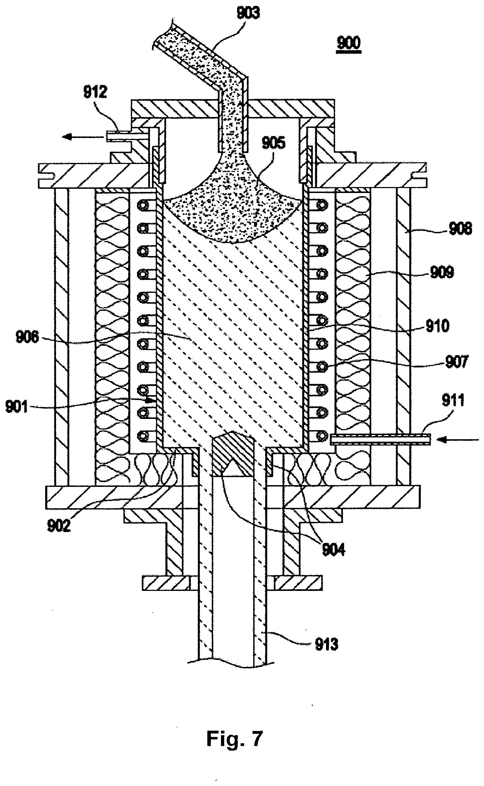

In **Figur 7** ist eine bevorzugte Ausführungsform eines Ofens 900 mit einem stehenden Tiegel gezeigt. Der Tiegel 901 ist in dem Ofen 900 stehend angeordnet. Der Tiegel 901 weist eine Standfläche 902, einen Feststoffeinlass 903 und eine Düse 904 als Auslass auf. Der Tiegel 901 wird über den Einlass 903 mit Siliziumdioxidgranulat 905 befüllt. Im Betrieb liegt im oberen Bereich des Tiegels Siliziumdioxidgranulat 905 vor, während im unteren Bereich des Tiegels eine Glasschmelze 906 vorliegt. Der Tiegel ist durch Heizelemente 907 beheizbar, die auf der Außenseite der Tiegelwand 910 angeordnet sind. Der Ofen weist zudem zwischen den Heizelementen 907 und der Ofenaußenwand 908 eine Isolationsschicht 909 auf. Der Raum zwischen der Isolationsschicht 909 und der Tiegelwand 910 kann mit einem Gas befüllt werden und weist dazu einen Gaseinlass 911 und einen Gasauslass 912 auf. Durch die Düse 904 kann ein Quarzglaskörper 913 aus dem Tiegel 901 entnommen werden.

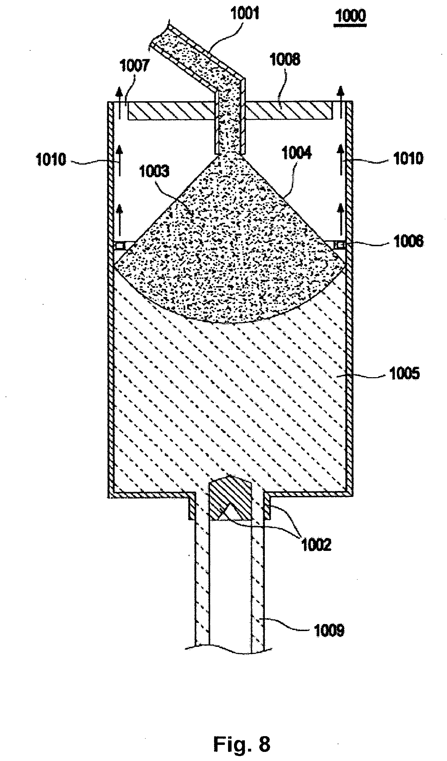

In **Figur 8** ist eine bevorzugte Ausführungsform eines Tiegels 1000 gezeigt. Der Tiegel 1000 weist einen Feststoffeinlass 1001 und eine Düse 1002 als Auslass auf. Der Tiegel 1000 wird über den Feststoffeinlass 1001 mit Siliziumdioxidgranulat 1003 befüllt. Im Betrieb liegt im oberen Bereich des Tiegels 1000 Siliziumdioxidgranulat 1003 als Schüttkegel 1004 vor, während im unteren Bereich des Tiegels eine Glasschmelze 1005 vorliegt. Der Tiegel 1000 kann mit einem Gas befüllt werden. Er weist einen Gaseinlass 1006 und einen Gasauslass 1007 auf. Der Gaseinlass ist ein oberhalb des Siliziumdioxidgranulats an der Tiegelwand angebrachter Spülring. Durch den Spülring (mit einer hier nicht gezeigten Gaszuführung) wird das Gas im Tiegelinneren knapp oberhalb des Schmelzespiegels und/oder des Schüttkegels nahe der Tiegelwand freigesetzt und fließt in Richtung Gasauslass 1007, der ringförmig im Deckel 1008 des Tiegels- 1000 angeordnet ist. Der so entstehende Gasstrom 1010 bewegt sich so entlang der Tiegelwand und überspült diese. Durch die Düse 1002 kann ein Quarzglaskörper 1009 aus dem Tiegel 1000 entnommen werden.

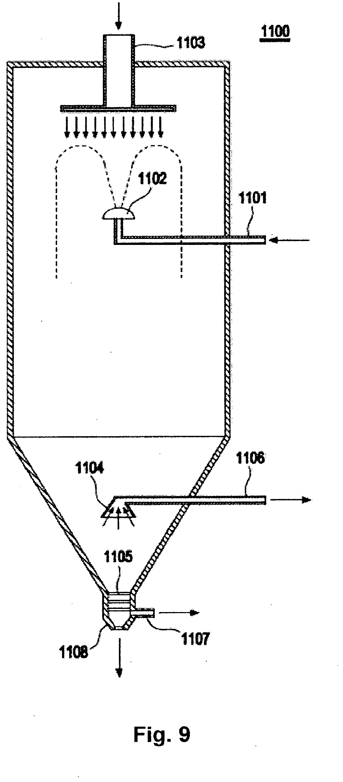

In **Figur 9** ist eine bevorzugte Ausführungsform eines Sprühturms 1100 zum Sprühgranulieren von Siliziumdioxid gezeigt. Der Sprühturm 1100 umfasst eine Zuführung 1101, durch die eine unter Druck stehende Aufschlämmung enthaltend Siliziumdioxidpulver und eine Flüssigkeit dem Sprühturm zugeführt wird. Am Ende der Leitung befindet sich eine Düse 1102, durch die die Aufschlämmung fein verteilt in den Sprühturm eingebracht wird. Bevorzugt ist die Düse schräg nach oben ausgerichtet, so dass die Aufschlämmung als feine Tröpfchen in Richtung der Düsenausrichtung in den Sprühturm gesprüht wird und dann im Bogen schwerkraftgetrieben nach unten fällt. Am oberen Ende des Sprühturms befindet sich ein Gaseinlass 1103. Durch das Einführen eines Gases durch den Gaseinlass 1103 wird ein der Austrittsrichtung der Aufschlämmung aus der Düse 1102 entgegengerichteter Gasstrom erzeugt. Der Sprühturm 1100 umfasst außerdem eine Sichtvorrichtung 1104 und eine Siebvorrichtung 1105. Durch die Sichtvorrichtung 1104 werden Teilchen abgesaugt, die eine definierte Teilchengröße unterschreiten, und durch die Abführung 1106 entfernt. Entsprechend der Teilchengröße der anzusaugenden Teilchen kann die Ansaugstärke der Sichtvorrichtung 1104 reguliert werden. Durch die Siebvorrichtung 1105 werden Teilchen oberhalb einer definierten Teilchengröße abgesiebt und durch die Abführung 1107 entfernt. Entsprechend der Teilchengröße der abzusiebenden Teilchen kann die Siebdurchlässigkeit der Siebvorrichtung 1105 gewählt werden. Die verbleibenden Teilchen, ein Siliziumdioxidgranulat der gewünschten Teilchengröße, werden durch den Auslass 1108 entnommen.

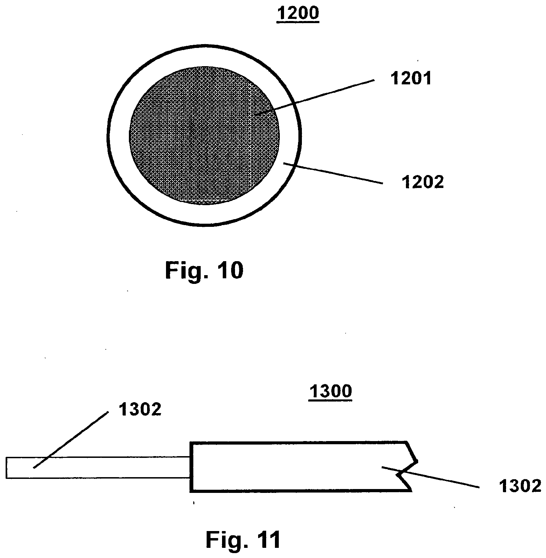

In **Figur 10** ist schematisch ein Querschnitt durch einen erfindungsgemäßen Lichtleiter 1200 gezeigt, der einen Kern 1201 und einen den Kern 1201 umgebende Hülle M1 1202 aufweist.

**Figur 11** zeigt schematisch eine Aufsicht auf einen Lichtleiter 1300, der eine kabelförmige Struktur aufweist. Um die Anordnung des Kerns 1301 und der Hülle M1 1302 um den Kern 1301 darzustellen, wurde ein Teil des Kerns 1301 ohne Hülle M1 1302 dargestellt. Typisch ist jedoch die Umkleidung des Kerns 1301 über seine komplette Länge mit der Hülle M1 1302.

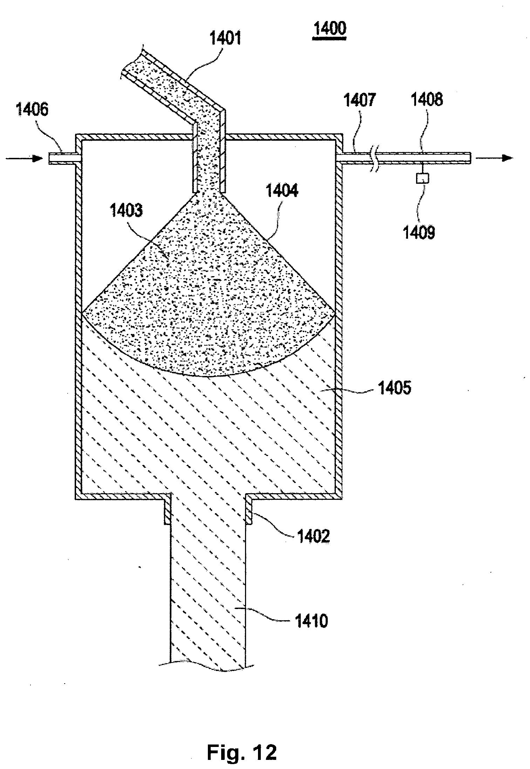

**Figur 12** zeigt eine bevorzugte Ausführungsform eines Tiegels 1400. Der Tiegel weist einen Feststoffeinlass 1401 und einen Auslass 1402 auf. Im Betrieb liegt im oberen Bereich des Tiegels 1400 Siliziumdioxidgranulat 1403 in einem Schüttkegel 1404 vor, während im unteren Bereich des Tiegels eine Glasschmelze 1405 vorliegt. Der Tiegel 1400 weist einen Gaseinlass 1406 und einen Gasauslass 1407 auf. Der Gaseinlass 1406 und der Gasauslass 1407 sind oberhalb des Schüttkegels 1404 des Siliziumdioxidgranulats 1403 angeordnet. Der Gasauslass 1406 umfasst eine Leitung zur Gasführung 1408 und eine Vorrichtung 1409 zur Messung des Taupunkts des austretenden Gases. Die Vorrichtung 1409 umfasst ein Taupunktspiegelhygrometer (hier nicht gezeigt). Der Abstand zwischen dem Tiegel und der Vorrichtung 1409 zur Messung des Taupunkts kann variieren. Durch den Auslass 1402 des Tiegels 1400 kann ein Quarzglaskörper 1410 entnommen werden.

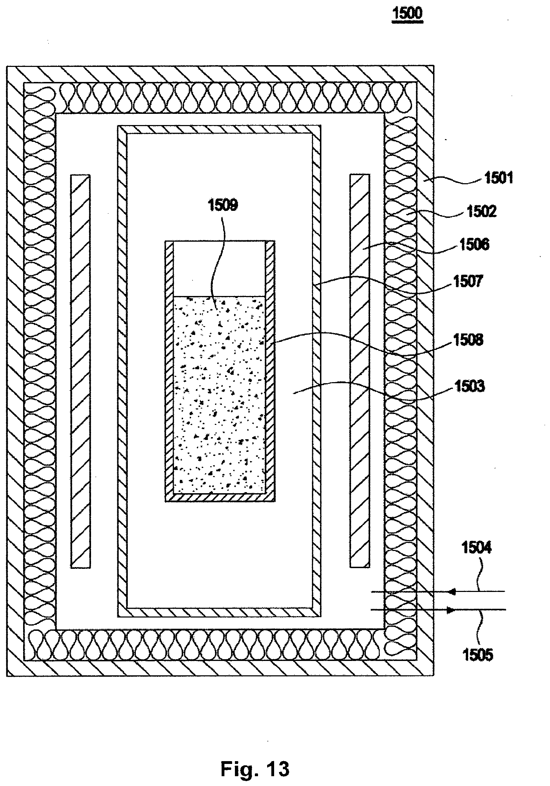

**Figur 13** zeigt eine bevorzugte Ausführungsform eines Ofens 1500, der für ein Vakuumsinterverfahren, ein Gasdrucksinterverfahren und insbesondere eine Kombination davon geeignet ist. Der Ofen weist von außen nach innen eine druckfeste Hülle 1501 und eine thermische Isolierschicht 1502 auf. Der davon umschlossene Raum, als Ofeninneres bezeichnet, kann über eine Gaszuführung 1504 mit einem Gas oder einem Gasgemisch beaufschlagt werden. Ferner ist das Ofeninnere mit einem Gasauslass 1505 versehen, über den Gas entnommen werden kann. Je nach Bilanz des Gastransports zwischen Gaszuführung 1504 und Gasentnahme bei 1505 kann ein Überdruck, ein Vakuum oder auch ein Gasstrom im Innern des Ofens 1500 erzeugt werden. Ferner sind im Innern des Ofens 1500 Heizelemente 1506 vorgesehen. Diese sind oftmals an der Isolierschicht 1502 angebracht (hier nicht gezeigt). Zum Schutz des Schmelzguts vor Kontamination ist das Innere des Ofens mit einem sogenannten "Liner" 1507 versehen, der die Ofenkammer 1503 von den Heizelementen 1506 trennt. In die Ofenkammer 1503 können Schmelzformen 1508 mit Schmelzgut 1509 eingebracht werden. Die Schmelzform 1508 kann auf einer Seite offen sein (hier gezeigt) oder das Schmelzgut 1509 vollständig umgeben (nicht gezeigt).

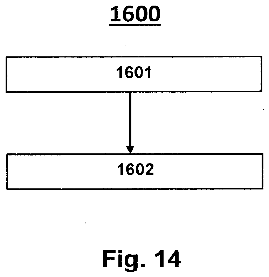

**Figur 14** zeigt ein Flussdiagramm enthaltend die Schritte 1601 und 1602 eines Verfahrens zur Herstellung eines Formkörpers. Im ersten Schritt 1601 wird ein Quarzglaskörper bereitgestellt, bevorzugt ein gemäß Verfahren 100 hergestellter Quarzglaskörper. Ein solcher Quarzglaskörper kann ein massiver oder ein hohler Quarzglaskörper sein. Aus einem in Schritt 1601 bereitgestellten massiven Quarzglaskörper wird in einem zweiten Schritt 1602 ein Formkörper geformt.

**Testmethoden**

a. Fiktive Temperatur

Die fiktive Temperatur wird mittels Ramanspektroskopie anhand der Ramanstreuintensität bei etwa 606 cm$^{-1}$ ermittelt. Die Vorgehensweise und Auswertung ist in dem Beitrag von Pfleiderer et. al.; "The UV-induced 210 nm absorption band in fused Silica with different thermal history and stoichiometry"; Journal of Non-Crystalline Solids, Band 159 (1993), Seiten 145-153 beschrieben.

b. OH-Gehalt

Der OH Gehalt des Glases wird durch Infrarotspektroskopie bestimmt. Die in von D. M. Dodd & D. M. Fraser angegebene Methode "Optical Determinations of OH in Fused Silica" (J.A.P. 37, 3991 (1966)) wird angewendet. Statt des darin angegebenen Geräts, wird ein FTIR-Spektrometer (Fourier-Transform-Infrarotspektrometer, aktuell System 2000 der Fa. Perkin Eimer) eingesetzt. Die Auswertung der Spektren kann prinzipiell sowohl an der Absorptionsbande bei ca. 3670 cm-1 als auch bei der Absorptionsbande bei ca. 7200 cm-1 erfolgen. Die Auswahl der verwendeten Bande erfolgt nach der Regel, dass der Transmissionsverlust durch die OH-Absorption zwischen 10 und 90% liegt.

c. Oxygen Deficiency Centers (ODCs)

Zum quantitativen Nachweis wird die ODC(I)-Absorption bei 165 nm mittels einer Transmissionsmessung an zwischen 1-2 mm dicken Probe mittels eines Vakuum-UV-Spektrometers, Modell VUVAS 2000, von McPherson, Inc. (USA) bestimmt.

Dann gilt:

$$N = \alpha / \sigma$$

mit

N = Defektkonzentration [1/cm$^3$]
$\alpha$ = Optische Absorption [1/cm, Basis e] der ODC(I) Bande
$\sigma$ = Wirkungsquerschnitt [cm$^2$]

wobei als Wirkungsquerschnitt $\sigma = 7{,}5 \cdot 10^{-17}$cm$^2$ eingesetzt wird (aus L. Skuja, "Color Centers and Their Transformations in Glassy SiO2", Lectures of the summer school "Photosensitivity in optical Waveguides and glasses", Juli 13-18 1998, Vitznau, Switzerland).

d. Elementaranalyse

d-1) Massive Proben werden zertrümmert. Anschließend werden zur Reinigung ca. 20g der Probe in ein HFbeständiges Gefäß eingebracht, vollständig mit HF bedeckt und bei 100°C für eine Stunde thermisch behandelt. Nach dem Abkühlen wird die Säure verworfen und die Probe mehrmals mit Reinstwasser gespült. Anschließend wird das Gefäß mit der Probe im Trockenschrank getrocknet.

Anschließend werden ca. 2g der festen Probe (Bruchmaterial, gereinigt wie oben; Stäube etc. ohne Vorbehandlung direkt) in einen HF beständigen Aufschlussbehälter eingewogen und mit 15ml HF (50 Gew.-%) versetzt. Der Aufschlussbehälter wird verschlossen und bei 100°C solange thermisch behandelt, bis die feste Probe vollständig aufgelöst ist. Danach wird der Aufschlussbehälter geöffnet und thermisch weiter bei 100°C behandelt, bis die Lösung komplett eingedampft ist. Währenddessen wird der Aufschlussbehälter 3x mit 15ml Reinstwasser aufgefüllt. In den Aufschlussbehälter wird 1ml $HNO_3$ gegeben, um abgeschiedene Verunreinigungen zu lösen und mit Reinstwasser auf 15ml aufgefüllt. Damit steht die Messlösung bereit.

d-2) Messung ICP-MS / ICP-OES

Ob OES oder MS verwendet wird, hängt von der erwarteten Elementkonzentration ab. Typische Bestimmungsgrenzen für die MS sind 1ppb, für die OES 10ppb (jeweils bezogen auf die eingewogene Probenmenge). Die Bestimmung der Elementkonzentration mit den Messgeräten erfolgt nach Maßgabe der Gerätehersteller (ICP-MS: Agilent 7500ce; ICP-OES: Perkin Eimer 7300 DV) und unter Verwendung von zertifizierten Referenzflüssigkeiten zur Kalibrierung. Die von den Geräten bestimmte Elementkonzentration in der Lösung (15ml) werden dann auf die ursprüngliche Einwaage der Probe (2g) umgerechnet.

Anmerkung: Es ist darauf zu achten, dass die Säure, die Gefäße, das Wasser, die Geräte eine ausreichende Reinheit aufweisen müssen, um die nachzuweisenden Elementkonzentrationen bestimmen zu können. Überprüft wird das mit dem Aufschluss einer Blindprobe ohne Quarzglas.

Folgende Elemente werden auf diese Weise bestimmt: Li, Na, Mg, K, Ca, Fe, Ni, Cr, Hf, Zr, Ti, (Ta), V, Nb, W, Mo, Al.

d-3) Die Bestimmung von flüssig vorliegenden Proben erfolgt wie zuvor beschrieben, wobei die Probenvorbereitung gemäß Schritt d-1) entfällt. Es werden 15ml der flüssigen Probe in das Aufschlussgefäß gegeben. Eine Umrechnung auf eine ursprüngliche Einwaage entfällt.

e. Dichtebestimmung einer Flüssigkeit

Zur Bestimmung der Dichte einer Flüssigkeit wird ein genau definiertes Volumen der Flüssigkeit in ein gegenüber der Flüssigkeit und ihren Bestandteilen inertes Messgefäß eingewogen, wobei das Leergewicht und das Gewicht des befüllten Gefäßes gemessen wird. Die Dichte ergibt sich aus der Differenz der beiden Gewichtsmessungen dividiert durch das eingebrachte Volumen der Flüssigkeit.

f. Nachweis von Fluorid

15g einer Quarzglasprobe werden zerkleinert und in Salpetersäure zum Reinigen bei einer Temperatur von 70°C behandelt. Anschließend wird die Probe mehrmals mit Reinstwasser gespült, anschließend getrocknet. Davon werden 2g der Probe in einen Nickeltiegel eingewogen und mit 10g $Na_2CO_3$ sowie 0,5g ZnO überschichtet. Der Tiegel wird mit einem Ni-Deckel verschlossen und bei 1000°C für eine Stunde geglüht. Anschließend wird der Nickeltiegel mit Wasser gefüllt und aufgekocht, bis sich der Schmelzkuchen ganz gelöst hat. Die Lösung wird in einen 200ml Messkolben überführt und mit Reinstwasser auf 200 ml aufgefüllt. Nach Absetzen ungelösten Bestandteile werden 30ml abgenommen und in einen Messkolben mit 100ml überführt, 0,75ml Eisessig und 60ml TISAB hinzugegeben und mit Reinstwasser aufgefüllt. Die Messlösung wird in ein Becherglas 150ml überführt.

Die Bestimmung des Fluoridgehalts aus der Messlösung erfolgt mittels einer ionensensitiven (Fluorid) Elektrode, geeignet für den erwarteten Konzentrationsbereich, und Anzeigegerät nach Vorgabe des Herstellers, hier eine Fluorid-Ionenselektive Elektrode und Bezugselektrode F-500 mit R503/D an einem pMX 3000/pH/ION der Firma Wissenschaftlich-Technische Werkstätten GmbH. Mit der Fluoridkonzentration in der Lösung, dem Verdünnungsfaktor und der Einwaage wird die Fluoridkonzentration im Quarzglas berechnet.

g. Nachweis von Chlor (>= 50 ppm)

15g einer Quarzglasprobe werden zerkleinert und in Salpetersäure zum Reinigen bei ca. 70°C behandelt. Anschließend wird die Probe mehrmals mit Reinstwasser gespült, anschließend getrocknet. Davon werden 2g der Probe in einen PTFE-Einsatz eines Druckbehälters gefüllt, mit 15ml NaOH (c=10mol/l) versetzt, mit einem PTFE Deckel verschlossen und in den Druckbehälter gesetzt. Dieser wird verschlossen und bei ca. 155°C für 24 Stunden thermisch behandelt. Nach dem Abkühlen wird der PTFE Einsatz entnommen und die Lösung vollständig in einen Messkolben 100ml überführt. Dort werden 10ml $HNO_3$ (65 Gew.-%) und 15ml Acetatpuffer hinzugeben, abkühlen gelassen und mit Reinstwasser auf 100 ml aufgefüllt. Die Messlösung wird in ein Becherglas 150ml überführt. Die Messlösung hat einen pH-Wert im Bereich zwischen 5 und 7.

Die Bestimmung des Chloridgehalts aus der Messlösung erfolgt mittels Ionensensitiver (Chlorid) Elektrode, geeignet für den erwarteten Konzentrationsbereich, und Anzeigegerät nach Vorgabe des Herstellers hier einer Elektrode Typ Cl-500 und Bezugselektrode Typ R-503/D an einem pMX 3000/pH/ION der Firma Wissenschaftlich-Technische Werkstätten GmbH.

h. Chlorgehalt (< 50 ppm)

Chlorgehalte < 50 ppm bis zu 0,1 ppm in Quarzglas werden mittels Neutronenaktivierungsanalyse (NAA) bestimmt. Dazu werden aus dem zu untersuchenden Quarzglaskörper 3 Bohrlinge mit je 3 mm Durchmesser und je 1 cm Länge gezogen. Diese werden zur Analyse an ein Forschungsinstitut abgegeben, in diesem Fall an das Institut für Kernchemie der Johannes-Gutenberg-Universität in Mainz. Um Kontamination der Proben mit Chlor auszuschließen wird mit dem Forschungsinstitut vereinbart, eine gründliche Reinigung der Proben in einem HF-Bad vor Ort und erst unmittelbar vor der Messung vorzunehmen. Jeder Bohrling wird mehrmals vermessen. Die Ergebnisse und die Bohrlinge werden anschließend von dem Forschungsinstitut zurückübermittelt.

i. Optische Eigenschaften

Die Transmission von Quarzglasproben wird mit kommerziellen Gitter- oder FTIR Spektrometern von Perkin Eimer bestimmt (Lambda 900 [190-3000nm] oder System 2000 [1000-5000nm]). Die Wahl richtet sich nach dem benötigten Messbereich.

Zur Bestimmung der Absoluttransmission werden die Probenkörper planparallel poliert (Oberflächenrauhigkeit RMS < 0,5nm) und die Oberfläche nach der Politur von allen Rückständen durch eine Ultraschallbehandlung befreit. Die Probendicke beträgt 1cm. Im Falle von erwartetem, starkem Transmissionsverlust durch Verunreinigung, Dotierung etc., kann auch eine dickere oder dünnere Probe ausgewählt werden, um im Messbereich des Geräts zu bleiben. Es wird eine Probendicke (Messlänge) gewählt, bei der aufgrund des Strahlendurchgangs durch die Probe nur geringfügig Artefakte auftreten und zugleich ein hinreichend detektierbarer Effekt gemessen wird.

Für die Messung der Opazität wird die Probe vor einer Ulbrichkugel im Strahlengang platziert. Die Opazität errechnet sich anhand des so gemessenen Transmissionswertes T gemäß der Formel: $O = 1/T = I_0/I$.

j. Brechzahl und Brechzahlverteilung an einem Rohr oder Stab

Die Brechzahlverteilung von Rohren / Stäben kann mittels eines York Technology Ltd. Preform Profiler P102 oder P104 charakterisiert werden. Dazu wird der Stab liegend in die Messkammer eingelegt und diese dicht verschlossen. Danach wird die Messkammer mit einem Immersionsöl aufgefüllt, das eine Brechzahl bei der Prüfwellenlänge 633nm hat, die der äußersten Glasschicht bei 633nm sehr ähnlich ist. Der Laserstrahl geht dann durch die Messkammer. Hinter der Messkammer (in Strahlrichtung) ist ein Detektor montiert, der den Ablenkwinkel (Strahleintritt in gegenüber Strahlaustritt aus der Messkammer) bestimmt. Unter Annahme der Radialsymmetrie der Brechzahlverteilung des Stabes lässt sich der diametrale Brechzahlverlauf mittels einer inversen Abel-Transformation rekonstruieren. Diese Berechnungen werden von der Software des Geräteherstellers York durchgeführt.

Die Brechzahl einer Probe wird analog der vorstehenden Beschreibung mit dem York Technology Ltd. Preform Profiler P104 bestimmt. Bei isotropen Proben ergibt sich auch bei Messen der Brechzahlverteilung nur ein Wert, die Brechzahl.

k. Kohlenstoffgehalt

Die quantitative Bestimmung des Oberflächenkohlenstoffgehaltes Siliziumdioxidgranulat und Siliziumdioxidpulver wird an einem Kohlenstoffanalysator RC612 der Fa. Leco Corporation, USA, durch die vollständige Oxidation aller Oberflächenkohlenstoffkontaminationen (außer SiC) mit Sauerstoff zu Kohlendioxid durchgeführt. Hierzu werden 4,0 g einer Probe eingewogen und in einem Quarzglasschiffchen in den Kohlenstoffanalysator eingebracht. Die Probe wird mit reinem Sauerstoff umspült und für 180 Sekunden auf 900 °C erhitzt. Das dabei gebildete $CO_2$ wird durch den Infrarotdetektor des Kohlenstoffanalysators erfasst. Unter diesen Messbedingungen liegt die Nachweisgrenze bei $\leq 1$ ppm (Gewichts-ppm) Kohlenstoff.

Ein für diese Analyse an dem oben genannten Kohlenstoffanalysator geeignetes Quarzglasschiffchen ist erhältlich als Verbrauchsmaterial für LECO-Analysator mit der LECO-Nummer 781-335 im Laborbedarfshandel, im vorliegenden Fall von Deslis Laborhandel, Flurstraße 21, D-40235 Düsseldorf (Deutschland), Deslis-Nr. LQ-130XL. Ein solches Schiffchen hat die Abmessungen von Breite/Länge/Höhe von ca. 25mm/60mm/15mm. Das Quarzglasschiffchen wird zu halber Höhe mit Probenmaterial befüllt. Für Siliziumdioxidpulver kann so eine Einwaage von 1,0 g Probenmaterial erreicht werden. Die untere Nachweisgrenze liegt dann bei <1 Gewichts-ppm Kohlenstoff. In das gleiche Quarzglasschiffchen wird bei gleicher Füllhöhe eine Einwaage von 4 g eines Siliziumdioxidgranulats erreicht (mittlere Partikelgröße im Bereich von 100 bis 500 $\mu$m). Die untere Nachweisgrenze liegt dann bei etwa 0,1 Gewichts-ppm Kohlenstoff. Die untere Nachweisgrenze ist erreicht, wenn das Messflächenintegral der Probe nicht größer ist als das dreifache Messflächenintegral einer Leerprobe (Leerprobe = Verfahren wie oben, aber mit leerem Quarzglasschiffchen).

1. Curl-Parameter

Der Curl-Parameter (auch genannt: "Fibre Curl") wird bestimmt gemäß der DIN EN 60793-1-34:2007-01 (deutsche Fassung der Norm IEC 60793-1-34:2006). Gemessen wird gemäß der in Annex A in den Abschnitten A.2.1, A.3.2 und A.4.1 beschriebenen Methode ("extrema technique").

m. Dämpfung

Die Dämpfung wird bestimmt gemäß der DIN EN 60793-1-40:2001 (deutsche Fassung der IEC 60793-1-40:2001). Gemessen wird gemäß der in Annex beschriebenen Methode ("cut-back method") bei einer Wellenlänge $\lambda$=1550 nm.

n. Viskosität der Aufschlämmung

Die Aufschlämmung wird mit demineralisiertem Wasser (Direct-Q 3UV, Millipore, Wasserqualität: 18,2 M$\Omega$cm) auf eine Konzentration von 30 Gewichts-% Feststoffgehalt eingestellt. Anschließend wird die Viskosität an einem MCR102 der Fa. Anton-Paar gemessen. Dazu wird die Viskosität bei 5 Umdrehungen/Minute (rpm) gemessen. Es wird bei einer Temperatur von 23 °C und einem Luftdruck von 1013 hPa gemessen.

o. Thixotropie

Die Aufschlämmung wird mit demineralisiertem Wasser (Direct-Q 3UV, Millipore, Wasserqualität: 18,2 M$\Omega$cm) auf eine Konzentration von 30 Gewichts -% Feststoffgehalt eingestellt. Anschließend wird die Thixotropie wird mit einem MCR102 der Fa. Anton-Paar mit einer Kegel-Platte-Anordnung bestimmt. Dazu wird die Viskosität bei 5 und bei 50 Umdrehungen/Minute (rpm) gemessen. Der Quotient aus dem ersten und dem zweiten Wert ergibt den Thixotropieindex. Die Messung wird bei einer Temperatur von 23 °C gemessen.

p. Zeta Potential der Aufschlämmung

Für Zetapotentialmessungen wird eine Zetapotentialmesszelle (Flow Cell, Beckman Coulter) eingesetzt. Die Probe wird in demineralisiertem Wasser (Direct-Q 3UV, Millipore, Wasserqualität: 18,2 M$\Omega$cm) gelöst um eine 20 mL Lösung mit Konzentration von 1 g/L zu erhalten. Der pH wird auf 7 mittels Zugabe von $HNO_3$-Lösungen mit den Konzentrationen von 0,1 mol/L und 1 mol/L und einer NaOH-Lösung mit der Konzentration von 0,1 mol/L gebracht. Es wird bei einer Temperatur von 23 °C gemessen.

q. Isoelektrischer Punkt der Aufschlämmung

Für den isoelektrischen Punkt wird eine Zetapotentialmesszelle (Flow Cell, Beckman Coulter) und ein Autotitrator (DelsaNano AT, Beckman Coulter) eingesetzt. Die Probe wird in demineralisiertem Wasser (Direct-Q 3UV, Millipore, Wasserqualität: 18,2 M$\Omega$cm) gelöst um eine 20 mL Lösung mit Konzentration von 1 g/L zu erhalten. Der pH wird mittels Zugabe von $HNO_3$-Lösungen mit den Konzentrationen von 0,1 mol/L und 1 mol/L und einer NaOH-Lösung mit der Konzentration von 0,1 mol/L variiert. Der isoelektrische Punkt ergibt sich als der pH Wert bei dem das Zeta-Potenzial gleich 0 ist. Es wird bei einer Temperatur von 23 °C gemessen.

r. pH Wert der Aufschlämmung

Der pH Wert der Aufschlämmung wird mittels eines WTW 3210 der Fa. Wissenschaftlich-Technische-Werkstätten GmbH gemessen. Als Elektrode wird die pH 3210 Set 3 der Fa. WTW eingesetzt. Es wird bei einer Temperatur von 23 °C gemessen.

s. Feststoffgehalt

Eine Einwaage $m_1$ einer Probe wird für 4 Stunden auf 500 °C erhitzt und nach dem Abkühlen erneut gewogen ($m_2$). Der Feststoffgehalt w ergibt sich aus $m_2/m_1*100$ [Gew. %].

t. Schüttdichte

Die Schüttdichte wird gemäß der Norm DIN ISO 697:1984-01 mit einem SMG 697 der Fa. Powtec bestimmt. Das Schüttgut (Siliziumdioxidpulver bzw. -granulat) bildet keine Klumpen.

u. Stampfdichte (granulate)

Die Stampfdichte wird gemäß der Norm DIN ISO 787:1995-10 gemessen.

v. Bestimmung der Porengrößenverteilung

Die Bestimmung der Porengrößenverteilung erfolgt gemäß DIN 66133 (mit einer Oberflächenspannung 480 mN/m und einem Kontaktwinkel von 140°). Für die Messung von Porengrößen kleiner als 3,7 nm wird das Pascal 400 von der Fa. Porotec angewendet. Für die Messung von Porengrößen von 3,7 nm bis 100 $\mu$m wird das Pascal 140 von der Fa. Porotec angewendet. Die Probe wird vor der Messung einer Druckbehandlung unterzogen. Genutzt wird hierzu eine Manual Hydraulic Press (Bestell-Nr. 15011 der Fa. Specac Ltd., River House, 97 Cray Avenue, Orpington, Kent BR5 4HE, U.K.). Dabei werden in eine "Pellet Die" mit 13 mm Innendurchmesser der Fa. Specac Ltd. 250 mg Probenmaterial eingewogen und laut Anzeige mit 1 t belastet. Diese Last wird 5 s gehalten und gegebenenfalls nachgeregelt. Anschließend wird die Probe entspannt und für 4 h bei 105 $\pm$ 2°C in einem Umlufttrockenschrank getrocknet.

Die Einwaage der Probe in das Penetrometer vom Typ 10 erfolgt auf 0,001 g genau und wird für eine gute Reproduzierbarkeit der Messung so gewählt, dass das "stem volume used", also das prozentual verbrauchte Hg-Volumen zum Füllen des Penetrometers im Bereich zwischen 20% bis 40% des Gesamt-Hg-Volumens beträgt. Anschließend wird das Penetrometer langsam auf 50 $\mu$m Hg evakuiert und für 5 min bei diesem Druck belassen. Folgende Parameter werden direkt von der Software der Messgeräte angegeben: Gesamtporenvolumen, Gesamtporenoberfläche (Annahme Poren zylindrisch), Durchschnittlicher Porenradius, Modaler Porenradius (häufigster Porenradius), Peak n. 2 Porenradius ($\mu$m).

w. Primärpartikelgröße

Die Primärpartikelgröße wird mittels eines Rasterelektronenmikroskops (REM) Modell Zeiss Ultra 55 gemessen. Die Probe wird in demineralisiertem Wasser (Direct-Q 3UV, Millipore, Wasserqualität: 18,2 M$\Omega$cm) suspendiert, um eine extrem verdünnte Suspension zu erhalten. Die Suspension wird mit der Ultraschallsonde (UW 2070, Bandelin electronic, 70 W, 20 kHz) für 1 min behandelt und dann auf ein Kohlenstoff-Klebepad aufgetragen.

x. Mittlere Partikelgröße in Suspension

Die mittlere Partikelgröße in Suspension wird mittels eines Mastersizers 2000, erhältlich von Malvern Instruments Ltd., UK, gemäß deren Bedienungsanleitung unter Anwendung der Laserbeugungs-Methode gemessen. Die Probe wird in demineralisiertem Wasser (Direct-Q 3UV, Millipore, Wasserqualität: 18,2 M$\Omega$cm) suspendiert, um 20 mL Suspension mit einer Konzentration von 1 g/L zu erhalten. Die Suspension wird mit der Ultraschallsonde (UW 2070, Bandelin electronic, 70 W, 20 kHz) für 1 min behandelt.

y. Partikelgröße und Korngröße des Feststoffs

Die Partikelgröße und Korngröße des Feststoffs werden mittels eines Camsizers XT, erhältlich von Retsch Technology GmbH, Deutschland gemäß deren Bedienungsanleitung gemessen. Die Software gibt die D10, D50 und D90-Werte für eine Probe aus.

### z. BET Messung

Für die Messung der spezifischen Oberfläche wird die statisch volumetrische BET-Methode gemäß DIN ISO 9277:2010 angewendet. Für die BET Messung wird ein "NOVA 3000" bzw. ein "Quadrasorb" (von der Firma Quantachrome erhältlich), welche gemäß der SMART Methode ("Sorption Method with Adaptive dosing Rate") funktioniert, angewendet. Die Mikroporenanalyse wird mittels t-plot-Verfahren (p/p0 = 0,1-0,3) und die Mesoporenanalyse mittels MBET-Verfahren (p/p0 = 0,0-0,3) durchgeführt. Als Referenzmaterial, werden die Standards Alumina SARM-13 und SARM-214 verwendet, erhältlich bei Quantachrome. Das Tara-Gewicht der eingesetzten Messzellen (sauber und trocken) wird gewogen. Der Messzellentyp wird so gewählt, dass das zugeführte Probematerial und der Füllstab die Messzelle möglichst füllen und der tote Raum auf ein Minimum reduziert wird. Das Probematerial wird in die Messzelle gebracht. Die Menge des Probematerials wird so ausgewählt, dass der zu erwartende Messwert 10-20 m$^2$/g entspricht. Die Messzellen werden in den Ausheizstationen des BET-Messgerätes fixiert (ohne Füllstab) und auf <200 mbar evakuiert. Die Geschwindigkeit des Evakuierens wird so eingestellt, dass kein Material aus der Messzelle entweicht. In diesem Zustand wird bei 200°C für 1h ausgeheizt. Nach dem Abkühlen, wird die mit Probe gefüllte Messzelle gewogen (Brutto). Anschließend wird das Tara-gewicht vom Brutto-Gewicht abgezogen = Nettogewicht = Gewicht der Probe. Nun wird der Füllstab in die Messzelle eingeführt und diese wiederum in der Messstation des BET-Messgerätes fixiert. Vor Messstart werden die Probenbezeichnung und das Probengewicht in die Software eingepflegt. Die Messung wird gestartet. Der Sättigungsdruck des Stickstoffgases (N2 4.0) wird gemessen. Die Messzelle wird evakuiert und wird mit Hilfe eines Stickstoffbads auf 77 K heruntergekühlt. Der tote Raum wird mittels Heliumgas (He 4.6) gemessen. Es wird erneut evakuiert. Eine Mehrpunktanalyse mit mindestens 5 Messpunkten wird ausgeführt. Als Adsorptiv, wird N2 4.0 angewendet. Die spezifische Oberfläche wird in m2/g angegeben.

### za. Viskosität von Glaskörpern

Die Viskosität des Glases wird mit Hilfe des Balkenbiegeviskosimeter Typ 401 - Fa. TA Instruments mit der Herstellersoftware WinTA (aktuell Version 9.0) unter Windows 10 gemäß der Norm DIN ISO 7884-4:1998-02 gemessen. Die Stützweite zwischen den Auflagern beträgt 45mm. Probestäbchen mit rechteckigem Querschnitt werden aus Bereichen homogenen Materials geschnitten (Probenober- und -unterseite mit Feinschliff mindestens 1000-er Korn). Die Probenoberflächen nach Bearbeitung haben Korngröße = 9$\mu$m & RA = 0,15$\mu$m. Die Probestäbchen haben folgende Maße: Länge = 50mm, Breite = 5mm & Höhe = 3mm (Zuordnung Länge, Breit, Höhe wie in der Norm). Drei Proben werden gemessen und der Mittelwert errechnet. Die Probentemperatur wird durch ein Thermoelement dicht an der Probenoberfläche gemessen. Folgende parameter werden angewendet: Heizrate = 25 K auf maximal 1500 °C, Belastungsgewicht = 100 g, maximale Durchbiegung = 3000 $\mu$m (in Abweichung von der Norm).

### zb. Taupunktmessung

Der Taupunkt wird mittels eines Taupunkspiegelhygrometers mit der Bezeichnung "Optidew" der Firma Michell Instruments GmbH, D-61381 Friedrichsdorf bestimmt. Die Messzelle des Taupunktspiegelhygrometers ist in einem Abstand von 100 cm von dem Gasauslass des Ofens angeordnet. Das Messgerät mit der Messzelle ist dazu über ein T-Stück und einen Schlauch (Swagelok PFA, Außendurchmesser: 6mm) mit dem Gasauslass des Ofens gasleitend verbunden. An der Messzelle liegt ein Überdruck von 10±2 mbar an. Der Durchfluss des Gases durch die Messzelle beträgt 1-2 Normliter/min. Die Messzelle befindet sich in einem Raum mit einer Temperatur von 25°C, 30 % relativer Luftfeuchte und einem mittleren Luftdruck von 1013 hPa.

### zc. Restfeuchte (Wassergehalt)

Die Bestimmung der Restfeuchte einer Probe Siliziumdioxidgranulat erfolgt mit Hilfe eines Moisture Analyzers HX204 der Firma Mettler Toledo. Das Gerät arbeitet nach dem Prinzip der Thermogravimetrie. Der HX204 ist mit einem Halogenstrahler als Heizelement ausgerüstet. Die Trocknungstemperatur beträgt 220°C. Das Startgewicht der Probe liegt bei 10 g ± 10 %. Es wird die Messmethode "Standard" ausgewählt. Die Trocknung wird solange fortgesetzt bis die Gewichtsänderung nicht mehr als 1 mg /140 s erreicht. Die Restfeuchte ergibt sich aus der Differenz von Startgewicht der Probe zu Endgewicht der Probe, geteilt durch das Startgewicht der Probe.

Die Bestimmung der Restfeuchte von Siliziumdioxidpulver wird gemäß DIN EN ISO 787-2:1995 (2h, 105°C) durchgeführt.

**Beispiele**

Die Erfindung wird im folgenden durch Beispiele weiter beispielhaft illustriert. Die Erfindung ist nicht auf die Beispiele beschränkt.

## A. 1. Herstellen von Siliziumdioxidpulver (OMCTS-Route)

Das aus der Verdüsung eines Siloxans mit Luft (A) gebildete Aerosol wird mit Druck in eine Flamme eingebracht, die durch Zündung eines Gemisches von mit Sauerstoff angereicherter Luft (B) und Wasserstoff gebildet wird. Weiterhin wird ein die Flamme umgebender Luftstrom (C) eingebracht und das Prozessgemisch nachfolgend mit Prozessgas abgekühlt. Das Produkt wird an einem Filter abgeschieden. Die Verfahrensparameter sind in Tabelle 1 und die Kenndaten der resultierenden Produkte in

Tabelle 2 angegeben. Experimentaldaten zu diesem Beispiel sind mit **A1-x** gekennzeichnet.

## 2. Modifizierung 1: Erhöhter Kohlenstoffgehalt

Es wurde wie unter A.1. beschrieben verfahren, das Verbrennen des Siloxans wurde aber so geführt, dass dabei auch eine Menge an Kohlenstoff gebildet wird. Experimentaldaten zu diesem Beispiel sind mit **A2-x** gekennzeichnet.

**Tabelle 1**

| Beispiel | | A1-1 | A2-1 | A2-2 |
|---|---|---|---|---|
| Aerosolbildung | | | | |
|     Siloxan | | OMCTS* | OMCTS* | OMCTS* |
|     Zufuhr | Kg/h (kmol/h) | 10 (0,0337) | 10 (0,0337) | 10 (0,0337) |
|     Zufuhr Luft (A) | Nm$^3$/h | 14 | 10 | 12 |
|     Druck | barÜ | 1,2 | 1,2 | 1,2 |
| Zufuhr Brenner | | | | |
|     Sauerstoffangereicherte Luft (B) | Nm$^3$/h | 69 | 65 | 68 |
|     $O_2$-Gehalt | Vol.% | 32 | 30 | 32 |
|     Summe $O_2$ Zufuhr | Nm$^3$/h | 25,3 | 21,6 | 24,3 |
| | Kmol/h | 1,130 | 0,964 | 1,083 |
|     Zufuhr Wasserstoff | Nm$^3$/h | 27 | 27 | 12 |
| | Kmol/h | 1,205 | 1,205 | 0,536 |
|     Zufuhr Kohlenstoffverbindung | | -- | -- | |
|         Stoff | | | | Methan |
|         Menge | Nm$^3$/h | | | 5,5 |
| Luftstrom (C) | Nm$^3$/h | 60 | 60 | 60 |
| | | | | |
| Stöchiometrische Verhältnisse | | | | |
| V | | 2,099 | 1,789 | 2,011 |
| X | | 0,938 | 0,80 | 2,023 |
| Y | | 0,991 | 0,845 | 0,835 |
| V = molares Verhältnis eingesetzter $O_2$/Bedarf an $O_2$ zur vollständigen Oxidation des Siloxans; X = als molares Verhältnis $O_2$/$H_2$; Y = (mol. Verhältnis eingesetztes $O_2$/ Bedarf an $O_2$ für stöchiometrische Umsetzung OMCTS+ Brenngase); barÜ=Überdurck; <br> * OMCTS = Octamethylcyclotetrasiloxan. | | | | |

**Tabelle 2**

| Beispiel | | A1-1 | A2-1 | A2-2 |
|---|---|---|---|---|
| BET | m$^2$/g | 30 | 33 | 34 |
| Schüttdichte | g/ml | 0,114 +- 0,011 | 0,105 +- 0,011 | 0,103 +- 0,011 |

(fortgesetzt)

| Beispiel | | A1-1 | A2-1 | A2-2 |
|---|---|---|---|---|
| Stampfdichte | g/ml | 0,192 +- 0,015 | 0,178 +- 0,015 | 0,175 +- 0,015 |
| Primärpartikelgröße | nm | 94 | 82 | 78 |
| Partikelgrößenverteilung D10 | $\mu$m | $3,978 \pm 0,380$ | $5,137 \pm 0,520$ | $4,973 \pm 0,455$ |
| Partikelgrößenverteilung D50 | $\mu$m | $9,383 \pm 0,686$ | $9,561 \pm 0,690$ | $9,423 \pm 0,662$ |
| Partikelgrößenverteilung D90 | $\mu$m | $25,622 \pm 1,387$ | $17,362 \pm 0,921$ | $18,722 \pm 1,218$ |
| C-Gehalt | ppm | $34 \pm 4$ | $73 \pm 6$ | $80 \pm 6$ |
| Cl-Gehalt | ppm | < 60 | < 60 | < 60 |
| Al-Gehalt | ppb | 20 | 20 | 20 |
| Gesamtgehalt Metalle außer Al | ppb | < 700 | < 700 | < 700 |
| Restfeuchte | Gew.-% | 0,02-1,0 | 0,02-1,0 | 0,02-1,0 |
| pH-Wert in Wasser 4% (IEP) | - | 4,8 | 4,6 | 4,5 |
| Viskosität bei 5 rpm, wässrige Suspension 30 Gew-%, 23 °C | mPas | 753 | 1262 | 1380 |
| Erdalkalimetallgehalt | ppb | 538 | 487 | 472 |

## B. 1. Herstellen von Siliziumdioxidpulver (Siliziumquelle: SiCl$_4$)

Eine Menge Siliciumtetrachlorid (SiCl$_4$) wird bei einer Temperatur T verdampft und mit einem Druck P in eine Flamme eines Brenners eingebracht, die durch Zündung eines Gemisches von mit Sauerstoff angereicherter Luft und Wasserstoff gebildet wird. Der mittlere normalisierte Gasfluß an der Brennermündung wird festgehalten. Das Prozessgemisch wird nachfolgend mit Prozessgas abgekühlt. Das Produkt wurde an einem Filter abgeschieden. Die Verfahrensparameter sind in Tabelle 3 und die Kenndaten der resultierenden Produkte in der Tabelle 4 angegeben. Sie sind mit **B1-x** gekennzeichnet.

## 2. Modifizierung 1: Erhöhter Kohlenstoffgehalt

Es wurde wie unter B.1. beschrieben verfahren, das Verbrennen des Siliziumtetrachlorids wurde aber so geführt, dass dabei auch eine Menge an Kohlenstoff gebildet wird. Experimentaldaten zu diesem Beispiel sind mit **B2-x** gekennzeichnet.

**Tabelle 3**

| Beispiel | | B1-1 | B2-1 |
|---|---|---|---|
| Aerosolbildung | | | |
|     Zufuhr Siliziumtetrachlorid | Kg/h (kmol) | 50 (0,294) | 50 (0,294) |
|     Temperatur T | °C | 90 | 90 |
|     Druck p | barÜ | 1,2 | 1,2 |
| Zufuhr Brenner | | | |
|     Sauerstoffangereicherte Luft, darin O$_2$-Gehalt | Nm$^3$/h | 145 | 115 |
| | Vol.% | 45 | 30 |
|     Zufuhr | | -- | |
|     Kohlenstoffverbindung | | | |
|         Stoff | | | Methan |
|         Menge | Nm$^3$/h | | 2,0 |
|     Zufuhr Wasserstoff | Nm$^3$/h | 115 | 60 |
| | Kmol/h | 5,13 | 2,678 |

(fortgesetzt)

| Beispiel | | B1-1 | B2-1 |
|---|---|---|---|
| Stöchiometrische Verhältnisse<br>X<br>Y | | 0,567<br>0,946 | 0,575<br>0,85 |
| X = als molares Verhältnis $O_2/H_2$; Y = mol. Verhältnis eingesetztes $O_2$/ $O_2$-Bedarf für stöchiometrische Reaktion mit SiCl4+ H2 + CH4); barÜ = Überdruck. | | | |

**Tabelle 4**

| Beispiel | | B1-1 | B2-1 |
|---|---|---|---|
| BET | $m^2/g$ | 49 | 47 |
| Schüttdichte | g/ml | $0,07 \pm 0,01$ | $0,06\pm0,01$ |
| Stampfdichte | g/ml | $0,11 \pm 0,01$ | $0,10 \pm 0,01$ |
| Primärpartikelgröße | nm | 48 | 43 |
| Partikelgrößenverteilung D10 | $\mu m$ | $5,0\pm0,5$ | $4,5\pm0,5$ |
| Partikelgrößenverteilung D50 | $\mu m$ | $9,3\pm0,6$ | $8,7\pm0,6$ |
| Partikelgrößenverteilung D90 | $\mu m$ | $16,4\pm0,5$ | $15,8\pm0,7$ |
| C-Gehalt | ppm | <4 | 76 |
| Cl-Gehalt | ppm | 280 | 330 |
| Al-Gehalt | ppb | 20 | 20 |
| Summe der Konzentrationen von Ca, Co, Cr, Cu, Fe, Ge, Hf, K, Li, Mg, Mn, Mo, Na, Nb, Ni, Ti, V, W, Zn, Zr | ppb | < 1300 | < 1300 |
| Restfeuchte | Gew.-% | 0,02-1,0 | 0,02-1,0 |
| pH-Wert in Wasser 4% (IEP) | pH | 3,8 | 3,8 |
| Viskosität bei 5 rpm, wässrige Suspension 30 Gew-%, 23 °C | mPas | 5653 | 6012 |
| Erdalkalimetallgehalt | ppb | 550 | 342 |

**C. Wasserdampfbehandlung**

Ein Partikelstrom von Siliziumdioxidpulver wird über den Kopf einer stehenden Säule eingebracht. Über den Fuß der Säule werden Wasserdampf mit einer Temperatur (A) und Luft zugeführt. Die Säule wird durch eine innenliegende Heizung auf eine Temperatur (B) am Säulenkopf und eine zweite Temperatur (C) am Säulenfuß gehalten. Nach Verlassen der Säule (Verweilzeit (D)) weist das Siliziumdioxidpulver insbesondere die in Tabelle 6 gezeigten Eigenschaften auf. Die Verfahrensparameter sind in Tabelle 5 angegeben.

**Tabelle 5**

| Beispiel | | C-1 | C-2 |
|---|---|---|---|
| Edukt: Produkt aus | | **B1-1** | **B2-1** |
| Zufuhr Edukt | kg/h | 100 | 100 |
| Zufuhr Wasserdampf | kg/h | 5 | 5 |
| Temperatur Wasserdampf (A) | °C | 120 | 120 |
| Zufuhr Luft | $Nm^3/h$ | 4,5 | 4,5 |
| Säule<br>Höhe | m | 2 | 2 |

(fortgesetzt)

| Beispiel | | C-1 | C-2 |
|---|---|---|---|
| Edukt: Produkt aus | | B1-1 | B2-1 |
| Innendurchmesser | mm | 600 | 600 |
| T (B) | °C | 260 | 260 |
| T (C) | °C | 425 | 425 |
| Verweilzeit (D) Siliziumdioxidpulver | s | 10 | 10 |

**Tabelle 6**

| Beispiel | | C-1 | C-2 |
|---|---|---|---|
| pH-Wert in Wasser 4% (IEP) | - | 4,6 | 4,6 |
| Cl-Gehalt | ppm | < 60 | < 60 |
| C-Gehalt | ppm | <4 | 36 |
| Viskosität bei 5 rpm, wässrige Suspension 30 Gew.-%, 23 °C | mPas | 1523 | 1478 |

Die in den Beispielen C-1 und C-2 erhaltenen Siliziumdioxidpulver weisen jeweils einen niedrigen Chlorgehalt, sowie in Suspension einen moderaten pH-Wert auf. Der Kohlenstoffgehalt von Beispiel C-2 ist höher als bei C-1.

**D. Behandlung mit Neutralisationsmittel**

Ein Partikelstrom von Siliziumdioxidpulver wird über den Kopf einer stehenden Säule eingebracht. Über den Fuß der Säule wird ein Neutralisationsmittel und Luft zugeführt. Die Säule wird durch eine innenliegende Heizung auf eine Temperatur (B) am Säulenkopf und eine zweite Temperatur (C) am Säulenfuß gehalten. Nach Verlassen der Säule (Verweilzeit (D)) weist das Siliziumdioxidpulver insbesondere die in Tabelle 8 gezeigten Eigenschaften auf. Die Verfahrensparameter sind in Tabelle 7 angegeben.

**Tabelle 7**

| Beispiel | | D-1 |
|---|---|---|
| Edukt: Produkt aus | | B1-1 |
| Zufuhr Edukt | kg/h | 100 |
| Neutralisationsmittel | | Ammoniak |
| Zufuhr Neutralisationsmittel | kg/h | 1,5 |
| Kenndaten Neutralisationsmittel | | Erhältlich bei Air Liquide: Ammoniak N38, Reinheit $\geq$ 99,98 Vol.% |
| Zufuhr Luft | Nm$^3$/h | 4,5 |
| Säule<br>        Höhe<br>        Innendurchmesser | <br>m<br>mm | <br>2<br>600 |
| T (B) | °C | 200 |
| T (C) | °C | 250 |
| Verweilzeit (D) Siliziumdioxidpulver | s | 10 |

**Tabelle 8**

| Beispiel | | D-1 |
|---|---|---|
| pH-Wert in Wasser 4% (IEP) | - | 4,8 |
| Cl-Gehalt | ppm | 210 |
| C-Gehalt | ppm | < 4 |
| Viskosität bei 5 rpm, wässrige Suspension 30 Gew-%, 23 °C | mPas | 821 |

**E. 1. Herstellen von Siliziumdioxidgranulat aus Siliziumdioxidpulver**

Ein Siliziumdioxidpulver wird in vollentsalztem Wasser dispergiert. Dabei wird ein Intensivmischer Typ R der Maschinenfabrik Gustav Eirich eingesetzt. Die entstehende Suspension wird durch eine Membranpumpe gefördert und dabei mit Druck beaufschlagt und durch eine Düse in Tröpfchen überführt. Diese werden in einem Sprühturm getrocknet und sammeln sich an dessen Boden. Die Verfahrensparameter sind in Tabelle 9 angegeben, die Eigenschaften der erhaltenen Granulate in Tabelle 10. Experimentaldaten zu diesem Beispiel sind mit **E1-x** gekennzeichnet.

**2. Modifizierung 1: Erhöhter Kohlenstoffgehalt**

Es wird analog der Beschreibung E.1. verfahren. Zusätzlich wird Kohlenstoffpulver in die Suspension eindispergiert. Experimentaldaten zu diesem Beispiel sind mit **E2-x** gekennzeichnet.

**3. Modifizierung 2: Zugabe von Silizium**

Es wird analog der Beschreibung E.1. verfahren. Zusätzlich wird eine Siliziumkomponente in die Suspension eindispergiert. Experimentaldaten zu diesem Beispiel sind mit **E3-1** gekennzeichnet.

**Tabelle 9**

| Beispiel | | E 1-1 | E 1-2 | E 1-3 | E1-4 | E1-5 | E2-1 | E3-1 | E3-2 |
|---|---|---|---|---|---|---|---|---|---|
| Edukt = Produkt aus | | A1-1 | A2-1 | B1-1 | C-1 | C-2 | A1-1 | A1-1 | A2-1 |
| Menge Edukt | Kg | 10 | 10 | 10 | 10 | 10 | 10 | 10 | 10 |
| Kohlenstoffpulver<br>    Material<br>    Max. Partikelgröße<br>    Menge | | -- | -- | -- | -- | -- | C**<br>75 $\mu$m<br><br>1 g | -- | -- |
| Siliziumkomponente<br>    Stoff | | -- | -- | -- | -- | -- | -- | Siliziu mpulv er*** | -- |
|     Korngröße (d50)<br>    Menge<br>    Kohlenstoffgehalt | | | | | | | | 8 $\mu$m<br>1000 ppm<br><br>0.5 ppm | |
|     Summe der Konzentrationen von Ca, Co, Cr, Cu, Fe, Ge, Hf, K, Li, Mg, Mn, Mo, Na, Nb, Ni, Ti, V, W, Zn, Zr | | | | | | | | 5 ppm | |
| Wasser | Güte*<br>Liter | VE<br>5,4 | VE<br>5,4 | VE<br>5,4 | VE<br>5,4 | VE<br>5,4 | VE<br>5,4 | VE<br>5,4 | VE<br>5,4 |
| Dispersion<br>    Feststoffgehalt | Gew.% | 65 | 65 | 65 | 65 | 65 | 65 | 65 | 65 |
| Düse<br>    Durchmesser<br>    Temperatur<br>    Druck<br>    Einbauhöhe | mm<br>°C<br>Bar<br>m | 2,2<br>25<br>16<br>6,5 | 2,2<br>25<br>16<br>6,5 | 2,2<br>25<br>16<br>6,5 | 2,2<br>25<br>16<br>6,5 | 2,2<br>25<br>16<br>6,5 | 2,2<br>25<br>16<br>6,5 | 2,2<br>25<br>16<br>6,5 | 2,2<br>25<br>16<br>6,5 |
| Sprühturm<br>    Höhe<br>    Innendurchmesser | m<br>m | 18,20<br>6,30 | 18,20<br>6,30 | 18,20<br>6,30 | 18,20<br>6,30 | 18,20<br>6,30 | 18,20<br>6,30 | 18,20<br>6,30 | 18,20<br>6,30 |
|     T (Zugeführtes Gas) | °C | 380 | 380 | 380 | 380 | 380 | 380 | 380 | 380 |
|     T (Abluft) | °C | 110 | 110 | 110 | 110 | 110 | 110 | 110 | 110 |

(fortgesetzt)

| Beispiel | | E 1-1 | E 1-2 | E 1-3 | E1-4 | E1-5 | E2-1 | E3-1 | E3-2 |
|---|---|---|---|---|---|---|---|---|---|
| Edukt = Produkt aus | | A1-1 | A2-1 | B1-1 | C-1 | C-2 | A1-1 | A1-1 | A2-1 |
| Luftstrom | m³/h | 6500 | 6500 | 6500 | 6500 | 6500 | 6500 | 6500 | 6500 |

Einbauhöhe = Abstand zwischen Düse und tiefstem Punkt des Sprühturminneren in Richtung des Schwerkraftverktors.

\* VE = vollentsalzt, Leitwert ≤ 0,1 µS;

\*\* C 006011: Graphitpulver, max. Teilchengröße: 75 µm, hochrein (erhältlich bei Goodfellow GmbH, Bad Nauheim (Deutschland);

\*\*\* erhältlich bei der Wacker Chemie AG (München, Deutschland).

**Tabelle 10**

| Beispiel | | E1-1 | E 1-2 | E 1-3 | E1-4 | E1-5 | E2-1 | E3-1 | E3-2 |
|---|---|---|---|---|---|---|---|---|---|
| BET | m²/g | 30 | 33 | 49 | 49 | 47 | 28 | 31 | 35 |
| Schüttdichte | g/ml | 0,8 ± 0,1 | 0,8 ± 0,1 | 0,8 ± 0,1 | 0,8 ± 0,1 | 0,8 ± 0,1 | 0,8 ± 0,1 | 0,8 ± 0,1 | 0,8 ± 0,1 |
| Stampfdichte | g/ml | 0,9 ± 0,1 | 0,9 ± 0,1 | 0,9 ± 0,1 | 0,9 ± 0,1 | 0,9 ± 0,1 | 0,9 ± 0,1 | 0,9 ± 0,1 | 0,9 ± 0,1 |
| mittlere Partikelgröße | μm | 255 | 255 | 255 | 255 | 255 | 255 | 255 | 255 |
| Partikelgrößenverteilun g D10 | μm | 110 | 110 | 110 | 110 | 110 | 110 | 110 | 110 |
| Partikelgrößenverteilun g D50 | μm | 222 | 222 | 222 | 222 | 222 | 222 | 222 | 222 |
| Partikelgrößenverteilun g D90 | μm | 390 | 390 | 390 | 390 | 390 | 390 | 390 | 390 |
| SPHT3 | Dimlos | 0,64-0,98 | 0,64-0,98 | 0,64-0,98 | 0,64-0,98 | 0,64-0,98 | 0,64-0,98 | 0,64-0,98 | 0,64-0,98 |
| Aspektverhältnis B/L (Breite zu Länge) | Dimlos | 0,64-0,94 | 0,64-0,94 | 0,64-0,94 | 0,64-0,94 | 0,64-0,94 | 0,64-0,94 | 0,64-0,94 | 0,64-0,94 |
| C-Gehalt | ppm | <4 | 39 | < 4 | <4 | 32 | 100 | <4 | 39 |
| Cl-Gehalt | ppm | < 60 | < 60 | 280 | <60 | <60 | <60 | <60 | < 60 |
| Al-Gehalt | ppb | 20 | 20 | 20 | 20 | 20 | 20 | 20 | 20 |
| Summe der Konzentrationen von Ca, Co, Cr, Cu, Fe, Ge, Hf, K, Li, Mg, Mn, Mo, Na, Nb, Ni, Ti, V, W, Zn, Zr | ppb | < 700 | < 700 | < 1300 | < 1300 | < 1300 | < 700 | < 700 | < 700 |
| Restfeuchte | Gew.- % | < 3 | < 3 | < 3 | < 3 | < 3 | < 3 | < 3 | <3 |
| Erdalkalimetallgehalt | ppb | 538 | 487 | 550 | 550 | 342 | 538 | 538 | 487 |
| Porenvolumen | ml/g | 0,33 | 0,33 | 0,45 | 0,45 | 0,45 | 0,33 | 0,33 | 0,33 |
| Schüttwinkel | ° | 26 | 26 | 26 | 26 | 26 | 26 | 26 | 26 |

Die Granulate sind allesamt offenporig, zeigen eine gleichmäßige und kugelförmige Gestalt (alles mikroskopische Untersuchung). Sie neigen nicht zum Verbacken oder Verkleben.

**F. Reinigen von Siliziumdioxidgranulat**

Siliziumdioxidgranulat wird in einem Drehrohrofen zunächst gegebenenfalls bei einer Temperatur T1 mit Sauerstoff oder Stickstoff (siehe Tabelle 11) behandelt. Anschließend wird das Siliziumdioxidgranulat im Gleichstrom mit einer chlorhaltigen Komponente behandelt, wobei die Temperatur bis auf eine Temperatur T2 erhöht wird. Die Verfahrensparameter sind in Tabelle 11 angegeben, die Eigenschaften der erhaltenen behandelten Granulate in Tabelle 12.

**Tabelle 11**

| Beispiel | | F1-1 | F1-2 | F1-3 | F1-4 | F1-5 | F2-1 | F3-1 | F3-2 |
|---|---|---|---|---|---|---|---|---|---|
| Edukt = Produkt aus | | **E1-1** | **E 1-2** | **E 1-3** | **E1-4** | **E1-5** | **E2-1** | **E3-1** | **E3-2** |
| Drehrohrofen [1] | | | | | | | | | |
| Länge | cm | 200 | | 200 | 200 | 200 | | 200 | 200 |
| Innendurchmesser | cm | 10 | | 10 | 10 | 10 | | 10 | 10 |
| Durchsatz | kg/h | 2 | | 2 | 2 | 2 | | 2 | 2 |
| Rotationsgeschwindigkeit | U/min | 2 | | 2 | 2 | 2 | | 2 | 2 |
| T1 | °C | 1100 | entfällt | 1100 | 1100 | 1100 | entfällt | 1100 | 1100 |
| Atmosphäre | | $O_2$ pur | entfällt | $O_2$ pur | $O_2$ pur | $O_2$ pur | entfällt | $N_2$ | $N_2$ |
| Reaktand | | $O_2$ | entfällt | $O_2$ | $O_2$ | $O_2$ | entfällt | Keine | Keine |
| Zuführung | | 300l/h | entfällt | 300lh | 300l/h | 300l/h | entfällt | | |
| Restfeuchte | Gew.- % | <1 | <3 | <1 | <1 | <1 | <3 | <1 | <1 |
| T2 | °C | 1100 | 1100 | 1100 | 1100 | 1100 | 1100 | entfällt | entfällt |
| Gleichstrom | | | | | | | | | |
| Komponente 1: HCl | l/h | 50 | 50 | 50 | 50 | 50 | 50 | entfällt | entfällt |
| Komponente 2: $Cl_2$ | l/h | 0 | 15 | 0 | 0 | 0 | 15 | entfällt | entfällt |
| Komponente 3: $N_2$ | l/h | 50 | 35 | 50 | 50 | 50 | 35 | entfällt | entfällt |
| Gleichstrom gesamt | l/h | 100 | 100 | 100 | 100 | 100 | 100 | entfällt | entfällt |

[1] Bei den Drehrohröfen wurde der Durchsatz als Regelgröße gewählt. Das bedeutet, dass im Betrieb laufend der aus dem Drehrohrofen austretende Massenstrom gewogen wird und dann die Rotationsgeschwindigkeit und/oder die Neigung des Drehrohrofens entsprechend angepasst werden. Zum Beispiel kann eine Erhöhung des Durchsatzes erreicht werden durch a) Erhöhen der Rotationsgeschwindigkeit, oder b) Erhöhen der Neigung des Drehrohrs aus der Waagrechten, oder einer Kombination von a) und b).

**Tabelle 12**

| Beispiel | | F1-1 | F1-2 | F1-3 | F1-4 | F1-5 | F2-1 | F3-1 | F3-2 |
|---|---|---|---|---|---|---|---|---|---|
| BET | m²/g | 25 | 27 | 43 | 45 | 40 | 23 | 25 | 26 |
| C-Gehalt | ppm | < 4 | < 4 | <4 | <4 | <4 | <4 | <4 | <4 |
| Cl-Gehalt | ppm | 100-200 | 100-200 | 300-400 | 100-200 | 100-200 | 100-200 | <60 | <60 |
| Al-Gehalt | ppb | 20 | 20 | 20 | 20 | 20 | 20 | 20 | 20 |
| Porenvolumen | mm³/g | 650 | 650 | 650 | 650 | 650 | 650 | 650 | 650 |
| Summe der Konzentrationen von Ca, Co, Cr, Cu, Fe, Ge, Hf, K, Li, Mg, Mn, Mo, Na, Nb, Ni, Ti, V, W, Zn, Zr | ppb | <200 | <200 | <200 | <200 | <200 | <200 | <700 | <700 |
| Erdalkalimetallgehalt | ppb | 115 | 55 | 95 | 115 | 40 | 35 | 136 | 33 |
| Stampfdichte | g/cm³ | 0,95 ± 0,05 | 0,95 ± 0,05 | 0,95 ± 0,05 | 0,95 ± 0,05 | 0,95 ± 0,05 | 0,95 ± 0,05 | 0,95 ± 0,05 | 0,95 ± 0,05 |

Die Granulate nach dem Reinigungsschritt zeigen im Fall von F1-2, F2-1 und F3-2 einen erheblich verringerten Kohlenstoffgehalt (wie kohlenstoffarme Granulate, z.B. F1-1). Insbesondere F1-2, F1-5, F2-1 und F3-2 zeigen einen erheblich niedrigeren Gehalt an Erdalkalimetallen. SiC-Bildung wurde nicht beobachtet.

G. **Wärmebehandlung von Siliziumdioxidgranulat**

Siliziumdioxidgranulat wird in einer dem Schmelzofen vorgeschalteten und mit dieser über eine weitere Zwischenkammer stoffleitend verbundenen Vorkammer in Gestalt eines Drehrohrofens einer Temperaturbehandlung unterzogen. Der Drehrohrofen ist durch ein in Förderrichtung ansteigendes Temperaturprofil gekennzeichnet. Erhalten wurde ein weiter behandeltes Siliziumdioxidgranulat. In Beispiel G-4-2 wurde auf eine Wärmebehandlung beim Mischen im Drehrohrofen verzichtet. Die Verfahrensparameter sind in Tabelle 13 angegeben, die Eigenschaften der erhaltenen behandelten Granulate inTabelle 14.

**Tabelle 13**

| Beispiel | | G1-1 | G1-2 | G1-3 | G1-4 | G1-5 | G2-1 | G3-1 | G3-2 | G4-1 | G4-2 |
|---|---|---|---|---|---|---|---|---|---|---|---|
| Edukt = Produkt aus | | F1-1 | F1-2 | F1-3 | F1-4 | F1-5 | F2-1 | F3-1 | F3-2 | F1-1 | F1-1 |
| Siliziumkomponenten | | -- | -- | -- | -- | -- | -- | -- | -- | Silizium pulver** * | Silizium pulver** * |
|    Stoff | | | | | | | | | | | |
|    Menge | | | | | | | | | | 0,01% | 0,1% |
| Drehrohrofen [1] | | | | | | | | | | | entfällt |
|    Länge | cm | 200 | 200 | 200 | 200 | 200 | 200 | 200 | 200 | 200 | |
|    Innendurchmesser | cm | 10 | 10 | 10 | 10 | 10 | 10 | 10 | 10 | 10 | |
|    Durchsatz | kg/h | 8 | 5 | 5 | 5 | 5 | 5 | 5 | 5 | 5 | |
|    Rotationsgeschwindigkeit | U/min | 30 | 30 | 30 | 30 | 30 | 30 | 30 | 30 | 30 | |
|    T1 (Einlass Drehrohrofen) | °C | RT | RT | RT | RT | RT | RT | RT | RT | RT | |
|    T2 (Auslass Drehrohrofen) | °C | 500 | 500 | 500 | 500 | 500 | 500 | 500 | 500 | 500 | |
|    Atmosphäre | | | | | | | | | | | |
|      Gas, Strömungsrichtung | | Luft, freie Konvektion | $O_2$, im Gegenstrom | $O_2$, im Gegenstrom | $O_2$, im Gegenstrom | $O_2$, im Gegenstrom | $O_2$, im Gegenstrom | $O_2$, im Gegenstrom | $O_2$, im Gegenstrom | $O_2$, im Gegenstrom | |
|      Durchsatz Gasstrom gesamt | $Nm^3/h$ | | 0,6 | 0,6 | 0,6 | 0,6 | 0,6 | 0,6 | 0,6 | 0,6 | |

*** Korngröße $D_{50}$=8 $\mu$m; Kohlenstoffgehalt $\leq$ 5 ppm; Summe Fremdmetalle $\leq$ 5ppm; 0.5 ppm; erhältlich bei der Wacker Chemie AG (München, Deutschland); RT=Raumtemperatur.

[1] Bei den Drehrohröfen wurde der Durchsatz als Regelgröße gewählt. Das bedeutet, dass im Betrieb laufend der aus dem Drehrohrofen austretende Massenstrom gewogen wird und dann die Rotationsgeschwindigkeit und/oder die Neigung des Drehrohrofens entsprechend angepasst werden. Zum Beispiel kann eine Erhöhung des Durchsatzes erreicht werden durch a) Erhöhen der Rotationsgeschwindigkeit, oder b) Erhöhen der Neigung des Drehrohrs aus der Waagrechten, oder einer Kombination von a) und b).

EP 3 390 305 B1

**Tabelle 14**

| Beispiel | | G1-1 | G1-2 | G1-3 | G1-4 | G1-5 | G2-1 | G3-1 | G3-2 | G4-1 | G4-2 |
|---|---|---|---|---|---|---|---|---|---|---|---|
| BET | m²/g | 22 | 23 | 38 | 42 | 37 | 22 | 22 | 21 | 22 | 24 |
| Wassergehalt | ppm | 500 | 100 | 100 | 100 | 100 | 100 | 500 | 100 | 500 | <10000 |
| C-Gehalt | ppm | <4 | <4 | <4 | <4 | <4 | <4 | <4 | <4 | <4 | <4 |
| Cl-Gehalt | ppm | 100-200 | 100-200 | 300-400 | 100-200 | 100-200 | 100-200 | <60 | <60 | 100-200 | 100-200 |
| Al-Gehalt | ppb | 20 | 20 | 20 | 20 | 20 | 20 | 20 | 20 | 20 | 20 |
| Summe der Konzentrationen von Ca, Co, Cr, Cu, Fe, Ge, Hf, K, Li, Mg, Mn, Mo, Na, Nb, Ni, Ti, V, W, Zn, Zr | ppb | $\leq 200$ | $\leq 200$ | $\leq 200$ | $\leq 200$ | $\leq 200$ | $\leq 200$ | $\leq 200$ | $\leq 200$ | $\leq 200$ | $\leq 200$ |
| Erdalkalimetallgehalt | ppb | 115 | 55 | 95 | 115 | 40 | 35 | 136 | 33 | 115 | 115 |
| Schüttwinkel | ° | 26 | 26 | 26 | 26 | 26 | 26 | 26 | 26 | 26 | 26 |
| G3-1 und G3-2 weisen infolge dieser Behandlung einen erheblich verringerten Erdalkalimetallgehalt im Vergleich zu davor (F3-1 beziehungsweise F3-2) auf. | | | | | | | | | | | |

69

**H. Schmelzen von Granulat zu Quarzglas**

Siliziumdioxidgranulat gemäß Zeile 2 von Tabelle 15 wird zur Herstellung eines Quarzglasrohres in einem Vertikal-Tiegelziehverfahren eingesetzt. Der Aufbau des stehenden Ofens für Beispiel H5-1 beinhaltend einen stehenden Schmelztiegel ist in Figur 7 schematisch gezeigt, für alle anderen Beispiele mit einem hängenden Schmelztiegel steht Figur 6 als schematische Abbildung. Das Siliziumdioxidgranulat wird über die Feststoffzuführung zugegeben und das Innere des Schmelztiegels mit einem Gasgemisch gespült. Im Schmelztiegel bildet sich eine Glasschmelze, auf welcher ein Schüttkegel aus Siliziumdioxidgranulat aufsitzt. Im unteren Bereich des Schmelztiegels wird geschmolzenes Glas aus der Glasschmelze über eine Ziehdüse (ggf. mit einem Dom) entnommen und als Rohrstrang vertikal nach unten abgezogen. Aufgrund des Eigengewichts und der Viskosität der Glasschmelze über der Düse und der durch die Düse vorgegebenen Lochgröße ergibt sich der Durchsatz der Anlage. Durch Variieren der zugeführten Menge Siliziumdioxidgranulats und der Temperatur kann der Durchsatz auf die gewünschte Größe eingestellt werden. Die Verfahrensparameter sind in Tabelle 15 und Tabelle 17 und gegebenenfalls Tabelle 19 angegeben, die Eigenschaften der gebildeten Quarzglaskörper in Tabelle 16 und Tabelle 18.

In Beispiel H7-1 ist in dem Schmelztiegel ein Gasverteilerring angeordnet, mit dem das Spülgas nahe der Oberfläche der Glasschmelze zugeführt wird. Exemplarisch zeigt eine solche Anordnung die Figur 8.

In Beispiel H8-x wurde am Gasauslass der Taupunkt bestimmt. Das Messprinzip ist in Figur 12 gezeigt. Zwischen dem Auslass des Schmelztiegels und der Messstelle des Taupunkts legt der Gasstrom eine Strecke von 100 cm zurück.

**Tabelle 15**

| Beispiel | | H1-1 | H1-2 | H1-3 | H1-4 | H1-5 | H3-1 | H3-2 | H4-1 | H4-2 |
|---|---|---|---|---|---|---|---|---|---|---|
| Edukt = Produkt aus | | G1-1 | G1-2 | G1-3 | G1-4 | G1-5 | G3-1 | G3-2 | G4-1 | G4-2 |
| Schmelztiegel | | | | | | | | | | |
| Typ | | Hängender Blechtiegel | Hängender Blechtiegel | Hängender Blechtiegel | Hängender Blechtiegel | Hängender Blechtiegel | Hängender Blechtiegel | Hängender Blechtiegel | Hängender Blechtiegel | Hängender Blechtiegel |
| Metallsorte | | Wolfram | Wolfram | Wolfram | Wolfram | Wolfram | Wolfram | Wolfram | Wolfram | Wolfram |
| Länge | cm | 200 | 150 | 150 | 150 | 150 | 200 | 150 | 200 | 200 |
| Innendurchmesser | cm | 40 | 25 | 25 | 25 | 25 | 40 | 25 | 40 | 40 |
| Durchsatz | kg/h | 30 | 20 | 20 | 20 | 20 | 30 | 20 | 30 | 30 |
| T1 (Gasraum Schmelztiegel) | °C | 300 | 300 | 300 | 300 | 300 | 300 | 300 | 300 | 300 |
| T2 (Glasschmelze) | °C | 2100 | 2100 | 2100 | 2100 | 2100 | 2100 | 2100 | 2100 | 2100 |
| T3 (Düse) | °C | 1900 | 1900 | 1900 | 1900 | 1900 | 1900 | 1900 | 1900 | 1900 |
| Atmosphäre/Spülgas | | | | | | | | | | |
| He | | | | | | | | | | |
| Konzentration | Vol.-% | 50 | 50 | 50 | 50 | 50 | 50 | 50 | 50 | 50 |
| $H_2$ | | | | | | | | | | |
| Konzentration | Vol.-% | 50 | 50 | 50 | 50 | 50 | 50 | 50 | 50 | 50 |
| Durchsatz Gasstrom gesamt | $Nm^3/h$ | 4 | 4 | 4 | 4 | 4 | 2 | 4 | 2 | 2 |
| $O_2$ | ppm | ≤100 | ≤100 | ≤100 | ≤100 | ≤100 | ≤100 | ≤100 | ≤100 | ≤100 |

**Tabelle 16**

| Beispiel | | H1-1 | H1-2 | H1-3 | H1-4 | H1-5 | H3-1 | H3-2 | H4-1 | H4-2 |
|---|---|---|---|---|---|---|---|---|---|---|
| C-Gehalt | ppm | <4 | <4 | <4 | <4 | <4 | <4 | <4 | <4 | <4 |
| Cl-Gehalt | ppm | 100-200 | 100-200 | 300-400 | 100-200 | 100-200 | <60 | <60 | 100-200 | 100-200 |
| Al-Gehalt | ppb | 20 | 20 | 20 | 20 | 20 | 20 | 20 | 20 | 20 |
| Summe der Konzentrationen von Ca, Co, Cr, Cu, Fe, Ge, Hf, K, Li, Mg, Mn, Mo, Na, Nb, Ni, Ti, V, W, Zn, Zr | ppb | <400 | <400 | <400 | <400 | <400 | <400 | <400 | <400 | <400 |
| OH-Gehalt | ppm | 400 | 400 | 400 | 400 | 400 | 80 | 400 | 80 | 80 |
| Erdalkalimetallgehalt | ppb | 115 | 55 | 95 | 115 | 40 | 136 | 33 | 115 | 115 |
| ODC-Gehalt | $1/cm^3$ | $4*10^{15}$ | $2*10^{16}$ | $4*10^{15}$ | $4*10^{15}$ | $4*10^{15}$ | $5*10^{18}$ | $2*10^{16}$ | $5*10^{18}$ | $8*10^{18}$ |
| Porenvolumen | mL/g | 0,1 | 0,1 | 0,1 | 0,1 | 0,1 | 0,1 | 0,1 | 0,1 | 0,1 |
| Außendurchmesser Rohrstrang/ Quarzglaskörper | cm | 19,7 | 3,0 | 19,7 | 19,7 | 19,7 | 19,7 | 3,0 | 19,7 | 19,7 |
| Viskosität<br>@1250°C<br>@1300°C<br>@1350°C | Lg($\eta$/dPas) | 11,69±0,13<br>11,26±0,1<br>10,69±0,07 | 11,69±0,13<br>11,26±0,1<br>10,69±0,07 | 11,69±0,13<br>11,26±0,1<br>10,69±0,07 | 11,69±0,13<br>11,26±0,1<br>10,69±0,07 | 11,69±0,13<br>11,26±0,1<br>10,69±0,07 | 12,16±0,2<br>11,49±0,15<br>10,88±0,1 | 11,69±0,13<br>11,26±0,1<br>10,69±0,07 | 12,16±0,2<br>11,49±0,15<br>10,88±0,1 | 12,16±0,2<br>11,49±0,15<br>10,88±0,1 |
| "±"-Angaben sind die Standardabweichung. | | | | | | | | | | |

**Tabelle 17**

| Beispiel | | H5-1 | H6-1 | H7-1 | H8-1 | H8-2 | H8-3 | H8-4 |
|---|---|---|---|---|---|---|---|---|
| Edukt = Produkt aus | | G1-1 | G1-1 | G1-1 | G1-1 | G1-1 | G1-1 | G1-1 |
| Schmelztiegel | | | | | | | | |
|    Typ | | Stehender Sintertiegel | Hängender Sintertiegel | Hängender Blechtiegel | Hängender Blechtiegel | Hängender Blechtiegel | Hängender Blechtiegel | Hängender Blechtiegel |
|    Metallsorte | | Wolfram | Wolfram | Wolfram | Wolfram | Wolfram | Wolfram | Wolfram |
|    Zusätzliche Ein- oder Anbaute(n) | | -- | -- | Gasverteile r-Ring | Taupunktmessung | Taupunktmessung | Taupunktmessung | Taupunktmessung |
|    Länge | cm | 250 | 250 | 200 | 200 | 200 | 200 | 200 |
|    Innendurchmesser | cm | 40 | 36 | 40 | 40 | 40 | 40 | 40 |
|    Durchsatz | kg/h | 40 | 35 | 30 | 30 | 30 | 30 | 30 |
|    T1 (Gasraum Schmelztiegel) | °C | 300 | 400 | 300 | 300 | 300 | 300 | 300 |
|    T2 (Glasschmelze) | °C | 2100 | 2150 | 2100 | 2100 | 2100 | 2100 | 2100 |
|    T3 (Düse) | °C | 1900 | 1900 | 1900 | 1900 | 1900 | 1900 | 1900 |
|    Atmosphäre | | | | | | | | |
|       He | | | | | | | | |
|       Konzentration | Vol.- % | 30 | 50 | 50 | 50 | 50 | 50 | 50 |
|       $H_2$ | | | | | | | | |
|       Konzentration | Vol.- % | 70 | 50 | 50 | 50 | 50 | 50 | 50 |
|       Durchsatz | $Nm^3/h$ | 4 | 4 | 8 | 8 | 4 | 3 | 2 |
|       Gasstrom gesamt | | | | | | | | |
|       $O_2$ | ppm | <100 | <100 | ≤10 | ≤100 | ≤100 | ≤100 | ≤100 |

**Tabelle 18**

| Beispiel | | H5-1 | H6-1 | H7-1 | H8-1 | H8-2 | H8-3 | H8-4 |
|---|---|---|---|---|---|---|---|---|
| C-Gehalt | ppm | <4 | <4 | <4 | <4 | <4 | <4 | <4 |
| Cl-Gehalt | ppm | 100-200 | 100-200 | 100-200 | 100-200 | 100-200 | 100-200 | 100-200 |
| Al-Gehalt | ppb | 20 | 20 | 20 | 20 | 20 | 20 | 20 |
| Summe der Konzentrationen von Ca, Co, Cr, Cu, Fe, Ge, Hf, K, Li, Mg, Mn, Mo, Na, Nb, Ni, Ti, V, W, Zn, Zr | ppb | <400 | <400 | <400 | <400 | <400 | <400 | <400 |
| OH-Gehalt | ppm | 400 | 400 | 400 | 250 | 400 | 500 | 800 |
| Erdalkalimetallgehalt | ppb | 115 | 115 | 115 | 115 | 115 | 115 | 115 |
| ODC-Gehalt | $1/cm^3$ | $<4*10^{15}$ | $<4*10^{15}$ | $<4*10^{15}$ | $<4*10^{15}$ | $<4*10^{15}$ | $<4*10^{15}$ | $<4*10^{15}$ |
| Gehalt an W, Mo, Re, Ir, Os | ppb | <300ppb | <300ppb | <100ppb | <50ppb | <100ppb | <5ppm | 100ppm |
| Außendurchmesser Rohrstrang/ Quarzglaskörper | cm | 26,0 | 19,7 | 19,7 | 19,7 | 19,7 | 19,7 | 19,7 |
| Viskosität<br>@1250°C<br>@1300°C<br>@1350°C | Lg($\eta$/ dPas) | 11,69±0,13<br>11,26±0,1<br>10,69±0,07 | 11,69±0,13<br>11,26±0,1<br>10,69±0,07 | 11,69±0,13<br>11,26±0,1<br>10,69±0,07 | 12,06±0,15<br>11,38±0,1<br>10,75±0,08 | 11,69±0,13<br>11,26±0,1<br>10,69±0,07 | 11,69±0,13<br>11,26±0,1<br>10,69±0,07 | 11,63±0,13<br>11,22±0,1<br>10,65±0,07 |

**Tabelle 19**

| Beispiel | | H-7-1 | H8-1 | H8-2 | H8-3 | H8-4 |
|---|---|---|---|---|---|---|
| Verteilerring (Gaseinlass im Schmelztiegel), Höhe über Glasschmelze | cm | 2 | -- | -- | -- | -- |
| Lage Gasauslass | | In Schmelz tiegelde ckel | In Schmelzti egeldeckel | In Schmelz tiegelde ckel | In Schme lztiege ldecke 1 | In Schmelzti egeldecke 1 |
| Taupunkt des Gasstroms      Vor Zuführen zum Schmelztiegel | | -90 | -90 | -90 | -90 | -90 |
|      Nach Abführen aus Schmelztiegel | | -10 | -30 | -10 | 0 | +10 |

## I. Nachbearbeiten eines Quarzglaskörpers

Ein in Beispiel H1-1 erhaltener und bereits gezogener Quarzglaskörper (1000 kg, Oberfläche = 110 m$^2$; Durchmesser= 1,65 cm, Gesamtlänge 2120m) wird zu Stücken mit einer Länge von 200 cm durch Anritzen und Abschlagen zerteilt. Die Endflächen wurden durch Sägen nachbearbeitet, um eine gerade Endfläche zu erhalten. Die so erhaltene Charge Quarzglaskörper (N-1) wurde durch Eintauchen in ein HF-Bad (V=2 m$^3$) für 30 Minuten gereinigt und anschließend mit VE-Wasser abgespült (ergibt Quarzglaskörper (N-1 ')).

## J. "Altsäure" (HF-Bad nach Gebrauch)

Die in Beispiel I im Tauchbad vorliegende Flüssigkeit (V= 2m$^3$) wird nach dem Behandeln des Quarzglaskörpers (I-1') ohne Aufbereitung direkt bestimmt. Die für die vorgenannte Behandlung eingesetzte Flüssigkeit ist vor und nach dem Behandeln durch die in der Tabelle 20 genannten Eigenschaften gekennzeichnet.

**Tabelle 20**

| Element | Einheit | Vor Behandlung eines Quarzglaskörpers | Nach Behandlung eines Quarzglaskörpers der Masse m= 1000kg und der Oberfläche von 110m$^2$ |
|---|---|---|---|
| Al | ppm | 0,04 | 0,8 |
| Refrakärmetall (W, Mo, ...) | ppm | 0 | 0,15 |
| Weitere Metalle gemäß Liste* insgesamt, davon | ppm | 0,15 | 1 |
| Ca | ppm | 0,01 | 0,3 |
| Mg | ppm | 0,04 | 0,09 |
| Na | ppm | 0,04 | 0,1 |
| Cr | ppm | 0,01 | 0,01 |
| Ni | ppm | 0,001 | 0,01 |
| Fe | ppm | 0,01 | 0,05 |
| Zr | ppm | 0,01 | 0,05 |
| Ti | ppm | 0,01 | 0,05 |
| HF | Gew.-% | 40 | 35 |
| Gehalt Si-F-Verbindungen | Gew.-% | 4 | 6 |

(fortgesetzt)

| Element | Einheit | Vor Behandlung eines Quarzglaskörpers | Nach Behandlung eines Quarzglaskörpers der Masse m= 1000kg und der Oberfläche von 110m$^2$ |
|---|---|---|---|
| Dichte | g/cm$^3$ | 1,14 | 1,123 |

### K. Förderbarkeit von Granulaten (Schüttwinkel)

Es wurden Schüttungen mit einem Schüttwinkel von 23 bis 26° (Siliziumdioxidgranulat) und solche mit einem größerem Schüttwinkel, z.B. Körnungen aus Quarzglas mit einem Schüttwinkel von 31 bis 36° untersucht. Schüttungen mit einem Schüttwinkel von 23 bis 26° zeigen gute Fließeigenschaften beim Materialtransport durch ein um 30° aus der Waagrechten geneigtes Förderrohr. Bei Schüttungen mit größerem Schüttwinkel wurde bei gleicher Anordnung ein ungleichmäßiger Transport gekennzeichnet durch stoßweises Sacken beobachtet.

### L. Schmelzverhalten von bestimmten Granulaten (Partikelgröße $D_{50}$)

Durch Abwandeln des Granulierverfahrens von E1-1 wurden Granulate mit den in Tabelle 21 genannten Partikelgrößen gebildet.

**Tabelle21**

| Bsp. | Siliziumdioxidgranu lat Partikelgrößeverteil ung $D_{50}$ | Restfeuchte | Gasblasen | Krustenbildung beim Schmelzen |
|---|---|---|---|---|
| #1 | 100 $\mu$m | + | - | Starke Krustenbildung |
| #2 | 130 $\mu$m | + | - | Krustenbildung |
| #3 | 160 $\mu$m | 0 | 0 | Keine Krustenbildung |
| #4 | 190 $\mu$m | 0 | 0 | Keine Krustenbildung |
| #5 | 222 $\mu$m | 0 | 0 | Keine Krustenbildung |
| #6 | 260 $\mu$m | 0 | 0 | Keine Krustenbildung |
| #7 | 290 $\mu$m | + | 0 | Keine Krustenbildung |
| #8 | 330 $\mu$m | ++ | + | Keine Krustenbildung |
| #9 | 400 $\mu$m | ++ | ++ | Keine Krustenbildung |
| 0=keine bis wenig; += mehr; ++ = viel; | | | | |

Partikelgrößenverteilungen mit $D_{50}$ von bis zu 350 $\mu$m wurden durch Verändern des Sprühdrucks der Düse, sowie durch Verändern von Temperatur und Durchsatz des dem Sprühturm zugeführten Luftstroms erhalten. Partikelgrößenverteilungen mit $D_{50}$ von mehr als 350 $\mu$m wurden durch Absieben von kleineren Partikelgrößen erhalten. Die in der Abwandlung von E 1 - 1 erhaltenen Granulate wurden analog F1-1 und G 1 - 1 weiterbehandelt, analog H1-1 geschmolzen und schließlich zu Quarzglasstangen abgezogen. Die Restfeuchte wurde gemäß der in den Testmethoden genannten Methode bestimmt. Das Vorliegen von Gasblasen in den Quarzglasstangen wurde visuell beurteilt.

Es wurde gefunden, dass Siliziumdioxidgranulate mit einer niedrigen Partikelgrößenverteilung $D_{50}$ zu statischer Aufladung neigen. Dadurch kommt es beim Granulattransport vor dem Einschmelzen zu Stockungen. Ferner zeigen solche Granulate eine höhere Sinteraktivität. Es kommt zur Bildung von Krusten auf der Glasschmelze. In der Folge werden Verunreinigungen resultierend aus Krustenabbrüchen in die Quarzglasstangen eingetragen. Siliziumdioxidgranulate mit einer hohen Partikelgrößenverteilung $D_{50}$ schmelzen ungleichmäßig. Es kommt zur Bildung von großen Gasblasen und Einschlüssen (Inhomogenitäten) in daraus abgezogenen Quarzglasstangen.

### Patentansprüche

**1.** Ein Verfahren zum Herstellen eines Quarzglaskörpers beinhaltend die Verfahrensschritte

i.) Bereitstellen eines Siliziumdioxidgranulats beinhaltend folgende Verfahrensschritte:

I. Bereitstellen eines Siliziumdioxidpulvers;
II. Verarbeiten des Siliziumdioxidpulvers zu einem Siliziumdioxidgranulat,
wobei das Siliziumdioxidgranulat eine größere Partikelgröße aufweist als das Siliziumdioxidpulver;
wobei das Siliziumdioxidgranulat eine Partikelgrößenverteilung $D_{50}$ in einem Bereich von 150 bis 300 μm aufweist;

ii.) Bilden einer Glasschmelze aus dem Siliziumdioxidgranulat in einem Ofen, wobei der Ofen einen Schmelztiegel beinhaltet; und
iii.) Bilden eines Quarzglaskörpers aus zumindest einem Teil der Glasschmelze und;
wobei der Schmelztiegel mindestens einem Einlass und mindestens einem Auslass beinhaltet; und
wobei zumindest ein Teil der Glasschmelze durch den Auslass des Schmelztiegels entnommen wird.

2. Das Verfahren nach Anspruch 1, wobei der Schritt II. folgende Schritte beinhaltet:

II. 1. Bereitstellen einer Flüssigkeit;
II.2. Mischen des Siliziumdioxidpulvers mit der Flüssigkeit unter Erhalt einer Aufschlämmung;
II.3. Sprühtrocknen der Aufschlämmung aus Schritt II.2.

3. Das Verfahren nach einem der vorhergehenden Ansprüche, wobei das Sprühtrocknen in Schritt II.3. durch das Sprühen der Aufschlämmung aus Schritt II.2 durch eine Düse in einen Sprühturm erfolgt und durch mindestens eines der folgenden Merkmale gekennzeichnet ist:

a] Sprühgranulieren in einem Sprühturm;
b] Vorliegen eines Drucks der Aufschlämmung an der Düse von nicht mehr als 40 bar, zum Beispiel in einem Bereich von 1,3 bis 20 bar von 1,5 bis 18 bar oder von 2 bis 15 bar oder von 4 bis 13 bar, oder besonders bevorzugt im Bereich von 5 bis 12 bar, wobei der Druck absolut (in Bezug auf p = 0 hPa) angegeben ist;
c] eine Temperatur der Tröpfchen beim Eintritt in den Sprühturm in einem Bereich von 10 bis 50°C, bevorzugt in einem Bereich von 15 bis 30°C, besonders bevorzugt in einem Bereich von 18 bis 25°C;
d] eine Temperatur an der dem Sprühturm zugewandten Seite der Düse in einem Bereich von 100 bis 450°C, zum Beispiel in einem Bereich von 250 bis 440°C, besonders bevorzugt von 350 bis 430°C;
e] einen Durchsatz an Aufschlämmung durch die Düse in einem Bereich von 0,05 bis 1 m³/h, zum Beispiel in einem Bereich von 0,1 bis 0,7 m³/h oder von 0,2 bis 0,5 m³/h, besonders bevorzugt in einem Bereich von 0,25 bis 0,4 m³/h;
f] einen Feststoffgehalt der Aufschlämmung von mindestens 40 Gew.-%, zum Beispiel in einem Bereich von 50 bis 80 Gew.-%, oder in einem Bereich von 55 bis 75 Gew.-%, besonders bevorzugt in einem Bereich von 60 bis 70 Gew.-% auf, jeweils bezogen auf das Gesamtgewicht der Aufschlämmung;
g] einen Gaszustrom in den Sprühturm in einem Bereich von 10 bis 100 kg/min, zum Beispiel in einem Bereich von 20 bis 80 kg/min oder von 30 bis 70 kg/min, besonders bevorzugt in einem Bereich von 40 bis 60 kg/min;
h] eine Temperatur des Gasstroms beim Eintritt in den Sprühturm in einem Bereich von 100 bis 450°C, zum Beispiel in einem Bereich von 250 bis 440°C, besonders bevorzugt von 350 bis 430°C;
i] eine Temperatur des Gasstroms beim Austritt aus dem Sprühturm von weniger als 170°C;
j] das Gas ist ausgewählt aus der Gruppe bestehend aus Luft, Stickstoff und Helium, oder einer Kombination von zwei oder mehr davon; bevorzugt Luft;
k] eine Restfeuchte des Granulats bei Entnahme aus dem Sprühturm von weniger als 5 Gew.-%, zum Beispiel von weniger als 3 Gew.-% oder von weniger als 1 Gew.-% oder in einem Bereich von 0.01 bis 0,5 Gew.-%, besonders bevorzugt in einem Bereich von 0,1 bis 0,3 Gew.-%, jeweils bezogen auf das Gesamtgewicht des bei der Sprühtrocknung entstehenden Siliziumdioxidgranulats;
l] mindestens 50 Gew.-% des Sprühgranulats, bezogen auf das Gesamtgewicht des bei der Sprühtrocknung entstehenden Siliziumdioxidgranulats, vollzieht eine Flugzeit in einem Bereich von 1 bis 100 s, zum Beispiel über einen Zeitraum von 10 bis 80 s, besonders bevorzugt über einen Zeitraum vom 25 bis 70 s;
m] mindestens 50 Gew.-% des Sprühgranulats, bezogen auf das Gesamtgewicht des bei der Sprühtrocknung entstehenden Siliziumdioxidgranulats, legt eine Flugstrecke von mehr als 20 m zurück, zum Beispiel von mehr als 30 oder von mehr als 50 oder von mehr als 70 oder von mehr als 100 oder von mehr als 150 oder von mehr als 200 oder in einem Bereich von 20 bis 200 m oder von 10 bis 150 oder von 20 bis 100, besonders bevorzugt einem Bereich von 30 bis 80 m.
n] der Sprühturm weist eine zylindrische Geometrie auf;

o] eine Höhe des Sprühturms von mehr als 10 m, zum Beispiel von mehr als 15 m oder von mehr als 20 m oder von mehr als 25 m oder von mehr als 30 m oder in einem Bereich von 10 bis 25 m, besonders bevorzugt in einem Bereich von 15 bis 20 m;

p] Absichten von Partikeln mit einer Größe von weniger als 90 $\mu$m vor der Entnahme des Granulats aus dem Sprühturm

q] Absieben von Partikeln mit einer Größe von mehr als 500 $\mu$m nach der Entnahme des Granulats aus dem Sprühturm, bevorzugt auf einer Rüttelrinne

r] der Austritt der Tröpfchen der Aufschlämmung aus der Düse erfolgt in einem Winkel von 30 bis 60 Grad entgegen der Lotrichtung, besonders bevorzugt bei einem Winkel von 45 Grad entgegen der Lotrichtung.

4. Das Verfahren nach einem der vorhergehenden Ansprüche, wobei das beim Sprühtrocknen erhaltene Siliziumdioxidgranulat

P1. eine Partikelgrößenverteilung $D_{10}$ in einem Bereich von 50 bis 150 $\mu$m, und
P2. eine Partikelgrößenverteilung $D_{50}$ in einem Bereich von 150 bis 300 $\mu$m, und
P3. eine Partikelgrößenverteilung $D_{90}$ in einem Bereich von 250 bis 620 $\mu$m

aufweist.

5. Das Verfahren nach Anspruch 1, wobei der Schritt II. folgende Schritte beinhaltet:

II. 1. Bereitstellen einer Flüssigkeit;
II.2. Mischen des Siliziumdioxidpulvers mit der Flüssigkeit unter Erhalt einer Aufschlämmung;
II.3. Rollgranulieren der Aufschlämmung aus Schritt II.2.

6. Das Verfahren nach Anspruch 5, wobei das Rollgranulieren in Schritt II.3. durch mindestens eines der folgenden Merkmale gekennzeichnet ist:

[a] das Granulieren erfolgt in einem rotierenden Rührbehälter;
[b] das Granulieren erfolgt unter einem Gasstrom von 10 bis 150 kg Gas pro Stunde und pro 1 kg Aufschlämmung;
[c] die Gastemperatur beträgt beim Einleiten 40 bis 200°C;
[d] Granulen mit einer Partikelgröße von weniger als 100 $\mu$m und von mehr als 500 $\mu$m werden abgesiebt;
[e] die gebildeten Granulen weisen eine Restfeuchte von 15 - 30 Gew.-% auf;
[f] die gebildeten Granulen werden bei 80 bis 250°C getrocknet, bevorzugt in einem kontinuierlichen Trockenrohr, besonders bevorzugt bis zu einer Restfeuchte von weniger als 1 Gew.-%.

7. Das Verfahren nach einem der vorstehenden Ansprüche, wobei das Siliziumdioxidgranulat folgendes Merkmal aufweist:

A) einen Schüttwinkel in einem Bereich von 23 bis 26°.

8. Das Verfahren nach Anspruch 7, wobei das Siliziumdioxidgranulat zusätzlich mindestens eines der folgenden Merkmale aufweist:

B) eine BET-Oberfläche in einem Bereich von mehr als 5 bis 50 m$^2$/g;
C) eine mittlere Partikelgröße in einem Bereich von 50 bis 500 $\mu$m;
D) eine Schüttdichte in einem Bereich von 0,5 bis 1,2 g/cm$^3$;
E) einen Kohlenstoffgehalt von weniger als 50 ppm;
F) einen Aluminiumgehalt von weniger als 200 ppb;
G) eine Stampfdichte in einem Bereich von 0,7 bis 1,3 g/cm$^3$;
H) ein Porenvolumen in einem Bereich von 0,1 bis 2,5 mL/g;
I) eine Partikelgrößenverteilung $D_{10}$ in einem Bereich von 50 bis 150 $\mu$m;
J) eine Partikelgrößenverteilung $D_{50}$ in einem Bereich von 150 bis 300 $\mu$m;
K) eine Partikelgrößenverteilung $D_{90}$ in einem Bereich von 250 bis 620 $\mu$m,

wobei die ppm jeweils auf das Gesamtgewicht des Siliziumdioxidgranulats bezogen sind.

9. Das Verfahren nach einem der vorhergehenden Ansprüche, wobei für die Aufschlämmung mindestens eines der folgenden Merkmale gilt:

a.) die Aufschlämmung wird in Kontakt mit einer Kunststoffoberfläche transportiert;

b.) die Aufschlämmung wird geschert;

c.) die Aufschlämmung weist eine Temperatur von mehr als 0°C auf;

d.) die Aufschlämmung weist ein Zeta-Potential bei einem pH-Wert von 7 in einem Bereich von 0 bis -100 mA auf, zum Beispiel von -20 bis -60 mA, besonders bevorzugt von -30 bis -45 mA;

e.) die Aufschlämmung weist einen pH-Wert in einem Bereich von 7 oder mehr auf, zum Beispiel von mehr als 7 oder einen pH-Wert im Bereich von 7,5 bis 13 oder von 8 bis 11, besonders bevorzugt von 8,5 bis 10;

f.) die Aufschlämmung weist einen isoelektrischen Punkt von weniger als 7, zum Beispiel in einem Bereich von 1 bis 5 oder in einem Bereich von 2 bis 4, besonders bevorzugt in einem Bereich von 3 bis 3,5;

g.) die Aufschlämmung weist einen Feststoffgehalt von mindestens 40 Gew.-%, zum Beispiel in einem Bereich von 50 bis 80 Gew.-%, oder in einem Bereich von 55 bis 75 Gew.-%, besonders bevorzugt in einem Bereich von 60 bis 70 Gew.-% auf, jeweils bezogen auf das Gesamtgewicht der Aufschlämmung;

h.) die Aufschlämmung weist eine Viskosität gemäß DIN 53019-1 (5 rpm, 30 Gew.-%) in einem Bereich von 500 bis 1000 mPas, zum Beispiel im Bereich von 600 bis 900 mPas oder von 650 bis 850 mPas, besonders bevorzugt im Bereich von 700 bis 800 mPas auf;

i.) die Aufschlämmung weist eine Thixotropie gemäß DIN SPEC 91143-2 (30 Gew.-% in Wasser, 23 °C, 5 rpm/50 rpm) im Bereich von 3 bis 6, zum Beispiel im Bereich von 3,5 bis 5, besonders bevorzugt im Bereich von 4,0 bis 4,5 auf;

j.) die Siliziumdioxidpartikel in der Aufschlämmung weisen in einer 4 Gew.-%igen Aufschlämmung eine mittlere Partikelgröße in Suspension gemäß DIN ISO 13320-1 im Bereich von 100 bis 500 nm, zum Beispiel in einem Bereich von 200 bis 300 nm auf.

**10.** Das Verfahren nach einem der vorhergehenden Ansprüche, wobei das Siliziumdioxidpulver herstellbar ist aus einer Verbindung ausgewählt aus der Gruppe bestehend aus Siloxanen, Siliziumalkoxiden und Siliziumhalogeniden.

**11.** Das Verfahren nach einem der vorhergehenden Ansprüche, wobei das Siliziumdioxidpulver mindestens eines der folgenden Merkmale aufweist:

a. eine BET-Oberfläche in einem Bereich von 20 bis 60 $m^2/g$;

b. eine Schüttdichte in einem Bereich von 0,01 bis 0,3 $g/cm^3$;

c. einen Kohlenstoffgehalt von weniger als 50 ppm;

d. einen Chlorgehalt von weniger als 200 ppm;

e. einen Aluminiumgehalt von weniger als 200 ppb;

f. einen Gesamtgehalt an Metallen, die von Aluminium verschieden sind, von weniger als 5 ppm;

g. mindestens 70 Gew.-% der Pulverteilchen weisen eine Primärpartikelgröße in einem Bereich von 10 bis 100 nm auf;

h. eine Stampfdichte in einem Bereich von 0,001 bis 0,3 $g/cm^3$;

i. eine Restfeuchte von weniger als 5 Gew.-%,

j. eine Partikelgrößenverteilung $D_{10}$ im Bereich von 1 bis 7 $\mu$m;

k. eine Partikelgrößenverteilung $D_{50}$ im Bereich von 6 bis 15 $\mu$m;

l. eine Partikelgrößenverteilung $D_{90}$ im Bereich von 10 bis 40 $\mu$m;

wobei die ppm und ppb jeweils auf die Gesamtmasse des Siliziumdioxidpulvers bezogen sind.

**12.** Das Verfahren nach einem der vorhergehenden Ansprüche, beinhaltend folgenden Verfahrensschritt:
iv.) Bilden eines Hohlkörpers mit mindestens einer Öffnung aus dem Quarzglaskörper.

**13.** Ein Verfahren zum Herstellen eines Lichtleiters beinhaltend folgende Schritte:

A/ Durchführen der Verfahrensschritte i.) bis iii.) gemäß Anspruch 1 unter Erhalt eines Quarzglaskörpers, wobei der Quarzglaskörper zunächst zu einem Hohlkörper mit mindestens einer Öffnung verarbeitet wird;

B/ Einbringen eines oder mehrerer Kernstäbe in den Hohlkörper aus Schritt A/ durch die mindestens eine Öffnung unter Erhalt eines Vorläufers;

C/ Ziehen des Vorläufers in der Wärme unter Erhalt eines Lichtleiters mit einem oder mehreren Kernen und einer Hülle M1.

**14.** Ein Verfahren zum Herstellen eines Leuchtmittels beinhaltend die folgenden Schritte:

(i) Durchführen der Verfahrensschritte i.) bis iii.) gemäß Anspruch 1 unter Erhalt eines Quarzglaskörpers, wobei der Quarzglaskörper zunächst zu einem Hohlkörper mit mindestens einer Öffnung verarbeitet wird;
(ii) gegebenenfalls Bestücken des Hohlkörpers mit Elektroden
(iii) Füllen des Hohlkörpers aus Schritt (i) mit einem Gas.

**15.** Ein Verfahren zum Herstellen eines Formkörpers beinhaltend die folgenden Schritte:

(1) Durchführen der Verfahrensschritte i.) bis iii.) gemäß Anspruch 1 unter Erhalt eines Quarzglaskörpers; und
(2) Formen des Quarzglaskörpers unter Erhalt eines Formkörpers.

**Claims**

**1.** A method for producing a quartz glass body, comprising the method steps of

i.) providing a silica granulate, comprising the following method steps:

I. providing a silica powder;
II. processing the silica powder to form a silica granulate,
wherein the silica granulate has a larger particle diameter than the silica powder;
wherein the silica granulate has a particle size distribution $D_{50}$ in a range of from 150 to 300 $\mu$m;

ii.) forming a glass melt from the silica granulate in a furnace, wherein the furnace comprises a melting crucible; and
iii.) forming a quartz glass body from at least part of the glass melt; and
wherein the melting crucible comprises at least one inlet and at least one outlet; and
wherein at least part of the glass melt is removed through the outlet of the melting crucible.

**2.** The method according to claim 1, wherein step II. comprises the following steps:

11.1. providing a liquid;
11.2. mixing the silica powder with the liquid to obtain a slurry;
11.3. spray-drying the slurry from step 11.2.

**3.** The method according to either of the preceding claims, wherein the spray-drying in step 11.3. is performed by spraying the slurry from step II.2. through a nozzle into a spray tower and is **characterized by** at least one of the following features:

a] spray granulation in a spray tower;
b] presence of a pressure of the slurry at the nozzle of no more than 40 bar, for example in a range of from 1.3 to 20 bar, from 1.5 to 18 bar or from 2 to 15 bar or from 4 to 13 bar, or particularly preferably in the range of from 5 to 12 bar, wherein the pressure is absolute (with respect to p = 0 hPa);
c] a temperature of the droplets upon entry into the spray tower in a range of from 10 to 50°C, preferably in a range of from 15 to 30°C, particularly preferably in a range of from 18 to 25°C;
d] a temperature at the side of the nozzle facing the spray tower in a range of from 100 to 450°C, for example in a range of from 250 to 440°C, particularly preferably from 350 to 430°C;
e] a throughput of slurry through the nozzle in a range of from 0.05 to 1 m$^3$/h, for example in a range of from 0.1 to 0.7 m$^3$/h or from 0.2 to 0.5 m$^3$/h, particularly preferably in a range of from 0.25 to 0.4 m$^3$/h;
f] a solids content of the slurry of at least 40 wt.%, for example in a range of from 50 to 80 wt.%, or in a range of from 55 to 75 wt.%, particularly preferably in a range of from 60 to 70 wt.%, in each case based on the total weight of the slurry;
g] a gas feed stream into the spray tower in a range of from 10 to 100 kg/min, for example in a range of from 20 to 80 kg/min or from 30 to 70 kg/min, particularly preferably in a range of from 40 to 60 kg/min;
h] a temperature of the gas stream upon entry into the spray tower in a range of from 100 to 450°C, for example in a range of from 250 to 440°C, particularly preferably from 350 to 430°C;
i] a temperature of the gas stream upon exit from the spray tower of less than 170°C;

j] the gas is selected from the group consisting of air, nitrogen and helium, or a combination of two or more thereof, preferably air;

k] a residual moisture content of the granulate during removal from the spray tower of less than 5 wt.%, for example of less than 3 wt.% or of less than 1 wt.% or in a range of from 0.01 to 0.5 wt.%, particularly preferably in a range of from 0.1 to 0.3 wt.%, in each case based on the total weight of the silica granulate formed during spray-drying;

l] at least 50 wt.% of the spray granulate, based on the total weight of the silica granulate formed during spray-drying, performs a flight time in a range of from 1 to 100 s, for example over a period of 10 to 80 s, particularly preferably over a period of 25 to 70 s;

m] at least 50 wt.% of the spray granulate, based on the total weight of the silica granulate formed during spray-drying, covers a flight path of more than 20 m, for example of more than 30 or of more than 50 or of more than 70 or of more than 100 or of more than 150 or of more than 200 or in a range of from 20 to 200 m or from 10 to 150 or from 20 to 100, particularly preferably in a range of from 30 to 80 m;

n] the spray tower has a cylindrical geometry;

o] a height of the spray tower of more than 10 m, for example of more than 15 m or of more than 20 m or of more than 25 m or of more than 30 m or in a range of from 10 to 25 m, particularly preferably in a range of from 15 to 20 m;

p] sifting particles having a size of less than 90 $\mu$m prior to removal of the granulate from the spray tower;

q] sieving particles having a size greater than 500 $\mu$m after removal of the granulate from the spray tower, preferably on a vibrating ring;

r] the exit of the droplets of the slurry from the nozzle takes place at an angle of 30 to 60 degrees counter to the vertical direction, particularly preferably at an angle of 45 degrees counter to the vertical direction.

4. The method according to any of the preceding claims, wherein the silica granulate obtained during the spray-drying has

P1. a particle size distribution $D_{10}$ in a range of from 50 to 150 $\mu$m, and
P2. a particle size distribution $D_{50}$ in a range of from 150 to 300 $\mu$m, and
P3. a particle size distribution $D_{90}$ in a range of from 250 to 620 $\mu$m.

5. The method according to claim 1, wherein step II. comprises the following steps:

11.1. providing a liquid;
11.2. mixing the silica powder with the liquid to obtain a slurry;
11.3. roll-granulation of the slurry from step 11.2.

6. The method according to claim 5, wherein the roll-granulation in step II.3. is **characterized by** at least one of the following features:

[a] the granulation is carried out in a rotating stirring container;
[b] the granulation is carried out under a gas stream of from 10 to 150 kg of gas per hour and per 1 kg of slurry;
[c] during introduction, the gas temperature is 40 to 200°C;
[d] granules having a particle size of less than 100 $\mu$m and more than 500 $\mu$m are sieved out;
[e] the formed granules have a residual moisture content of 15-30 wt.%;
[f] the formed granules are dried at 80 to 250°C, preferably in a continuous drying tube, particularly preferably up to a residual moisture content of less than 1 wt.%.

7. The method according to any of the preceding claims, wherein the silica granulate comprises the following feature:

A) an angle of repose in a range of from 23 to 26°.

8. The method according to claim 7, wherein the silica granulate additionally comprises at least one of the following features:

B) a BET surface area in a range of more than 5 to 50 $m^2/g$;
C) an average particle size in a range of from 50 to 500 $\mu$m;
D) a bulk density in a range of from 0.5 to 1.2 $g/cm^3$;
E) a carbon content of less than 50 ppm;

F) an aluminum content of less than 200 ppb;

G) a tapped density in a range of from 0.7 to 1.3 $g/cm^3$;

H) a pore volume in a range of from 0.1 to 2.5 mL/g;

I) a particle size distribution $D_{10}$ in a range of from 50 to 150 $\mu m$;

J) a particle size distribution $D_{50}$ in a range of from 150 to 300 $\mu m$;

K) a particle size distribution $D_{90}$ in a range of from 250 to 620 $\mu m$,

wherein the ppm are in each case based on the total weight of the silica granulate.

9. The method according to any of the preceding claims, wherein at least one of the following features applies to the slurry:

a.) the slurry is transported in contact with a plastics surface;

b.) the slurry is sheared;

c.) the slurry has a temperature of more than 0°C;

d.) the slurry has a zeta potential at a pH of 7 in a range of from 0 to -100 mA, for example from -20 to -60 mA, particularly preferably from -30 to -45 mA;

e.) the slurry has a pH in a range of 7 or more, for example greater than 7 or a pH in the range of from 7.5 to 13, or from 8 to 11, particularly preferably from 8.5 to 10;

f.) the slurry has an isoelectric point of less than 7, for example in a range of from 1 to 5, or in a range of from 2 to 4, particularly preferably in a range of from 3 to 3.5;

g.) the slurry has a solids content of at least 40 wt.%, for example in a range of from 50 to 80 wt.%, or in a range of from 55 to 75 wt.%, particularly preferably in a range of from 60 to 70 wt.%, in each case based on the total weight of the slurry;

h.) the slurry has a viscosity according to DIN 53019-1 (5 rpm, 30 wt.%) in a range of from 500 to 1000 mPas, for example in the range of from 600 to 900 mPas or from 650 to 850 mPas, particularly preferably in the range of from 700 to 800 mPas;

i.) the slurry has a thixotropy according to DIN SPEC 91143-2 (30 wt.% in water, 23°C, 5 rpm/50 rpm) in the range of from 3 to 6, for example in the range of from 3.5 to 5, particularly preferably in the range of from 4.0 to 4.5;

j.) the silica particles in the slurry have an average particle size in a 4 wt.% slurry in suspension according to DIN ISO 13320-1 in the range of from 100 to 500 nm, for example in a range of from 200 to 300 nm.

10. The method according to any of the preceding claims, wherein the silica powder can be produced from a compound selected from the group consisting of siloxanes, silicon alkoxides, and silicon halides.

11. The method according to any of the preceding claims, wherein the silica powder comprises at least one of the following features:

a. a BET surface area in a range of from 20 to 60 $m^2/g$;

b. a bulk density in a range of from 0.01 to 0.3 $g/cm^3$;

c. a carbon content of less than 50 ppm;

d. a chlorine content of less than 200 ppm;

e. an aluminum content of less than 200 ppb;

f. a total content of metals that are different from aluminum of less than 5 ppm;

g. at least 70 wt.% of the powder particles have a primary particle size in a range of from 10 to 100 nm;

h. a tapped density in a range of from 0.001 to 0.3 $g/cm^3$;

i. a residual moisture content of less than 5 wt.%;

j. a particle size distribution $D_{10}$ in the range of from 1 to 7 $\mu m$;

k. a particle size distribution $D_{50}$ in the range of from 6 to 15 $\mu m$;

l. a particle size distribution $D_{90}$ in the range of from 10 to 40 $\mu m$;

wherein the ppm and ppb are in each case based on the total mass of the silica powder.

12. The method according to any of the preceding claims, comprising the method step of:

iv.) forming a hollow body comprising at least one opening from the quartz glass body.

13. A method for producing a light guide, comprising the steps of:

A/ carrying out method steps i.) to iii.) according to claim 1 to obtain a quartz glass body, wherein the quartz glass body is first processed to form a hollow body comprising at least one opening;

B/ inserting one or more core rods into the hollow body from step A/ through the at least one opening to obtain a precursor;

C/ drawing the precursor in heat to obtain a light guide having one or more cores and a sleeve M1.

14. A method for producing a lighting means, comprising the following steps:

(i) carrying out method steps i.) to iii.) according to claim 1 to obtain a quartz glass body, wherein the quartz glass body is first processed to form a hollow body comprising at least one opening;

(ii) optionally equipping the hollow body with electrodes;

(iii) filling the hollow body from step (i) with a gas.

15. A method for producing a shaped body, comprising the following steps:

(1) carrying out method steps i.) to iii.) according to claim 1 to obtain a quartz glass body; and

(2) shaping the quartz glass body to obtain a shaped body.

**Revendications**

1. Procédé de fabrication d'un corps en verre de quartz, comprenant les étapes de procédé de

    i.) fourniture d'un granulat de dioxyde de silicium, comprenant les étapes de procédé suivantes :

        I. fourniture d'une poudre de dioxyde de silicium ;
        II. transformation de la poudre de dioxyde de silicium pour obtenir un granulat de dioxyde de silicium,

            dans lequel le granulat de dioxyde de silicium présente une taille des particules supérieure à celle de la poudre de dioxyde de silicium ;
            dans lequel le granulat de dioxyde de silicium présente une distribution de tailles des particules $D_{50}$ dans une plage de 150 à 300 $\mu$m ;

    ii.) formation d'un bain de verre fondu à partir du granulat de dioxyde de silicium dans un four, dans lequel le four comprend un creuset ; et
    iii.) formation d'un corps en verre de quartz à partir d'au moins une partie du bain de verre fondu et ;
    dans lequel le creuset comprend au moins une entrée et au moins une sortie ; et
    dans lequel au moins une partie du bain de verre fondu est prélevée à travers la sortie du creuset.

2. Procédé selon la revendication 1, dans lequel l'étape II. comprend les étapes suivantes :

    II.1. fourniture d'un liquide ;
    II.2. mélange de la poudre de dioxyde de silicium avec le liquide pour obtenir une suspension ;
    II.3. séchage par pulvérisation de la suspension de l'étape II.2.

3. Procédé selon l'une des revendications précédentes, dans lequel le séchage par pulvérisation dans l'étape II.3. s'effectue par pulvérisation de la suspension de l'étape II.2 à travers une buse dans une tour de pulvérisation et est **caractérisé par** au moins l'une des caractéristiques suivantes :

    a] granulation par pulvérisation dans une tour de pulvérisation ;
    b] présence d'une pression de la suspension au niveau de la buse d'au plus 40 bar, par exemple dans une plage de 1,3 à 20 bar, de 1,5 à 18 bar ou de 2 à 15 bar ou de 4 à 13 bar ou, de manière particulièrement préférée, dans la plage de 5 à 12 bar, dans lequel la pression est indiquée en valeur absolue (en termes de p = 0 hPa) ;
    c] une température des gouttelettes lors de l'entrée dans la tour de pulvérisation dans une plage de 10 à 50 °C, de préférence dans une plage de 15 à 30 °C, de manière particulièrement préférée dans une plage de 18 à 25 °C ;
    d] une température sur le côté de la buse tourné vers la tour de pulvérisation dans une plage de 100 à 450 °C, par exemple dans une plage de 250 à 440 °C, de manière particulièrement préférée de 350 à 430 °C ;

e] un débit de la suspension à travers la buse dans une plage de 0,05 à 1 m$^3$/h, par exemple dans une plage de 0,1 à 0,7 m$^3$/h ou de 0,2 à 0,5 m$^3$/h, de manière particulièrement préférée dans une plage de 0,25 à 0,4 m$^3$/h ;

f] une teneur en matières solides de la suspension d'au moins 40 % en poids, par exemple dans une plage de 50 à 80 % en poids ou dans une plage de 55 à 75 % en poids, de manière particulièrement préférée dans une plage de 60 à 70 % en poids, respectivement par rapport au poids total de la suspension ;

g] une arrivée de gaz dans la tour de pulvérisation dans une plage de 10 à 100 kg/min, par exemple dans une plage de 20 à 80 kg/min ou de 30 à 70 kg/min, de manière particulièrement préférée dans une plage de 40 à 60 kg/min ;

h] une température du flux de gaz lors de l'entrée dans la tour de pulvérisation dans une plage de 100 à 450 °C, par exemple dans une plage de 250 à 440 °C, de manière particulièrement préférée de 350 à 430 °C ;

i] une température du flux de gaz lors de la sortie de la tour de pulvérisation inférieure à 170 °C ;

j] le gaz est choisi dans le groupe constitué par l'air, l'azote et l'hélium, ou une combinaison de deux de ceux-ci ou plus ; de préférence l'air ;

k] une humidité résiduelle du granulat lors du prélèvement de la tour de pulvérisation inférieure à 5 % en poids, par exemple inférieure à 3 % en poids ou inférieure à 1 % en poids ou dans une plage de 0,01 à 0,5 % en poids, de manière particulièrement préférée dans une plage de 0,1 à 0,3 % en poids, respectivement par rapport au poids total du granulat de dioxyde de silicium résultant du séchage par pulvérisation ;

l] au moins 50 % en poids du granulat pulvérisé, par rapport au poids total du granulat de dioxyde de silicium résultant du séchage par pulvérisation, réalisent un temps de vol dans une plage de 1 à 100 s, par exemple pendant une période de 10 à 80 s, de manière particulièrement préférée pendant une période de 25 à 70 s ;

m] au moins 50 % en poids du granulat pulvérisé, par rapport au poids total du granulat de dioxyde de silicium résultant du séchage par pulvérisation, parcourent un trajet de vol de plus de 20 m, par exemple de plus de 30 ou de plus de 50 ou de plus de 70 ou de plus de 100 ou de plus de 150 ou de plus de 200 ou dans une plage de 20 à 200 m ou de 10 à 150 ou de 20 à 100, de manière particulièrement préférée une plage de 30 à 80 m.

n] la tour de pulvérisation présente une géométrie cylindrique ;

o] une hauteur de la tour de pulvérisation de plus de 10 m, par exemple de plus de 15 m ou de plus de 20 m ou de plus de 25 m ou de plus de 30 m ou dans une plage de 10 à 25 m, de manière particulièrement préférée dans une plage de 15 à 20 m ;

p] triage de particules d'une taille inférieure à 90 μm avant le prélèvement du granulat de la tour de pulvérisation

q] élimination par tamisage de particules d'une taille supérieure à 500 μm après le prélèvement du granulat de la tour de pulvérisation, de préférence sur une gouttière vibrante

r] la sortie des gouttelettes de la suspension hors de la buse s'effectue selon un angle de 30 à 60 degrés par rapport à la direction verticale, de manière particulièrement préférée selon un angle de 45 degrés par rapport à la direction verticale.

4. Procédé selon l'une des revendications précédentes, dans lequel le granulat de dioxyde de silicium obtenu lors du séchage par pulvérisation présente

P1. une distribution de tailles des particules $D_{10}$ dans une plage de 50 à 150 μm, et
P2. une distribution de tailles des particules $D_{50}$ dans une plage de 150 à 300 μm, et
P3. une distribution de tailles des particules $D_{90}$ dans une plage de 250 à 620 μm.

5. Procédé selon la revendication 1, dans lequel l'étape II. comprend les étapes suivantes :

II.1. fourniture d'un liquide ;
II.2. mélange de la poudre de dioxyde de silicium avec le liquide pour obtenir une suspension ;
II.3. granulation par rotation de la suspension de l'étape II.2.

6. Procédé selon la revendication 5, dans lequel la granulation par rotation dans l'étape II.3. est **caractérisée par** au moins l'une des caractéristiques suivantes :

[a] la granulation s'effectue dans un récipient agitateur rotatif ;
[b] la granulation s'effectue sous un flux de gaz de 10 à 150 kg de gaz par heure et par 1 kg de suspension ;
[c] la température du gaz lors de l'introduction est de 40 à 200 °C ;
[d] les granules d'une taille des particules inférieure à 100 μm et supérieure à 500 μm sont éliminés par tamisage ;
[e] les granules formés présentent une humidité résiduelle de 15 à 30 % en poids ;
[f] les granules formés sont séchés à 80 jusqu'à 250 °C, de préférence dans un tube de séchage continu, de manière particulièrement préférée jusqu'à une humidité résiduelle inférieure à 1 % en poids.

7. Procédé selon l'une des revendications précédentes, dans lequel le granulat de dioxyde de silicium présente la caractéristique suivante :

   A) un angle de repos dans une plage de 23 à 26°.

8. Procédé selon la revendication 7, dans lequel le granulat de dioxyde de silicium présente en outre au moins l'une des caractéristiques suivantes :

   B) une surface BET dans une plage de plus de 5 jusqu'à 50 m$^2$/g ;
   C) une taille moyenne des particules dans une plage de 50 à 500 $\mu$m ;
   D) une densité apparente dans une plage de 0,5 à 1,2 g/cm$^3$ ;
   E) une teneur en carbone inférieure à 50 ppm ;
   F) une teneur en aluminium inférieure à 200 ppb ;
   G) une densité tassée dans une plage de 0,7 à 1,3 g/cm$^3$ ;
   H) un volume des pores dans une plage de 0,1 à 2,5 ml/g ;
   I) une distribution de tailles des particules $D_{10}$ dans une plage de 50 à 150 $\mu$m ;
   J) une distribution de tailles des particules $D_{50}$ dans une plage de 150 à 300 $\mu$m ;
   K) une distribution de tailles des particules $D_{90}$ dans une plage de 250 à 620 $\mu$m,

   dans lequel les ppm se rapportent respectivement au poids total du granulat de dioxyde de silicium.

9. Procédé selon l'une des revendications précédentes, dans lequel au moins l'une des caractéristiques suivantes s'applique à la suspension :

   a.) la suspension est transportée en contact avec une surface en matière plastique ;
   b.) la suspension est cisaillée ;
   c.) la suspension présente une température de plus de 0 °C ;
   d.) la suspension présente un potentiel zêta à un pH de 7 dans une plage de 0 à -100 mA, par exemple de -20 à -60 mA, de manière particulièrement préférée de -30 à -45 mA ;
   e.) la suspension présente un pH dans une plage de 7 ou plus, par exemple de plus de 7 ou un pH dans la plage de 7,5 à 13 ou de 8 à 11, de manière particulièrement préférée de 8,5 à 10 ;
   f.) la suspension présente un point isoélectrique de moins de 7, par exemple dans une plage de 1 à 5 ou dans une plage de 2 à 4, de manière particulièrement préférée dans une plage de 3 à 3,5 ;
   g.) la suspension présente une teneur en matières solides d'au moins 40 % en poids, par exemple dans une plage de 50 à 80 % en poids ou dans une plage de 55 à 75 % en poids, de manière particulièrement préférée dans une plage de 60 à 70 % en poids, respectivement par rapport au poids total de la suspension ;
   h.) la suspension présente une viscosité selon la norme DIN 53019-1 (5 tr/min, 30 % en poids) dans une plage de 500 à 1 000 mPas, par exemple dans la plage de 600 à 900 mPas ou de 650 à 850 mPas, de manière particulièrement préférée dans la plage de 700 à 800 mPas ;
   i.) la suspension présente une thixotropie selon la norme DIN SPEC 91143-2 (30 % en poids dans de l'eau, 23 °C, 5 tr/min/50 tr/min) dans la plage de 3 à 6, par exemple dans la plage de 3,5 à 5, de manière particulièrement préférée dans la plage de 4,0 à 4,5 ;
   j.) les particules de dioxyde de silicium dans la suspension présentent, dans une suspension de 4 % en poids, une taille moyenne des particules dans la suspension selon la norme DIN ISO 13320-1 dans la plage de 100 à 500 nm, par exemple dans une plage de 200 à 300 nm.

10. Procédé selon l'une des revendications précédentes, dans lequel la poudre de dioxyde de silicium peut être fabriquée à partir d'un composé choisi dans le groupe constitué par les siloxanes, les alcoxydes de silicium et les halogénures de silicium.

11. Procédé selon l'une des revendications précédentes, dans lequel la poudre de dioxyde de silicium présente au moins l'une des caractéristiques suivantes :

    a. une surface BET dans une plage de 20 à 60 m$^2$/g ;
    b. une densité apparente dans une plage de 0,01 à 0,3 g/cm$^3$ ;
    c. une teneur en carbone inférieure à 50 ppm ;

d. une teneur en chlore inférieure à 200 ppm ;

e. une teneur en aluminium inférieure à 200 ppb ;

f. une teneur totale en métaux, lesquels sont différents de l'aluminium, inférieure à 5 ppm ;

g. au moins 70 % en poids des particules de poudre présentent une taille des particules primaires dans une plage de 10 à 100 nm ;

h. une densité tassée dans une plage de 0,001 à 0,3 g/cm$^3$ ;

i. une humidité résiduelle inférieure à 5 % en poids ;

j. une distribution de tailles des particules $D_{10}$ dans la plage de 1 à 7 $\mu$m ;

k. une distribution de tailles des particules $D_{50}$ dans la plage de 6 à 15 $\mu$m ;

l. une distribution de tailles des particules $D_{90}$ dans la plage de 10 à 40 $\mu$m ;

dans lequel les ppm et ppb se rapportent respectivement à la masse totale de la poudre de dioxyde de silicium.

12. Procédé selon l'une des revendications précédentes, comprenant l'étape de procédé suivante :

iv.) formation d'un corps creux comportant au moins une ouverture à partir du corps en verre de quartz.

13. Procédé de fabrication d'une fibre optique, comprenant les étapes suivantes :

A/ exécution des étapes de procédé i.) à iii.) selon la revendication 1 pour obtenir un corps en verre de quartz, dans lequel le corps en verre de quartz est d'abord transformé en un corps creux comportant au moins une ouverture ;

B/ insertion d'une ou de plusieurs tiges de coeur dans le corps creux de l'étape A/ à travers l'au moins une ouverture pour obtenir un précurseur ;

C/ étirage du précurseur dans la chaleur pour obtenir une fibre optique comportant un ou plusieurs coeurs et une enveloppe M1.

14. Procédé de fabrication d'une source lumineuse, comprenant les étapes suivantes :

(i) exécution des étapes de procédé i.) à iii.) selon la revendication 1 pour obtenir un corps en verre de quartz, dans lequel le corps en verre de quartz est d'abord transformé en un corps creux comportant au moins une ouverture ;

(ii) éventuellement, garniture du corps creux avec des électrodes

(iii) remplissage du corps creux de l'étape (i) avec un gaz.

15. Procédé de fabrication d'un corps moulé, comprenant les étapes suivantes :

(1) exécution des étapes de procédé i.) à iii.) selon la revendication 1 pour obtenir un corps en verre de quartz ; et

(2) moulage du corps en verre de quartz pour obtenir un corps moulé.

**100**

Fig. 1

200

```
┌─────────────────────────────┐
│             201             │
└─────────────────────────────┘
               │
               ▼
┌─────────────────────────────┐
│             202             │
└─────────────────────────────┘
               │
               ▼
┌─────────────────────────────┐
│             203             │
└─────────────────────────────┘
```

# Fig. 2

**300**

| 301 |
|---|

| 302 |
|---|

| 303 |
|---|

| 304 |
|---|

# Fig. 3

**400**

**Fig. 4**

**500**

**Fig. 5**

Fig. 6

**Fig. 7**

**Fig. 8**

Fig. 9

**1200**

1201

1202

**Fig. 10**

1302

**1300**

1302

**Fig. 11**

**Fig. 12**

Fig. 13

**1600**

| 1601 |
|:---:|

| 1602 |
|:---:|

# Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004038602 B3
- DE 102012008123 A1
- DE 102008033945 A1

**In der Beschreibung aufgeführte Nicht-Patentliteratur**

- **PFLEIDERER.** The UV-induced 210 nm absorption band in fused Silica with different thermal history and stoichiometry. *Journal of Non-Crystalline Solids,* 1993, vol. 159, 145-153
- **D. M. DODD ; D. M. FRASER.** Optical Determinations of OH in Fused Silica. *J.A.P,* 1966, vol. 37, 3991
- **L. SKUJA.** Color Centers and Their Transformations in Glassy SiO. *Lectures of the summer school ''Photosensitivity in optical Waveguides and glasses,* 13. Juli 1998